(19) Europäisches Patentamt / European Patent Office / Office européen des brevets

(11) EP 3 730 867 A1

(12) **EUROPEAN PATENT APPLICATION**
published in accordance with Art. 153(4) EPC

(43) Date of publication:
28.10.2020 Bulletin 2020/44

(51) Int Cl.:
F25B 1/00 (2006.01)          C09K 5/04 (2006.01)
H02K 1/22 (2006.01)          H02K 1/27 (2006.01)

(21) Application number: 18892119.1

(22) Date of filing: 18.12.2018

(86) International application number:
PCT/JP2018/046630

(87) International publication number:
WO 2019/124398 (27.06.2019 Gazette 2019/26)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority:  18.12.2017  JP 2017242183
                18.12.2017  JP 2017242185
                18.12.2017  JP 2017242187
                18.12.2017  JP 2017242186
                05.10.2018  PCT/JP2018/037483
                17.10.2018  PCT/JP2018/038746
                17.10.2018  PCT/JP2018/038749
                17.10.2018  PCT/JP2018/038748
                17.10.2018  PCT/JP2018/038747

(71) Applicant: DAIKIN INDUSTRIES, LTD.
Osaka 530-8323 (JP)

(72) Inventors:
• ASANO, Yoshinari
  Osaka-shi, Osaka 530-8323 (JP)

• AOTA, Keiji
  Osaka-shi, Osaka 530-8323 (JP)
• ITANO, Mitsushi
  Osaka-shi, Osaka 530-8323 (JP)
• KARUBE, Daisuke
  Osaka-shi, Osaka 530-8323 (JP)
• YOTSUMOTO, Yuuki
  Osaka-shi, Osaka 530-8323 (JP)
• TAKAHASHI, Kazuhiro
  Osaka-shi, Osaka 530-8323 (JP)
• KOMATSU, Yuzo
  Osaka-shi, Osaka 530-8323 (JP)
• OHKUBO, Shun
  Osaka-shi, Osaka 530-8323 (JP)
• TAKAKUWA, Tatsuya
  Osaka-shi, Osaka 530-8323 (JP)
• TSUDA, Tetsushi
  Osaka-shi, Osaka 530-8323 (JP)

(74) Representative: Hoffmann Eitle
Patent- und Rechtsanwälte PartmbB
Arabellastraße 30
81925 München (DE)

(54) **COMPRESSION MACHINE**

(57) High efficiency of a compressor that compresses a mixed refrigerant containing at least 1,2-difluoroethylene is achieved. A compressor (100) includes a motor (70) that has a rotor (71) including permanent magnets (712) and thus is suitable for a variable capacity compressor in which the number of rotations of the motor can be changed. In this case, it is possible to change the number of rotations of the motor in accordance with an air conditioning load in an air conditioner (1) that uses a mixed refrigerant containing at least 1,2-difluoroechylene. It is thus possible to enable high efficiency of the compressor (100).

FIG. 19

## Description

### TECHNICAL FIELD

The present invention relates to a compressor to be used in a refrigeration cycle apparatus considering environmental protection.

### BACKGROUND ART

In recent years, from the point of view of environmental protection, a refrigerant (hereinafter referred to as low GWP refrigerant) having low global warming potential (GWP) has been examined as a refrigerant to be used in an air conditioner. As the low GWP refrigerant, a mixed refrigerant containing 1,2-difluoroethylene is firstly presented.

### SUMMARY OF THE INVENTION

<Technical Problem>

However, the number of prior arts considering from an aspect of high efficiency of an air conditioner that uses the aforementioned refrigerant is small. For example, when the aforementioned refrigerant is to be applied to an air conditioner such as that disclosed in PTL 1 (Japanese Unexamined Patent Application Publication No. 2013-124848), there is a problem that how high efficiency of a compressor is achieved.

<Solution to Problem>

A compressor according to a first aspect includes a compression unit and a motor. The compression unit compresses a mixed refrigerant containing at least 1,2-difluoroethylene. The motor has a rotor including a permanent magnet and drives the compression unit.
Due to the motor having the rotor that includes the permanent magnet, the compressor is suitable for a variable capacity compressor in which the number of rotations of the motor can be changed. In this case, in the air conditioner that uses the mixed refrigerant containing at least 1,2-difluoroetylene, the number of rotations of the motor can be changed in accordance with an air conditioning load, which enables high efficiency of the compressor.
A compressor according to a second aspect is the compressor according to the first aspect, in which the rotor is a magnet-embedded rotor. In the magnet-embedded rotor, a permanent magnet is embedded in the rotor.
A compressor according to a third aspect is the compressor according to the first aspect or the second aspect, in which the rotor is formed by laminating a plurality of electromagnetic steel plates in a plate thickness direction. The thickness of each of the electromagnetic steel plates is 0.05 mm or more and 0.5 mm or less.
Generally, the thinner the plate thickness, the more it is possible to reduce the eddy-current loss. The plate thickness is, however, desirably 0.05 to 0.5 mm considering that processing of electromagnetic steel plates is difficult when the plate thickness thereof is less than 0.05 mm and that it takes time for siliconizing from the steel plate surface and diffusing for optimizing Si distribution when the plate thickness thereof is more than 0.5 mm.
A compressor according to a fourth aspect is the compressor according to the first aspect or the second aspect, in which the rotor is formed by laminating a plurality of plate-shaped amorphous metals in a plate thickness direction.
This compressor realizes a motor having a less iron loss and high efficiency, which enables high efficiency of the compressor.
A compressor according to a fifth aspect is the compressor according to the first aspect or the second aspect, in which the rotor is formed by laminating a plurality of electromagnetic steel plates in a plate thickness direction, the plurality of electromagnetic steel containing 5 mass% or more of silicon.
This compressor realizes, due to the electromagnetic steel plates in which hysteresis is reduced by containing a suitable amount of silicon, a motor having a less iron loss and high efficiency, which enables high efficiency of the compressor.
A compressor according to a sixth aspect is the compressor according to any one of the first aspect to the fifth aspect, in which the permanent magnet is a Nd-Fe-B-based magnet.
This compressor realizes a motor capable of increasing a magnetic energy product, which enables high efficiency of the compressor.
A compressor according to a seventh aspect is the compressor according to any one of the first aspect to the sixth aspect, in which the permanent magnet is formed by diffusing a heavy-rare-earth element along grain boundaries.
This compressor improves demagnetization resistance of the permanent magnet and can increase the holding force of the permanent magnet with a small amount of the heavy-rare-earth element, which enables high efficiency of the compressor.

A compressor according to an eighth aspect is the compressor according to the sixth aspect, in which the permanent magnet contains 1 mass% or less of dysprosium.

This compressor improves the holding force of the permanent magnet, which enables high efficiency of the compressor.

A compressor according to a ninth aspect is the compressor according to any one of the first aspect to the eighth aspect, in which the average crystal gain size of the permanent magnet is 10 $\mu$m or less.

This compressor improves the demagnetization resistance of the permanent magnet, which enables high efficiency of the compressor.

A compressor according to a tenth aspect is the compressor according to the first aspect or the second aspect, in which the permanent magnet has a flat shape and in which a plurality of the permanent magnets are embedded in the rotor to form a V-shape. The holding force of a part positioned at the bottom portion of the V-shape is set to be higher than the holding force of other parts by $\{1/(4\pi)\}\times10^3$[A/m].

This compressor suppresses demagnetization of the permanent magnet, which enables high efficiency of the compressor.

A compressor according to an eleventh aspect is the compressor according to the first aspect or the second aspect, in which the rotor is formed by laminating a plurality of high-tensile electromagnetic steel plates in a plate thickness direction, the plurality of high-tensile electromagnetic steel each having a tensile strength of 400 MPa or more.

This compressor improves durability of the rotor during high-speed rotation, which enables high efficiency of the compressor.

A compressor according to a twelfth aspect is the compressor according to the eleventh aspect, in which the permanent magnet forms a flat plate having a predetermined thickness. The rotor has an accommodation hole, a non-magnetic space, and a bridge. A plurality of the permanent magnets are embedded in the accommodation hole. The non-magnetic space extends from each of end portions of the permanent magnets accommodated in the accommodation hole to the vicinity of the surface of the rotor. The bridge is positioned on the outer side of the non-magnetic space and couples magnetic poles to each other. The thickness of the bridge is 3 mm or more.

This compressor improves durability during high-speed rotation, which enables high efficiency of the compressor.

A compressor according to a thirteenth aspect is the compressor according to the first aspect, in which the rotor is a surface-magnet rotor. In the surface-magnet rotor, the permanent magnet is affixed to the surface of the rotor.

A compressor according to a fourteenth aspect is the compressor according to any of the first through thirteenth aspects, wherein, the refrigerant comprises trans-1,2-difluoroethylene (HFO-1132(E)), trifluoroethylene (HFO-1123), and 2,3,3,3-tetrafluoro-1-propene (R1234yf).

In this compressor, the number of rotations of the motor can be changed in accordance with an air conditioning load, and thus high efficiency of the compressor can also be achieved when a refrigerant having a sufficiently low GWP, a refrigeration capacity (may also be referred to as a cooling capacity or a capacity) and a coefficient of performance (COP) equal to those of R410A is used.

A compressor according to a fifteenth aspect is the compressor according to the fourteenth aspect, wherein, when the mass% of HFO-1132(E), HFO-1123, and R1234yf based on their sum in the refrigerant is respectively represented by x, y, and z, coordinates (x,y,z) in a ternary composition diagram in which the sum of HFO-1132(E), HFO-1123, and R1234yf is 100 mass% are within the range of a figure surrounded by line segments AA', A'B, BD, DC', C'C, CO, and OA that connect the following 7 points:

  point A (68.6, 0.0, 31.4),
  point A' (30.6, 30.0, 39.4),
  point B (0.0, 58.7, 41.3),
  point D (0.0, 80.4, 19.6),
  point C' (19.5, 70.5, 10.0),
  point C (32.9, 67.1, 0.0), and
  point O (100.0, 0.0, 0.0),

or on the above line segments (excluding the points on the line segments BD, CO, and OA);

  the line segment AA' is represented by coordinates (x, $0.0016x^2-0.9473x+57.497$, $-0.0016x^2-0.0527x+42.503$),
  the line segment A'B is represented by coordinates (x, $0.0029x^2-1.0268x+58.7$, $-0.0029x^2+0.0268x+41.3$),
  the line segment DC' is represented by coordinates (x, $0.0082x^2-0.6671x+80.4$, $-0.0082x^2-0.3329x+19.6$),
  the line segment C'C is represented by coordinates (x, $0.0067x^2-0.6034x+79.729$, $-0.0067x^2-0.3966x+20.271$), and
  the line segments BD, CO, and OA are straight lines.

A compressor according to a sixteenth aspect is the compressor according to the fourteenth aspect, wherein, when the mass% of HFO-1132(E), HFO-1123, and R1234yf based on their sum in the refrigerant is respectively represented by x, y, and z, coordinates (x,y,z) in a ternary composition diagram in which the sum of HFO-1132(E), HFO-1123, and R1234yf is 100 mass% are within the range of a figure surrounded by line segments GI, IA, AA', A'B, BD, DC', C'C, and CG that connect the following 8 points:

point G (72.0, 28.0, 0.0),
point I (72.0, 0.0, 28.0),
point A (68.6, 0.0, 31.4),
point A' (30.6, 30.0, 39.4),
point B (0.0, 58.7, 41.3),
point D (0.0, 80.4, 19.6),
point C' (19.5, 70.5, 10.0), and
point C (32.9, 67.1, 0.0),

or on the above line segments (excluding the points on the line segments IA, BD, and CG);

the line segment AA' is represented by coordinates $(x, 0.0016x^2-0.9473x+57.497, -0.0016x^2-0.0527x+42.503)$,
the line segment A'B is represented by coordinates $(x, 0.0029x^2-1.0268x+58.7, -0.0029x^2+0.0268x+41.3)$,
the line segment DC' is represented by coordinates $(x, 0.0082x^2-0.6671x+80.4, -0.0082x^2-0.3329x+19.6)$,
the line segment C'C is represented by coordinates $(x, 0.0067x^2-0.6034x+79.729, -0.0067x^2-0.3966x+20.271)$, and
the line segments GI, IA, BD, and CG are straight lines.

A compressor according to a seventeenth aspect is the compressor according to the fourteenth aspect, wherein, when the mass% of HFO-1132(E), HFO-1123, and R1234yf based on their sum in the refrigerant is respectively represented by x, y, and z, coordinates (x,y,z) in a ternary composition diagram in which the sum of HFO-1132(E), HFO-1123, and R1234yf is 100 mass% are within the range of a figure surrounded by line segments JP, PN, NK, KA', A'B, BD, DC', C'C, and CJ that connect the following 9 points:

point J (47.1, 52.9, 0.0),
point P (55.8, 42.0, 2.2),
point N (68.6, 16.3, 15.1),
point K (61.3, 5.4, 33.3),
point A' (30.6, 30.0, 39.4),
point B (0.0, 58.7, 41.3),
point D (0.0, 80.4, 19.6),
point C' (19.5, 70.5, 10.0), and
point C (32.9, 67.1, 0.0),

or on the above line segments (excluding the points on the line segments BD and CJ);

the line segment PN is represented by coordinates $(x, -0.1135x^2+12.112x-280.43, 0.1135x^2-13.112x+380.43)$,
the line segment NK is represented by coordinates $(x, 0.2421x^2-29.955x+931.91, -0.2421x^2+28.955x-831.91)$,
the line segment KA' is represented by coordinates $(x, 0.0016x^2-0.9473x+57.497, -0.0016x^2-0.0527x+42.503)$,
the line segment A'B is represented by coordinates $(x, 0.0029x^2-1.0268x+58.7, -0.0029x^2+0.0268x+41.3)$,
the line segment DC' is represented by coordinates $(x, 0.0082x^2-0.6671x+80.4, -0.0082x^2-0.3329x+19.6)$,
the line segment C'C is represented by coordinates $(x, 0.0067x^2-0.6034x+79.729, -0.0067x^2-0.3966x+20.271)$, and
the line segments JP, BD, and CG are straight lines.

A compressor according to a eighteenth aspect is the compressor according to the fourteenth aspect, wherein, when the mass% of HFO-1132(E), HFO-1123, and R1234yf based on their sum in the refrigerant is respectively represented by x, y, and z, coordinates (x,y,z) in a ternary composition diagram in which the sum of HFO-1132(E), HFO-1123, and R1234yf is 100 mass% are within the range of a figure surrounded by line segments JP, PL, LM, MA', A'B, BD, DC', C'C, and CJ that connect the following 9 points:

point J (47.1, 52.9, 0.0),
point P (55.8, 42.0, 2.2),
point L (63.1, 31.9, 5.0),

point M (60.3, 6.2, 33.5),
point A' (30.6, 30.0, 39.4),
point B (0.0, 58.7, 41.3),
point D (0.0, 80.4, 19.6),
point C' (19.5, 70.5, 10.0), and
point C (32.9, 67.1, 0.0),

or on the above line segments (excluding the points on the line segments BD and CJ);

the line segment PL is represented by coordinates (x, $-0.1135x^2+12.112x-280.43$, $0.1135x^2-13.112x+380.43$)
the line segment MA' is represented by coordinates (x, $0.0016x^2-0.9473x+57.497$, $-0.0016x^2-0.0527x+42.503$),
the line segment A'B is represented by coordinates (x, $0.0029x^2-1.0268x+58.7$, $-0.0029x^2+0.0268x+41.3$),
the line segment DC' is represented by coordinates (x, $0.0082x^2-0.6671x+80.4$, $-0.0082x^2-0.3329x+19.6$),
the line segment C'C is represented by coordinates (x, $0.0067x^2-0.6034x+79.729$, $-0.0067x^2-0.3966x+20.271$), and
the line segments JP, LM, BD, and CG are straight lines.

A compressor according to a nineteenth aspect is the compressor according to the fourteenth aspect, wherein, when the mass% of HFO-1132(E), HFO-1123, and R1234yf based on their sum in the refrigerant is respectively represented by x, y, and z, coordinates (x,y,z) in a ternary composition diagram in which the sum of HFO-1132(E), HFO-1123, and R1234yf is 100 mass% are within the range of a figure surrounded by line segments PL, LM, MA', A'B, BF, FT, and TP that connect the following 7 points:

point P (55.8, 42.0, 2.2),
point L (63.1, 31.9, 5.0),
point M (60.3, 6.2, 33.5),
point A' (30.6, 30.0, 39.4),
point B (0.0, 58.7, 41.3),
point F (0.0, 61.8, 38.2), and
point T (35.8, 44.9, 19.3),

or on the above line segments (excluding the points on the line segment BF);

the line segment PL is represented by coordinates (x, $-0.1135x^2+12.112x-280.43$, $0.1135x^2-13.112x+380.43$),
the line segment MA' is represented by coordinates (x, $0.0016x^2-0.9473x+57.497$, $-0.0016x^2-0.0527x+42.503$),
the line segment A'B is represented by coordinates (x, $0.0029x^2-1.0268x+58.7$, $-0.0029x^2+0.0268x+41.3$),
the line segment FT is represented by coordinates (x, $0.0078x^2-0.7501x+61.8$, $-0.0078x^2-0.2499x+38.2$),
the line segment TP is represented by coordinates (x, $0.0067x^2-0.7607x+63.525$, $-0.0067x^2-0.2393x+36.475$), and
the line segments LM and BF are straight lines.

A compressor according to a twentieth aspect is the compressor according to the fourteenth aspect, wherein, when the mass% of HFO-1132(E), HFO-1123, and R1234yf based on their sum in the refrigerant is respectively represented by x, y, and z, coordinates (x,y,z) in a ternary composition diagram in which the sum of HFO-1132(E), HFO-1123, and R1234yf is 100 mass% are within the range of a figure surrounded by line segments PL, LQ, QR, and RP that connect the following 4 points:

point P (55.8, 42.0, 2.2),
point L (63.1, 31.9, 5.0),
point Q (62.8, 29.6, 7.6), and
point R (49.8, 42.3, 7.9),

or on the above line segments;

the line segment PL is represented by coordinates (x, $-0.1135x^2+12.112x-280.43$, $0.1135x^2-13.112x+380.43$),
the line segment RP is represented by coordinates (x, $0.0067x^2-0.7607x+63.525$, $-0.0067x^2-0.2393x+36.475$), and
the line segments LQ and QR are straight lines.

A compressor according to a twenty-first aspect is the compressor according to the fourteenth aspect, wherein, when the mass% of HFO-1132(E), HFO-1123, and R1234yf based on their sum in the refrigerant is respectively represented by x, y, and z, coordinates (x,y,z) in a ternary composition diagram in which the sum of HFO-1132(E), HFO-1123, and R1234yf is 100 mass% are within the range of a figure surrounded by line segments SM, MA', A'B, BF, FT, and TS that connect the following 6 points:

point S (62.6, 28.3, 9.1),
point M (60.3, 6.2, 33.5),
point A' (30.6, 30.0, 39.4),
point B (0.0, 58.7, 41.3),
point F (0.0, 61.8, 38.2), and
point T (35.8, 44.9, 19.3),

or on the above line segments,

the line segment MA' is represented by coordinates $(x, 0.0016x^2-0.9473x+57.497, -0.0016x^2-0.0527x+42.503)$,
the line segment A'B is represented by coordinates $(x, 0.0029x^2-1.0268x+58.7, -0.0029x^2+0.0268x+41.3)$,
the line segment FT is represented by coordinates $(x, 0.0078x^2-0.7501x+61.8, -0.0078x^2-0.2499x+38.2)$,
the line segment TS is represented by coordinates $(x, 0.0017x^2-0.7869x+70.888, -0.0017x^2-0.2131x+29.112)$, and
the line segments SM and BF are straight lines.

A compressor according to a twenty-second aspect is the compressor according to any of the first through thirteenth aspects, wherein, the refrigerant comprises trans-1,2-difluoroethylene (HFO-1132(E)) and trifluoroethylene (HFO-1123) in a total amount of 99.5 mass% or more based on the entire refrigerant, and
the refrigerant comprises 62.0 mass% to 72.0 mass% of HFO-1132(E) based on the entire refrigerant.
In this compressor, the number of rotations of the motor can be changed in accordance with an air conditioning load, and thus high efficiency of the compressor can also be achieved when a refrigerant having a sufficiently low GWP, a refrigeration capacity (may also be referred to as a cooling capacity or a capacity) and a coefficient of performance (COP) equal to those of R410A and classified with lower flammability (Class 2L) in the standard of The American Society of Heating, Refrigerating and Air-Conditioning Engineers (ASHRAE) is used.
A compressor according to a twenty-third aspect is the compressor according to any of the first through thirteenth aspects, wherein, the refrigerant comprises HFO-1132(E) and HFO-1123 in a total amount of 99.5 mass% or more based on the entire refrigerant, and
the refrigerant comprises 45.1 mass% to 47.1 mass% of HFO-1132(E) based on the entire refrigerant.
In this compressor, the number of rotations of the motor can be changed in accordance with an air conditioning load, and thus high efficiency of the compressor can also be achieved when a refrigerant having a sufficiently low GWP, a refrigeration capacity (may also be referred to as a cooling capacity or a capacity) and a coefficient of performance (COP) equal to those of R410A and classified with lower flammability (Class 2L) in the standard of The American Society of Heating, Refrigerating and Air-Conditioning Engineers (ASHRAE) is used.
A compressor according to a twenty-fourth aspect is the compressor according to any of the first through thirteenth aspects, wherein, the refrigerant comprises trans-1,2-difluoroethylene (HFO-1132(E)), trifluoroethylene (HFO-1123), 2,3,3,3-tetrafluoro-1-propene (R1234yf), and difluoromethane (R32),
wherein

when the mass% of HFO-1132(E), HFO-1123, R1234yf, and R32 based on their sum in the refrigerant is respectively represented by x, y, z, and a,
if $0<a\leq 11.1$, coordinates (x,y,z) in a ternary composition diagram in which the sum of HFO-1132(E), HFO-1123, and R1234yf is (100-a) mass% are within the range of a figure surrounded by straight lines GI, IA, AB, BD', D'C, and CG that connect the following 6 points:

point G $(0.026a^2-1.7478a+72.0, -0.026a^2+0.7478a+28.0, 0.0)$,
point I $(0.026a^2-1.7478a+72.0, 0.0, -0.026a^2+0.7478a+28.0)$,
point A $(0.0134a^2-1.9681a+68.6, 0.0, -0.0134a^2+0.9681a+31.4)$,
point B $(0.0, 0.0144a^2-1.6377a+58.7, -0.0144a^2+0.6377a+41.3)$,
point D' $(0.0, 0.0224a^2+0.968a+75.4, -0.0224a^2-1.968a+24.6)$, and
point C $(-0.2304a^2-0.4062a+32.9, 0.2304a^2-0.5938a+67.1, 0.0)$,

or on the straight lines GI, AB, and D'C (excluding point G, point I, point A, point B, point D', and point C);
if $11.1<a\leq18.2$, coordinates (x,y,z) in the ternary composition diagram are within the range of a figure surrounded by straight lines GI, IA, AB, BW, and WG that connect the following 5 points:

point G ($0.02a^2-1.6013a+71.105$, $-0.02a^2+0.6013a+28.895$, 0.0),
point I ($0.02a^2-1.6013a+71.105$, 0.0, $-0.02a^2+0.6013a+28.895$),
point A($0.0112a^2-1.9337a+68.484$, 0.0, $-0.0112a^2+0.9337a+31.516$),
point B (0.0, $0.0075a^2-1.5156a+58.199$, $-0.0075a^2+0.5156a+41.801$), and
point W (0.0, $100.0-a$, 0.0),

or on the straight lines GI and AB (excluding point G, point I, point A, point B, and point W);
if $18.2<a\leq26.7$, coordinates (x,y,z) in the ternary composition diagram are within the range of a figure surrounded by straight lines GI, IA, AB, BW, and WG that connect the following 5 points:

point G ($0.0135a^2-1.4068a+69.727$, $-0.0135a^2+0.4068a+30.273$, 0.0),
point I ($0.0135a^2-1.4068a+69.727$, 0.0, $-0.0135a^2+0.4068a+30.273$),
point A($0.0107a^2-1.9142a+68.305$, 0.0, $-0.0107a^2+0.9142a+31.695$),
point B (0.0, $0.009a^2-1.6045a+59.318$, $-0.009a^2+0.6045a+40.682$), and
point W (0.0, $100.0-a$, 0.0),

or on the straight lines GI and AB (excluding point G, point I, point A, point B, and point W);
if $26.7<a\leq36.7$, coordinates (x,y,z) in the ternary composition diagram are within the range of a figure surrounded by straight lines GI, IA, AB, BW, and WG that connect the following 5 points:

point G ($0.0111a^2-1.3152a+68.986$, $-0.0111a^2+0.3152a+31.014$, 0.0),
point I ($0.0111a^2-1.3152a+68.986$, 0.0, $-0.0111a^2+0.3152a+31.014$),
point A($0.0103a^2-1.9225a+68.793$, 0.0, $-0.0103a^2+0.9225a+31.207$),
point B (0.0, $0.0046a^2-1.41a+57.286$, $-0.0046a^2+0.41a+42.714$), and
point W (0.0, $100.0-a$, 0.0),

or on the straight lines GI and AB (excluding point G, point I, point A, point B, and point W); and
if $36.7<a\leq46.7$, coordinates (x,y,z) in the ternary composition diagram are within the range of a figure surrounded by straight lines GI, IA, AB, BW, and WG that connect the following 5 points:

point G ($0.0061a^2-0.9918a+63.902$, $-0.0061a^2-0.0082a+36.098$, 0.0),
point I ($0.0061a^2-0.9918a+63.902$, 0.0, $-0.0061a^2-0.0082a+36.098$),
point A ($0.0085a^2-1.8102a+67.1$, 0.0, $-0.0085a^2+0.8102a+32.9$),
point B (0.0, $0.0012a^2-1.1659a+52.95$, $-0.0012a^2+0.1659a+47.05$), and
point W (0.0, $100.0-a$, 0.0),

or on the straight lines GI and AB (excluding point G, point I, point A, point B, and point W).

In this compressor, the number of rotations of the motor can be changed in accordance with an air conditioning load, and thus high efficiency of the compressor can also be achieved when a refrigerant having a sufficiently low GWP, a refrigeration capacity (may also be referred to as a cooling capacity or a capacity) and a coefficient of performance (COP) equal to those of R410A is used.

A compressor according to a twenty-fifth aspect is the compressor according to any of the first through thirteenth aspects, wherein, the refrigerant comprises trans-1,2-difluoroethylene (HFO-1132(E)), trifluoroethylene (HFO-1123), 2,3,3,3-tetrafluoro-1-propene (R1234yf), and difluoromethane (R32),
wherein

when the mass% of HFO-1132(E), HFO-1123, R1234yf, and R32 based on their sum in the refrigerant is respectively represented by x, y, z, and a,
if $0<a\leq11.1$, coordinates (x,y,z) in a ternary composition diagram in which the sum of HFO-1132(E), HFO-1123, and R1234yf is (100-a) mass% are within the range of a figure surrounded by straight lines JK', K'B, BD', D'C, and CJ that connect the following 5 points:

point J ($0.0049a^2-0.9645a+47.1$, $-0.0049a^2-0.0355a+52.9$, 0.0),
point K' ($0.0514a^2-2.4353a+61.7$, $-0.0323a^2+0.4122a+5.9$, $-0.0191a^2+1.0231a+32.4$),
point B (0.0, $0.0144a^2-1.6377a+58.7$, $-0.0144a^2+0.6377a+41.3$),
point D' (0.0, $0.0224a^2+0.968a+75.4$, $-0.0224a^2-1.968a+24.6$), and
point C ($-0.2304a^2-0.4062a+32.9$, $0.2304a^2-0.5938a+67.1$, 0.0),

or on the straight lines JK', K'B, and D'C (excluding point J, point B, point D', and point C);
if $11.1 < a \leq 18.2$, coordinates (x,y,z) in the ternary composition diagram are within the range of a figure surrounded by straight lines JK', K'B, BW, and WJ that connect the following 4 points:

point J ($0.0243a^2 - 1.4161a + 49.725$, $-0.0243a^2 + 0.4161a + 50.275$, 0.0),
point K' ($0.0341a^2 - 2.1977a + 61.187$, $-0.0236a^2 + 0.34a + 5.636$, $-0.0105a^2 + 0.8577a + 33.177$),
point B (0.0, $0.0075a^2 - 1.5156a + 58.199$, $-0.0075a^2 + 0.5156a + 41.801$), and
point W (0.0, 100.0-a, 0.0),

or on the straight lines JK' and K'B (excluding point J, point B, and point W);
if $18.2 < a \leq 26.7$, coordinates (x,y,z) in the ternary composition diagram are within the range of a figure surrounded by straight lines JK', K'B, BW, and WJ that connect the following 4 points:

point J ($0.0246a^2 - 1.4476a + 50.184$, $-0.0246a^2 + 0.4476a + 49.816$, 0.0),
point K' ($0.0196a^2 - 1.7863a + 58.515$, $-0.0079a^2 - 0.1136a + 8.702$, $-0.0117a^2 + 0.8999a + 32.783$),
point B (0.0, $0.009a^2 - 1.6045a + 59.318$, $-0.009a^2 + 0.6045a + 40.682$), and
point W (0.0, 100.0-a, 0.0),

or on the straight lines JK' and K'B (excluding point J, point B, and point W);
if $26.7 < a \leq 36.7$, coordinates (x,y,z) in the ternary composition diagram are within the range of a figure surrounded by straight lines JK', K'A, AB, BW, and WJ that connect the following 5 points:

point J ($0.0183a^2 - 1.1399a + 46.493$, $-0.0183a^2 + 0.1399a + 53.507$, 0.0),
point K' ($-0.0051a^2 + 0.0929a + 25.95$, 0.0, $0.0051a^2 - 1.0929a + 74.05$),
point A($0.0103a^2 - 1.9225a + 68.793$, 0.0, $-0.0103a^2 + 0.9225a + 31.207$),
point B (0.0, $0.0046a^2 - 1.41a + 57.286$, $-0.0046a^2 + 0.41a + 42.714$), and
point W (0.0, 100.0-a, 0.0),

or on the straight lines JK', K'A, and AB (excluding point J, point B, and point W); and
if $36.7 < a \leq 46.7$, coordinates (x,y,z) in the ternary composition diagram are within the range of a figure surrounded by straight lines JK', K'A, AB, BW, and WJ that connect the following 5 points:

point J($-0.0134a^2 + 1.0956a + 7.13$, $0.0134a^2 - 2.0956a + 92.87$, 0.0),
point K' ($-1.892a + 29.443$, 0.0, $0.892a + 70.557$),
point A ($0.0085a^2 - 1.8102a + 67.1$, 0.0, $-0.0085a^2 + 0.8102a + 32.9$),
point B (0.0, $0.0012a^2 - 1.1659a + 52.95$, $-0.0012a^2 + 0.1659a + 47.05$), and
point W (0.0, 100.0-a, 0.0),

or on the straight lines JK', K'A, and AB (excluding point J, point B, and point W).

In this compressor, the number of rotations of the motor can be changed in accordance with an air conditioning load, and thus high efficiency of the compressor can also be achieved when a refrigerant having a sufficiently low GWP, a refrigeration capacity (may also be referred to as a cooling capacity or a capacity) and a coefficient of performance (COP) equal to those of R410A is used.

A compressor according to a twenty-sixth aspect is the compressor according to any of the first through thirteenth aspects, wherein the refrigerant comprises trans-1,2-difluoroethylene (HFO-1132(E)), difluoromethane(R32), and 2,3,3,3-tetrafluoro-1-propene (R1234yf),
wherein

when the mass% of HFO-1132(E), R32, and R1234yf based on their sum in the refrigerant is respectively represented by x, y, and z, coordinates (x,y,z) in a ternary composition diagram in which the sum of HFO-1132(E), R32, and R1234yf is 100 mass% are within the range of a figure surrounded by line segments IJ, JN, NE, and EI that connect the following 4 points:

point I (72.0, 0.0, 28.0),
point J (48.5, 18.3, 33.2),
point N (27.7, 18.2, 54.1), and
point E (58.3, 0.0, 41.7),

or on these line segments (excluding the points on the line segment EI;
the line segment IJ is represented by coordinates $(0.0236y^2-1.7616y+72.0, y, -0.0236y^2+0.7616y+28.0)$;
the line segment NE is represented by coordinates $(0.012y^2-1.9003y+58.3, y, -0.012y^2+0.9003y+41.7)$; and
the line segments JN and EI are straight lines.

In this compressor, the number of rotations of the motor can be changed in accordance with an air conditioning load, and thus high efficiency of the compressor can also be achieved when a refrigerant having a sufficiently low GWP, a refrigeration capacity (may also be referred to as a cooling capacity or a capacity) equal to those of R410A and classified with lower flammability (Class 2L) in the standard of The American Society of Heating, Refrigerating and Air-Conditioning Engineers (ASHRAE) is used.

A compressor according to a twenty-seventh aspect is the compressor according to any of the first through thirteenth aspects, wherein the refrigerant comprises HFO-1132(E), R32, and R1234yf,
wherein

when the mass% of HFO-1132(E), R32, and R1234yf based on their sum in the refrigerant is respectively represented by x, y, and z, coordinates (x,y,z) in a ternary composition diagram in which the sum of HFO-1132(E), R32, and R1234yf is 100 mass% are within the range of a figure surrounded by line segments MM', M'N, NV, VG, and GM that connect the following 5 points:

point M (52.6, 0.0, 47.4),
point M'(39.2, 5.0, 55.8),
point N (27.7, 18.2, 54.1),
point V (11.0, 18.1, 70.9), and
point G (39.6, 0.0, 60.4),

or on these line segments (excluding the points on the line segment GM);
the line segment MM' is represented by coordinates $(x, 0.132x^2-3.34x+52.6, -0.132x^2+2.34x+47.4)$;
the line segment M'N is represented by coordinates $(0.0313y^2-1.4551y+43.824, y, -0.0313y^2+0.4551y+56.176)$;
the line segment VG is represented by coordinates $(0.0123y^2-1.8033y+39.6, y, -0.0123y^2+0.8033y+60.4)$; and
the line segments NV and GM are straight lines.

In this compressor, the number of rotations of the motor can be changed in accordance with an air conditioning load, and thus high efficiency of the compressor can also be achieved when a refrigerant having a sufficiently low GWP, a refrigeration capacity (may also be referred to as a cooling capacity or a capacity) equal to those of R410A and classified with lower flammability (Class 2L) in the standard of The American Society of Heating, Refrigerating and Air-Conditioning Engineers (ASHRAE) is used.

A compressor according to a twenty-eighth aspect is the compressor according to any of the first through thirteenth aspects, wherein the refrigerant comprises HFO-1132(E), R32, and R1234yf,
wherein

when the mass% of HFO-1132(E), R32, and R1234yf based on their sum in the refrigerant is respectively represented by x, y and z, coordinates (x,y,z) in a ternary composition diagram in which the sum of HFO-1132(E), R32, and R1234yf is 100 mass% are within the range of a figure surrounded by line segments ON, NU, and UO that connect the following 3 points:

point O (22.6, 36.8, 40.6),
point N (27.7, 18.2, 54.1), and
point U (3.9, 36.7, 59.4),

or on these line segments;
the line segment ON is represented by coordinates $(0.0072y^2-0.6701y+37.512, y, -0.0072y^2-0.3299y+62.488)$;
the line segment NU is represented by coordinates $(0.0083y^2-1.7403y+56.635, y, -0.0083y^2+0.7403y+43.365)$; and
the line segment UO is a straight line.

In this compressor, the number of rotations of the motor can be changed in accordance with an air conditioning load, and thus high efficiency of the compressor can also be achieved when a refrigerant having a sufficiently low GWP, a refrigeration capacity (may also be referred to as a cooling capacity or a capacity) equal to those of R410A and classified with lower flammability (Class 2L) in the standard of The American Society of Heating, Refrigerating and Air-Conditioning Engineers (ASHRAE) is used.

A compressor according to a twenty-nineth aspect is the compressor according to any of the first through thirteenth aspects, wherein the refrigerant comprises HFO-1132(E), R32, and R1234yf,

wherein

when the mass% of HFO-1132(E), R32, and R1234yf based on their sum in the refrigerant is respectively represented by x, y, and z, coordinates (x,y,z) in a ternary composition diagram in which the sum of HFO-1132(E), R32, and R1234yf is 100 mass% are within the range of a figure surrounded by line segments QR, RT, TL, LK, and KQ that connect the following 5 points:

point Q (44.6, 23.0, 32.4),
point R (25.5, 36.8, 37.7),
point T (8.6, 51.6, 39.8),
point L (28.9, 51.7, 19.4), and
point K (35.6, 36.8, 27.6),

or on these line segments;
the line segment QR is represented by coordinates $(0.0099y^2-1.975y+84.765, y, -0.0099y^2+0.975y+15.235)$;
the line segment RT is represented by coordinates $(0.082y^2-1.8683y+83.126, y, -0.082y^2+0.8683y+16.874)$;
the line segment LK is represented by coordinates $(0.0049y^2-0.8842y+61.488, y, -0.0049y^2-0.1158y+38.512)$;
the line segment KQ is represented by coordinates $(0.0095y^2-1.2222y+67.676, y, -0.0095y^2+0.2222y+32.324)$; and
the line segment TL is a straight line.

In this compressor, the number of rotations of the motor can be changed in accordance with an air conditioning load, and thus high efficiency of the compressor can also be achieved when a refrigerant having a sufficiently low GWP, a refrigeration capacity (may also be referred to as a cooling capacity or a capacity) equal to those of R410A and classified with lower flammability (Class 2L) in the standard of The American Society of Heating, Refrigerating and Air-Conditioning Engineers (ASHRAE) is used.

A compressor according to a thirtieth aspect is the compressor according to any of the first through thirteenth aspects, wherein the refrigerant comprises HFO-1132(E), R32, and R1234yf,

wherein

when the mass% of HFO-1132(E), R32, and R1234yf based on their sum in the refrigerant is respectively represented by x, y, and z, coordinates (x,y,z) in a ternary composition diagram in which the sum of HFO-1132(E), R32, and R1234yf is 100 mass% are within the range of a figure surrounded by line segments PS, ST, and TP that connect the following 3 points:

point P (20.5, 51.7, 27.8),
point S (21.9, 39.7, 38.4), and
point T (8.6, 51.6, 39.8),

or on these line segments;
the line segment PS is represented by coordinates $(0.0064y^2-0.7103y+40.1, y, -0.0064y^2-0.2897y+59.9)$;
the line segment ST is represented by coordinates $(0.082y^2-1.8683y+83.126, y, -0.082y^2+0.8683y+16.874)$; and
the line segment TP is a straight line.

In this compressor, the number of rotations of the motor can be changed in accordance with an air conditioning load, and thus high efficiency of the compressor can also be achieved when a refrigerant having a sufficiently low GWP, a refrigeration capacity (may also be referred to as a cooling capacity or a capacity) equal to those of R410A and classified with lower flammability (Class 2L) in the standard of The American Society of Heating, Refrigerating and Air-Conditioning Engineers (ASHRAE) is used.

A compressor according to a thirty-first aspect is the compressor according to any of the first through thirteenth aspects, wherein the refrigerant comprises trans-1,2-difluoroethylene (HFO-1132(E)), trifluoroethylene (HFO-1123), and difluoromethane (R32),

wherein

when the mass% of HFO-1132(E), HFO-1123, and R32 based on their sum in the refrigerant is respectively represented by x, y, and z, coordinates (x,y,z) in a ternary composition diagram in which the sum of HFO-1132(E), HFO-1123, and R32 is 100 mass% are within the range of a figure surrounded by line segments IK, KB', B'H, HR, RG, and GI that connect the following 6 points:

> point I (72.0, 28.0, 0.0),
> point K (48.4, 33.2, 18.4),
> point B' (0.0, 81.6, 18.4),
> point H (0.0, 84.2, 15.8),
> point R (23.1, 67.4, 9.5), and
> point G (38.5, 61.5, 0.0),

or on these line segments (excluding the points on the line segments B'H and GI);
the line segment IK is represented by coordinates
$(0.025z^2-1.7429z+72.00, -0.025z^2+0.7429z+28.0, z)$,
the line segment HR is represented by coordinates
$(-0.3123z^2+4.234z+11.06, 0.3123z^2-5.234z+88.94, z)$,
the line segment RG is represented by coordinates
$(-0.0491z^2-1.1544z+38.5, 0.0491z^2+0.1544z+61.5, z)$, and
the line segments KB' and GI are straight lines.

In this compressor, the number of rotations of the motor can be changed in accordance with an air conditioning load, and thus high efficiency of the compressor can also be achieved when a refrigerant having a sufficiently low GWP, and a coefficient of performance (COP) equal to that of R410A is used.

A compressor according to a thirty-second aspect is the compressor according to any of the first through thirteenth aspects, wherein the refrigerant comprises HFO-1132(E), HFO-1123, and R32,

wherein

when the mass% of HFO-1132(E), HFO-1123, and R32 based on their sum in the refrigerant is respectively represented by x, y, and z, coordinates (x,y,z) in a ternary composition diagram in which the sum of HFO-1132(E), HFO-1123, and R32 is 100 mass% are within the range of a figure surrounded by line segments IJ, JR, RG, and GI that connect the following 4 points:

> point I (72.0, 28.0, 0.0),
> point J (57.7, 32.8, 9.5),
> point R (23.1, 67.4, 9.5), and
> point G (38.5, 61.5, 0.0),

or on these line segments (excluding the points on the line segment GI);
the line segment IJ is represented by coordinates
$(0.025z^2-1.7429z+72.0, -0.025z^2+0.7429z+28.0, z)$,
the line segment RG is represented by coordinates
$(-0.0491z^2-1.1544z+38.5, 0.0491z^2+0.1544z+61.5, z)$, and
the line segments JR and GI are straight lines.

In this compressor, the number of rotations of the motor can be changed in accordance with an air conditioning load, and thus high efficiency of the compressor can also be achieved when a refrigerant having a sufficiently low GWP, and a coefficient of performance (COP) equal to that of R410A is used.

A compressor according to a thirty-third aspect is the compressor according to any of the first through thirteenth aspects, wherein the refrigerant comprises HFO-1132(E), HFO-1123, and R32,
wherein

when the mass% of HFO-1132(E), HFO-1123, and R32 based on their sum in the refrigerant is respectively represented by x, y, and z, coordinates (x,y,z) in a ternary composition diagram in which the sum of HFO-1132(E), HFO-1123, and R32 is 100 mass% are within the range of a figure surrounded by line segments MP, PB', B'H, HR, RG, and GM that connect the following 6 points:

> point M (47.1, 52.9, 0.0),
> point P (31.8, 49.8, 18.4),
> point B' (0.0, 81.6, 18.4),

point H (0.0, 84.2, 15.8),
point R (23.1, 67.4, 9.5), and
point G (38.5, 61.5, 0.0),

or on these line segments (excluding the points on the line segments B'H and GM);
the line segment MP is represented by coordinates
$(0.0083z^2-0.984z+47.1, -0.0083z^2-0.016z+52.9, z)$,
the line segment HR is represented by coordinates
$(-0.3123z^2+4.234z+ 11.06, 0.3123z^2-5.234z+88.94, z)$,
the line segment RG is represented by coordinates
$(-0.0491z^2-1.1544z+38.5, 0.0491z^2+0.1544z+61.5, z)$, and
the line segments PB' and GM are straight lines.

In this compressor, the number of rotations of the motor can be changed in accordance with an air conditioning load, and thus high efficiency of the compressor can also be achieved when a refrigerant having a sufficiently low GWP, and a coefficient of performance (COP) equal to that of R410A is used.

A compressor according to a thirty-fourth aspect is the compressor according to any of the *first through thirteenth aspects, wherein the refrigerant comprises HFO-1132(E), HFO-1123, and R32,
wherein

when the mass% of HFO-1132(E), HFO-1123, and R32 based on their sum in the refrigerant is respectively represented by x, y, and z, coordinates (x,y,z) in a ternary composition diagram in which the sum of HFO-1132(E), HFO-1123, and R32 is 100 mass% are within the range of a figure surrounded by line segments MN, NR, RG, and GM that connect the following 4 points:

point M (47.1, 52.9, 0.0),
point N (38.5, 52.1, 9.5),
point R (23.1, 67.4, 9.5), and
point G (38.5, 61.5, 0.0),

or on these line segments (excluding the points on the line segment GM);
the line segment MN is represented by coordinates
$(0.0083z^2-0.984z+47.1, -0.0083z^2-0.016z+52.9, z)$,
the line segment RG is represented by coordinates
$(-0.0491z^2-1.1544z+38.5, 0.0491z^2+0.1544z+61.5, z)$, and
the line segments JR and GI are straight lines.

In this compressor, the number of rotations of the motor can be changed in accordance with an air conditioning load, and thus high efficiency of the compressor can also be achieved when a refrigerant having a sufficiently low GWP, and a coefficient of performance (COP) equal to that of R410A is used.

A compressor according to a thirty-fifth aspect is the compressor according to any of the first through thirteenth aspects, wherein the refrigerant comprises HFO-1132(E), HFO-1123, and R32,
wherein

when the mass% of HFO-1132(E), HFO-1123, and R32 based on their sum in the refrigerant is respectively represented by x, y, and z, coordinates (x,y,z) in a ternary composition diagram in which the sum of HFO-1132(E), HFO-1123, and R32 is 100 mass% are within the range of a figure surrounded by line segments PS, ST, and TP that connect the following 3 points:

point P (31.8, 49.8, 18.4),
point S (25.4, 56.2, 18.4), and
point T (34.8, 51.0, 14.2),

or on these line segments;
the line segment ST is represented by coordinates
$(-0.0982z^2+0.9622z+40.931, 0.0982z^2-1.9622z+59.069, z)$,
the line segment TP is represented by coordinates
$(0.0083z^2-0.984z+47.1, -0.0083z^2-0.016z+52.9, z)$, and

the line segment PS is a straight line.

In this compressor, the number of rotations of the motor can be changed in accordance with an air conditioning load, and thus high efficiency of the compressor can also be achieved when a refrigerant having a sufficiently low GWP, and a coefficient of performance (COP) equal to that of R410A is used.

A compressor according to a thirty-sixth aspect is the compressor according to any of the first through thirteenth aspects, wherein the refrigerant comprises HFO-1132(E), HFO-1123, and R32,

wherein

when the mass% of HFO-1132(E), HFO-1123, and R32 based on their sum in the refrigerant is respectively represented by x, y, and z, coordinates (x,y,z) in a ternary composition diagram in which the sum of HFO-1132(E), HFO-1123, and R32 is 100 mass% are within the range of a figure surrounded by line segments QB", B"D, DU, and UQ that connect the following 4 points:

point Q (28.6, 34.4, 37.0),
point B" (0.0, 63.0, 37.0),
point D (0.0, 67.0, 33.0), and
point U (28.7, 41.2, 30.1),

or on these line segments (excluding the points on the line segment B"D);
the line segment DU is represented by coordinates
$(-3.4962z^2+210.71z-3146.1, 3.4962z^2-211.71z+3246.1, z)$,
the line segment UQ is represented by coordinates
$(0.0135z^2-0.9181z+44.133, -0.0135z^2-0.0819z+55.867, z)$, and
the line segments QB" and B"D are straight lines.

In this compressor, the number of rotations of the motor can be changed in accordance with an air conditioning load, and thus high efficiency of the compressor can also be achieved when a refrigerant having a sufficiently low GWP, and a coefficient of performance (COP) equal to that of R410A is used.

A refrigeration cycle apparatus according to a thirty-seventh aspect includes the compressor according to any one of the first aspect to the thirty-sixth aspect.

**BRIEF DESCRIPTION OF THE DRAWINGS**

[Fig. 1] Fig. 1 is a schematic view of an instrument used for a flammability test.
[Fig. 2] Fig. 2 is a diagram showing points A to T and line segments that connect these points in a ternary composition diagram in which the sum of HFO-1132(E), HFO-1123, and R1234yf is 100 mass%.
[Fig. 3] Fig. 3 is a diagram showing points A to C, D', G, I, J, and K', and line segments that connect these points to each other in a ternary composition diagram in which the sum of HFO-1132(E), HFO-1123, and R1234yf is (100-a) mass%.
[Fig. 4] Fig. 4 is a diagram showing points A to C, D', G, I, J, and K', and line segments that connect these points to each other in a ternary composition diagram in which the sum of HFO-1132(E), HFO-1123, and R1234yf is 92.9 mass%(the content of R32 is 7.1 mass%).
[Fig. 5] Fig. 5 is a diagram showing points A to C, D', G, I, J, K', and W, and line segments that connect these points to each other in a ternary composition diagram in which the sum of HFO-1132(E), HFO-1123, and R1234yf is 88.9 mass% (the content of R32 is 11.1 mass%).
[Fig. 6] Fig. 6 is a diagram showing points A, B, G, I, J, K', and W, and line segments that connect these points to each other in a ternary composition diagram in which the sum of HFO-1132(E), HFO-1123, and R1234yf is 85.5 mass% (the content of R32 is 14.5 mass%).
[Fig. 7] Fig. 7 is a diagram showing points A, B, G, I, J, K', and W, and line segments that connect these points to each other in a ternary composition diagram in which the sum of HFO-1132(E), HFO-1123, and R1234yf is 81.8 mass% (the content of R32 is 18.2 mass%).
[Fig. 8] Fig. 8 is a diagram showing points A, B, G, I, J, K', and W, and line segments that connect these points to each other in a ternary composition diagram in which the sum of HFO-1132(E), HFO-1123, and R1234yf is 78.1 mass% (the content of R32 is 21.9 mass%).
[Fig. 9] Fig. 9 is a diagram showing points A, B, G, I, J, K', and W, and line segments that connect these points to each other in a ternary composition diagram in which the sum of HFO-1132(E), HFO-1123, and R1234yf is 73.3 mass% (the content of R32 is 26.7 mass%).

[Fig. 10] Fig. 10 is a diagram showing points A, B, G, I, J, K', and W, and line segments that connect these points to each other in a ternary composition diagram in which the sum of HFO-1132(E), HFO-1123, and R1234yf is 70.7 mass% (the content of R32 is 29.3 mass%).

[Fig. 11] Fig. 11 is a diagram showing points A, B, G, I, J, K', and W, and line segments that connect these points to each other in a ternary composition diagram in which the sum of HFO-1132(E), HFO-1123, and R1234yf is 63.3 mass% (the content of R32 is 36.7 mass%).

[Fig. 12] Fig. 12 is a diagram showing points A, B, G, I, J, K', and W, and line segments that connect these points to each other in a ternary composition diagram in which the sum of HFO-1132(E), HFO-1123, and R1234yf is 55.9 mass% (the content of R32 is 44.1 mass%).

[Fig. 13] Fig. 13 is a diagram showing points A, B, G, I, J, K', and W, and line segments that connect these points to each other in a ternary composition diagram in which the sum of HFO-1132(E), HFO-1123, and R1234yf is 52.2 mass% (the content of R32 is 47.8 mass%).

[Fig. 14] Fig. 14 is a view showing points A to C, E, G, and I to W; and line segments that connect points A to C, E, G, and I to W in a ternary composition diagram in which the sum of HFO-1132(E), R32, and R1234yf is 100 mass%.

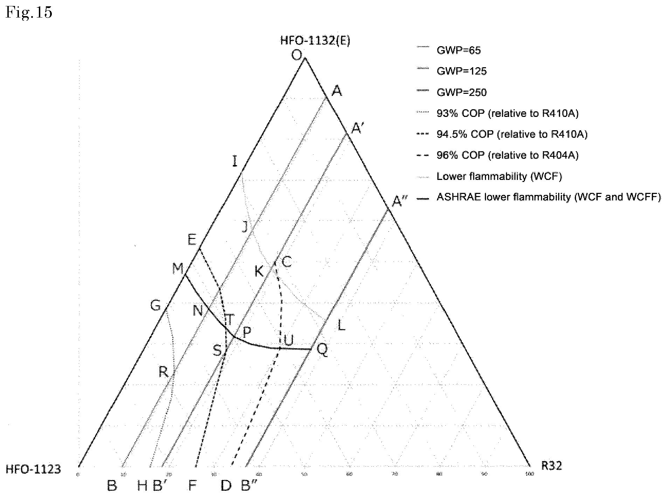

[Fig. 15] Fig. 15 is a view showing points A to U; and line segments that connect the points in a ternary composition diagram in which the sum of HFO-1132(E), HFO-1123, and R32 is 100 mass%.

[Fig. 16] Fig. 16 is a refrigerant circuit diagram of an air conditioner in which a compressor according to an embodiment of the present disclosure is utilized.

[Fig. 17] Fig. 17 is a longitudinal sectional view of the compressor according to an embodiment of the present disclosure.

[Fig. 18] Fig. 18 is a sectional view of a motor sectioned along a plane perpendicular to an axis.

[Fig. 19] Fig. 19 is a sectional view of a rotor sectioned along a plane perpendicular to an axis.

[Fig. 20] Fig. 20 is a perspective view of the rotor.

[Fig. 21] Fig. 21 is a sectional view of another rotor sectioned along a plane perpendicular to an axis.

[Fig. 22] Fig. 22 is a longitudinal sectional view of a compressor according to a second embodiment of the present disclosure.

## DESCRIPTION OF EMBODIMENTS

(1) Definition of Terms

In the present specification, the term "refrigerant" includes at least compounds that are specified in ISO 817 (International Organization for Standardization), and that are given a refrigerant number (ASHRAE number) representing the type of refrigerant with "R" at the beginning; and further includes refrigerants that have properties equivalent to those of such refrigerants, even though a refrigerant number is not yet given. Refrigerants are broadly divided into fluorocarbon compounds and non-fluorocarbon compounds in terms of the structure of the compounds. Fluorocarbon compounds include chlorofluorocarbons (CFC), hydrochlorofluorocarbons (HCFC), and hydrofluorocarbons (HFC). Non-fluorocarbon compounds include propane (R290), propylene (R1270), butane (R600), isobutane (R600a), carbon dioxide (R744), ammonia (R717), and the like.

In the present specification, the phrase "composition comprising a refrigerant" at least includes (1) a refrigerant itself (including a mixture of refrigerants), (2) a composition that further comprises other components and that can be mixed with at least a refrigeration oil to obtain a working fluid for a refrigerating machine, and (3) a working fluid for a refrigerating machine containing a refrigeration oil. In the present specification, of these three embodiments, the composition (2) is referred to as a "refrigerant composition" so as to distinguish it from a refrigerant itself (including a mixture of refrigerants). Further, the working fluid for a refrigerating machine (3) is referred to as a "refrigeration oil-containing working fluid" so as to distinguish it from the "refrigerant composition."

In the present specification, when the term "alternative" is used in a context in which the first refrigerant is replaced with the second refrigerant, the first type of "alternative" means that equipment designed for operation using the first refrigerant can be operated using the second refrigerant under optimum conditions, optionally with changes of only a few parts (at least one of the following: refrigeration oil, gasket, packing, expansion valve, dryer, and other parts) and equipment adjustment. In other words, this type of alternative means that the same equipment is operated with an alternative refrigerant. Embodiments of this type of "alternative" include "drop-in alternative," "nearly drop-in alternative," and "retrofit," in the order in which the extent of changes and adjustment necessary for replacing the first refrigerant with the second refrigerant is smaller.

The term "alternative" also includes a second type of "alternative," which means that equipment designed for operation using the second refrigerant is operated for the same use as the existing use with the first refrigerant by using the second refrigerant. This type of alternative means that the same use is achieved with an alternative refrigerant.

In the present specification, the term "refrigerating machine" refers to machines in general that draw heat from an object or space to make its temperature lower than the temperature of ambient air, and maintain a low temperature. In other words, refrigerating machines refer to conversion machines that gain energy from the outside to do work, and that perform energy conversion, in order to transfer heat from where the temperature is lower to where the temperature is higher.

In the present specification, a refrigerant having a "WCF lower flammability" means that the most flammable composition (worst case of formulation for flammability: WCF) has a burning velocity of 10 cm/s or less according to the US ANSI/ASHRAE Standard 34-2013. Further, in the present specification, a refrigerant having "ASHRAE lower flammability" means that the burning velocity of WCF is 10 cm/s or less, that the most flammable fraction composition (worst case of fractionation for flammability: WCFF), which is specified by performing a leakage test during storage, shipping, or use based on ANSI/ASHRAE 34-2013 using WCF, has a burning velocity of 10 cm/s or less, and that flammability classification according to the US ANSI/ASHRAE Standard 34-2013 is determined to classified as be "Class 2L."

In the present specification, a refrigerant having an "RCL of x% or more" means that the refrigerant has a refrigerant concentration limit (RCL), calculated in accordance with the US ANSI/ASHRAE Standard 34-2013, of x% or more. RCL refers to a concentration limit in the air in consideration of safety factors. RCL is an index for reducing the risk of acute toxicity, suffocation, and flammability in a closed space where humans are present. RCL is determined in accordance with the ASHRAE Standard. More specifically, RCL is the lowest concentration among the acute toxicity exposure limit (ATEL), the oxygen deprivation limit (ODL), and the flammable concentration limit (FCL), which are respectively calculated in accordance with sections 7.1.1, 7.1.2, and 7.1.3 of the ASHRAE Standard.

In the present specification, temperature glide refers to an absolute value of the difference between the initial temperature and the end temperature in the phase change process of a composition containing the refrigerant of the present disclosure in the heat exchanger of a refrigerant system.

(2) Refrigerant

(2-1) Refrigerant Component

Any one of various refrigerants such as refrigerant A, refrigerant B, refrigerant C, refrigerant D, and refrigerant E, details of these refrigerant are to be mentioned later, can be used as the refrigerant.

(2-2) Use of reffigerant

The refrigerant according to the present disclosure can be preferably used as a working fluid in a refrigerating machine.

The composition according to the present disclosure is suitable for use as an alternative refrigerant for HFC refrigerant such as R410A, R407C and R404 etc, or HCFC refrigerant such as R22 etc.

(3) Refrigerant Composition

The refrigerant composition according to the present disclosure comprises at least the refrigerant according to the present disclosure, and can be used for the same use as the refrigerant according to the present disclosure. Moreover, the refrigerant composition according to the present disclosure can be further mixed with at least a refrigeration oil to thereby obtain a working fluid for a refrigerating machine.

The refrigerant composition according to the present disclosure further comprises at least one other component in addition to the refrigerant according to the present disclosure. The refrigerant composition according to the present disclosure may comprise at least one of the following other components, if necessary. As described above, when the refrigerant composition according to the present disclosure is used as a working fluid in a refrigerating machine, it is generally used as a mixture with at least a refrigeration oil. Therefore, it is preferable that the refrigerant composition according to the present disclosure does not substantially comprise a refrigeration oil. Specifically, in the refrigerant composition according to the present disclosure, the content of the refrigeration oil based on the entire refrigerant composition is preferably 0 to 1 mass%, and more preferably 0 to 0.1 mass%.

(3-1) Water

The refrigerant composition according to the present disclosure may contain a small amount of water. The water content of the refrigerant composition is preferably 0.1 mass% or less based on the entire refrigerant. A small amount of water contained in the refrigerant composition stabilizes double bonds in the molecules of unsaturated fluorocarbon compounds that can be present in the refrigerant, and makes it less likely that the unsaturated fluorocarbon compounds will be oxidized, thus increasing the stability of the refrigerant composition.

(3-2) Tracer

A tracer is added to the refrigerant composition according to the present disclosure at a detectable concentration such that when the refrigerant composition has been diluted, contaminated, or undergone other changes, the tracer can trace the changes.

The refrigerant composition according to the present disclosure may comprise a single tracer, or two or more tracers.

The tracer is not limited, and can be suitably selected from commonly used tracers. Preferably, a compound that cannot be an impurity inevitably mixed in the refrigerant of the present disclosure is selected as the tracer.

Examples of tracers include hydrofluorocarbons, hydrochlorofluorocarbons, chlorofluorocarbons, hydrochlorocarbons, fluorocarbons, deuterated hydrocarbons, deuterated hydrofluorocarbons, perfluorocarbons, fluoroethers, brominated compounds, iodinated compounds, alcohols, aldehydes, ketones, and nitrous oxide ($N_2O$). The tracer is particularly preferably a hydrofluorocarbon, a hydrochlorofluorocarbon, a chlorofluorocarbon, a fluorocarbon, a hydrochlorocarbon, a fluorocarbon, or a fluoroether.

The following compounds are preferable as the tracer.

FC-14 (tetrafluoromethane, $CF_4$)
HCC-40 (chloromethane, $CH_3Cl$)
HFC-23 (trifluoromethane, $CHF_3$)
HFC-41 (fluoromethane, $CH_3Cl$)
HFC-125 (pentafluoroethane, $CF_3CHF_2$)
HFC-134a (1,1,1,2-tetrafluoroethane, $CF_3CH_2F$)
HFC-134 (1,1,2,2-tetrafluoroethane, $CHF_2CHF_2$)
HFC-143a (1,1,1-trifluoroethane, $CF_3CH_3$)
HFC-143 (1,1,2-trifluoroethane, $CHF_2CH_2F$)
HFC-152a (1,1-difluoroethane, $CHF_2CH_3$)
HFC-152 (1,2-difluoroethane, $CH_2FCH_2F$)
HFC-161 (fluoroethane, $CH_3CH_2F$)
HFC-245fa (1,1,1,3,3-pentafluoropropane, $CF_3CH_2CHF_2$)
HFC-236fa (1,1,1,3,3,3-hexafluoropropane, $CF_3CH_2CF_3$)
HFC-236ea (1,1,1,2,3,3-hexafluoropropane, $CF_3CHFCHF_2$)
HFC-227ea (1,1,1,2,3,3,3-heptafluoropropane, $CF_3CHFCF_3$)
HCFC-22 (chlorodifluoromethane, $CHClF_2$)
HCFC-31 (chlorofluoromethane, $CH_2ClF$)
CFC-1113 (chlorotrifluoroethylene, $CF_2{=}CClF$)
HFE-125 (trifluoromethyl-difluoromethyl ether, $CF_3OCHF_2$)
HFE-134a (trifluoromethyl-fluoromethyl ether, $CF_3OCH_2F$)
HFE-143a (trifluoromethyl-methyl ether, $CF_3OCH_3$)
HFE-227ea (trifluoromethyl-tetrafluoroethyl ether, $CF_3OCHFCF_3$)
HFE-236fa (trifluoromethyl-trifluoroethyl ether, $CF_3OCH_2CF_3$)

The tracer compound may be present in the refrigerant composition at a total concentration of about 10 parts per million (ppm) to about 1000 ppm. Preferably, the tracer compound is present in the refrigerant composition at a total concentration of about 30 ppm to about 500 ppm, and most preferably, the tracer compound is present at a total concentration of about 50 ppm to about 300 ppm.

(3-3) Ultraviolet Fluorescent Dye

The refrigerant composition according to the present disclosure may comprise a single ultraviolet fluorescent dye, or two or more ultraviolet fluorescent dyes.

The ultraviolet fluorescent dye is not limited, and can be suitably selected from commonly used ultraviolet fluorescent dyes.

Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

(3-4) Stabilizer

The refrigerant composition according to the present disclosure may comprise a single stabilizer, or two or more stabilizers.

The stabilizer is not limited, and can be suitably selected from commonly used stabilizers.

Examples of stabilizers include nitro compounds, ethers, and amines.

Examples of nitro compounds include aliphatic nitro compounds, such as nitromethane and nitroethane; and aromatic nitro compounds, such as nitro benzene and nitro styrene.

Examples of ethers include 1,4-dioxane.

Examples of amines include 2,2,3,3-pentafluoropropylamine and diphenylamine.

Examples of stabilizers also include butylhydroxyxylene and benzotriazole.

The content of the stabilizer is not limited. Generally, the content of the stabilizer is preferably 0.01 to 5 mass%, and more preferably 0.05 to 2 mass%, based on the entire refrigerant.

(3-5) Polymerization Inhibitor

The refrigerant composition according to the present disclosure may comprise a single polymerization inhibitor, or two or more polymerization inhibitors.

The polymerization inhibitor is not limited, and can be suitably selected from commonly used polymerization inhibitors.

Examples of polymerization inhibitors include 4-methoxy-1-naphthol, hydroquinone, hydroquinone methyl ether, dimethyl-t-butylphenol, 2,6-di-tert-butyl-p-cresol, and benzotriazole.

The content of the polymerization inhibitor is not limited. Generally, the content of the polymerization inhibitor is preferably 0.01 to 5 mass%, and more preferably 0.05 to 2 mass%, based on the entire refrigerant.

(4) Refrigeration Oil-Containing Working Fluid

The refrigeration oil-containing working fluid according to the present disclosure comprises at least the refrigerant or refrigerant composition according to the present disclosure and a refrigeration oil, for use as a working fluid in a refrigerating machine. Specifically, the refrigeration oil-containing working fluid according to the present disclosure is obtained by mixing a refrigeration oil used in a compressor of a refrigerating machine with the refrigerant or the refrigerant composition. The refrigeration oil-containing working fluid generally comprises 10 to 50 mass% of refrigeration oil.

(4-1) Refrigeration Oil

The refrigeration oil is not limited, and can be suitably selected from commonly used refrigeration oils. In this case, refrigeration oils that are superior in the action of increasing the miscibility with the mixture and the stability of the mixture, for example, are suitably selected as necessary.

The base oil of the refrigeration oil is preferably, for example, at least one member selected from the group consisting of polyalkylene glycols (PAG), polyol esters (POE), and polyvinyl ethers (PVE).

The refrigeration oil may further contain additives in addition to the base oil. The additive may be at least one member selected from the group consisting of antioxidants, extreme-pressure agents, acid scavengers, oxygen scavengers, copper deactivators, rust inhibitors, oil agents, and antifoaming agents.

A refrigeration oil with a kinematic viscosity of 5 to 400 cSt at 40°C is preferable from the standpoint of lubrication.

The refrigeration oil-containing working fluid according to the present disclosure may further optionally contain at least one additive. Examples of additives include compatibilizing agents described below.

(4-2) Compatibilizing Agent

The refrigeration oil-containing working fluid according to the present disclosure may comprise a single compatibilizing agent, or two or more compatibilizing agents.

The compatibilizing agent is not limited, and can be suitably selected from commonly used compatibilizing agents.

Examples of compatibilizing agents include polyoxyalkylene glycol ethers, amides, nitriles, ketones, chlorocarbons, esters, lactones, aryl ethers, fluoroethers, and 1,1,1-trifluoroalkanes. The compatibilizing agent is particularly preferably a polyoxyalkylene glycol ether.

(5) Various Refrigerants

Hereinafter, the refrigerants A to E, which are the refrigerants used in the present embodiment, will be described in detail.

In addition, each description of the following refrigerant A, refrigerant B, refrigerant C, refrigerant D, and refrigerant E is each independent. The alphabet which shows a point or a line segment, the number of an Examples, and the number of a comparative examples are all independent of each other among the refrigerant A, the refrigerant B, the refrigerant C, the refrigerant D, and the refrigerant E. For example, the first embodiment of the refrigerant A and the first embodiment of the refrigerant B are different embodiment from each other.

(5-1) Refrigerant A

The refrigerant A according to the present disclosure is a mixed refrigerant comprising trans-1,2-difluoroethylene (HFO-1132(E)), trifluoroethylene (HFO-1123), and 2,3,3,3-tetrafluoro-1-propene (R1234yf).

The refrigerant A according to the present disclosure has various properties that are desirable as an R410A-alternative refrigerant, i.e., a refrigerating capacity and a coefficient of performance that are equivalent to those of R410A, and a sufficiently low GWP.

The refrigerant A according to the present disclosure is a composition comprising HFO-1132(E) and R1234yf, and optionally further comprising HFO-1123, and may further satisfy the following requirements. This refrigerant also has various properties desirable as an alternative refrigerant for R410A; i.e., it has a refrigerating capacity and a coefficient of performance that are equivalent to those of R410A, and a sufficiently low GWP.

Requirements

Preferable refrigerant A is as follows:
When the mass% of HFO-1132(E), HFO-1123, and R1234yf based on their sum in the refrigerant is respectively represented by x, y, and z, coordinates (x,y,z) in a ternary composition diagram in which the sum of HFO-1132(E), HFO-1123, and R1234yf is 100 mass% are within the range of a figure surrounded by line segments AA', A'B, BD, DC', C'C, CO, and OA that connect the following 7 points:

point A (68.6, 0.0, 31.4),
point A' (30.6, 30.0, 39.4),
point B (0.0, 58.7, 41.3),
point D (0.0, 80.4, 19.6),
point C' (19.5, 70.5, 10.0),
point C (32.9, 67.1, 0.0), and
point O (100.0, 0.0, 0.0),

or on the above line segments (excluding the points on the line CO);

the line segment AA' is represented by coordinates $(x, 0.0016x^2-0.9473x+57.497, -0.0016x^2-0.0527x+42.503)$,
the line segment A'B is represented by coordinates $(x, 0.0029x^2-1.0268x+58.7, -0.0029x^2+0.0268x+41.3)$,
the line segment DC' is represented by coordinates $(x, 0.0082x^2-0.6671x+80.4, -0.0082x^2-0.3329x+19.6)$,
the line segment C'C is represented by coordinates $(x, 0.0067x^2-0.6034x+79.729, -0.0067x^2-0.3966x+20.271)$, and
the line segments BD, CO, and OA are straight lines.

When the requirements above are satisfied, the refrigerant according to the present disclosure has a refrigerating capacity ratio of 85% or more relative to that of R410A, and a COP of 92.5% or more relative to that of R410A.

When the mass% of HFO-1132(E), HFO-1123, and R1234yf, based on their sum in the refrigerant A according to the present disclosure is respectively represented by x, y, and z, the refrigerant is preferably a refrigerant wherein coordinates (x,y,z) in a ternary composition diagram in which the sum of HFO-1132(E), HFO-1123, and R1234yf is 100 mass% are within a figure surrounded by line segments GI, IA, AA', A'B, BD, DC', C'C, and CG that connect the following 8 points:

point G (72.0, 28.0, 0.0),
point I (72.0, 0.0, 28.0),
point A (68.6, 0.0, 31.4),
point A' (30.6, 30.0, 39.4),

point B (0.0, 58.7, 41.3),
point D (0.0, 80.4, 19.6),
point C' (19.5, 70.5, 10.0), and
point C (32.9, 67.1, 0.0),

or on the above line segments (excluding the points on the line segment CG);

the line segment AA' is represented by coordinates (x, $0.0016x^2$-$0.9473x$+$57.497$, -$0.0016x^2$-$0.0527x$+$42.503$),
the line segment A'B is represented by coordinates (x, $0.0029x^2$-$1.0268x$+$58.7$, -$0.0029x^2$+$0.0268x$+$41.3$),
the line segment DC' is represented by coordinates (x, $0.0082x^2$-$0.6671x$+$80.4$, -$0.0082x^2$-$0.3329x$+$19.6$),
the line segment C'C is represented by coordinates (x, $0.0067x^2$-$0.6034x$+$79.729$, -$0.0067x^2$-$0.3966x$+$20.271$), and
the line segments GI, IA, BD, and CG are straight lines.

When the requirements above are satisfied, the refrigerant A according to the present disclosure has a refrigerating capacity ratio of 85% or more relative to that of R410A, and a COP of 92.5% or more relative to that of R410A; furthermore, the refrigerant A has a WCF lower flammability according to the ASHRAE Standard (the WCF composition has a burning velocity of 10 cm/s or less).

When the mass% of HFO-1132(E), HFO-1123, and R1234yf based on their sum in the refrigerant according to the present disclosure is respectively represented by x, y, and z, the refrigerant is preferably a refrigerant wherein coordinates (x,y,z) in a ternary composition diagram in which the sum of HFO-1132(E), HFO-1123, and R1234yf is 100 mass% are within the range of a figure surrounded by line segments JP, PN, NK, KA', A'B, BD, DC', C'C, and CJ that connect the following 9 points:

point J (47.1, 52.9, 0.0),
point P (55.8, 42.0, 2.2),
point N (68.6, 16.3, 15.1),
point K (61.3, 5.4, 33.3),
point A' (30.6, 30.0, 39.4),
point B (0.0, 58.7, 41.3),
point D (0.0, 80.4, 19.6),
point C' (19.5, 70.5, 10.0), and
point C (32.9, 67.1, 0.0),

or on the above line segments (excluding the points on the line segment CJ);

the line segment PN is represented by coordinates (x, -$0.1135x^2$+$12.112x$-$280.43$, $0.1135x^2$-$13.112x$+$380.43$),
the line segment NK is represented by coordinates (x, $0.2421x^2$-$29.955x$+$931.91$, -$0.2421x^2$+$28.955x$-$831.91$),
the line segment KA' is represented by coordinates (x, $0.0016x^2$-$0.9473x$+$57.497$, -$0.0016x^2$-$0.0527x$+$42.503$),
the line segment A'B is represented by coordinates (x, $0.0029x^2$-$1.0268x$+$58.7$, -$0.0029x^2$+$0.0268x$+$41.3$),
the line segment DC' is represented by coordinates (x, $0.0082x^2$-$0.6671x$+$80.4$, -$0.0082x^2$-$0.3329x$+$19.6$),
the line segment C'C is represented by coordinates (x, $0.0067x^2$-$0.6034x$+$79.729$, -$0.0067x^2$-$0.3966x$+$20.271$), and
the line segments JP, BD, and CG are straight lines.

When the requirements above are satisfied, the refrigerant A according to the present disclosure has a refrigerating capacity ratio of 85% or more relative to that of R410A, and a COP of 92.5% or more relative to that of R410A; furthermore, the refrigerant exhibits a lower flammability (Class 2L) according to the ASHRAE Standard (the WCF composition and the WCFF composition have a burning velocity of 10 cm/s or less).

When the mass% of HFO-1132(E), HFO-1123, and R1234yf based on their sum in the refrigerant according to the present disclosure is respectively represented by x, y, and z, the refrigerant is preferably a refrigerant wherein coordinates (x,y,z) in a ternary composition diagram in which the sum of HFO-1132(E), HFO-1123, and R1234yf is 100 mass% are within the range of a figure surrounded by line segments JP, PL, LM, MA', A'B, BD, DC', C'C, and CJ that connect the following 9 points:

point J (47.1, 52.9, 0.0),
point P (55.8, 42.0, 2.2),
point L (63.1, 31.9, 5.0),
point M (60.3, 6.2, 33.5),
point A' (30.6, 30.0, 39.4),

point B (0.0, 58.7, 41.3),
point D (0.0, 80.4, 19.6),
point C' (19.5, 70.5, 10.0), and
point (32.9, 67.1, 0.0),

or on the above line segments (excluding the points on the line segment CJ);

the line segment PL is represented by coordinates (x, $-0.1135x^2+12.112x-280.43$, $0.1135x^2-13.112x+380.43$),
the line segment MA' is represented by coordinates (x, $0.0016x^2-0.9473x+57.497$, $-0.0016x^2-0.0527x+42.503$),
the line segment A'B is represented by coordinates (x, $0.0029x^2-1.0268x+58.7$, $-0.0029x^2+0.0268x+41.3$),
the line segment DC' is represented by coordinates (x, $0.0082x^2-0.6671x+80.4$, $-0.0082x^2-0.3329x+19.6$),
the line segment C'C is represented by coordinates (x, $0.0067x^2-0.6034x+79.729$, $-0.0067x^2-0.3966x+20.271$), and
the line segments JP, LM, BD, and CG are straight lines.

When the requirements above are satisfied, the refrigerant according to the present disclosure has a refrigerating capacity ratio of 85% or more relative to that of R410A, and a COP of 92.5% or more relative to that of R410A; furthermore, the refrigerant has an RCL of 40 g/m³ or more.
When the mass% of HFO-1132(E), HFO-1123, and R1234yf based on their sum in the refrigerant A according to the present disclosure is respectively represented by x, y, and z, the refrigerant is preferably a refrigerant wherein coordinates (x,y,z) in a ternary composition diagram in which the sum of HFO-1132(E), HFO-1123, and R1234yf is 100 mass% are within the range of a figure surrounded by line segments PL, LM, MA', A'B, BF, FT, and TP that connect the following 7 points:

point P (55.8, 42.0, 2.2),
point L (63.1, 31.9, 5.0),
point M (60.3, 6.2, 33.5),
point A' (30.6, 30.0, 39.4),
point B (0.0, 58.7, 41.3),
point F (0.0, 61.8, 38.2), and
point T (35.8, 44.9, 19.3),

or on the above line segments (excluding the points on the line segment BF);

the line segment PL is represented by coordinates (x, $-0.1135x^2+12.112x-280.43$, $0.1135x^2-13.112x+380.43$),
the line segment MA' is represented by coordinates (x, $0.0016x^2-0.9473x+57.497$, $-0.0016x^2-0.0527x+42.503$),
the line segment A'B is represented by coordinates (x, $0.0029x^2-1.0268x+58.7$, $-0.0029x^2+0.0268x+41.3$),
the line segment FT is represented by coordinates (x, $0.0078x^2-0.7501x+61.8$, $-0.0078x^2-0.2499x+38.2$),
the line segment TP is represented by coordinates (x, $0.0067x^2-0.7607x+63.525$, $-0.0067x^2-0.2393x+36.475$), and
the line segments LM and BF are straight lines.

When the requirements above are satisfied, the refrigerant according to the present disclosure has a refrigerating capacity ratio of 85% or more relative to that of R410A, and a COP of 95% or more relative to that of R410A; furthermore, the refrigerant has an RCL of 40 g/m³ or more.
The refrigerant A according to the present disclosure is preferably a refrigerant wherein when the mass% of HFO-1132(E), HFO-1123, and R1234yf based on their sum in the refrigerant is respectively represented by x, y, and z, coordinates (x,y,z) in a ternary composition diagram in which the sum of HFO-1132(E), HFO-1123, and R1234yf is 100 mass% are within the range of a figure surrounded by line segments PL, LQ, QR, and RP that connect the following 4 points:

point P (55.8, 42.0, 2.2),
point L (63.1, 31.9, 5.0),
point Q (62.8, 29.6, 7.6), and
point R (49.8, 42.3, 7.9),

or on the above line segments;

the line segment PL is represented by coordinates (x, $-0.1135x^2+12.112x-280.43$, $0.1135x^2-13.112x+380.43$),
the line segment RP is represented by coordinates (x, $0.0067x^2-0.7607x+63.525$, $-0.0067x^2-0.2393x+36.475$), and

the line segments LQ and QR are straight lines.

When the requirements above are satisfied, the refrigerant according to the present disclosure has a COP of 95% or more relative to that of R410A, and an RCL of 40 g/m$^3$ or more, furthermore, the refrigerant has a condensation temperature glide of 1°C or less.

The refrigerant A according to the present disclosure is preferably a refrigerant wherein when the mass% of HFO-1132(E), HFO-1123, and R1234yf based on their sum in the refrigerant is respectively represented by x, y, and z, coordinates (x,y,z) in a ternary composition diagram in which the sum of HFO-1132(E), HFO-1123, and R1234yf is 100 mass% are within the range of a figure surrounded by line segments SM, MA', A'B, BF, FT, and TS that connect the following 6 points:

point S (62.6, 28.3, 9.1),
point M (60.3, 6.2, 33.5),
point A'(30.6, 30.0, 39.4),
point B (0.0, 58.7, 41.3),
point F (0.0, 61.8, 38.2), and
point T (35.8, 44.9, 19.3),

or on the above line segments,

the line segment MA' is represented by coordinates (x, 0.0016x$^2$-0.9473x+57.497, -0.0016x$^2$-0.0527x+42.503),
the line segment A'B is represented by coordinates (x, 0.0029x$^2$-1.0268x+58.7, -0.0029x$^2$+0.0268x+41.3),
the line segment FT is represented by coordinates (x, 0.0078x$^2$-0.7501x+61.8,-0.0078x$^2$-0.2499x+38.2),
the line segment TS is represented by coordinates (x, 0.0017x$^2$-0.7869x+70.888, -0.0017x$^2$-0.2131x+29.112), and
the line segments SM and BF are straight lines.

When the requirements above are satisfied, the refrigerant according to the present disclosure has a refrigerating capacity ratio of 85% or more relative to that of R410A, a COP of 95% or more relative to that of R410A, and an RCL of 40 g/m$^3$ or more furthermore, the refrigerant has a discharge pressure of 105% or more relative to that of R410A.

The refrigerant A according to the present disclosure is preferably a refrigerant wherein when the mass% of HFO-1132(E), HFO-1123, and R1234yf based on their sum in the refrigerant is respectively represented by x, y, and z, coordinates (x,y,z) in a ternary composition diagram in which the sum of HFO-1132(E), HFO-1123, and R1234yf is 100 mass% are within the range of a figure surrounded by line segments Od, dg, gh, and hO that connect the following 4 points:

point d (87.6, 0.0, 12.4),
point g (18.2, 55.1, 26.7),
point h (56.7, 43.3, 0.0), and
point o (100.0, 0.0, 0.0),

or on the line segments Od, dg, gh, and hO (excluding the points O and h);

the line segment dg is represented by coordinates (0.0047y$^2$-1.5177y+87.598, y, -0.0047y$^2$+0.5177y+12.402),
the line segment gh is represented by coordinates (-0.0134z$^2$-1.0825z+56.692, 0.0134z$^2$+0.0825z+43.308, z), and
the line segments hO and Od are straight lines.

When the requirements above are satisfied, the refrigerant according to the present disclosure has a refrigerating capacity ratio of 92.5% or more relative to that of R410A, and a COP ratio of 92.5% or more relative to that of R410A.

The refrigerant A according to the present disclosure is preferably a refrigerant wherein

when the mass% of HFO-1132(E), HFO-1123, and R1234yf, based on their sum is respectively represented by x, y, and z, coordinates (x,y,z) in a ternary composition diagram in which the sum of HFO-1132(E), HFO-1123, and R1234yf is 100 mass% are within the range of a figure surrounded by line segments 1g, gh, hi, and il that connect the following 4 points:

point 1 (72.5, 10.2, 17.3),
point g (18.2, 55.1, 26.7),
point h (56.7, 43.3, 0.0), and
point i (72.5, 27.5, 0.0) or

on the line segments 1g, gh, and il (excluding the points h and i);
the line segment 1g is represented by coordinates ($0.0047y^2$-$1.5177y$+87.598, y, -$0.0047y^2$+$0.5177y$+12.402),
the line gh is represented by coordinates (-$0.0134z^2$-$1.0825z$+56.692, $0.0134z^2$+$0.0825z$+43.308, z), and
the line segments hi and il are straight lines.

When the requirements above are satisfied, the refrigerant according to the present disclosure has a refrigerating capacity ratio of 92.5% or more relative to that of R410A, and a COP ratio of 92.5% or more relative to that of R410A; furthermore, the refrigerant has a lower flammability (Class 2L) according to the ASHRAE Standard.
The refrigerant A according to the present disclosure is preferably a refrigerant wherein

when the mass% of HFO-1132(E), HFO-1123, and R1234yf based on their sum is respectively represented by x, y, and z, coordinates (x,y,z) in a ternary composition diagram in which the sum of HFO-1132(E), HFO-1123, and R1234yf is 100 mass% are within the range of a figure surrounded by line segments Od, de, ef, and fO that connect the following 4 points:

    point d (87.6, 0.0, 12.4),
    point e (31.1, 42.9, 26.0),
    point f (65.5, 34.5, 0.0), and
    point O (100.0, 0.0, 0.0),

or on the line segments Od, de, and ef (excluding the points O and f);
the line segment de is represented by coordinates ($0.0047y^2$-$1.5177y$+87.598, y, -$0.0047y^2$+$0.5177y$+12.402),
the line segment ef is represented by coordinates (-$0.0064z^2$-$1.1565z$+65.501, $0.0064z^2$+$0.1565z$+34.499, z), and
the line segments fO and Od are straight lines.

When the requirements above are satisfied, the refrigerant according to the present disclosure has a refrigerating capacity ratio of 93.5% or more relative to that of R410A, and a COP ratio of 93.5% or more relative to that of R410A.
The refrigerant A according to the present disclosure is preferably a refrigerant wherein

when the mass% of HFO-1132(E), HFO-1123, and R1234yf based on their sum is respectively represented by x, y, and z,
coordinates (x,y,z) in a ternary composition diagram in which the sum of HFO-1132(E), HFO-1123, and R1234yf is 100 mass% are within the range of a figure surrounded by line segments le, ef, fi, and il that connect the following 4 points:

    point l (72.5, 10.2, 17.3),
    point e (31.1, 42.9, 26.0),
    point f (65.5, 34.5, 0.0), and
    point i (72.5, 27.5, 0.0),

or on the line segments le, ef, and il (excluding the points f and i);
the line segment le is represented by coordinates ($0.0047y^2$-$1.5177y$+87.598, y, -$0.0047y^2$+$0.5177y$+12.402),
the line segment ef is represented by coordinates (-$0.0134z^2$-$1.0825z$+56.692, $0.0134z^2$+$0.0825z$+43.308, z), and
the line segments fi and il are straight lines.

When the requirements above are satisfied, the refrigerant according to the present disclosure has a refrigerating capacity ratio of 93.5% or more relative to that of R410A, and a COP ratio of 93.5% or more relative to that of R410A; furthermore, the refrigerant has a lower flammability (Class 2L) according to the ASHRAE Standard.
The refrigerant A according to the present disclosure is preferably a refrigerant wherein

when the mass% of HFO-1132(E), HFO-1123, and R1234yf based on their sum is respectively represented by x, y, and z,
coordinates (x,y,z) in a ternary composition diagram in which the sum of HFO-1132(E), HFO-1123, and R1234yf is 100 mass% are within the range of a figure surrounded by line segments Oa, ab, bc, and cO that connect the following 4 points:

    point a (93.4, 0.0, 6.6),
    point b (55.6, 26.6, 17.8),

point c (77.6, 22.4, 0.0), and
point O (100.0, 0.0, 0.0),

or on the line segments Oa, ab, and bc (excluding the points O and c);
the line segment ab is represented by coordinates $(0.0052y^2-1.5588y+93.385, y, -0.0052y^2+0.5588y+6.615)$,
the line segment bc is represented by coordinates $(-0.0032z^2-1.1791z+77.593, 0.0032z^2+0.1791z+22.407, z)$, and
the line segments cO and Oa are straight lines.

When the requirements above are satisfied, the refrigerant according to the present disclosure has a refrigerating capacity ratio of 95% or more relative to that of R410A, and a COP ratio of 95% or more relative to that of R410A.

The refrigerant A according to the present disclosure is preferably a refrigerant wherein

when the mass% of HFO-1132(E), HFO-1123, and R1234yf based on their sum is respectively represented by x, y, and z,
coordinates (x,y,z) in a ternary composition diagram in which the sum of HFO-1132(E), HFO-1123, and R1234yf is 100 mass% are within the range of a figure surrounded by line segments kb, bj, and jk that connect the following 3 points:

point k (72.5, 14.1, 13.4),
point b (55.6, 26.6, 17.8), and
point j (72.5, 23.2, 4.3),

or on the line segments kb, bj, and jk;
the line segment kb is represented by coordinates $(0.0052y^2-1.5588y+93.385, y, $ and $ -0.0052y^2+0.5588y+6.615)$,
the line segment bj is represented by coordinates $(-0.0032z^2-1.1791z+77.593, 0.0032z^2+0.1791z+22.407, z)$, and
the line segment jk is a straight line.

When the requirements above are satisfied, the refrigerant according to the present disclosure has a refrigerating capacity ratio of 95% or more relative to that of R410A, and a COP ratio of 95% or more relative to that of R410A; furthermore, the refrigerant has a lower flammability (Class 2L) according to the ASHRAE Standard.

The refrigerant according to the present disclosure may further comprise other additional refrigerants in addition to HFO-1132(E), HFO-1123, and R1234yf, as long as the above properties and effects are not impaired. In this respect, the refrigerant according to the present disclosure preferably comprises HFO-1132(E), HFO-1123, and R1234yf in a total amount of 99.5 mass% or more, more preferably 99.75 mass% or more, and still more preferably 99.9 mass% or more, based on the entire refrigerant.

The refrigerant according to the present disclosure may comprise HFO-1132(E), HFO-1123, and R1234yf in a total amount of 99.5 mass% or more, 99.75 mass% or more, or 99.9 mass% or more, based on the entire refrigerant.

Additional refrigerants are not particularly limited and can be widely selected. The mixed refrigerant may contain one additional refrigerant, or two or more additional refrigerants.

(Examples of Refrigerant A)

The present disclosure is described in more detail below with reference to Examples of refrigerant A. However, refrigerant A is not limited to the Examples.

The GWP of R1234yf and a composition consisting of a mixed refrigerant R410A (R32 = 50%/R125 = 50%) was evaluated based on the values stated in the Intergovernmental Panel on Climate Change (IPCC), fourth report. The GWP of HFO-1132(E), which was not stated therein, was assumed to be 1 from HFO-1132a (GWP = 1 or less) and HFO-1123 (GWP = 0.3, described in WO2015/141678). The refrigerating capacity of R410A and compositions each comprising a mixture of HFO-1132(E), HFO-1123, and R1234yf was determined by performing theoretical refrigeration cycle calculations for the mixed refrigerants using the National Institute of Science and Technology (NIST) and Reference Fluid Thermodynamic and Transport Properties Database (Refprop 9.0) under the following conditions.

Further, the RCL of the mixture was calculated with the LFL of HFO-1132(E) being 4.7 vol.%, the LFL of HFO-1123 being 10 vol.%, and the LFL of R1234yf being 6.2 vol.%, in accordance with the ASHRAE Standard 34-2013.

Evaporating temperature: 5°C
Condensation temperature: 45°C
Degree of superheating: 5 K
Degree of subcooling: 5 K

Compressor efficiency: 70%

Tables 1 to 34 show these values together with the GWP of each mixed refrigerant.

Table 1

| Item | Unit | Comp. Ex. 1 | Comp. Ex. 2 | Comp. Ex. 3 | Example 1 | Example 2 | Example 3 | Comp. Ex. 4 |
|---|---|---|---|---|---|---|---|---|
| | | | O | A | | A' | | B |
| HFO-1132(E) | mass% | | 100.0 | 68.6 | 49.0 | 30.6 | 14.1 | 0.0 |
| HFO-1123 | mass% | R410A | 0.0 | 0.0 | 14.9 | 30.0 | 44.8 | 58.7 |
| R1234yf | mass% | | 0.0 | 31.4 | 36.1 | 39.4 | 41.1 | 41.3 |
| GWP | - | 2088 | 1 | 2 | 2 | 2 | 2 | 2 |
| COP ratio | % (relative to 410A) | 100 | 99.7 | 100.0 | 98.6 | 97.3 | 96.3 | 95.5 |
| Refrigerating capacity ratio | % (relative to 410A) | 100 | 98.3 | 85.0 | 85.0 | 85.0 | 85.0 | 85.0 |
| Condensation glide | °C | 0.1 | 0.00 | 1.98 | 3.36 | 4.46 | 5.15 | 5.35 |
| Discharge pressure | % (relative to 410A) | 100.0 | 99.3 | 87.1 | 88.9 | 90.6 | 92.1 | 93.2 |
| RCL | g/m$^3$ | - | 30.7 | 37.5 | 44.0 | 52.7 | 64.0 | 78.6 |

Table 2

| Item | Unit | Comp. Ex. 5 | Exampl e4 | Exampl e5 | Exampl e6 | Comp. Ex. 6 | Comp. Ex. 7 | Exampl e 7 | Comp. Ex. 8 |
|---|---|---|---|---|---|---|---|---|---|
| | | C | | C' | | D | E | E' | F |
| HFO-1132(E) | mass% | 32.9 | 26.6 | 19.5 | 10.9 | 0.0 | 58.0 | 23.4 | 0.0 |
| HFO-1123 | mass% | 67.1 | 68.4 | 70.5 | 74.1 | 80.4 | 42.0 | 48.5 | 61.8 |
| R1234yf | mass% | 0.0 | 5.0 | 10.0 | 15.0 | 19.6 | 0.0 | 28.1 | 38.2 |
| GWP | - | 1 | 1 | 1 | 1 | 2 | 1 | 2 | 2 |
| COP ratio | % (relative to 410A) | 92.5 | 92.5 | 92.5 | 92.5 | 92.5 | 95.0 | 95.0 | 95.0 |
| Refrigerating capacity ratio | % (relative to 410A) | 107.4 | 105.2 | 102.9 | 100.5 | 97.9 | 105.0 | 92.5 | 86.9 |
| Condensation glide | °C | 0.16 | 0.52 | 0.94 | 1.42 | 1.90 | 0.42 | 3.16 | 4.80 |
| Discharge pressure | % (relative to 410A) | 119.5 | 117.4 | 115.3 | 113.0 | 115.9 | 112.7 | 101.0 | 95.8 |
| RCL | g/m$^3$ | 53.5 | 57.1 | 62.0 | 69.1 | 81.3 | 41.9 | 46.3 | 79.0 |

Table 3

| Item | Unit | Comp. Ex. 9 | Example 8 | Example 9 | Example 10 | Example 11 | Example 12 |
|---|---|---|---|---|---|---|---|
| | | J | P | L | N | N' | K |
| HFO-1132(E) | mass% | 47.1 | 55.8 | 63.1 | 68.6 | 65.0 | 61.3 |
| HFO-1123 | mass% | 52.9 | 42.0 | 31.9 | 16.3 | 7.7 | 5.4 |
| R1234yf | mass% | 0.0 | 2.2 | 5.0 | 15.1 | 27.3 | 33.3 |
| GWP | - | 1 | 1 | 1 | 1 | 2 | 2 |
| COP ratio | % (relative to 410A) | 93.8 | 95.0 | 96.1 | 97.9 | 99.1 | 99.5 |
| Refrigerating capacity ratio | % (relative to 410A) | 106.2 | 104.1 | 101.6 | 95.0 | 88.2 | 85.0 |
| Condensation glide | °C | 0.31 | 0.57 | 0.81 | 1.41 | 2.11 | 2.51 |
| Discharge pressure | % (relative to 410A) | 115.8 | 111.9 | 107.8 | 99.0 | 91.2 | 87.7 |
| RCL | g/m$^3$ | 46.2 | 42.6 | 40.0 | 38.0 | 38.7 | 39.7 |

Table 4

| Item | Unit | Example 13 | Example 14 | Example 15 | Example 16 | Example 17 | Example 18 | Example 19 |
|---|---|---|---|---|---|---|---|---|
| | | L | M | Q | R | S | S' | T |
| HFO-1132(E) | mass% | 63.1 | 60.3 | 62.8 | 49.8 | 62.6 | 50.0 | 35.8 |
| HFO-1123 | mass% | 31.9 | 6.2 | 29.6 | 42.3 | 28.3 | 35.8 | 44.9 |
| R1234yf | mass% | 5.0 | 33.5 | 7.6 | 7.9 | 9.1 | 14.2 | 19.3 |
| GWP | - | 1 | 2 | 1 | 1 | 1 | 1 | 2 |
| COP ratio | % (relative to 410A) | 96.1 | 99.4 | 96.4 | 95.0 | 96.6 | 95.8 | 95.0 |
| Refrigerating capacity ratio | % (relative to 410A) | 101.6 | 85.0 | 100.2 | 101.7 | 99.4 | 98.1 | 96.7 |
| Condensation glide | °C | 0.81 | 2.58 | 1.00 | 1.00 | 1.10 | 1.55 | 2.07 |
| Discharge pressure | % (relative to 410A) | 107.8 | 87.9 | 106.0 | 109.6 | 105.0 | 105.0 | 105.0 |
| RCL | g/m$^3$ | 40.0 | 40.0 | 40.0 | 44.8 | 40.0 | 44.4 | 50.8 |

Table 5

| Item | Unit | Comp. Ex. 10 | Example 20 | Example 21 |
|---|---|---|---|---|
| | | G | H | I |
| HFO-1132(E) | mass% | 72.0 | 72.0 | 72.0 |

(continued)

| Item | Unit | Comp. Ex. 10 | Example 20 | Example 21 |
|------|------|------|------|------|
| | | G | H | I |
| HFO-1123 | mass% | 28.0 | 14.0 | 0.0 |
| R1234yf | mass% | 0.0 | 14.0 | 28.0 |
| GWP | - | 1 | 1 | 2 |
| COP ratio | % (relative to 410A) | 96.6 | 98.2 | 99.9 |
| Refrigerating capacity ratio | % (relative to 410A) | 103.1 | 95.1 | 86.6 |
| Condensation glide | °C | 0.46 | 1.27 | 1.71 |
| Discharge pressure | % (relative to 410A) | 108.4 | 98.7 | 88.6 |
| RCL | g/m$^3$ | 37.4 | 37.0 | 36.6 |

Table 6

| Item | Unit | Comp. Ex. 11 | Comp. Ex. 12 | Example 22 | Example 23 | Example 24 | Example 25 | Example 26 | Comp. Ex. 13 |
|---|---|---|---|---|---|---|---|---|---|
| HFO-1132(E) | mass% | 10.0 | 20.0 | 30.0 | 40.0 | 50.0 | 60.0 | 70.0 | 80.0 |
| HFO-1123 | mass% | 85.0 | 75.0 | 65.0 | 55.0 | 45.0 | 35.0 | 25.0 | 15.0 |
| R1234yf | mass% | 5.0 | 5.0 | 5.0 | 5.0 | 5.0 | 5.0 | 5.0 | 5.0 |
| GWP | - | 1 | 1 | 1 | 1 | 1 | 1 | 1 | 1 |
| COP ratio | % (relative to 410A) | 91.4 | 92.0 | 92.8 | 93.7 | 94.7 | 95.8 | 96.9 | 98.0 |
| Refrigerating capacity ratio | % (relative to 410A) | 105.7 | 105.5 | 105.0 | 104.3 | 103.3 | 102.0 | 100.6 | 99.1 |
| Condensation glide | °C | 0.40 | 0.46 | 0.55 | 0.66 | 0.75 | 0.80 | 0.79 | 0.67 |
| Discharge pressure | % (relative to 410A) | 120.1 | 118.7 | 116.7 | 114.3 | 111.6 | 108.7 | 105.6 | 102.5 |
| RCL | g/m$^3$ | 71.0 | 61.9 | 54.9 | 49.3 | 44.8 | 41.0 | 37.8 | 35.1 |

Table 7

| Item | Unit | Comp. Ex. 14 | Example 27 | Example 28 | Example 29 | Example 30 | Example 31 | Example 32 | Comp. Ex. 15 |
|---|---|---|---|---|---|---|---|---|---|
| HFO-1132(E) | mass% | 10.0 | 20.0 | 30.0 | 40.0 | 50.0 | 60.0 | 70.0 | 80.0 |
| HFO-1123 | mass% | 80.0 | 70.0 | 60.0 | 50.0 | 40.0 | 30.0 | 20.0 | 10.0 |
| R1234yf | mass% | 10.0 | 10.0 | 10.0 | 10.0 | 10.0 | 10.0 | 10.0 | 10.0 |
| GWP | - | 1 | 1 | 1 | 1 | 1 | 1 | 1 | 1 |
| COP ratio | % (relative to 410A) | 91.9 | 92.5 | 93.3 | 94.3 | 95.3 | 96.4 | 97.5 | 98.6 |
| Refrigerating capacity ratio | % (relative to 410A) | 103.2 | 102.9 | 102.4 | 101.5 | 100.5 | 99.2 | 97.8 | 96.2 |
| Condensation glide | °C | 0.87 | 0.94 | 1.03 | 1.12 | 1.18 | 1.18 | 1.09 | 0.88 |
| Discharge pressure | % (relative to 410A) | 116.7 | 115.2 | 113.2 | 110.8 | 108.1 | 105.2 | 102.1 | 99.0 |
| RCL | g/m$^3$ | 70.5 | 61.6 | 54.6 | 49.1 | 44.6 | 40.8 | 37.7 | 35.0 |

Table 8

| Item | Unit | Comp. Ex. 16 | Example 33 | Example 34 | Example 35 | Example 36 | Example 37 | Example 38 | Comp. Ex. 17 |
|---|---|---|---|---|---|---|---|---|---|
| HFO-1132(E) | mass% | 10.0 | 20.0 | 30.0 | 40.0 | 50.0 | 60.0 | 70.0 | 80.0 |
| HFO-1123 | mass% | 75.0 | 65.0 | 55.0 | 45.0 | 35.0 | 25.0 | 15.0 | 5.0 |
| R1234yf | mass% | 15.0 | 15.0 | 15.0 | 15.0 | 15.0 | 15.0 | 15.0 | 15.0 |
| GWP | - | 1 | 1 | 1 | 1 | 1 | 1 | 1 | 1 |
| COP ratio | % (relative to 410A) | 92.4 | 93.1 | 93.9 | 94.8 | 95.9 | 97.0 | 98.1 | 99.2 |
| Refrigerating capacity ratio | % (relative to 410A) | 100.5 | 100.2 | 99.6 | 98.7 | 97.7 | 96.4 | 94.9 | 93.2 |
| Condensation glide | °C | 1.41 | 1.49 | 1.56 | 1.62 | 1.63 | 1.55 | 1.37 | 1.05 |
| Discharge pressure | % (relative to 410A) | 113.1 | 111.6 | 109.6 | 107.2 | 104.5 | 101.6 | 98.6 | 95.5 |
| RCL | g/m$^3$ | 70.0 | 61.2 | 54.4 | 48.9 | 44.4 | 40.7 | 37.5 | 34.8 |

Table 9

| Item | Unit | Example 39 | Example 40 | Example 41 | Example 42 | Example 43 | Example 44 | Example 45 |
|------|------|-----------|-----------|-----------|-----------|-----------|-----------|-----------|
| HFO-1132(E) | mass% | 10.0 | 20.0 | 30.0 | 40.0 | 50.0 | 60.0 | 70.0 |
| HFO-1123 | mass% | 70.0 | 60.0 | 50.0 | 40.0 | 30.0 | 20.0 | 10.0 |
| R1234yf | mass% | 20.0 | 20.0 | 20.0 | 20.0 | 20.0 | 20.0 | 20.0 |
| GWP | - | 2 | 2 | 2 | 2 | 2 | 2 | 2 |
| COP ratio | % (relative to 410A) | 93.0 | 93.7 | 94.5 | 95.5 | 96.5 | 97.6 | 98.7 |
| Refrigerating capacity ratio | % (relative to 410A) | 97.7 | 97.4 | 96.8 | 95.9 | 94.7 | 93.4 | 91.9 |
| Condensation glide | °C | 2.03 | 2.09 | 2.13 | 2.14 | 2.07 | 1.91 | 1.61 |
| Discharge pressure | % (relative to 410A) | 109.4 | 107.9 | 105.9 | 103.5 | 100.8 | 98.0 | 95.0 |
| RCL | g/m$^3$ | 69.6 | 60.9 | 54.1 | 48.7 | 44.2 | 40.5 | 37.4 |

Table 10

| Item | Unit | Example 46 | Example 47 | Example 48 | Example 49 | Example 50 | Example 51 | Example 52 |
|------|------|-----------|-----------|-----------|-----------|-----------|-----------|-----------|
| HFO-1132(E) | mass% | 10.0 | 20.0 | 30.0 | 40.0 | 50.0 | 60.0 | 70.0 |
| HFO-1123 | mass% | 65.0 | 55.0 | 45.0 | 35.0 | 25.0 | 15.0 | 5.0 |
| R1234yf | mass% | 25.0 | 25.0 | 25.0 | 25.0 | 25.0 | 25.0 | 25.0 |
| GWP | - | 2 | 2 | 2 | 2 | 2 | 2 | 2 |
| COP ratio | % (relative to 410A) | 93.6 | 94.3 | 95.2 | 96.1 | 97.2 | 98.2 | 99.3 |
| Refrigerating capacity ratio | % (relative to 410A) | 94.8 | 94.5 | 93.8 | 92.9 | 91.8 | 90.4 | 88.8 |
| Condensation glide | °C | 2.71 | 2.74 | 2.73 | 2.66 | 2.50 | 2.22 | 1.78 |
| Discharge pressure | % (relative to 410A) | 105.5 | 104.0 | 102.1 | 99.7 | 97.1 | 94.3 | 91.4 |
| RCL | g/m$^3$ | 69.1 | 60.5 | 53.8 | 48.4 | 44.0 | 40.4 | 37.3 |

Table 11

| Item | Unit | Example 53 | Example 54 | Example 55 | Example 56 | Example 57 | Example 58 |
|------|------|-----------|-----------|-----------|-----------|-----------|-----------|
| HFO-1132(E) | mass% | 10.0 | 20.0 | 30.0 | 40.0 | 50.0 | 60.0 |

(continued)

| Item | Unit | Example 53 | Example 54 | Example 55 | Example 56 | Example 57 | Example 58 |
|---|---|---|---|---|---|---|---|
| HFO-1123 | mass% | 60.0 | 50.0 | 40.0 | 30.0 | 20.0 | 10.0 |
| R1234yf | mass% | 30.0 | 30.0 | 30.0 | 30.0 | 30.0 | 30.0 |
| GWP | - | 2 | 2 | 2 | 2 | 2 | 2 |
| COP ratio | % (relative to 410A) | 94.3 | 95.0 | 95.9 | 96.8 | 97.8 | 98.9 |
| Refrigerating capacity ratio | % (relative to 410A) | 91.9 | 91.5 | 90.8 | 89.9 | 88.7 | 87.3 |
| Condensation glide | °C | 3.46 | 3.43 | 3.35 | 3.18 | 2.90 | 2.47 |
| Discharge pressure | % (relative to 410A) | 101.6 | 100.1 | 98.2 | 95.9 | 93.3 | 90.6 |
| RCL | g/m$^3$ | 68.7 | 60.2 | 53.5 | 48.2 | 43.9 | 40.2 |

Table 12

| Item | Unit | Example 59 | Example 60 | Example 61 | Example 62 | Example 63 | Comp. Ex. 18 |
|---|---|---|---|---|---|---|---|
| HFO-1132(E) | mass% | 10.0 | 20.0 | 30.0 | 40.0 | 50.0 | 60.0 |
| HFO-1123 | mass% | 55.0 | 45.0 | 35.0 | 25.0 | 15.0 | 5.0 |
| R1234yf | mass% | 35.0 | 35.0 | 35.0 | 35.0 | 35.0 | 35.0 |
| GWP | - | 2 | 2 | 2 | 2 | 2 | 2 |
| COP ratio | % (relative to 410A) | 95.0 | 95.8 | 96.6 | 97.5 | 98.5 | 99.6 |
| Refrigerating capacity ratio | % (relative to 410A) | 88.9 | 88.5 | 87.8 | 86.8 | 85.6 | 84.1 |
| Condensation glide | °C | 4.24 | 4.15 | 3.96 | 3.67 | 3.24 | 2.64 |
| Discharge pressure | % (relative to 410A) | 97.6 | 96.1 | 94.2 | 92.0 | 89.5 | 86.8 |
| RCL | g/m$^3$ | 68.2 | 59.8 | 53.2 | 48.0 | 43.7 | 40.1 |

Table 13

| Item | Unit | Example 64 | Example 65 | Comp. Ex. 19 | Comp. Ex. 20 | Comp. Ex. 21 |
|---|---|---|---|---|---|---|
| HFO-1132(E) | mass% | 10.0 | 20.0 | 30.0 | 40.0 | 50.0 |
| HFO-1123 | mass% | 50.0 | 40.0 | 30.0 | 20.0 | 10.0 |
| R1234yf | mass% | 40.0 | 40.0 | 40.0 | 40.0 | 40.0 |
| GWP | - | 2 | 2 | 2 | 2 | 2 |
| COP ratio | % (relative to 410A) | 95.9 | 96.6 | 97.4 | 98.3 | 99.2 |

(continued)

| Item | Unit | Example 64 | Example 65 | Comp. Ex. 19 | Comp. Ex. 20 | Comp. Ex. 21 |
|------|------|-----------|-----------|--------------|--------------|--------------|
| Refrigerating capacity ratio | % (relative to 410A) | 85.8 | 85.4 | 84.7 | 83.6 | 82.4 |
| Condensation glide | °C | 5.05 | 4.85 | 4.55 | 4.10 | 3.50 |
| Discharge pressure | % (relative to 410A) | 93.5 | 92.1 | 90.3 | 88.1 | 85.6 |
| RCL | g/m$^3$ | 67.8 | 59.5 | 53.0 | 47.8 | 43.5 |

Table 14

| Item | Unit | Example 66 | Example 67 | Example 68 | Example 69 | Example 70 | Example 71 | Example 72 | Example 73 |
|---|---|---|---|---|---|---|---|---|---|
| HFO-1132(E) | mass% | 54.0 | 56.0 | 58.0 | 62.0 | 52.0 | 54.0 | 56.0 | 58.0 |
| HFO-1123 | mass% | 41.0 | 39.0 | 37.0 | 33.0 | 41.0 | 39.0 | 37.0 | 35.0 |
| R1234yf | mass% | 5.0 | 5.0 | 5.0 | 5.0 | 7.0 | 7.0 | 7.0 | 7.0 |
| GWP | - | 1 | 1 | 1 | 1 | 1 | 1 | 1 | 1 |
| COP ratio | % (relative to 410A) | 95.1 | 95.3 | 95.6 | 96.0 | 95.1 | 95.4 | 95.6 | 95.8 |
| Refrigerating capacity ratio | % (relative to 410A) | 102.8 | 102.6 | 102.3 | 101.8 | 101.9 | 101.7 | 101.5 | 101.2 |
| Condensation glide | °C | 0.78 | 0.79 | 0.80 | 0.81 | 0.93 | 0.94 | 0.95 | 0.95 |
| Discharge pressure | % (relative to 410A) | 110.5 | 109.9 | 109.3 | 108.1 | 109.7 | 109.1 | 108.5 | 107.9 |
| RCL | g/m$^3$ | 43.2 | 42.4 | 41.7 | 40.3 | 43.9 | 43.1 | 42.4 | 41.6 |

Table 15

| Item | Unit | Example 74 | Example 75 | Example 76 | Example 77 | Example 78 | Example 79 | Example 80 | Example 81 |
|---|---|---|---|---|---|---|---|---|---|
| HFO-1132(E) | mass% | 60.0 | 62.0 | 61.0 | 58.0 | 60.0 | 62.0 | 52.0 | 54.0 |
| HFO-1123 | mass% | 33.0 | 31.0 | 29.0 | 30.0 | 28.0 | 26.0 | 34.0 | 32.0 |
| R1234yf | mass% | 7.0 | 7.0 | 10.0 | 12.0 | 12.0 | 12.0 | 14.0 | 14.0 |
| GWP | - | 1 | 1 | 1 | 1 | 1 | 1 | 1 | 1 |
| COP ratio | % (relative to 410A) | 96.0 | 96.2 | 96.5 | 96.4 | 96.6 | 96.8 | 96.0 | 96.2 |
| Refrigerating capacity ratio | % (relative to 410A) | 100.9 | 100.7 | 99.1 | 98.4 | 98.1 | 97.8 | 98.0 | 97.7 |
| Condensation glide | °C | 0.95 | 0.95 | 1.18 | 1.34 | 1.33 | 1.32 | 1.53 | 1.53 |
| Discharge pressure | % (relative to 410A) | 107.3 | 106.7 | 104.9 | 104.4 | 103.8 | 103.2 | 104.7 | 104.1 |
| RCL | g/m$^3$ | 40.9 | 40.3 | 40.5 | 41.5 | 40.8 | 40.1 | 43.6 | 42.9 |

Table 16

| Item | Unit | Example 82 | Example 83 | Example 84 | Example 85 | Example 86 | Example 87 | Example 88 | Example 89 |
|------|------|-----------|-----------|-----------|-----------|-----------|-----------|-----------|-----------|
| HFO-1132(E) | mass% | 56.0 | 58.0 | 60.0 | 48.0 | 50.0 | 52.0 | 54.0 | 56.0 |
| HFO-1123 | mass% | 30.0 | 28.0 | 26.0 | 36.0 | 34.0 | 32.0 | 30.0 | 28.0 |
| R1234yf | mass% | 14.0 | 14.0 | 14.0 | 16.0 | 16.0 | 16.0 | 16.0 | 16.0 |
| GWP | - | 1 | 1 | 1 | 1 | 1 | 1 | 1 | 1 |
| COP ratio | % (relative to 410A) | 96.4 | 96.6 | 96.9 | 95.8 | 96.0 | 96.2 | 96.4 | 96.7 |
| Refrigerating capacity ratio | % (relative to 410A) | 97.5 | 97.2 | 96.9 | 97.3 | 97.1 | 96.8 | 96.6 | 96.3 |
| Condensation glide | °C | 1.51 | 1.50 | 1.48 | 1.72 | 1.72 | 1.71 | 1.69 | 1.67 |
| Discharge pressure | % (relative to 410A) | 103.5 | 102.9 | 102.3 | 104.3 | 103.8 | 103.2 | 102.7 | 102.1 |
| RCL | g/m$^3$ | 42.1 | 41.4 | 40.7 | 45.2 | 44.4 | 43.6 | 42.8 | 42.1 |

Table 17

| Item | Unit | Example 90 | Example 91 | Example 92 | Example 93 | Example 94 | Example 95 | Example 96 | Example 97 |
|---|---|---|---|---|---|---|---|---|---|
| HFO-1132(E) | mass% | 58.0 | 60.0 | 42.0 | 44.0 | 46.0 | 48.0 | 50.0 | 52.0 |
| HFO-1123 | mass% | 26.0 | 24.0 | 40.0 | 38.0 | 36.0 | 34.0 | 32.0 | 30.0 |
| R1234yf | mass% | 16.0 | 16.0 | 18.0 | 18.0 | 18.0 | 18.0 | 18.0 | 18.0 |
| GWP | - | 1 | 1 | 2 | 2 | 2 | 2 | 2 | 2 |
| COP ratio | % (relative to 410A) | 96.9 | 97.1 | 95.4 | 95.6 | 95.8 | 96.0 | 96.3 | 96.5 |
| Refrigerating capacity ratio | % (relative to 410A) | 96.1 | 95.8 | 96.8 | 96.6 | 96.4 | 96.2 | 95.9 | 95.7 |
| Condensation glide | °C | 1.65 | 1.63 | 1.93 | 1.92 | 1.92 | 1.91 | 1.89 | 1.88 |
| Discharge pressure | % (relative to 410A) | 101.5 | 100.9 | 104.5 | 103.9 | 103.4 | 102.9 | 102.3 | 101.8 |
| RCL | g/m$^3$ | 41.4 | 40.7 | 47.8 | 46.9 | 46.0 | 45.1 | 44.3 | 43.5 |

Table 18

| Item | Unit | Example 98 | Example 99 | Example 100 | Example 101 | Example 102 | Example 103 | Example 104 | Example 105 |
|---|---|---|---|---|---|---|---|---|---|
| HFO-1132(E) | mass% | 54.0 | 56.0 | 58.0 | 60.0 | 36.0 | 38.0 | 42.0 | 44.0 |
| HFO-1123 | mass% | 28.0 | 26.0 | 24.0 | 22.0 | 44.0 | 42.0 | 38.0 | 36.0 |
| R1234yf | mass% | 18.0 | 18.0 | 18.0 | 18.0 | 20.0 | 20.0 | 20.0 | 20.0 |
| GWP | - | 2 | 2 | 2 | 2 | 2 | 2 | 2 | 2 |
| COP ratio | % (relative to 410A) | 96.7 | 96.9 | 97.1 | 97.3 | 95.1 | 95.3 | 95.7 | 95.9 |
| Refrigerating capacity ratio | % (relative to 410A) | 95.4 | 95.2 | 94.9 | 94.6 | 96.3 | 96.1 | 95.7 | 95.4 |
| Condensation glide | °C | 1.86 | 1.83 | 1.80 | 1.77 | 2.14 | 2.14 | 2.13 | 2.12 |
| Discharge pressure | % (relative to 410A) | 101.2 | 100.6 | 100.0 | 99.5 | 104.5 | 104.0 | 103.0 | 102.5 |
| RCL | g/m$^3$ | 42.7 | 42.0 | 41.3 | 40.6 | 50.7 | 49.7 | 47.7 | 46.8 |

Table 19

| Item | Unit | Example 106 | Example 107 | Example 108 | Example 109 | Example 110 | Example 111 | Example 112 | Example 113 |
|---|---|---|---|---|---|---|---|---|---|
| HFO-1132(E) | mass% | 46.0 | 48.0 | 52.0 | 54.0 | 56.0 | 58.0 | 34.0 | 36.0 |
| HFO-1123 | mass% | 34.0 | 32.0 | 28.0 | 26.0 | 24.0 | 22.0 | 44.0 | 42.0 |
| R1234yf | mass% | 20.0 | 20.0 | 20.0 | 20.0 | 20.0 | 20.0 | 22.0 | 22.0 |
| GWP | - | 2 | 2 | 2 | 2 | 2 | 2 | 2 | 2 |
| COP ratio | % (relative to 410A) | 96.1 | 96.3 | 96.7 | 96.9 | 97.2 | 97.4 | 95.1 | 95.3 |
| Refrigerating capacity ratio | % (relative to 410A) | 95.2 | 95.0 | 94.5 | 94.2 | 94.0 | 93.7 | 95.3 | 95.1 |
| Condensation glide | °C | 2.11 | 2.09 | 2.05 | 2.02 | 1.99 | 1.95 | 2.37 | 2.36 |
| Discharge pressure | % (relative to 410A) | 101.9 | 101.4 | 100.3 | 99.7 | 99.2 | 98.6 | 103.4 | 103.0 |
| RCL | g/m$^3$ | 45.9 | 45.0 | 43.4 | 42.7 | 41.9 | 41.2 | 51.7 | 50.6 |

Table 20

| Item | Unit | Example 114 | Example 115 | Example 116 | Example 117 | Example 118 | Example 119 | Example 120 | Example 121 |
|---|---|---|---|---|---|---|---|---|---|
| HFO-1132(E) | mass% | 38.0 | 40.0 | 42.0 | 44.0 | 46.0 | 48.0 | 50.0 | 52.0 |
| HFO-1123 | mass% | 40.0 | 38.0 | 36.0 | 34.0 | 32.0 | 30.0 | 28.0 | 26.0 |
| R1234yf | mass% | 22.0 | 22.0 | 22.0 | 22.0 | 22.0 | 22.0 | 22.0 | 22.0 |
| GWP | - | 2 | 2 | 2 | 2 | 2 | 2 | 2 | 2 |
| COP ratio | % (relative to 410A) | 95.5 | 95.7 | 95.9 | 96.1 | 96.4 | 96.6 | 96.8 | 97.0 |
| Refrigerating capacity ratio | % (relative to 410A) | 94.9 | 94.7 | 94.5 | 94.3 | 94.0 | 93.8 | 93.6 | 93.3 |
| Condensation glide | °C | 2.36 | 2.35 | 2.33 | 2.32 | 2.30 | 2.27 | 2.25 | 2.21 |
| Discharge pressure | % (relative to 410A) | 102.5 | 102.0 | 101.5 | 101.0 | 100.4 | 99.9 | 99.4 | 98.8 |
| RCL | g/m$^3$ | 49.6 | 48.6 | 47.6 | 46.7 | 45.8 | 45.0 | 44.1 | 43.4 |

Table 21

| Item | Unit | Example 122 | Example 123 | Example 124 | Example 125 | Example 126 | Example 127 | Example 128 | Example 129 |
|---|---|---|---|---|---|---|---|---|---|
| HFO-1132(E) | mass% | 54.0 | 56.0 | 58.0 | 60.0 | 32.0 | 34.0 | 36.0 | 38.0 |
| HFO-1123 | mass% | 24.0 | 22.0 | 20.0 | 18.0 | 44.0 | 42.0 | 40.0 | 38.0 |
| R1234yf | mass% | 22.0 | 22.0 | 22.0 | 22.0 | 24.0 | 24.0 | 24.0 | 24.0 |
| GWP | - | 2 | 2 | 2 | 2 | 2 | 2 | 2 | 2 |
| COP ratio | % (relative to 410A) | 97.2 | 97.4 | 97.6 | 97.9 | 95.2 | 95.4 | 95.6 | 95.8 |
| Refrigerating capacity ratio | % (relative to 410A) | 93.0 | 92.8 | 92.5 | 92.2 | 94.3 | 94.1 | 93.9 | 93.7 |
| Condensation glide | °C | 2.18 | 2.14 | 2.09 | 2.04 | 2.61 | 2.60 | 2.59 | 2.58 |
| Discharge pressure | % (relative to 410A) | 98.2 | 97.7 | 97.1 | 96.5 | 102.4 | 101.9 | 101.5 | 101.0 |
| RCL | g/m$^3$ | 42.6 | 41.9 | 41.2 | 40.5 | 52.7 | 51.6 | 50.5 | 49.5 |

Table 22

| Item | Unit | Example 130 | Example 131 | Example 132 | Example 133 | Example 134 | Example 135 | Example 136 | Example 137 |
|---|---|---|---|---|---|---|---|---|---|
| HFO-1132(E) | mass% | 40.0 | 42.0 | 44.0 | 46.0 | 48.0 | 50.0 | 52.0 | 54.0 |
| HFO-1123 | mass% | 36.0 | 34.0 | 32.0 | 30.0 | 28.0 | 26.0 | 24.0 | 22.0 |
| R1234yf | mass% | 24.0 | 24.0 | 24.0 | 24.0 | 24.0 | 24.0 | 24.0 | 24.0 |
| GWP | - | 2 | 2 | 2 | 2 | 2 | 2 | 2 | 2 |
| COP ratio | % (relative to 410A) | 96.0 | 96.2 | 96.4 | 96.6 | 96.8 | 97.0 | 97.2 | 97.5 |
| Refrigerating capacity ratio | % (relative to 410A) | 93.5 | 93.3 | 93.1 | 92.8 | 92.6 | 92.4 | 92.1 | 91.8 |
| Condensation glide | °C | 2.56 | 2.54 | 2.51 | 2.49 | 2.45 | 2.42 | 2.38 | 2.33 |
| Discharge pressure | % (relative to 410A) | 100.5 | 100.0 | 99.5 | 98.9 | 98.4 | 97.9 | 97.3 | 96.8 |
| RCL | g/m$^3$ | 48.5 | 47.5 | 46.6 | 45.7 | 44.9 | 44.1 | 43.3 | 42.5 |

Table 23

| Item | Unit | Example 138 | Example 139 | Example 140 | Example 141 | Example 142 | Example 143 | Example 144 | Example 145 |
|---|---|---|---|---|---|---|---|---|---|
| HFO-1132(E) | mass% | 56.0 | 58.0 | 60.0 | 30.0 | 32.0 | 34.0 | 36.0 | 38.0 |
| HFO-1123 | mass% | 20.0 | 18.0 | 16.0 | 44.0 | 42.0 | 40.0 | 38.0 | 36.0 |
| R1234yf | mass% | 24.0 | 24.0 | 24.0 | 26.0 | 26.0 | 26.0 | 26.0 | 26.0 |
| GWP | - | 2 | 2 | 2 | 2 | 2 | 2 | 2 | 2 |
| COP ratio | % (relative to 410A) | 97.7 | 97.9 | 98.1 | 95.3 | 95.5 | 95.7 | 95.9 | 96.1 |
| Refrigerating capacity ratio | % (relative to 410A) | 91.6 | 91.3 | 91.0 | 93.2 | 93.1 | 92.9 | 92.7 | 92.5 |
| Condensation glide | °C | 2.28 | 2.22 | 2.16 | 2.86 | 2.85 | 2.83 | 2.81 | 2.79 |
| Discharge pressure | % (relative to 410A) | 96.2 | 95.6 | 95.1 | 101.3 | 100.8 | 100.4 | 99.9 | 99.4 |
| RCL | g/m$^3$ | 41.8 | 41.1 | 40.4 | 53.7 | 52.6 | 51.5 | 50.4 | 49.4 |

Table 24

| Item | Unit | Example 146 | Example 147 | Example 148 | Example 149 | Example 150 | Example 151 | Example 152 | Example 153 |
|---|---|---|---|---|---|---|---|---|---|
| HFO-1132(E) | mass% | 40.0 | 42.0 | 44.0 | 46.0 | 48.0 | 50.0 | 52.0 | 54.0 |
| HFO-1123 | mass% | 34.0 | 32.0 | 30.0 | 28.0 | 26.0 | 24.0 | 22.0 | 20.0 |
| R1234yf | mass% | 26.0 | 26.0 | 26.0 | 26.0 | 26.0 | 26.0 | 26.0 | 26.0 |
| GWP | - | 2 | 2 | 2 | 2 | 2 | 2 | 2 | 2 |
| COP ratio | % (relative to 410A) | 96.3 | 96.5 | 96.7 | 96.9 | 97.1 | 97.3 | 97.5 | 97.7 |
| Refrigerating capacity ratio | % (relative to 410A) | 92.3 | 92.1 | 91.9 | 91.6 | 91.4 | 91.2 | 90.9 | 90.6 |
| Condensation glide | °C | 2.77 | 2.74 | 2.71 | 2.67 | 2.63 | 2.59 | 2.53 | 2.48 |
| Discharge pressure | % (relative to 410A) | 99.0 | 98.5 | 97.9 | 97.4 | 96.9 | 96.4 | 95.8 | 95.3 |
| RCL | g/m$^3$ | 48.4 | 47.4 | 46.5 | 45.7 | 44.8 | 44.0 | 43.2 | 42.5 |

Table 25

| Item | Unit | Example 154 | Example 155 | Example 156 | Example 157 | Example 158 | Example 159 | Example 160 | Example 161 |
|---|---|---|---|---|---|---|---|---|---|
| HFO-1132(E) | mass% | 56.0 | 58.0 | 60.0 | 30.0 | 32.0 | 34.0 | 36.0 | 38.0 |
| HFO-1123 | mass% | 18.0 | 16.0 | 14.0 | 42.0 | 40.0 | 38.0 | 36.0 | 34.0 |
| R1234yf | mass% | 26.0 | 26.0 | 26.0 | 28.0 | 28.0 | 28.0 | 28.0 | 28.0 |
| GWP | - | 2 | 2 | 2 | 2 | 2 | 2 | 2 | 2 |
| COP ratio | % (relative to 410A) | 97.9 | 98.2 | 98.4 | 95.6 | 95.8 | 96.0 | 96.2 | 96.3 |
| Refrigerating capacity ratio | % (relative to 410A) | 90.3 | 90.1 | 89.8 | 92.1 | 91.9 | 91.7 | 91.5 | 91.3 |
| Condensatio n glide | °C | 2.42 | 2.35 | 2.27 | 3.10 | 3.09 | 3.06 | 3.04 | 3.01 |
| Discharge pressure | % (relative to 410A) | 94.7 | 94.1 | 93.6 | 99.7 | 99.3 | 98.8 | 98.4 | 97.9 |
| RCL | g/m$^3$ | 41.7 | 41.0 | 40.3 | 53.6 | 52.5 | 51.4 | 50.3 | 49.3 |

Table 26

| Item | Unit | Example 162 | Example 163 | Example 164 | Example 165 | Example 166 | Example 167 | Example 168 | Example 169 |
|---|---|---|---|---|---|---|---|---|---|
| HFO-1132(E) | mass% | 40.0 | 42.0 | 44.0 | 46.0 | 48.0 | 50.0 | 52.0 | 54.0 |
| HFO-1123 | mass% | 32.0 | 30.0 | 28.0 | 26.0 | 24.0 | 22.0 | 20.0 | 18.0 |
| R1234yf | mass% | 28.0 | 28.0 | 28.0 | 28.0 | 28.0 | 28.0 | 28.0 | 28.0 |
| GWP | - | 2 | 2 | 2 | 2 | 2 | 2 | 2 | 2 |
| COP ratio | % (relative to 410A) | 96.5 | 96.7 | 96.9 | 97.2 | 97.4 | 97.6 | 97.8 | 98.0 |
| Refrigerating capacity ratio | % (relative to 410A) | 91.1 | 90.9 | 90.7 | 90.4 | 90.2 | 89.9 | 89.7 | 89.4 |
| Condensation glide | °C | 2.98 | 2.94 | 2.90 | 2.85 | 2.80 | 2.75 | 2.68 | 2.62 |
| Discharge pressure | % (relative to 410A) | 97.4 | 96.9 | 96.4 | 95.9 | 95.4 | 94.9 | 94.3 | 93.8 |
| RCL | g/m$^3$ | 48.3 | 47.4 | 46.4 | 45.6 | 44.7 | 43.9 | 43.1 | 42.4 |

Table 27

| Item | Unit | Example 170 | Example 171 | Example 172 | Example 173 | Example 174 | Example 175 | Example 176 | Example 177 |
|---|---|---|---|---|---|---|---|---|---|
| HFO-1132(E) | mass% | 56.0 | 58.0 | 60.0 | 32.0 | 34.0 | 36.0 | 38.0 | 42.0 |
| HFO-1123 | mass% | 16.0 | 14.0 | 12.0 | 38.0 | 36.0 | 34.0 | 32.0 | 28.0 |
| R1234yf | mass% | 28.0 | 28.0 | 28.0 | 30.0 | 30.0 | 30.0 | 30.0 | 30.0 |
| GWP | - | 2 | 2 | 2 | 2 | 2 | 2 | 2 | 2 |
| COP ratio | % (relative to 410A) | 98.2 | 98.4 | 98.6 | 96.1 | 96.2 | 96.4 | 96.6 | 97.0 |
| Refrigerating capacity ratio | % (relative to 410A) | 89.1 | 88.8 | 88.5 | 90.7 | 90.5 | 90.3 | 90.1 | 89.7 |
| Condensation glide | °C | 2.54 | 2.46 | 2.38 | 3.32 | 3.30 | 3.26 | 3.22 | 3.14 |
| Discharge pressure | % (relative to 410A) | 93.2 | 92.6 | 92.1 | 97.7 | 97.3 | 96.8 | 96.4 | 95.4 |
| RCL | g/m³ | 41.7 | 41.0 | 40.3 | 52.4 | 51.3 | 50.2 | 49.2 | 47.3 |

Table 28

| Item | Unit | Example 178 | Example 179 | Example 180 | Example 181 | Example 182 | Example 183 | Example 184 | Example 185 |
|------|------|-------------|-------------|-------------|-------------|-------------|-------------|-------------|-------------|
| HFO-1132(E) | mass% | 44.0 | 46.0 | 48.0 | 50.0 | 52.0 | 54.0 | 56.0 | 58.0 |
| HFO-1123 | mass% | 26.0 | 24.0 | 22.0 | 20.0 | 18.0 | 16.0 | 14.0 | 12.0 |
| R1234yf | mass% | 30.0 | 30.0 | 30.0 | 30.0 | 30.0 | 30.0 | 30.0 | 30.0 |
| GWP | - | 2 | 2 | 2 | 2 | 2 | 2 | 2 | 2 |
| COP ratio | % (relative to 410A) | 97.2 | 97.4 | 97.6 | 97.8 | 98.0 | 98.3 | 98.5 | 98.7 |
| Refrigerating capacity ratio | % (relative to 410A) | 89.4 | 89.2 | 89.0 | 88.7 | 88.4 | 88.2 | 87.9 | 87.6 |
| Condensation glide | °C | 3.08 | 3.03 | 2.97 | 2.90 | 2.83 | 2.75 | 2.66 | 2.57 |
| Discharge pressure | % (relative to 410A) | 94.9 | 94.4 | 93.9 | 93.3 | 92.8 | 92.3 | 91.7 | 91.1 |
| RCL | g/m$^3$ | 46.4 | 45.5 | 44.7 | 43.9 | 43.1 | 42.3 | 41.6 | 40.9 |

Table 29

| Item | Unit | Example 186 | Example 187 | Example 188 | Example 189 | Example 190 | Example 191 | Example 192 | Example 193 |
|---|---|---|---|---|---|---|---|---|---|
| HFO-1132(E) | mass% | 30.0 | 32.0 | 34.0 | 36.0 | 38.0 | 40.0 | 42.0 | 44.0 |
| HFO-1123 | mass% | 38.0 | 36.0 | 34.0 | 32.0 | 30.0 | 28.0 | 26.0 | 24.0 |
| R1234yf | mass% | 32.0 | 32.0 | 32.0 | 32.0 | 32.0 | 32.0 | 32.0 | 32.0 |
| GWP | - | 2 | 2 | 2 | 2 | 2 | 2 | 2 | 2 |
| COP ratio | % (relative to 410A) | 96.2 | 96.3 | 96.5 | 96.7 | 96.9 | 97.1 | 97.3 | 97.5 |
| Refrigerating capacity ratio | % (relative to 410A) | 89.6 | 89.5 | 89.3 | 89.1 | 88.9 | 88.7 | 88.4 | 88.2 |
| Condensation glide | °C | 3.60 | 3.56 | 3.52 | 3.48 | 3.43 | 3.38 | 3.33 | 3.26 |
| Discharge pressure | % (relative to 410A) | 96.6 | 96.2 | 95.7 | 95.3 | 94.8 | 94.3 | 93.9 | 93.4 |
| RCL | g/m$^3$ | 53.4 | 52.3 | 51.2 | 50.1 | 49.1 | 48.1 | 47.2 | 46.3 |

Table 30

| Item | Unit | Example 194 | Example 195 | Example 196 | Example 197 | Example 198 | Example 199 | Example 200 | Example 201 |
|---|---|---|---|---|---|---|---|---|---|
| HFO-1132(E) | mass% | 46.0 | 48.0 | 50.0 | 52.0 | 54.0 | 56.0 | 58.0 | 60.0 |
| HFO-1123 | mass% | 22.0 | 20.0 | 18.0 | 16.0 | 14.0 | 12.0 | 10.0 | 8.0 |
| R1234yf | mass% | 32.0 | 32.0 | 32.0 | 32.0 | 32.0 | 32.0 | 32.0 | 32.0 |
| GWP | - | 2 | 2 | 2 | 2 | 2 | 2 | 2 | 2 |
| COP ratio | % (relative to 410A) | 97.7 | 97.9 | 98.1 | 98.3 | 98.5 | 98.7 | 98.9 | 99.2 |
| Refrigerating capacity ratio | % (relative to 410A) | 88.0 | 87.7 | 87.5 | 87.2 | 86.9 | 86.6 | 86.3 | 86.0 |
| Condensation glide | °C | 3.20 | 3.12 | 3.04 | 2.96 | 2.87 | 2.77 | 2.66 | 2.55 |
| Discharge pressure | % (relative to 410A) | 92.8 | 92.3 | 91.8 | 91.3 | 90.7 | 90.2 | 89.6 | 89.1 |
| RCL | g/m$^3$ | 45.4 | 44.6 | 43.8 | 43.0 | 42.3 | 41.5 | 40.8 | 40.2 |

Table 31

| Item | Unit | Example 202 | Example 203 | Example 204 | Example 205 | Example 206 | Example 207 | Example 208 | Example 209 |
|---|---|---|---|---|---|---|---|---|---|
| HFO-1132(E) | mass% | 30.0 | 32.0 | 34.0 | 36.0 | 38.0 | 40.0 | 42.0 | 44.0 |
| HFO-1123 | mass% | 36.0 | 34.0 | 32.0 | 30.0 | 28.0 | 26.0 | 24.0 | 22.0 |
| R1234yf | mass% | 34.0 | 34.0 | 34.0 | 34.0 | 34.0 | 34.0 | 34.0 | 34.0 |
| GWP | - | 2 | 2 | 2 | 2 | 2 | 2 | 2 | 2 |
| COP ratio | % (relative to 410A) | 96.5 | 96.6 | 96.8 | 97.0 | 97.2 | 97.4 | 97.6 | 97.8 |
| Refrigerating capacity ratio | % (relative to 410A) | 88.4 | 88.2 | 88.0 | 87.8 | 87.6 | 87.4 | 87.2 | 87.0 |
| Condensation glide | °C | 3.84 | 3.80 | 3.75 | 3.70 | 3.64 | 3.58 | 3.51 | 3.43 |
| Discharge pressure | % (relative to 410A) | 95.0 | 94.6 | 94.2 | 93.7 | 93.3 | 92.8 | 92.3 | 91.8 |
| RCL | g/m$^3$ | 53.3 | 52.2 | 51.1 | 50.0 | 49.0 | 48.0 | 47.1 | 46.2 |

Table 32

| Item | Unit | Example 210 | Example 211 | Example 212 | Example 213 | Example 214 | Example 215 | Example 216 | Example 217 |
|---|---|---|---|---|---|---|---|---|---|
| HFO-1132(E) | mass% | 46.0 | 48.0 | 50.0 | 52.0 | 54.0 | 30.0 | 32.0 | 34.0 |
| HFO-1123 | mass% | 20.0 | 18.0 | 16.0 | 14.0 | 12.0 | 34.0 | 32.0 | 30.0 |
| R1234yf | mass% | 34.0 | 34.0 | 34.0 | 34.0 | 34.0 | 36.0 | 36.0 | 36.0 |
| GWP | - | 2 | 2 | 2 | 2 | 2 | 2 | 2 | 2 |
| COP ratio | % (relative to 410A) | 98.0 | 98.2 | 98.4 | 98.6 | 98.8 | 96.8 | 96.9 | 97.1 |
| Refrigerating capacity ratio | % (relative to 410A) | 86.7 | 86.5 | 86.2 | 85.9 | 85.6 | 87.2 | 87.0 | 86.8 |
| Condensation glide | °C | 3.36 | 3.27 | 3.18 | 3.08 | 2.97 | 4.08 | 4.03 | 3.97 |
| Discharge pressure | % (relative to 410A) | 91.3 | 90.8 | 90.3 | 89.7 | 89.2 | 93.4 | 93.0 | 92.6 |
| RCL | g/m$^3$ | 45.3 | 44.5 | 43.7 | 42.9 | 42.2 | 53.2 | 52.1 | 51.0 |

Table 33

| Item | Unit | Example 218 | Example 219 | Example 220 | Example 221 | Example 222 | Example 223 | Example 224 | Example 225 |
|---|---|---|---|---|---|---|---|---|---|
| HFO-1132(E) | mass% | 36.0 | 38.0 | 40.0 | 42.0 | 44.0 | 46.0 | 30.0 | 32.0 |
| HFO-1123 | mass% | 28.0 | 26.0 | 24.0 | 22.0 | 20.0 | 18.0 | 32.0 | 30.0 |
| R1234yf | mass% | 36.0 | 36.0 | 36.0 | 36.0 | 36.0 | 36.0 | 38.0 | 38.0 |
| GWP | - | 2 | 2 | 2 | 2 | 2 | 2 | 2 | 2 |
| COP ratio | % (relative to 410A) | 97.3 | 97.5 | 97.7 | 97.9 | 98.1 | 98.3 | 97.1 | 97.2 |
| Refrigerating capacity ratio | % (relative to 410A) | 86.6 | 86.4 | 86.2 | 85.9 | 85.7 | 85.5 | 85.9 | 85.7 |
| Condensation glide | °C | 3.91 | 3.84 | 3.76 | 3.68 | 3.60 | 3.50 | 4.32 | 4.25 |
| Discharge pressure | % (relative to 410A) | 92.1 | 91.7 | 91.2 | 90.7 | 90.3 | 89.8 | 91.9 | 91.4 |
| RCL | g/m$^3$ | 49.9 | 48.9 | 47.9 | 47.0 | 46.1 | 45.3 | 53.1 | 52.0 |

Table 34

| Item | Unit | Example 226 | Example 227 |
|---|---|---|---|
| HFO-1132(E) | mass% | 34.0 | 36.0 |
| HFO-1123 | mass% | 28.0 | 26.0 |
| R1234yf | mass% | 38.0 | 38.0 |
| GWP | - | 2 | 2 |
| COP ratio | % (relative to 410A) | 97.4 | 97.6 |
| Refrigerating capacity ratio | % (relative to 410A) | 85.6 | 85.3 |
| Condensation glide | °C | 4.18 | 4.11 |
| Discharge pressure | % (relative to 410A) | 91.0 | 90.6 |
| RCL | g/m$^3$ | 50.9 | 49.8 |

These results indicate that under the condition that the mass% of HFO-1132(E), HFO-1123, and R1234yf based on their sum is respectively represented by x, y, and z, when coordinates (x,y,z) in a ternary composition diagram in which the sum of HFO-1132(E), HFO-1123, and R1234yf is 100 mass% are within the range of a figure surrounded by line segments AA', A'B, BD, DC', C'C, CO, and OA that connect the following 7 points:

   point A (68.6, 0.0, 31.4),
   point A'(30.6, 30.0, 39.4),
   point B (0.0, 58.7, 41.3),
   point D (0.0, 80.4, 19.6),
   point C' (19.5, 70.5, 10.0),
   point C (32.9, 67.1, 0.0), and
   point O (100.0, 0.0, 0.0),

or on the above line segments (excluding the points on the line segment CO);
the line segment AA' is represented by coordinates (x, $0.0016x^2-0.9473x+57.497$, $-0.0016x^2-0.0527x+42.503$),
the line segment A'B is represented by coordinates (x, $0.0029x^2-1.0268x+58.7$, $-0.0029x^2+0.0268x+41.3$,
the line segment DC' is represented by coordinates (x, $0.0082x^2-0.6671x+80.4$, $-0.0082x^2-0.3329x+19.6$),
the line segment C'C is represented by coordinates (x, $0.0067x^2-0.6034x+79.729$, $-0.0067x^2-0.3966x+20.271$), and
the line segments BD, CO, and OA are straight lines,
the refrigerant has a refrigerating capacity ratio of 85% or more relative to that of R410A, and a COP of 92.5% or more relative to that of R410A.

The point on the line segment AA' was determined by obtaining an approximate curve connecting point A, Example 1, and point A' by the least square method.

The point on the line segment A'B was determined by obtaining an approximate curve connecting point A', Example 3, and point B by the least square method.

The point on the line segment DC' was determined by obtaining an approximate curve connecting point D, Example 6, and point C' by the least square method.

The point on the line segment C'C was determined by obtaining an approximate curve connecting point C', Example 4, and point C by the least square method.

Likewise, the results indicate that when coordinates (x,y,z) are within the range of a figure surrounded by line segments AA', A'B, BF, FT, TE, EO, and OA that connect the following 7 points:

   point A (68.6, 0.0, 31.4),
   point A' (30.6, 30.0, 39.4),
   point B (0.0, 58.7, 41.3),
   point F (0.0, 61.8, 38.2),
   point T (35.8, 44.9, 19.3),
   point E (58.0, 42.0, 0.0) and
   point O (100.0, 0.0, 0.0),

or on the above line segments (excluding the points on the line EO);

the line segment AA' is represented by coordinates (x, $0.0016x^2-0.9473x+57.497$, $-0.0016x^2-0.0527x+42.503$),

the line segment A'B is represented by coordinates (x, $0.0029x^2-1.0268x+58.7$, $-0.0029x^2+0.0268x+41.3$),

the line segment FT is represented by coordinates (x, $0.0078x^2-0.7501x+61.8$, $-0.0078x^2-0.2499x+38.2$), and

the line segment TE is represented by coordinates (x, $0.0067x^2-0.7607x+63.525$, $-0.0067x^2-0.2393x+36.475$), and

the line segments BF, FO, and OA are straight lines,

the refrigerant has a refrigerating capacity ratio of 85% or more relative to that of R410A, and a COP of 95% or more relative to that of R410A.

The point on the line segment FT was determined by obtaining an approximate curve connecting three points, i.e., points T, E', and F, by the least square method.

The point on the line segment TE was determined by obtaining an approximate curve connecting three points, i.e., points E, R, and T, by the least square method.

The results in Tables 1 to 34 clearly indicate that in a ternary composition diagram of the mixed refrigerant of HFO-1132(E), HFO-1123, and R1234yf in which the sum of these components is 100 mass%, a line segment connecting a point (0.0, 100.0, 0.0) and a point (0.0, 0.0, 100.0) is the base, the point (0.0, 100.0, 0.0) is on the left side, and the point (0.0, 0.0, 100.0) is on the right side, when coordinates (x,y,z) are on or below the line segment LM connecting point L (63.1, 31.9, 5.0) and point M (60.3, 6.2, 33.5), the refrigerant has an RCL of 40 g/m$^3$ or more.

The results in Tables 1 to 34 clearly indicate that in a ternary composition diagram of the mixed refrigerant of HFO-1132(E), HFO-1123 and R1234yf in which their sum is 100 mass%, a line segment connecting a point (0.0, 100.0, 0.0) and a point (0.0, 0.0, 100.0) is the base, the point (0.0, 100.0, 0.0) is on the left side, and the point (0.0, 0.0, 100.0) is on the right side, when coordinates (x,y,z) are on the line segment QR connecting point Q (62.8, 29.6, 7.6) and point R (49.8, 42.3, 7.9) or on the left side of the line segment, the refrigerant has a temperature glide of 1°C or less.

The results in Tables 1 to 34 clearly indicate that in a ternary composition diagram of the mixed refrigerant of HFO-1132(E), HFO-1123, and R1234yf in which their sum is 100 mass%, a line segment connecting a point (0.0, 100.0, 0.0) and a point (0.0, 0.0, 100.0) is the base, the point (0.0, 100.0, 0.0) is on the left side, and the point (0.0, 0.0, 100.0) is on the right side, when coordinates (x,y,z) are on the line segment ST connecting point S (62.6, 28.3, 9.1) and point T (35.8, 44.9, 19.3) or on the right side of the line segment, the refrigerant has a discharge pressure of 105% or less relative to that of 410A.

In these compositions, R1234yf contributes to reducing flammability, and suppressing deterioration of polymerization etc. Therefore, the composition preferably contains R1234yf.

Further, the burning velocity of these mixed refrigerants whose mixed formulations were adjusted to WCF concentrations was measured according to the ANSI/ASHRAE Standard 34-2013. Compositions having a burning velocity of 10 cm/s or less were determined to be classified as "Class 2L (lower flammability)."

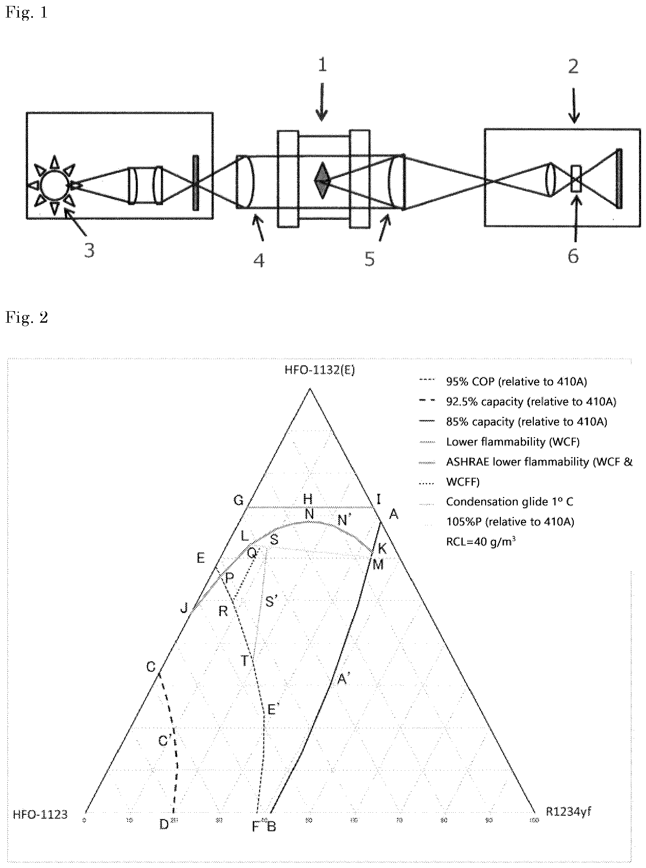

A burning velocity test was performed using the apparatus shown in Fig. 1 in the following manner. In Fig. 1, reference numeral 901 refers to a sample cell, 902 refers to a high-speed camera, 903 refers to a xenon lamp, 904 refers to a collimating lens, 905 refers to a collimating lens, and 906 refers to a ring filter. First, the mixed refrigerants used had a purity of 99.5% or more, and were degassed by repeating a cycle of freezing, pumping, and thawing until no traces of air were observed on the vacuum gauge. The burning velocity was measured by the closed method. The initial temperature was ambient temperature. Ignition was performed by generating an electric spark between the electrodes in the center of a sample cell. The duration of the discharge was 1.0 to 9.9 ms, and the ignition energy was typically about 0.1 to 1.0 J. The spread of the flame was visualized using schlieren photographs. A cylindrical container (inner diameter: 155 mm, length: 198 mm) equipped with two light transmission acrylic windows was used as the sample cell, and a xenon lamp was used as the light source. Schlieren images of the flame were recorded by a high-speed digital video camera at a frame rate of 600 fps and stored on a PC.

Each WCFF concentration was obtained by using the WCF concentration as the initial concentration and performing a leak simulation using NIST Standard Reference Database REFLEAK Version 4.0.

Tables 35 and 36 show the results.

Table 35

| Item | | Unit | G | H | I |
|---|---|---|---|---|---|
| WCF | HFO-1132(E) | mass% | 72.0 | 72.0 | 72.0 |
| | HFO-1123 | mass% | 28.0 | 9.6 | 0.0 |
| | R1234yf | mass% | 0.0 | 18.4 | 28.0 |
| Burning velocity (WCF) | | cm/s | 10 | 10 | 10 |

Table 36

| Item | | Unit | J | P | L | N | N' | K |
|---|---|---|---|---|---|---|---|---|
| WCF | HFO-1132 (E) | mass% | 47.1 | 55.8 | 63.1 | 68.6 | 65.0 | 61.3 |
| | HFO-1123 | mass% | 52.9 | 42.0 | 31.9 | 16.3 | 7.7 | 5.4 |
| | R1234yf | mass% | 0.0 | 2.2 | 5.0 | 15.1 | 27.3 | 33.3 |
| Leak condition that results in WCFF | | | Storage/Shipping -40°C, 92% release, liquid phase side | Storage/Shipping -40°C, 90% release, liquid phase side | Storage/Shipping -40°C, 90% release, gas phase side | Storage/Shipping -40°C, 66% release, gas phase side | Storage/Shipping -40°C, 12% release, gas phase side | Storage/Shipping, -40°C, 0% release, gas phase side |
| WCFF | HFO-1132 (E) | mass% | 72.0 | 72.0 | 72.0 | 72.0 | 72.0 | 72.0 |
| | HFO-1123 | mass% | 28.0 | 17.8 | 17.4 | 13.6 | 12.3 | 9.8 |
| | R1234yf | mass% | 0.0 | 10.2 | 10.6 | 14.4 | 15.7 | 18.2 |
| Burning velocity (WCF) | | cm/s | 8 or less | 8 or less | 8 or less | 9 | 9 | 8 or less |
| Burning velocity (WCFF) | | cm/s | 10 | 10 | 10 | 10 | 10 | 10 |

The results in Table 35 clearly indicate that when a mixed refrigerant of HFO-1132(E), HFO-1123, and R1234yf contains HFO-1132(E) in a proportion of 72.0 mass% or less based on their sum, the refrigerant can be determined to have a WCF lower flammability.

The results in Tables 36 clearly indicate that in a ternary composition diagram of a mixed refrigerant of HFO-1132(E), HFO-1123, and R1234yf in which their sum is 100 mass%, and a line segment connecting a point (0.0, 100.0, 0.0) and a point (0.0, 0.0, 100.0) is the base,

when coordinates (x,y,z) are on or below the line segments JP, PN, and NK connecting the following 6 points:

point J (47.1, 52.9, 0.0),
point P (55.8, 42.0, 2.2),
point L (63.1,31.9,5.0)
point N (68.6, 16.3, 15.1)
point N' (65.0, 7.7, 27.3) and
point K (61.3, 5.4, 33.3),

the refrigerant can be determined to have a WCF lower flammability, and a WCFF lower flammability. In the diagram, the line segment PN is represented by coordinates $(x, -0.1135x^2+12.112x-280.43, 0.1135x^2-13.112x+380.43)$, and the line segment NK is represented by coordinates $(x, 0.2421x^2-29.955x+931.91, -0.2421x^2+28.955x-831.91)$.

The point on the line segment PN was determined by obtaining an approximate curve connecting three points, i.e., points P, L, and N, by the least square method.

The point on the line segment NK was determined by obtaining an approximate curve connecting three points, i.e., points N, N', and K, by the least square method.

(5-2) Refrigerant B

The refrigerant B according to the present disclosure is

a mixed refrigerant comprising trans-1,2-difluoroethylene (HFO-1132(E)) and trifluoroethylene (HFO-1123) in a total amount of 99.5 mass% or more based on the entire refrigerant, and the refrigerant comprising 62.0 mass% to 72.0 mass% or 45.1 mass% to 47.1 mass% of HFO-1132(E) based on the entire refrigerant, or

a mixed refrigerant comprising HFO-1132(E) and HFO-1123 in a total amount of 99.5 mass% or more based on the entire refrigerant, and the refrigerant comprising 45.1 mass% to 47.1 mass% of HFO-1132(E) based on the entire refrigerant..

The refrigerant B according to the present disclosure has various properties that are desirable as an R410A-alternative refrigerant, i.e., (1) a coefficient of performance equivalent to that of R410A, (2) a refrigerating capacity equivalent to that of R410A, (3) a sufficiently low GWP, and (4) a lower flammability (Class 2L) according to the ASHRAE standard.

When the refrigerant B according to the present disclosure is a mixed refrigerant comprising 72.0 mass% or less of HFO-1132(E), it has WCF lower flammability. When the refrigerant B according to the present disclosure is a composition comprising 47.1% or less of HFO-1132(E), it has WCF lower flammability and WCFF lower flammability, and is determined to be "Class 2L," which is a lower flammable refrigerant according to the ASHRAE standard, and which is further easier to handle.

When the refrigerant B according to the present disclosure comprises 62.0 mass% or more of HFO-1132(E), it becomes superior with a coefficient of performance of 95% or more relative to that of R410A, the polymerization reaction of HFO-1132(E) and/or HFO-1123 is further suppressed, and the stability is further improved. When the refrigerant B according to the present disclosure comprises 45.1 mass% or more of HFO-1132(E), it becomes superior with a coefficient of performance of 93% or more relative to that of R410A, the polymerization reaction of HFO-1132(E) and/or HFO-1123 is further suppressed, and the stability is further improved.

The refrigerant B according to the present disclosure may further comprise other additional refrigerants in addition to HFO-1132(E) and HFO-1123, as long as the above properties and effects are not impaired. In this respect, the refrigerant according to the present disclosure preferably comprises HFO-1132(E) and HFO-1123 in a total amount of 99.75 mass% or more, and more preferably 99.9 mass% or more, based on the entire refrigerant.

Such additional refrigerants are not limited, and can be selected from a wide range of refrigerants. The mixed refrigerant may comprise a single additional refrigerant, or two or more additional refrigerants.

(Examples of Refrigerant B)

The present disclosure is described in more detail below with reference to Examples of refrigerant B. However, the refrigerant B is not limited to the Examples.

Mixed refrigerants were prepared by mixing HFO-1132(E) and HFO-1123 at mass% based on their sum shown in Tables 37 and 38.

The GWP of compositions each comprising a mixture of R410A (R32 = 50%/R125 = 50%) was evaluated based on the values stated in the Intergovernmental Panel on Climate Change (IPCC), fourth report. The GWP of HFO-1132(E), which was not stated therein, was assumed to be 1 from HFO-1132a (GWP = 1 or less) and HFO-1123 (GWP = 0.3, described in WO2015/141678). The refrigerating capacity of compositions each comprising R410A and a mixture of HFO-1132(E) and HFO-1123 was determined by performing theoretical refrigeration cycle calculations for the mixed refrigerants using the National Institute of Science and Technology (NIST) and Reference Fluid Thermodynamic and Transport Properties Database (Refprop 9.0) under the following conditions.

Evaporating temperature: 5°C
Condensation temperature: 45°C
Superheating temperature: 5 K
Subcooling temperature: 5 K
Compressor efficiency: 70%

The composition of each mixture was defined as WCF. A leak simulation was performed using NIST Standard Reference Data Base Refleak Version 4.0 under the conditions of Equipment, Storage, Shipping, Leak, and Recharge according to the ASHRAE Standard 34-2013. The most flammable fraction was defined as WCFF.

Tables 1 and 2 show GWP, COP, and refrigerating capacity, which were calculated based on these results. The COP and refrigerating capacity are ratios relative to R410A.

The coefficient of performance (COP) was determined by the following formula.

$$COP = (\text{refrigerating capacity or heating capacity})/\text{power consumption}$$

For the flammability, the burning velocity was measured according to the ANSI/ASHRAE Standard 34-2013. Both WCF and WCFF having a burning velocity of 10 cm/s or less were determined to be "Class 2L (lower flammability)."

A burning velocity test was performed using the apparatus shown in Fig. 1 in the following manner. First, the mixed refrigerants used had a purity of 99.5% or more, and were degassed by repeating a cycle of freezing, pumping, and thawing until no traces of air were observed on the vacuum gauge. The burning velocity was measured by the closed method. The initial temperature was ambient temperature. Ignition was performed by generating an electric spark between the electrodes in the center of a sample cell. The duration of the discharge was 1.0 to 9.9 ms, and the ignition energy was typically about 0.1 to 1.0 J. The spread of the flame was visualized using schlieren photographs. A cylindrical container (inner diameter: 155 mm, length: 198 mm) equipped with two light transmission acrylic windows was used as the sample cell, and a xenon lamp was used as the light source. Schlieren images of the flame were recorded by a high-speed digital video camera at a frame rate of 600 fps and stored on a PC.

Table 37

| Item | Unit | Comparative Example 1 | Comparative Example 2 | Comparative Example 3 | Example 1 | Example 2 | Example 3 | Example 4 | Example 5 | Comparative Example 4 |
|---|---|---|---|---|---|---|---|---|---|---|
| | | R410A | HFO-1132E | | | | | | | |
| HFO-1132E (WCF) | mass% | | 100 | 80 | 72 | 70 | 68 | 65 | 62 | 60 |
| HFO-1123 (WCF) | mass% | | 0 | 20 | 28 | 30 | 32 | 35 | 38 | 40 |
| GWP | - | 2088 | 1 | 1 | 1 | 1 | 1 | 1 | 1 | 1 |
| COP ratio | % (relative to R410A) | 100 | 99.7 | 97.5 | 96.6 | 96.3 | 96.1 | 95.8 | 95.4 | 95.2 |
| Refrigerating capacity ratio | % (relative to R41 OA) | 100 | 98.3 | 101.9 | 103.1 | 103.4 | 103.8 | 104.1 | 104.5 | 104.8 |
| Discharge pressure | Mpa | 2.73 | 2.71 | 2.89 | 2.96 | 2.98 | 3.00 | 3.02 | 3.04 | 3.06 |
| Burning velocity (WCF) | cm/sec | Non-flammab le | 20 | 13 | 10 | 9 | 9 | 8 | 8 or less | 8 or less |

Table 38

| Item | Unit | Comparative Example 5 | Comparative Example 6 | Example 7 | Example 8 | Example 9 | Comparative Example 7 | Comparative Example 8 | Comparative Example 9 | Comparative Example 10 |
|---|---|---|---|---|---|---|---|---|---|---|
| | | | | | | | | | | HFO-1123 |
| HFO-1132E (WCF) | mass% | 50 | 48 | 47.1 | 46.1 | 45.1 | 43 | 40 | 25 | 0 |
| HFO-1123 (WCF) | mass% | 50 | 52 | 52.9 | 53.9 | 54.9 | 57 | 60 | 75 | 100 |
| GWP | - | 1 | 1 | 1 | 1 | 1 | 1 | 1 | 1 | 1 |
| COP ratio | % (relative to R410A) | 94.1 | 93.9 | 93.8 | 93.7 | 93.6 | 93.4 | 93.1 | 91.9 | 90.6 |
| Refrigerating capacity ratio | % (relative to R41OA) | 105.9 | 106.1 | 106.2 | 106.3 | 106.4 | 106.6 | 106.9 | 107.9 | 108.0 |
| Discharge pressure | Mpa | 3.14 | 3.16 | 3.16 | 3.17 | 3.18 | 3.20 | 3.21 | 3.31 | 3.39 |
| Leakage test conditions (WCFF) | | Storage/ Shipping -40°C, 92% release, liquid phase side | Storage/ Shipping -40°C, 92% release, liquid phase side | Storage/ Shipping -40°C,92% release, liquid phase side | Storage/ Shipping -40°C,92% release, liquid phase side | Storage/ Shipping -40°C,92% release, liquid phase side | Storage/ Shipping -40°C, 92% release, liquid phase side | Storage/ Shipping -40°C, 92% release, liquid phase side | Storage/ Shipping -40°C, 90% release, liquid phase side | - |
| HFO-1132E (WCFF) | mass% | 74 | 73 | 72 | 71 | 70 | 67 | 63 | 38 | - |
| HFO-1123 (WCFF) | mass% | 26 | 27 | 28 | 29 | 30 | 33 | 37 | 62 | |

EP 3 730 867 A1

(continued)

| Item | Unit | Comparative Example 5 | Comparative Example 6 | Example 7 | Example 8 | Example 9 | Comparative Example 7 | Comparative Example 8 | Comparative Example 9 | Comparative Example 10 |
|---|---|---|---|---|---|---|---|---|---|---|
| | | | | | | | | | | HFO-1123 |
| Burning velocity (WCF) | cm/sec | 8 or less | 8 or less | 8 or less | 8 or less | 8 or less | 8 or less | 8 or less | 8 or less | 5 |
| Burning velocity (WCFF) | cm/sec | 11 | 10.5 | 10.0 | 9.5 | 9.5 | 8.5 | 8 or less | 8 or less | |
| ASHRAE flammability classification | | 2 | 2 | 2L | 2L | 2L | 2L | 2L | 2L | 2L |

The compositions each comprising 62.0 mass% to 72.0 mass% of HFO-1132(E) based on the entire composition are stable while having a low GWP (GWP = 1), and they ensure WCF lower flammability. Further, surprisingly, they can ensure performance equivalent to that of R410A. Moreover, compositions each comprising 45.1 mass% to 47.1 mass% of HFO-1132(E) based on the entire composition are stable while having a low GWP (GWP = 1), and they ensure WCFF lower flammability. Further, surprisingly, they can ensure performance equivalent to that of R410A.

(5-3) Refrigerant C

The refrigerant C according to the present disclosure is a composition comprising trans-1,2-difluoroethylene (HFO-1132(E)), trifluoroethylene (HFO-1123), 2,3,3,3-tetrafluoro-1-propene (R1234yf), and difluoromethane (R32), and satisfies the following requirements. The refrigerant C according to the present disclosure has various properties that are desirable as an alternative refrigerant for R410A; i.e. it has a coefficient of performance and a refrigerating capacity that are equivalent to those of R410A, and a sufficiently low GWP.

Requirements

Preferable refrigerant C is as follows:
When the mass% of HFO-1132(E), HFO-1123, R1234yf, and R32 based on their sum is respectively represented by x, y, z, and a,

if $0 < a \leq 11.1$, coordinates (x,y,z) in a ternary composition diagram in which the sum of HFO-1132(E), HFO-1123, and R1234yf is (100-a) mass% are within the range of a figure surrounded by straight lines GI, IA, AB, BD', D'C, and CG that connect the following 6 points:

point G $(0.026a^2-1.7478a+72.0, -0.026a^2+0.7478a+28.0, 0.0)$,
point I $(0.026a^2-1.7478a+72.0, 0.0, -0.026a^2+0.7478a+28.0)$,
point A$(0.0134a^2-1.9681a+68.6, 0.0, -0.0134a^2+0.9681a+31.4)$,
point B $(0.0, 0.0144a^2-1.6377a+58.7, -0.0144a^2+0.6377a+41.3)$,
point D' $(0.0, 0.0224a^2+0.968a+75.4, -0.0224a^2-1.968a+24.6)$, and
point C $(-0.2304a^2-0.4062a+32.9, 0.2304a^2-0.5938a+67.1, 0.0)$,

or on the straight lines GI, AB, and D'C (excluding point G, point I, point A, point B, point D', and point C);
if $11.1 < a \leq 18.2$, coordinates (x,y,z) in the ternary composition diagram are within the range of a figure surrounded by straight lines GI, IA, AB, BW, and WG that connect the following 5 points:

point G $(0.02a^2-1.6013a+71.105, -0.02a^2+0.6013a+28.895, 0.0)$,
point I $(0.02a^2-1.6013a+71.105, 0.0, -0.02a^2+0.6013a+28.895)$,
point A$(0.0112a^2-1.9337a+68.484, 0.0, -0.0112a^2+0.9337a+31.516)$,
point B $(0.0, 0.0075a^2-1.5156a+58.199, -0.0075a^2+0.5156a+41.801)$ and
point W $(0.0, 100.0-a, 0.0)$,

or on the straight lines GI and AB (excluding point G, point I, point A, point B, and point W);
if $18.2 < a \leq 26.7$, coordinates (x,y,z) in the ternary composition diagram are within the range of a figure surrounded by straight lines GI, IA, AB, BW, and WG that connect the following 5 points:

point G $(0.0135a^2-1.4068a+69.727, -0.0135a^2+0.4068a+30.273, 0.0)$,
point I $(0.0135a^2-1.4068a+69.727, 0.0, -0.0135a^2+0.4068a+30.273)$,
point A$(0.0107a^2-1.9142a+68.305, 0.0, -0.0107a^2+0.9142a+31.695)$,
point B $(0.0, 0.009a^2-1.6045a+59.318, -0.009a^2+0.6045a+40.682)$ and
point W $(0.0, 100.0-a, 0.0)$,

or on the straight lines GI and AB (excluding point G, point I, point A, point B, and point W);
if $26.7 < a \leq 36.7$, coordinates (x,y,z) in the ternary composition diagram are within the range of a figure surrounded by straight lines GI, IA, AB, BW, and WG that connect the following 5 points:

point G $(0.0111a^2-1.3152a+68.986, -0.0111a^2+0.3152a+31.014, 0.0)$,
point I $(0.0111a^2-1.3152a+68.986, 0.0, -0.0111a^2+0.3152a+31.014)$,
point A$(0.0103a^2-1.9225a+68.793, 0.0, -0.0103a^2+0.9225a+31.207)$,

point B (0.0, 0.0046a$^2$-1.41a+57.286, -0.0046a$^2$+0.41a+42.714) and
point W (0.0, 100.0-a, 0.0),

or on the straight lines GI and AB (excluding point G, point I, point A, point B, and point W); and
if 36.7<a≤46.7, coordinates (x,y,z) in the ternary composition diagram are within the range of a figure surrounded by straight lines GI, IA, AB, BW, and WG that connect the following 5 points:

point G (0.0061a$^2$-0.9918a+63.902, -0.0061a$^2$-0.0082a+36.098, 0.0),
point I (0.0061a$^2$-0.9918a+63.902, 0.0, -0.0061a$^2$-0.0082a+36.098),
point A (0.0085a$^2$-1.8102a+67.1, 0.0, -0.0085a$^2$+0.8102a+32.9),
point B (0.0, 0.0012a$^2$-1.1659a+52.95, -0.0012a$^2$+0.1659a+47.05) and
point W (0.0, 100.0-a, 0.0),

or on the straight lines GI and AB (excluding point G, point I, point A, point B, and point W). When the refrigerant according to the present disclosure satisfies the above requirements, it has a refrigerating capacity ratio of 85% or more relative to that of R410A, and a COP ratio of 92.5% or more relative to that of R410A, and further ensures a WCF lower flammability.

The refrigerant C according to the present disclosure is preferably a refrigerant wherein

when the mass% of HFO-1132(E), HFO-1123, and R1234yf based on their sum is respectively represented by x, y, and z,
if 0<a≤11.1, coordinates (x,y,z) in a ternary composition diagram in which the sum of HFO-1132(E), HFO-1123, and R1234yf is (100-a) mass% are within the range of a figure surrounded by straight lines JK', K'B, BD', D'C, and CJ that connect the following 5 points:

point J (0.0049a$^2$-0.9645a+47.1, -0.0049a$^2$-0.0355a+52.9, 0.0),
point K' (0.0514a$^2$-2.4353a+61.7, -0.0323a$^2$+0.4122a+5.9, -0.0191a$^2$+1.0231a+32.4),
point B (0.0, 0.0144a$^2$-1.6377a+58.7, -0.0144a$^2$+0.6377a+41.3),
point D' (0.0, 0.0224a$^2$+0.968a+75.4, -0.0224a$^2$-1.968a+24.6), and
point C (-0.2304a$^2$-0.4062a+32.9, 0.2304a$^2$-0.5938a+67.1, 0.0),

or on the straight lines JK', K'B, and D'C (excluding point J, point B, point D', and point C);
if 11.1<a≤18.2, coordinates (x,y,z) in the ternary composition diagram are within the range of a figure surrounded by straight lines JK', K'B, BW, and WJ that connect the following 4 points:

point J (0.0243a$^2$-1.4161a+49.725, -0.0243a$^2$+0.4161a+50.275, 0.0),
point K' (0.0341a$^2$-2.1977a+61.187, -0.0236a$^2$+0.34a+5.636, -0.0105a$^2$+0.8577a+33.177),
point B (0.0, 0.0075a$^2$-1.5156a+58.199, -0.0075a$^2$+0.5156a+41.801) and
point W (0.0, 100.0-a, 0.0),

or on the straight lines JK' and K'B (excluding point J, point B, and point W);
if 18.2<a≤26.7, coordinates (x,y,z) in the ternary composition diagram are within the range of a figure surrounded by straight lines JK', K'B, BW, and WJ that connect the following 4 points:

point J (0.0246a$^2$-1.4476a+50.184, -0.0246a$^2$+0.4476a+49.816, 0.0),
point K' (0.0196a$^2$-1.7863a+58.515, -0.0079a$^2$-0.1136a+8.702, -0.0117a$^2$+0.8999a+32.783),
point B (0.0, 0.009a$^2$-1.6045a+59.318, -0.009a$^2$+0.6045a+40.682) and
point W (0.0, 100.0-a, 0.0),

or on the straight lines JK' and K'B (excluding point J, point B, and point W);
if 26.7<a≤36.7, coordinates (x,y,z) in the ternary composition diagram are within the range of a figure surrounded by straight lines JK', K'A, AB, BW, and WJ that connect the following 5 points:

point J (0.0183a$^2$-1.1399a+46.493, -0.0183a$^2$+0.1399a+53.507, 0.0),
point K' (-0.0051a$^2$+0.0929a+25.95, 0.0, 0.0051a$^2$-1.0929a+74.05),
point A (0.0103a$^2$-1.9225a+68.793, 0.0, -0.0103a$^2$+0.9225a+31.207),
point B (0.0, 0.0046a$^2$-1.41a+57.286, -0.0046a$^2$+0.41a+42.714) and

point W (0.0, 100.0-a, 0.0),

or on the straight lines JK', K'A, and AB (excluding point J, point B, and point W); and
if $36.7 < a \leq 46.7$, coordinates (x,y,z) in the ternary composition diagram are within the range of a figure surrounded by straight lines JK', K'A, AB, BW, and WJ that connect the following 5 points:

point J ($-0.0134a^2+1.0956a+7.13$, $0.0134a^2-2.0956a+92.87$, 0.0),
point K' ($-1.892a+29.443$, 0.0, $0.892a+70.557$),
point A ($0.0085a^2-1.8102a+67.1$, 0.0, $-0.0085a^2+0.8102a+32.9$),
point B (0.0, $0.0012a^2-1.1659a+52.95$, $-0.0012a^2+0.1659a+47.05$) and
point W (0.0, 100.0-a, 0.0),

or on the straight lines JK', K'A, and AB (excluding point J, point B, and point W). When the refrigerant according to the present disclosure satisfies the above requirements, it has a refrigerating capacity ratio of 85% or more relative to that of R410A, and a COP ratio of 92.5% or more relative to that of R410A. Additionally, the refrigerant has a WCF lower flammability and a WCFF lower flammability, and is classified as "Class 2L," which is a lower flammable refrigerant according to the ASHRAE standard.

When the refrigerant C according to the present disclosure further contains R32 in addition to HFO-1132 (E), HFO-1123, and R1234yf, the refrigerant may be a refrigerant wherein when the mass% of HFO-1132(E), HFO-1123, R1234yf, and R32 based on their sum is respectively represented by x, y, z, and a,

if $0 < a \leq 10.0$, coordinates (x,y,z) in a ternary composition diagram in which the sum of HFO-1132(E), HFO-1123, and R1234yf is (100-a) mass% are within the range of a figure surrounded by straight lines that connect the following 4 points:

point a ($0.02a^2-2.46a+93.4$, 0, $-0.02a^2+2.46a+6.6$),
point b' ($-0.008a^2-1.38a+56$, $0.018a^2-0.53a+26.3$, $-0.01a^2+1.91a+17.7$),
point c ($-0.016a^2+1.02a+77.6$, $0.016a^2-1.02a+22.4$, 0), and
point o (100.0-a, 0.0, 0.0)

or on the straight lines oa, ab', and b'c (excluding point o and point c);
if $10.0 < a \leq 16.5$, coordinates (x,y,z) in the ternary composition diagram are within the range of a figure surrounded by straight lines that connect the following 4 points:

point a ($0.0244a^2-2.5695a+94.056$, 0, $-0.0244a^2+2.5695a+5.944$),
point b' ($0.1161a^2-1.9959a+59.749$, $0.014a^2-0.3399a+24.8$, $-0.1301a^2+2.3358a+15.451$),
point c ($-0.0161a^2+1.02a+77.6$, $0.0161a^2-1.02a+22.4$, 0), and
point o (100.0-a, 0.0, 0.0),

or on the straight lines oa, ab', and b'c (excluding point o and point c); or
if $16.5 < a \leq 21.8$, coordinates (x,y,z) in the ternary composition diagram are within the range of a figure surrounded by straight lines that connect the following 4 points:

point a ($0.0161a^2-2.3535a+92.742$, 0, $-0.0161a^2+2.3535a+7.258$),
point b' ($-0.0435a^2-0.0435a+50.406$, $0.0304a^2+1.8991a-0.0661$, $0.073 9a^2-1.8556a+49.6601$),
point c ($-0.0161a^2+0.9959a+77.851$, $0.0161a^2-0.9959a+22.149$, 0), and
point o (100.0-a, 0.0, 0.0),

or on the straight lines oa, ab', and b'c (excluding point o and point c). Note that when point b in the ternary composition diagram is defined as a point where a refrigerating capacity ratio of 95% relative to that of R410A and a COP ratio of 95% relative to that of R410A are both achieved, point b' is the intersection of straight line ab and an approximate line formed by connecting the points where the COP ratio relative to that of R410A is 95%. When the refrigerant according to the present disclosure meets the above requirements, the refrigerant has a refrigerating capacity ratio of 95% or more relative to that of R410A, and a COP ratio of 95% or more relative to that of R410A.

The refrigerant C according to the present disclosure may further comprise other additional refrigerants in addition to HFO-1132(E), HFO-1123, R1234yf, and R32 as long as the above properties and effects are not impaired.

In this respect, the refrigerant according to the present disclosure preferably comprises HFO-1132(E), HFO-1123, R1234yf, and R32 in a total amount of 99.5 mass% or more, more preferably 99.75 mass% or more, and still more preferably 99.9 mass% or more, based on the entire refrigerant.

The refrigerant C according to the present disclosure may comprise HFO-1132(E), HFO-1123, R1234yf, and R32 in a total amount of 99.5 mass% or more, 99.75 mass% or more, or 99.9 mass% or more, based on the entire refrigerant.

Additional refrigerants are not particularly limited and can be widely selected. The mixed refrigerant may contain one additional refrigerant, or two or more additional refrigerants.

(Examples of Refrigerant C)

The present disclosure is described in more detail below with reference to Examples of refrigerant C. However, the refrigerant C is not limited to the Examples.

Mixed refrigerants were prepared by mixing HFO-1132(E), HFO-1123, R1234yf, and R32 at mass% based on their sum shown in Tables 39 to 96.

The GWP of compositions each comprising a mixture of R410A (R32 = 50%/R125 = 50%) was evaluated based on the values stated in the Intergovernmental Panel on Climate Change (IPCC), fourth report. The GWP of HFO-1132(E), which was not stated therein, was assumed to be 1 from HFO-1132a (GWP = 1 or less) and HFO-1123 (GWP = 0.3, described in WO2015/141678). The refrigerating capacity of compositions each comprising R410A and a mixture of HFO-1132(E) and HFO-1123 was determined by performing theoretical refrigeration cycle calculations for the mixed refrigerants using the National Institute of Science and Technology (NIST) and Reference Fluid Thermodynamic and Transport Properties Database (Refprop 9.0) under the following conditions.

For each of these mixed refrigerants, the COP ratio and the refrigerating capacity ratio relative to those of R410 were obtained. Calculation was conducted under the following conditions.

Evaporating temperature: 5°C
Condensation temperature: 45°C
Superheating temperature: 5 K
Subcooling temperature: 5 K
Compressor efficiency: 70%

Tables 39 to 96 show the resulting values together with the GWP of each mixed refrigerant. The COP and refrigerating capacity are ratios relative to R410A.

The coefficient of performance (COP) was determined by the following formula.

$$\text{COP} = (\text{refrigerating capacity or heating capacity})/\text{power consumption}$$

Table 39

| Item | Unit | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 | Ex. 1 |
|---|---|---|---|---|---|---|---|---|---|---|
| | | | A | B | C | D' | G | I | J | K' |
| HFO-1132(E) | Mass% | | 68.6 | 0.0 | 32.9 | 0.0 | 72.0 | 72.0 | 47.1 | 61.7 |
| HFO-1123 | Mass% | R410A | 0.0 | 58.7 | 67.1 | 75.4 | 28.0 | 0.0 | 52.9 | 5.9 |
| R1234yf | Mass% | | 31.4 | 41.3 | 0.0 | 24.6 | 0.0 | 28.0 | 0.0 | 32.4 |
| R32 | Mass% | | 0.0 | 0.0 | 0.0 | 0.0 | 0.0 | 0.0 | 0.0 | 0.0 |
| GWP | | 2088 | 2 | 2 | 1 | 2 | 1 | 2 | 1 | 2 |
| COP ratio | % (relative to R410A) | 100 | 100.0 | 95.5 | 92.5 | 93.1 | 96.6 | 99.9 | 93.8 | 99.4 |
| Refrigerating capacity ratio | % (relative to R410A) | 100 | 85.0 | 85.0 | 107.4 | 95.0 | 103.1 | 86.6 | 106.2 | 85.5 |

Table 40

| Item | Unit | Comp. Ex. 9 | Comp. Ex. 10 | Comp. Ex. 11 | Comp. Ex. 12 | Comp. Ex. 13 | Comp. Ex. 14 | Comp. Ex. 15 | Ex. 2 |
|---|---|---|---|---|---|---|---|---|---|
| | | A | B | C | D' | G | I | J | K' |
| HFO-1132 (E) | Mass% | 55.3 | 0.0 | 18.4 | 0.0 | 60.9 | 60.9 | 40.5 | 47.0 |
| HFO-1123 | Mass% | 0.0 | 47.8 | 74.5 | 83.4 | 32.0 | 0.0 | 52.4 | 7.2 |
| R1234yf | Mass% | 37.6 | 45.1 | 0.0 | 9.5 | 0.0 | 32.0 | 0.0 | 38.7 |
| R32 | Mass% | 7.1 | 7.1 | 7.1 | 7.1 | 7.1 | 7.1 | 7.1 | 7.1 |
| GWP | - | 50 | 50 | 49 | 49 | 49 | 50 | 49 | 50 |
| COP ratio | % (relative to R410A) | 99.8 | 96.9 | 92.5 | 92.5 | 95.9 | 99.6 | 94.0 | 99.2 |
| Refrigerating capacity ratio | % (relative to R410A) | 85.0 | 85.0 | 110.5 | 106.0 | 106.5 | 87.7 | 108.9 | 85.5 |

Table 41

| Item | Unit | Comp. Ex. 16 | Comp. Ex. 17 | Comp. Ex. 18 | Comp. Ex. 19 | Comp. Ex. 20 | Comp. Ex. 21 | Ex. 3 |
|---|---|---|---|---|---|---|---|---|
| | | A | B | C=D' | G | I | J | K' |
| HFO-1132(E) | Mass% | 48.4 | 0.0 | 0.0 | 55.8 | 55.8 | 37.0 | 41.0 |
| HFO-1123 | Mass% | 0.0 | 42.3 | 88.9 | 33.1 | 0.0 | 51.9 | 6.5 |
| R1234yf | Mass% | 40.5 | 46.6 | 0.0 | 0.0 | 33.1 | 0.0 | 41.4 |
| R32 | Mass% | 11.1 | 11.1 | 11.1 | 11.1 | 11.1 | 11.1 | 11.1 |
| GWP | - | 77 | 77 | 76 | 76 | 77 | 76 | 77 |
| COP ratio | % (relative to R41 OA) | 99.8 | 97.6 | 92.5 | 95.8 | 99.5 | 94.2 | 99.3 |
| Refrigerating capacity ratio | % (relative to R410A) | 85.0 | 85.0 | 112.0 | 108.0 | 88.6 | 110.2 | 85.4 |

Table 42

| Item | Unit | Comp. Ex. 22 | Comp. Ex. 23 | Comp. Ex. 24 | Comp. Ex. 25 | Comp. Ex. 26 | Ex. 4 |
|---|---|---|---|---|---|---|---|
| | | A | B | G | I | J | K' |
| HFO-1132(E) | Mass% | 42.8 | 0.0 | 52.1 | 52.1 | 34.3 | 36.5 |
| HFO-1123 | Mass% | 0.0 | 37.8 | 33.4 | 0.0 | 51.2 | 5.6 |
| R1234yf | Mass% | 42.7 | 47.7 | 0.0 | 33.4 | 0.0 | 43.4 |
| R32 | Mass% | 14.5 | 14.5 | 14.5 | 14.5 | 14.5 | 14.5 |
| GWP | - | 100 | 100 | 99 | 100 | 99 | 100 |
| COP ratio | % (relative to R410A) | 99.9 | 98.1 | 95.8 | 99.5 | 94.4 | 99.5 |
| Refrigerating capacity ratio | % (relative to R410A) | 85.0 | 85.0 | 109.1 | 89.6 | 111.1 | 85.3 |

Table 43

| Item | Unit | Comp. Ex. 27 | Comp. Ex. 28 | Comp. Ex. 29 | Comp. Ex. 30 | Comp. Ex. 31 | Ex. 5 |
|------|------|------|------|------|------|------|------|
| | | A | B | G | I | J | K' |
| HFO-1132(E) | Mass% | 37.0 | 0.0 | 48.6 | 48.6 | 32.0 | 32.5 |
| HFO-1123 | Mass% | 0.0 | 33.1 | 33.2 | 0.0 | 49.8 | 4.0 |
| R1234yf | Mass% | 44.8 | 48.7 | 0.0 | 33.2 | 0.0 | 45.3 |
| R32 | Mass% | 18.2 | 18.2 | 18.2 | 18.2 | 18.2 | 18.2 |
| GWP | - | 125 | 125 | 124 | 125 | 124 | 125 |
| COP ratio | % (relative to R410A) | 100.0 | 98.6 | 95.9 | 99.4 | 94.7 | 99.8 |
| Refrigerating capacity ratio | % (relative to R410A) | 85.0 | 85.0 | 110.1 | 90.8 | 111.9 | 85.2 |

Table 44

| Item | Unit | Comp. Ex. 32 | Comp. Ex. 33 | Comp. Ex. 34 | Comp. Ex. 35 | Comp. Ex. 36 | Ex. 6 |
|------|------|------|------|------|------|------|------|
| | | A | B | G | I | J | K' |
| HFO-1132(E) | Mass% | 31.5 | 0.0 | 45.4 | 45.4 | 30.3 | 28.8 |
| HFO-1123 | Mass% | 0.0 | 28.5 | 32.7 | 0.0 | 47.8 | 2.4 |
| R1234yf | Mass% | 46.6 | 49.6 | 0.0 | 32.7 | 0.0 | 46.9 |
| R32 | Mass% | 21.9 | 21.9 | 21.9 | 21.9 | 21.9 | 21.9 |
| GWP | - | 150 | 150 | 149 | 150 | 149 | 150 |
| COP ratio | % (relative to R410A) | 100.2 | 99.1 | 96.0 | 99.4 | 95.1 | 100.0 |
| Refrigerating capacity ratio | % (relative to R410A) | 85.0 | 85.0 | 111.0 | 92.1 | 112.6 | 85.1 |

Table 45

| Item | Unit | Comp. Ex. 37 | Comp. Ex. 38 | Comp. Ex. 39 | Comp. Ex. 40 | Comp. Ex. 41 | Comp. Ex. 42 |
|------|------|------|------|------|------|------|------|
| | | A | B | G | I | J | K' |
| HFO-1132(E) | Mass% | 24.8 | 0.0 | 41.8 | 41.8 | 29.1 | 24.8 |
| HFO-1123 | Mass% | 0.0 | 22.9 | 31.5 | 0.0 | 44.2 | 0.0 |
| R1234yf | Mass% | 48.5 | 50.4 | 0.0 | 31.5 | 0.0 | 48.5 |
| R32 | Mass% | 26.7 | 26.7 | 26.7 | 26.7 | 26.7 | 26.7 |
| GWP | - | 182 | 182 | 181 | 182 | 181 | 182 |
| COP ratio | % (relative to R410A) | 100.4 | 99.8 | 96.3 | 99.4 | 95.6 | 100.4 |
| Refrigerating capacity ratio | % (relative to R410A) | 85.0 | 85.0 | 111.9 | 93.8 | 113.2 | 85.0 |

Table 46

| Item | Unit | Comp. Ex. 43 | Comp. Ex. 44 | Comp. Ex. 45 | Comp. Ex. 46 | Comp. Ex. 47 | Comp. Ex. 48 |
|---|---|---|---|---|---|---|---|
| | | A | B | G | I | J | K' |
| HFO-1132(E) | Mass% | 21.3 | 0.0 | 40.0 | 40.0 | 28.8 | 24.3 |
| HFO-1123 | Mass% | 0.0 | 19.9 | 30.7 | 0.0 | 41.9 | 0.0 |
| R1234yf | Mass% | 49.4 | 50.8 | 0.0 | 30.7 | 0.0 | 46.4 |
| R32 | Mass% | 29.3 | 29.3 | 29.3 | 29.3 | 29.3 | 29.3 |
| GWP | - | 200 | 200 | 198 | 199 | 198 | 200 |
| COP ratio | % (relative to R410A) | 100.6 | 100.1 | 96.6 | 99.5 | 96.1 | 100.4 |
| Refrigerating capacity ratio | % (relative to R410A) | 85.0 | 85.0 | 112.4 | 94.8 | 113.6 | 86.7 |

Table47

| Item | Unit | Comp. Ex. 49 | Comp. Ex. 50 | Comp. Ex. 51 | Comp. Ex. 52 | Comp. Ex. 53 | Comp. Ex. 54 |
|---|---|---|---|---|---|---|---|
| | | A | B | G | I | J | K' |
| HFO-1132(E) | Mass% | 12.1 | 0.0 | 35.7 | 35.7 | 29.3 | 22.5 |
| HFO-1123 | Mass% | 0.0 | 11.7 | 27.6 | 0.0 | 34.0 | 0.0 |
| R1234yf | Mass% | 51.2 | 51.6 | 0.0 | 27.6 | 0.0 | 40.8 |
| R32 | Mass% | 36.7 | 36.7 | 36.7 | 36.7 | 36.7 | 36.7 |
| GWP | - | 250 | 250 | 248 | 249 | 248 | 250 |
| COP ratio | % (relative to R410A) | 101.2 | 101.0 | 96.4 | 99.6 | 97.0 | 100.4 |
| Refrigerating capacity ratio | % (relative to R410A) | 85.0 | 85.0 | 113.2 | 97.6 | 113.9 | 90.9 |

Table 48

| Item | Unit | Comp. Ex. 55 | Comp. Ex. 56 | Comp. Ex. 57 | Comp. Ex. 58 | Comp. Ex. 59 | Comp. Ex. 60 |
|---|---|---|---|---|---|---|---|
| | | A | B | G | I | J | K' |
| HFO-1132(E) | Mass% | 3.8 | 0.0 | 32.0 | 32.0 | 29.4 | 21.1 |
| HFO-1123 | Mass% | 0.0 | 3.9 | 23.9 | 0.0 | 26.5 | 0.0 |
| R1234yf | Mass% | 52.1 | 52.0 | 0.0 | 23.9 | 0.0 | 34.8 |
| R32 | Mass% | 44.1 | 44.1 | 44.1 | 44.1 | 44.1 | 44.1 |
| GWP | - | 300 | 300 | 298 | 299 | 298 | 299 |
| COP ratio | % (relative to R410A) | 101.8 | 101.8 | 97.9 | 99.8 | 97.8 | 100.5 |
| Refrigerating capacity ratio | % (relative to R410A) | 85.0 | 85.0 | 113.7 | 100.4 | 113.9 | 94.9 |

Table 49

| Item | Unit | Comp. Ex. 61 | Comp. Ex. 62 | Comp. Ex. 63 | Comp. Ex. 64 | Comp. Ex. 65 |
|---|---|---|---|---|---|---|
| | | A=B | G | I | J | K' |
| HFO-1132(E) | Mass% | 0.0 | 30.4 | 30.4 | 28.9 | 20.4 |
| HFO-1123 | Mass% | 0.0 | 21.8 | 0.0 | 23.3 | 0.0 |
| R1234yf | Mass% | 52.2 | 0.0 | 21.8 | 0.0 | 31.8 |
| R32 | Mass% | 47.8 | 47.8 | 47.8 | 47.8 | 47.8 |
| GWP | - | 325 | 323 | 324 | 323 | 324 |
| COP ratio | % (relative to R410A) | 102.1 | 98.2 | 100.0 | 98.2 | 100.6 |
| Refrigerating capacity ratio | % (relative to R410A) | 85.0 | 113.8 | 101.8 | 113.9 | 96.8 |

Table 50

| Item | Unit | Comp. Ex. 66 | Ex. 7 | Ex. 8 | Ex. 9 | Ex. 10 | Ex. 11 | Ex. 12 | Ex. 13 |
|---|---|---|---|---|---|---|---|---|---|
| HFO-1132(E) | Mass% | 5.0 | 10.0 | 15.0 | 20.0 | 25.0 | 30.0 | 35.0 | 40.0 |
| HFO-1123 | Mass% | 82.9 | 77.9 | 72.9 | 67.9 | 62.9 | 57.9 | 52.9 | 47.9 |
| R1234yf | Mass% | 5.0 | 5.0 | 5.0 | 5.0 | 5.0 | 5.0 | 5.0 | 5.0 |
| R32 | Mass% | 7.1 | 7.1 | 7.1 | 7.1 | 7.1 | 7.1 | 7.1 | 7.1 |
| GWP | - | 49 | 49 | 49 | 49 | 49 | 49 | 49 | 49 |
| COP ratio | % (relative to R410A) | 92.4 | 92.6 | 92.8 | 93.1 | 93.4 | 93.7 | 94.1 | 94.5 |
| Refrigerating capacity ratio | % (relative to R410A) | 108.4 | 108.3 | 108.2 | 107.9 | 107.6 | 107.2 | 106.8 | 106.3 |

Table 51

| Item | Unit | Ex. 14 | Ex. 15 | Ex. 16 | Ex. 17 | Comp. Ex. 67 | Ex. 18 | Ex. 19 | Ex. 20 |
|---|---|---|---|---|---|---|---|---|---|
| HFO-1132(E) | Mass% | 45.0 | 50.0 | 55.0 | 60.0 | 65.0 | 10.0 | 15.0 | 20.0 |
| HFO-1123 | Mass% | 42.9 | 37.9 | 32.9 | 27.9 | 22.9 | 72.9 | 67.9 | 62.9 |
| R1234yf | Mass% | 5.0 | 5.0 | 5.0 | 5.0 | 5.0 | 10.0 | 10.0 | 10.0 |
| R32 | Mass% | 7.1 | 7.1 | 7.1 | 7.1 | 7.1 | 7.1 | 7.1 | 7.1 |
| GWP | - | 49 | 49 | 49 | 49 | 49 | 49 | 49 | 49 |
| COP ratio | % (relative to R410A) | 95.0 | 95.4 | 95.9 | 96.4 | 96.9 | 93.0 | 93.3 | 93.6 |
| Refrigerating capacity ratio | % (relative to R410A) | 105.8 | 105.2 | 104.5 | 103.9 | 103.1 | 105.7 | 105.5 | 105.2 |

Table 52

| Item | Unit | Ex. 21 | Ex. 22 | Ex. 23 | Ex. 24 | Ex. 25 | Ex. 26 | Ex. 27 | Ex. 28 |
|---|---|---|---|---|---|---|---|---|---|
| HFO-1132(E) | Mass% | 25.0 | 30.0 | 35.0 | 40.0 | 45.0 | 50.0 | 55.0 | 60.0 |
| HFO-1123 | Mass% | 57.9 | 52.9 | 47.9 | 42.9 | 37.9 | 32.9 | 27.9 | 22.9 |
| R1234yf | Mass% | 10.0 | 10.0 | 10.0 | 10.0 | 10.0 | 10.0 | 10.0 | 10.0 |
| R32 | Mass% | 7.1 | 7.1 | 7.1 | 7.1 | 7.1 | 7.1 | 7.1 | 7.1 |
| GWP | - | 49 | 49 | 49 | 49 | 49 | 49 | 49 | 49 |
| COP ratio | % (relative to R41 OA) | 93.9 | 94.2 | 94.6 | 95.0 | 95.5 | 96.0 | 96.4 | 96.9 |
| Refrigerating capacity ratio | % (relative to R410A) | 104.9 | 104.5 | 104.1 | 103.6 | 103.0 | 102.4 | 101.7 | 101.0 |

Table 53

| Item | Unit | Comp. Ex. 68 | Ex. 29 | Ex. 30 | Ex. 31 | Ex. 32 | Ex. 33 | Ex. 34 | Ex. 35 |
|---|---|---|---|---|---|---|---|---|---|
| HFO-1132(E) | Mass% | 65.0 | 10.0 | 15.0 | 20.0 | 25.0 | 30.0 | 35.0 | 40.0 |
| HFO-1123 | Mass% | 17.9 | 67.9 | 62.9 | 57.9 | 52.9 | 47.9 | 42.9 | 37.9 |
| R1234yf | Mass% | 10.0 | 15.0 | 15.0 | 15.0 | 15.0 | 15.0 | 15.0 | 15.0 |
| R32 | Mass% | 7.1 | 7.1 | 7.1 | 7.1 | 7.1 | 7.1 | 7.1 | 7.1 |
| GWP | - | 49 | 49 | 49 | 49 | 49 | 49 | 49 | 49 |
| COP ratio | % (relative to R410A) | 97.4 | 93.5 | 93.8 | 94.1 | 94.4 | 94.8 | 95.2 | 95.6 |
| Refrigerating capacity ratio | % (relative to R410A) | 100.3 | 102.9 | 102.7 | 102.5 | 102.1 | 101.7 | 101.2 | 100.7 |

Table 54

| Item | Unit | Ex. 36 | Ex. 37 | Ex. 38 | Ex. 39 | Comp. Ex. 69 | Ex. 40 | Ex. 41 | Ex. 42 |
|---|---|---|---|---|---|---|---|---|---|
| HFO-1132(E) | Mass% | 45.0 | 50.0 | 55.0 | 60.0 | 65.0 | 10.0 | 15.0 | 20.0 |
| HFO-1123 | Mass% | 32.9 | 27.9 | 22.9 | 17.9 | 12.9 | 62.9 | 57.9 | 52.9 |
| R1234yf | Mass% | 15.0 | 15.0 | 15.0 | 15.0 | 15.0 | 20.0 | 20.0 | 20.0 |
| R32 | Mass% | 7.1 | 7.1 | 7.1 | 7.1 | 7.1 | 7.1 | 7.1 | 7.1 |
| GWP | - | 49 | 49 | 49 | 49 | 49 | 49 | 49 | 49 |
| COP ratio | % (relative to R410A) | 96.0 | 96.5 | 97.0 | 97.5 | 98.0 | 94.0 | 94.3 | 94.6 |
| Refrigerating capacity ratio | % (relative to R410A) | 100.1 | 99.5 | 98.9 | 98.1 | 97.4 | 100.1 | 99.9 | 99.6 |

Table 55

| Item | Unit | Ex. 43 | Ex. 44 | Ex. 45 | Ex. 46 | Ex. 47 | Ex. 48 | Ex. 49 | Ex. 50 |
|---|---|---|---|---|---|---|---|---|---|
| HFO-1132(E) | Mass% | 25.0 | 30.0 | 35.0 | 40.0 | 45.0 | 50.0 | 55.0 | 60.0 |

(continued)

| Item | Unit | Ex. 43 | Ex. 44 | Ex. 45 | Ex. 46 | Ex. 47 | Ex. 48 | Ex. 49 | Ex. 50 |
|---|---|---|---|---|---|---|---|---|---|
| HFO-1123 | Mass% | 47.9 | 42.9 | 37.9 | 32.9 | 27.9 | 22.9 | 17.9 | 12.9 |
| R1234yf | Mass% | 20.0 | 20.0 | 20.0 | 20.0 | 20.0 | 20.0 | 20.0 | 20.0 |
| R32 | Mass% | 7.1 | 7.1 | 7.1 | 7.1 | 7.1 | 7.1 | 7.1 | 7.1 |
| GWP | - | 49 | 49 | 49 | 49 | 49 | 49 | 49 | 49 |
| COP ratio | % (relative to R410A) | 95.0 | 95.3 | 95.7 | 96.2 | 96.6 | 97.1 | 97.6 | 98.1 |
| Refrigerating capacity ratio | % (relative to R41 OA) | 99.2 | 98.8 | 98.3 | 97.8 | 97.2 | 96.6 | 95.9 | 95.2 |

Table 56

| Item | Unit | Comp. Ex. 70 | Ex. 51 | Ex. 52 | Ex. 53 | Ex. 54 | Ex. 55 | Ex. 56 | Ex. 57 |
|---|---|---|---|---|---|---|---|---|---|
| HFO-1132(E) | Mass% | 65.0 | 10.0 | 15.0 | 20.0 | 25.0 | 30.0 | 35.0 | 40.0 |
| HFO-1123 | Mass% | 7.9 | 57.9 | 52.9 | 47.9 | 42.9 | 37.9 | 32.9 | 27.9 |
| R1234yf | Mass% | 20.0 | 25.0 | 25.0 | 25.0 | 25.0 | 25.0 | 25.0 | 25.0 |
| R32 | Mass% | 7.1 | 7.1 | 7.1 | 7.1 | 7.1 | 7.1 | 7.1 | 7.1 |
| GWP | - | 49 | 50 | 50 | 50 | 50 | 50 | 50 | 50 |
| COP ratio | % (relative to R410A) | 98.6 | 94.6 | 94.9 | 95.2 | 95.5 | 95.9 | 96.3 | 96.8 |
| Refrigerating capacity ratio | % (relative to R410A) | 94.4 | 97.1 | 96.9 | 96.7 | 96.3 | 95.9 | 95.4 | 94.8 |

Table 57

| Item | Unit | Ex. 58 | Ex. 59 | Ex. 60 | Ex. 61 | Comp. Ex. 71 | Ex. 62 | Ex. 63 | Ex. 64 |
|---|---|---|---|---|---|---|---|---|---|
| HFO-1132(E) | Mass% | 45.0 | 50.0 | 55.0 | 60.0 | 65.0 | 10.0 | 15.0 | 20.0 |
| HFO-1123 | Mass% | 7.1 | 7.1 | 7.1 | 7.1 | 7.1 | 7.1 | 7.1 | 7.1 |
| R1234yf | Mass% | 25.0 | 25.0 | 25.0 | 25.0 | 25.0 | 30.0 | 30.0 | 30.0 |
| R32 | Mass% | 7.1 | 7.1 | 7.1 | 7.1 | 7.1 | 7.1 | 7.1 | 7.1 |
| GWP | - | 50 | 50 | 50 | 50 | 50 | 50 | 50 | 50 |
| COP ratio | % (relative to R410A) | 97.2 | 97.7 | 98.2 | 98.7 | 99.2 | 95.2 | 95.5 | 95.8 |
| Refrigerating capacity ratio | % (relative to R410A) | 94.2 | 93.6 | 92.9 | 92.2 | 91.4 | 94.2 | 93.9 | 93.7 |

Table 58

| Item | Unit | Ex. 65 | Ex. 66 | Ex. 67 | Ex. 68 | Ex. 69 | Ex. 70 | Ex. 71 | Ex. 72 |
|---|---|---|---|---|---|---|---|---|---|
| HFO-1132(E) | Mass% | 25.0 | 30.0 | 35.0 | 40.0 | 45.0 | 50.0 | 55.0 | 60.0 |
| HFO-1123 | Mass% | 37.9 | 32.9 | 27.9 | 22.9 | 17.9 | 12.9 | 7.9 | 2.9 |

(continued)

| Item | Unit | Ex. 65 | Ex. 66 | Ex. 67 | Ex. 68 | Ex. 69 | Ex. 70 | Ex. 71 | Ex. 72 |
|---|---|---|---|---|---|---|---|---|---|
| R1234yf | Mass% | 30.0 | 30.0 | 30.0 | 30.0 | 30.0 | 30.0 | 30.0 | 30.0 |
| R32 | Mass% | 7.1 | 7.1 | 7.1 | 7.1 | 7.1 | 7.1 | 7.1 | 7.1 |
| GWP | - | 50 | 50 | 50 | 50 | 50 | 50 | 50 | 50 |
| COP ratio | % (relative to R41 OA) | 96.2 | 96.6 | 97.0 | 97.4 | 97.9 | 98.3 | 98.8 | 99.3 |
| Refrigerating capacity ratio | % (relative to R41 OA) | 93.3 | 92.9 | 92.4 | 91.8 | 91.2 | 90.5 | 89.8 | 89.1 |

Table 59

| Item | Unit | Ex. 73 | Ex. 74 | Ex. 75 | Ex. 76 | Ex. 77 | Ex. 78 | Ex. 79 | Ex. 80 |
|---|---|---|---|---|---|---|---|---|---|
| HFO-1132(E) | Mass% | 10.0 | 15.0 | 20.0 | 25.0 | 30.0 | 35.0 | 40.0 | 45.0 |
| HFO-1123 | Mass% | 47.9 | 42.9 | 37.9 | 32.9 | 27.9 | 22.9 | 17.9 | 12.9 |
| R1234yf | Mass% | 35.0 | 35.0 | 35.0 | 35.0 | 35.0 | 35.0 | 35.0 | 35.0 |
| R32 | Mass% | 7.1 | 7.1 | 7.1 | 7.1 | 7.1 | 7.1 | 7.1 | 7.1 |
| GWP | - | 50 | 50 | 50 | 50 | 50 | 50 | 50 | 50 |
| COP ratio | % (relative to R41 OA) | 95.9 | 96.2 | 96.5 | 96.9 | 97.2 | 97.7 | 98.1 | 98.5 |
| Refrigerating capacity ratio | % (relative to R41 OA) | 91.1 | 90.9 | 90.6 | 90.2 | 89.8 | 89.3 | 88.7 | 88.1 |

Table 60

| Item | Unit | Ex. 81 | Ex. 82 | Ex. 83 | Ex. 84 | Ex. 85 | Ex. 86 | Ex. 87 | Ex. 88 |
|---|---|---|---|---|---|---|---|---|---|
| HFO-1132(E) | Mass% | 50.0 | 55.0 | 10.0 | 15.0 | 20.0 | 25.0 | 30.0 | 35.0 |
| HFO-1123 | Mass% | 7.9 | 2.9 | 42.9 | 37.9 | 32.9 | 27.9 | 22.9 | 17.9 |
| R1234yf | Mass% | 35.0 | 35.0 | 40.0 | 40.0 | 40.0 | 40.0 | 40.0 | 40.0 |
| R32 | Mass% | 7.1 | 7.1 | 7.1 | 7.1 | 7.1 | 7.1 | 7.1 | 7.1 |
| GWP | - | 50 | 50 | 50 | 50 | 50 | 50 | 50 | 50 |
| COP ratio | % (relative to R410A) | 99.0 | 99.4 | 96.6 | 96.9 | 97.2 | 97.6 | 98.0 | 98.4 |
| Refrigerating capacity ratio | % (relative to R410A) | 87.4 | 86.7 | 88.0 | 87.8 | 87.5 | 87.1 | 86.6 | 86.1 |

Table 61

| Item | Unit | Comp. Ex. 72 | Comp. Ex. 73 | Comp. Ex. 74 | Comp. Ex. 75 | Comp. Ex. 76 | Comp. Ex. 77 | Comp. Ex. 78 | Comp. Ex. 79 |
|---|---|---|---|---|---|---|---|---|---|
| HFO-1132(E) | Mass% | 40.0 | 45.0 | 50.0 | 10.0 | 15.0 | 20.0 | 25.0 | 30.0 |
| HFO-1123 | Mass% | 12.9 | 7.9 | 2.9 | 37.9 | 32.9 | 27.9 | 22.9 | 17.9 |
| R1234yf | Mass% | 40.0 | 40.0 | 40.0 | 45.0 | 45.0 | 45.0 | 45.0 | 45.0 |
| R32 | Mass% | 7.1 | 7.1 | 7.1 | 7.1 | 7.1 | 7.1 | 7.1 | 7.1 |

(continued)

| Item | Unit | Comp. Ex. 72 | Comp. Ex. 73 | Comp. Ex. 74 | Comp. Ex. 75 | Comp. Ex. 76 | Comp. Ex. 77 | Comp. Ex. 78 | Comp. Ex. 79 |
|---|---|---|---|---|---|---|---|---|---|
| GWP | - | 50 | 50 | 50 | 50 | 50 | 50 | 50 | 50 |
| COP ratio | % (relative to R410A) | 98.8 | 99.2 | 99.6 | 97.4 | 97.7 | 98.0 | 98.3 | 98.7 |
| Refrigerating capacity ratio | % (relative to R410A) | 85.5 | 84.9 | 84.2 | 84.9 | 84.6 | 84.3 | 83.9 | 83.5 |

Table 62

| Item | Unit | Comp. Ex. 80 | Comp. Ex. 81 | Comp. Ex. 82 |
|---|---|---|---|---|
| HFO-1132 (E) | Mass% | 35.0 | 40.0 | 45.0 |
| HFO-1123 | Mass% | 12.9 | 7.9 | 2.9 |
| R1234yf | Mass% | 45.0 | 45.0 | 45.0 |
| R32 | Mass% | 7.1 | 7.1 | 7.1 |
| GWP | - | 50 | 50 | 50 |
| COP ratio | % (relative to R410A) | 99.1 | 99.5 | 99.9 |
| Refrigerating capacity ratio | % (relative to R410A) | 82.9 | 82.3 | 81.7 |

Table 63

| Item | Unit | Ex. 89 | Ex. 90 | Ex. 91 | Ex. 92 | Ex. 93 | Ex. 94 | Ex. 95 | Ex. 96 |
|---|---|---|---|---|---|---|---|---|---|
| HFO-1132(E) | Mass% | 10.0 | 15.0 | 20.0 | 25.0 | 30.0 | 35.0 | 40.0 | 45.0 |
| HFO-1123 | Mass% | 70.5 | 65.5 | 60.5 | 55.5 | 50.5 | 45.5 | 40.5 | 35.5 |
| R1234yf | Mass% | 5.0 | 5.0 | 5.0 | 5.0 | 5.0 | 5.0 | 5.0 | 5.0 |
| R32 | Mass% | 14.5 | 14.5 | 14.5 | 14.5 | 14.5 | 14.5 | 14.5 | 14.5 |
| GWP | - | 99 | 99 | 99 | 99 | 99 | 99 | 99 | 99 |
| COP ratio | % (relative to R410A) | 93.7 | 93.9 | 94.1 | 94.4 | 94.7 | 95.0 | 95.4 | 95.8 |
| Refrigerating capacity ratio | % (relative to R410A) | 110.2 | 110.0 | 109.7 | 109.3 | 108.9 | 108.4 | 107.9 | 107.3 |

Table 64

| Item | Unit | Ex. 97 | Comp. Ex. 83 | Ex. 98 | Ex. 99 | Ex. 100 | Ex. 101 | Ex. 102 | Ex. 103 |
|---|---|---|---|---|---|---|---|---|---|
| HFO-1132(E) | Mass% | 50.0 | 55.0 | 10.0 | 15.0 | 20.0 | 25.0 | 30.0 | 35.0 |
| HFO-1123 | Mass% | 30.5 | 25.5 | 65.5 | 60.5 | 55.5 | 50.5 | 45.5 | 40.5 |
| R1234yf | Mass% | 5.0 | 5.0 | 10.0 | 10.0 | 10.0 | 10.0 | 10.0 | 10.0 |
| R32 | Mass% | 14.5 | 14.5 | 14.5 | 14.5 | 14.5 | 14.5 | 14.5 | 14.5 |

(continued)

| Item | Unit | Ex. 97 | Comp. Ex. 83 | Ex. 98 | Ex. 99 | Ex. 100 | Ex. 101 | Ex. 102 | Ex. 103 |
|---|---|---|---|---|---|---|---|---|---|
| GWP | - | 99 | 99 | 99 | 99 | 99 | 99 | 99 | 99 |
| COP ratio | % (relative to R410A) | 96.2 | 96.6 | 94.2 | 94.4 | 94.6 | 94.9 | 95.2 | 95.5 |
| Refrigerating capacity ratio | % (relative to R410A) | 106.6 | 106.0 | 107.5 | 107.3 | 107.0 | 106.6 | 106.1 | 105.6 |

Table 65

| Item | Unit | Ex. 104 | Ex. 105 | Ex. 106 | Comp. Ex. 84 | Ex. 107 | Ex. 108 | Ex. 109 | Ex. 110 |
|---|---|---|---|---|---|---|---|---|---|
| HFO-1132(E) | Mass% | 40.0 | 45.0 | 50.0 | 55.0 | 10.0 | 15.0 | 20.0 | 25.0 |
| HFO-1123 | Mass% | 35.5 | 30.5 | 25.5 | 20.5 | 60.5 | 55.5 | 50.5 | 45.5 |
| R1234yf | Mass% | 10.0 | 10.0 | 10.0 | 10.0 | 15.0 | 15.0 | 15.0 | 15.0 |
| R32 | Mass% | 14.5 | 14.5 | 14.5 | 14.5 | 14.5 | 14.5 | 14.5 | 14.5 |
| GWP | - | 99 | 99 | 99 | 99 | 99 | 99 | 99 | 99 |
| COP ratio | % (relative to R410A) | 95.9 | 96.3 | 96.7 | 97.1 | 94.6 | 94.8 | 95.1 | 95.4 |
| Refrigerating capacity ratio | % (relative to R410A) | 105.1 | 104.5 | 103.8 | 103.1 | 104.7 | 104.5 | 104.1 | 103.7 |

Table 66

| Item | Unit | Ex. 111 | Ex. 112 | Ex. 113 | Ex. 114 | Ex. 115 | Comp. Ex. 85 | Ex. 116 | Ex. 117 |
|---|---|---|---|---|---|---|---|---|---|
| HFO-1132(E) | Mass% | 30.0 | 35.0 | 40.0 | 45.0 | 50.0 | 55.0 | 10.0 | 15.0 |
| HFO-1123 | Mass% | 40.5 | 35.5 | 30.5 | 25.5 | 20.5 | 15.5 | 55.5 | 50.5 |
| R1234yf | Mass% | 15.0 | 15.0 | 15.0 | 15.0 | 15.0 | 15.0 | 20.0 | 20.0 |
| R32 | Mass% | 14.5 | 14.5 | 14.5 | 14.5 | 14.5 | 14.5 | 14.5 | 14.5 |
| GWP | - | 99 | 99 | 99 | 99 | 99 | 99 | 99 | 99 |
| COP ratio | % (relative to R410A) | 95.7 | 96.0 | 96.4 | 96.8 | 97.2 | 97.6 | 95.1 | 95.3 |
| Refrigerating capacity ratio | % (relative to R410A) | 103.3 | 102.8 | 102.2 | 101.6 | 101.0 | 100.3 | 101.8 | 101.6 |

Table 67

| Item | Unit | Ex. 118 | Ex. 119 | Ex. 120 | Ex. 121 | Ex. 122 | Ex. 123 | Ex. 124 | Comp. Ex. 86 |
|---|---|---|---|---|---|---|---|---|---|
| HFO-1132(E) | Mass% | 20.0 | 25.0 | 30.0 | 35.0 | 40.0 | 45.0 | 50.0 | 55.0 |
| HFO-1123 | Mass% | 45.5 | 40.5 | 35.5 | 30.5 | 25.5 | 20.5 | 15.5 | 10.5 |
| R1234yf | Mass% | 20.0 | 20.0 | 20.0 | 20.0 | 20.0 | 20.0 | 20.0 | 20.0 |
| R32 | Mass% | 14.5 | 14.5 | 14.5 | 14.5 | 14.5 | 14.5 | 14.5 | 14.5 |

(continued)

| Item | Unit | Ex. 118 | Ex. 119 | Ex. 120 | Ex. 121 | Ex. 122 | Ex. 123 | Ex. 124 | Comp. Ex. 86 |
|---|---|---|---|---|---|---|---|---|---|
| GWP | - | 99 | 99 | 99 | 99 | 99 | 99 | 99 | 99 |
| COP ratio | % (relative to R410A) | 95.6 | 95.9 | 96.2 | 96.5 | 96.9 | 97.3 | 97.7 | 98.2 |
| Refrigerating capacity ratio | % (relative to R410A) | 101.2 | 100.8 | 100.4 | 99.9 | 99.3 | 98.7 | 98.0 | 97.3 |

Table 68

| Item | Unit | Ex. 125 | Ex. 126 | Ex. 127 | Ex. 128 | Ex. 129 | Ex. 130 | Ex. 131 | Ex. 132 |
|---|---|---|---|---|---|---|---|---|---|
| HFO-1132(E) | Mass% | 10.0 | 15.0 | 20.0 | 25.0 | 30.0 | 35.0 | 40.0 | 45.0 |
| HFO-1123 | Mass% | 50.5 | 45.5 | 40.5 | 35.5 | 30.5 | 25.5 | 20.5 | 15.5 |
| R1234yf | Mass% | 25.0 | 25.0 | 25.0 | 25.0 | 25.0 | 25.0 | 25.0 | 25.0 |
| R32 | Mass% | 14.5 | 14.5 | 14.5 | 14.5 | 14.5 | 14.5 | 14.5 | 14.5 |
| GWP | - | 99 | 99 | 99 | 99 | 99 | 99 | 99 | 99 |
| COP ratio | % (relative to R410A) | 95.6 | 95.9 | 96.1 | 96.4 | 96.7 | 97.1 | 97.5 | 97.9 |
| Refrigerating capacity ratio | % (relative to R410A) | 98.9 | 98.6 | 98.3 | 97.9 | 97.4 | 96.9 | 96.3 | 95.7 |

Table 69

| Item | Unit | Ex. 133 | Comp. Ex. 87 | Ex. 134 | Ex. 135 | Ex. 136 | Ex. 137 | Ex. 138 | Ex. 139 |
|---|---|---|---|---|---|---|---|---|---|
| HFO-1132(E) | Mass% | 50.0 | 55.0 | 10.0 | 15.0 | 20.0 | 25.0 | 30.0 | 35.0 |
| HFO-1123 | Mass% | 10.5 | 5.5 | 45.5 | 40.5 | 35.5 | 30.5 | 25.5 | 20.5 |
| R1234yf | Mass% | 25.0 | 25.0 | 30.0 | 30.0 | 30.0 | 30.0 | 30.0 | 30.0 |
| R32 | Mass% | 14.5 | 14.5 | 14.5 | 14.5 | 14.5 | 14.5 | 14.5 | 14.5 |
| GWP | - | 99 | 99 | 100 | 100 | 100 | 100 | 100 | 100 |
| COP ratio | % (relative to R410A) | 98.3 | 98.7 | 96.2 | 96.4 | 96.7 | 97.0 | 97.3 | 97.7 |
| Refrigerating capacity ratio | % (relative to R410A) | 95.0 | 94.3 | 95.8 | 95.6 | 95.2 | 94.8 | 94.4 | 93.8 |

Table 70

| Item | Unit | Ex. 140 | Ex. 141 | Ex. 142 | Ex. 143 | Ex. 144 | Ex. 145 | Ex. 146 | Ex. 147 |
|---|---|---|---|---|---|---|---|---|---|
| HFO-1132(E) | Mass% | 40.0 | 45.0 | 50.0 | 10.0 | 15.0 | 20.0 | 25.0 | 30.0 |
| HFO-1123 | Mass% | 15.5 | 10.5 | 5.5 | 40.5 | 35.5 | 30.5 | 25.5 | 20.5 |
| R1234yf | Mass% | 30.0 | 30.0 | 30.0 | 35.0 | 35.0 | 35.0 | 35.0 | 35.0 |
| R32 | Mass% | 14.5 | 14.5 | 14.5 | 14.5 | 14.5 | 14.5 | 14.5 | 14.5 |

(continued)

| Item | Unit | Ex. 140 | Ex. 141 | Ex. 142 | Ex. 143 | Ex. 144 | Ex. 145 | Ex. 146 | Ex. 147 |
|---|---|---|---|---|---|---|---|---|---|
| GWP | - | 100 | 100 | 100 | 100 | 100 | 100 | 100 | 100 |
| COP ratio | % (relative to R410A) | 98.1 | 98.5 | 98.9 | 96.8 | 97.0 | 97.3 | 97.6 | 97.9 |
| Refrigerating capacity ratio | % (relative to R410A) | 93.3 | 92.6 | 92.0 | 92.8 | 92.5 | 92.2 | 91.8 | 91.3 |

Table 71

| Item | Unit | Ex. 148 | Ex. 149 | Ex. 150 | Ex. 151 | Ex. 152 | Ex. 153 | Ex. 154 | Ex. 155 |
|---|---|---|---|---|---|---|---|---|---|
| HFO-1132(E) | Mass% | 35.0 | 40.0 | 45.0 | 10.0 | 15.0 | 20.0 | 25.0 | 30.0 |
| HFO-1123 | Mass% | 15.5 | 10.5 | 5.5 | 35.5 | 30.5 | 25.5 | 20.5 | 15.5 |
| R1234yf | Mass% | 35.0 | 35.0 | 35.0 | 40.0 | 40.0 | 40.0 | 40.0 | 40.0 |
| R32 | Mass% | 14.5 | 14.5 | 14.5 | 14.5 | 14.5 | 14.5 | 14.5 | 14.5 |
| GWP | - | 100 | 100 | 100 | 100 | 100 | 100 | 100 | 100 |
| COP ratio | % (relative to R410A) | 98.3 | 98.7 | 99.1 | 97.4 | 97.7 | 98.0 | 98.3 | 98.6 |
| Refrigerating capacity ratio | % (relative to R410A) | 90.8 | 90.2 | 89.6 | 89.6 | 89.4 | 89.0 | 88.6 | 88.2 |

Table 72

| Item | Unit | Ex. 156 | Ex. 157 | Ex. 158 | Ex. 159 | Ex. 160 | Comp. Ex. 88 | Comp. Ex. 89 | Comp. Ex. 90 |
|---|---|---|---|---|---|---|---|---|---|
| HFO-1132 (E) | Mass% | 35.0 | 40.0 | 10.0 | 15.0 | 20.0 | 25.0 | 30.0 | 35.0 |
| HFO-1123 | Mass% | 10.5 | 5.5 | 30.5 | 25.5 | 20.5 | 15.5 | 10.5 | 5.5 |
| R1234yf | Mass% | 40.0 | 40.0 | 45.0 | 45.0 | 45.0 | 45.0 | 45.0 | 45.0 |
| R32 | Mass% | 14.5 | 14.5 | 14.5 | 14.5 | 14.5 | 14.5 | 14.5 | 14.5 |
| GWP | - | 100 | 100 | 100 | 100 | 100 | 100 | 100 | 100 |
| COP ratio | % (relative to R410A) | 98.9 | 99.3 | 98.1 | 98.4 | 98.7 | 98.9 | 99.3 | 99.6 |
| Refrigerating capacity ratio | % (relative to R410A) | 87.6 | 87.1 | 86.5 | 86.2 | 85.9 | 85.5 | 85.0 | 84.5 |

Table 73

| Item | Unit | Comp. Ex. 91 | Comp. Ex. 92 | Comp. Ex. 93 | Comp. Ex. 94 | Comp. Ex. 95 |
|---|---|---|---|---|---|---|
| HFO-1132 (E) | Mass% | 10.0 | 15.0 | 20.0 | 25.0 | 30.0 |
| HFO-1123 | Mass% | 25.5 | 20.5 | 15.5 | 10.5 | 5.5 |
| R1234yf | Mass% | 50.0 | 50.0 | 50.0 | 50.0 | 50.0 |
| R32 | Mass% | 14.5 | 14.5 | 14.5 | 14.5 | 14.5 |

(continued)

| Item | Unit | Comp.Ex.91 | Comp. Ex. 92 | Comp. Ex. 93 | Comp. Ex. 94 | Comp. Ex. 95 |
|---|---|---|---|---|---|---|
| GWP | - | 100 | 100 | 100 | 100 | 100 |
| COP ratio | % (relative to R410A) | 98.9 | 99.1 | 99.4 | 99.7 | 100.0 |
| Refrigerating capacity ratio | % (relative to R410A) | 83.3 | 83.0 | 82.7 | 82.2 | 81.8 |

Table 74

| Item | Unit | Ex. 161 | Ex. 162 | Ex. 163 | Ex. 164 | Ex. 165 | Ex. 166 | Ex. 167 | Ex. 168 |
|---|---|---|---|---|---|---|---|---|---|
| HFO-1132(E) | Mass% | 10.0 | 15.0 | 20.0 | 25.0 | 30.0 | 35.0 | 40.0 | 45.0 |
| HFO-1123 | Mass% | 63.1 | 58.1 | 53.1 | 48.1 | 43.1 | 38.1 | 33.1 | 28.1 |
| R1234yf | Mass% | 5.0 | 5.0 | 5.0 | 5.0 | 5.0 | 5.0 | 5.0 | 5.0 |
| R32 | Mass% | 21.9 | 21.9 | 21.9 | 21.9 | 21.9 | 21.9 | 21.9 | 21.9 |
| GWP | - | 149 | 149 | 149 | 149 | 149 | 149 | 149 | 149 |
| COP ratio | % (relative to R410A) | 94.8 | 95.0 | 95.2 | 95.4 | 95.7 | 95.9 | 96.2 | 96.6 |
| Refrigerating capacity ratio | % (relative to R410A) | 111.5 | 111.2 | 110.9 | 110.5 | 110.0 | 109.5 | 108.9 | 108.3 |

Table 75

| Item | Unit | Comp. Ex. 96 | Ex. 169 | Ex. 170 | Ex. 171 | Ex. 172 | Ex. 173 | Ex. 174 | Ex. 175 |
|---|---|---|---|---|---|---|---|---|---|
| HFO-1132(E) | Mass% | 50.0 | 10.0 | 15.0 | 20.0 | 25.0 | 30.0 | 35.0 | 40.0 |
| HFO-1123 | Mass% | 23.1 | 58.1 | 53.1 | 48.1 | 43.1 | 38.1 | 33.1 | 28.1 |
| R1234yf | Mass% | 5.0 | 10.0 | 10.0 | 10.0 | 10.0 | 10.0 | 10.0 | 10.0 |
| R32 | Mass% | 21.9 | 21.9 | 21.9 | 21.9 | 21.9 | 21.9 | 21.9 | 21.9 |
| GWP | - | 149 | 149 | 149 | 149 | 149 | 149 | 149 | 149 |
| COP ratio | % (relative to R410A) | 96.9 | 95.3 | 95.4 | 95.6 | 95.8 | 96.1 | 96.4 | 96.7 |
| Refrigerating capacity ratio | % (relative to R410A) | 107.7 | 108.7 | 108.5 | 108.1 | 107.7 | 107.2 | 106.7 | 106.1 |

Table 76

| Item | Unit | Ex. 176 | Comp. Ex. 97 | Ex. 177 | Ex. 178 | Ex. 179 | Ex. 180 | Ex. 181 | Ex. 182 |
|---|---|---|---|---|---|---|---|---|---|
| HFO-1132(E) | Mass% | 45.0 | 50.0 | 10.0 | 15.0 | 20.0 | 25.0 | 30.0 | 35.0 |
| HFO-1123 | Mass% | 23.1 | 18.1 | 53.1 | 48.1 | 43.1 | 38.1 | 33.1 | 28.1 |
| R1234yf | Mass% | 10.0 | 10.0 | 15.0 | 15.0 | 15.0 | 15.0 | 15.0 | 15.0 |
| R32 | Mass% | 21.9 | 21.9 | 21.9 | 21.9 | 21.9 | 21.9 | 21.9 | 21.9 |

(continued)

| Item | Unit | Ex. 176 | Comp. Ex. 97 | Ex. 177 | Ex. 178 | Ex. 179 | Ex. 180 | Ex. 181 | Ex. 182 |
|---|---|---|---|---|---|---|---|---|---|
| GWP | - | 149 | 149 | 149 | 149 | 149 | 149 | 149 | 149 |
| COP ratio | % (relative to R410A) | 97.0 | 97.4 | 95.7 | 95.9 | 96.1 | 96.3 | 96.6 | 96.9 |
| Refrigerating capacity ratio | % (relative to R410A) | 105.5 | 104.9 | 105.9 | 105.6 | 105.3 | 104.8 | 104.4 | 103.8 |

Table 77

| Item | Unit | Ex. 183 | Ex. 184 | Comp. Ex. 98 | Ex. 185 | Ex. 186 | Ex. 187 | Ex. 188 | Ex. 189 |
|---|---|---|---|---|---|---|---|---|---|
| HFO-1132(E) | Mass% | 40.0 | 45.0 | 50.0 | 10.0 | 15.0 | 20.0 | 25.0 | 30.0 |
| HFO-1123 | Mass% | 23.1 | 18.1 | 13.1 | 48.1 | 43.1 | 38.1 | 33.1 | 28.1 |
| R1234yf | Mass% | 15.0 | 15.0 | 15.0 | 20.0 | 20.0 | 20.0 | 20.0 | 20.0 |
| R32 | Mass% | 21.9 | 21.9 | 21.9 | 21.9 | 21.9 | 21.9 | 21.9 | 21.9 |
| GWP | - | 149 | 149 | 149 | 149 | 149 | 149 | 149 | 149 |
| COP ratio | % (relative to R410A) | 97.2 | 97.5 | 97.9 | 96.1 | 96.3 | 96.5 | 96.8 | 97.1 |
| Refrigerating capacity ratio | % (relative to R410A) | 103.3 | 102.6 | 102.0 | 103.0 | 102.7 | 102.3 | 101.9 | 101.4 |

Table 78

| Item | Unit | Ex. 190 | Ex. 191 | Ex. 192 | Comp. Ex. 99 | Ex. 193 | Ex. 194 | Ex. 195 | Ex. 196 |
|---|---|---|---|---|---|---|---|---|---|
| HFO-1132(E) | Mass% | 35.0 | 40.0 | 45.0 | 50.0 | 10.0 | 15.0 | 20.0 | 25.0 |
| HFO-1123 | Mass% | 23.1 | 18.1 | 13.1 | 8.1 | 43.1 | 38.1 | 33.1 | 28.1 |
| R1234yf | Mass% | 20.0 | 20.0 | 20.0 | 20.0 | 25.0 | 25.0 | 25.0 | 25.0 |
| R32 | Mass% | 21.9 | 21.9 | 21.9 | 21.9 | 21.9 | 21.9 | 21.9 | 21.9 |
| GWP | - | 149 | 149 | 149 | 149 | 149 | 149 | 149 | 149 |
| COP ratio | % (relative to R410A) | 97.4 | 97.7 | 98.0 | 98.4 | 96.6 | 96.8 | 97.0 | 97.3 |
| Refrigerating capacity ratio | % (relative to R410A) | 100.9 | 100.3 | 99.7 | 99.1 | 100.0 | 99.7 | 99.4 | 98.9 |

Table 79

| Item | Unit | Ex. 197 | Ex. 198 | Ex. 199 | Ex. 200 | Comp. Ex. 100 | Ex. 201 | Ex. 202 | Ex. 203 |
|---|---|---|---|---|---|---|---|---|---|
| HFO-1132(E) | Mass% | 30.0 | 35.0 | 40.0 | 45.0 | 50.0 | 10.0 | 15.0 | 20.0 |
| HFO-1123 | Mass% | 23.1 | 18.1 | 13.1 | 8.1 | 3.1 | 38.1 | 33.1 | 28.1 |
| R1234yf | Mass% | 25.0 | 25.0 | 25.0 | 25.0 | 25.0 | 30.0 | 30.0 | 30.0 |
| R32 | Mass% | 21.9 | 21.9 | 21.9 | 21.9 | 21.9 | 21.9 | 21.9 | 21.9 |

(continued)

| Item | Unit | Ex. 197 | Ex. 198 | Ex. 199 | Ex. 200 | Comp. Ex. 100 | Ex. 201 | Ex. 202 | Ex. 203 |
|---|---|---|---|---|---|---|---|---|---|
| GWP | - | 149 | 149 | 149 | 149 | 149 | 150 | 150 | 150 |
| COP ratio | % (relative to R410A) | 97.6 | 97.9 | 98.2 | 98.5 | 98.9 | 97.1 | 97.3 | 97.6 |
| Refrigerating capacity ratio | % (relative to R410A) | 98.5 | 97.9 | 97.4 | 96.8 | 96.1 | 97.0 | 96.7 | 96.3 |

Table 80

| Item | Unit | Ex. 204 | Ex. 205 | Ex. 206 | Ex. 207 | Ex. 208 | Ex. 209 | Ex. 210 | Ex. 211 |
|---|---|---|---|---|---|---|---|---|---|
| HFO-1132(E) | Mass% | 25.0 | 30.0 | 35.0 | 40.0 | 45.0 | 10.0 | 15.0 | 20.0 |
| HFO-1123 | Mass% | 23.1 | 18.1 | 13.1 | 8.1 | 3.1 | 33.1 | 28.1 | 23.1 |
| R1234yf | Mass% | 30.0 | 30.0 | 30.0 | 30.0 | 30.0 | 35.0 | 35.0 | 35.0 |
| R32 | Mass% | 21.9 | 21.9 | 21.9 | 21.9 | 21.9 | 21.9 | 21.9 | 21.9 |
| GWP | - | 150 | 150 | 150 | 150 | 150 | 150 | 150 | 150 |
| COP ratio | % (relative to R410A) | 97.8 | 98.1 | 98.4 | 98.7 | 99.1 | 97.7 | 97.9 | 98.1 |
| Refrigerating capacity ratio | % (relative to R410A) | 95.9 | 95.4 | 94.9 | 94.4 | 93.8 | 93.9 | 93.6 | 93.3 |

Table 81

| Item | Unit | Ex. 212 | Ex. 213 | Ex. 214 | Ex. 215 | Ex. 216 | Ex. 217 | Ex. 218 | Ex. 219 |
|---|---|---|---|---|---|---|---|---|---|
| HFO-1132(E) | Mass% | 25.0 | 30.0 | 35.0 | 40.0 | 10.0 | 15.0 | 20.0 | 25.0 |
| HFO-1123 | Mass% | 18.1 | 13.1 | 8.1 | 3.1 | 28.1 | 23.1 | 18.1 | 13.1 |
| R1234yf | Mass% | 35.0 | 35.0 | 35.0 | 35.0 | 40.0 | 40.0 | 40.0 | 40.0 |
| R32 | Mass% | 21.9 | 21.9 | 21.9 | 21.9 | 21.9 | 21.9 | 21.9 | 21.9 |
| GWP | - | 150 | 150 | 150 | 150 | 150 | 150 | 150 | 150 |
| COP ratio | % (relative to R410A) | 98.4 | 98.7 | 99.0 | 99.3 | 98.3 | 98.5 | 98.7 | 99.0 |
| Refrigerating capacity ratio | % (relative to R410A) | 92.9 | 92.4 | 91.9 | 91.3 | 90.8 | 90.5 | 90.2 | 89.7 |

Table 82

| Item | Unit | Ex. 220 | Ex. 221 | Ex. 222 | Ex. 223 | Ex. 224 | Ex. 225 | Ex. 226 | Comp. Ex. 101 |
|---|---|---|---|---|---|---|---|---|---|
| HFO-1132(E) | Mass% | 30.0 | 35.0 | 10.0 | 15.0 | 20.0 | 25.0 | 30.0 | 10.0 |
| HFO-1123 | Mass% | 8.1 | 3.1 | 23.1 | 18.1 | 13.1 | 8.1 | 3.1 | 18.1 |
| R1234yf | Mass% | 40.0 | 40.0 | 45.0 | 45.0 | 45.0 | 45.0 | 45.0 | 50.0 |
| R32 | Mass% | 21.9 | 21.9 | 21.9 | 21.9 | 21.9 | 21.9 | 21.9 | 21.9 |

(continued)

| Item | Unit | Ex. 220 | Ex. 221 | Ex. 222 | Ex. 223 | Ex. 224 | Ex. 225 | Ex. 226 | Comp. Ex. 101 |
|------|------|---------|---------|---------|---------|---------|---------|---------|---------------|
| GWP | - | 150 | 150 | 150 | 150 | 150 | 150 | 150 | 150 |
| COP ratio | % (relative to R410A) | 99.3 | 99.6 | 98.9 | 99.1 | 99.3 | 99.6 | 99.9 | 99.6 |
| Refrigerating capacity ratio | % (relative to R410A) | 89.3 | 88.8 | 87.6 | 87.3 | 87.0 | 86.6 | 86.2 | 84.4 |

Table 83

| Item | Unit | Comp. Ex. 102 | Comp. Ex. 103 | Comp. Ex. 104 |
|------|------|---------------|---------------|---------------|
| HFO-1132(E) | Mass% | 15.0 | 20.0 | 25.0 |
| HFO-1123 | Mass% | 13.1 | 8.1 | 3.1 |
| R1234yf | Mass% | 50.0 | 50.0 | 50.0 |
| R32 | Mass% | 21.9 | 21.9 | 21.9 |
| GWP | - | 150 | 150 | 150 |
| COP ratio | % (relative to R41 OA) | 99.8 | 100.0 | 100.2 |
| Refrigerating capacity ratio | % (relative to R41 OA) | 84.1 | 83.8 | 83.4 |

Table 84

| Item | Unit | Ex. 227 | Ex. 228 | Ex. 229 | Ex. 230 | Ex. 231 | Ex. 232 | Ex. 233 | Comp. Ex. 105 |
|------|------|---------|---------|---------|---------|---------|---------|---------|---------------|
| HFO-1132(E) | Mass% | 10.0 | 15.0 | 20.0 | 25.0 | 30.0 | 35.0 | 40.0 | 45.0 |
| HFO-1123 | Mass% | 55.7 | 50.7 | 45.7 | 40.7 | 35.7 | 30.7 | 25.7 | 20.7 |
| R1234yf | Mass% | 5.0 | 5.0 | 5.0 | 5.0 | 5.0 | 5.0 | 5.0 | 5.0 |
| R32 | Mass% | 29.3 | 29.3 | 29.3 | 29.3 | 29.3 | 29.3 | 29.3 | 29.3 |
| GWP | - | 199 | 199 | 199 | 199 | 199 | 199 | 199 | 199 |
| COP ratio | % (relative to R410A) | 95.9 | 96.0 | 96.2 | 96.3 | 96.6 | 96.8 | 97.1 | 97.3 |
| Refrigerating capacity ratio | % (relative to R410A) | 112.2 | 111.9 | 111.6 | 111.2 | 110.7 | 110.2 | 109.6 | 109.0 |

Table 85

| Item | Unit | Ex. 234 | Ex. 235 | Ex. 236 | Ex. 237 | Ex. 238 | Ex. 239 | Ex. 240 | Comp. Ex. 106 |
|------|------|---------|---------|---------|---------|---------|---------|---------|---------------|
| HFO-1132(E) | Mass% | 10.0 | 15.0 | 20.0 | 25.0 | 30.0 | 35.0 | 40.0 | 45.0 |
| HFO-1123 | Mass% | 50.7 | 45.7 | 40.7 | 35.7 | 30.7 | 25.7 | 20.7 | 15.7 |
| R1234yf | Mass% | 10.0 | 10.0 | 10.0 | 10.0 | 10.0 | 10.0 | 10.0 | 10.0 |
| R32 | Mass% | 29.3 | 29.3 | 29.3 | 29.3 | 29.3 | 29.3 | 29.3 | 29.3 |
| GWP | - | 199 | 199 | 199 | 199 | 199 | 199 | 199 | 199 |

(continued)

| Item | Unit | Ex. 234 | Ex. 235 | Ex. 236 | Ex. 237 | Ex. 238 | Ex. 239 | Ex. 240 | Comp. Ex. 106 |
|---|---|---|---|---|---|---|---|---|---|
| COP ratio | % (relative to R410A) | 96.3 | 96.4 | 96.6 | 96.8 | 97.0 | 97.2 | 97.5 | 97.8 |
| Refrigerating capacity ratio | % (relative to R410A) | 109.4 | 109.2 | 108.8 | 108.4 | 107.9 | 107.4 | 106.8 | 106.2 |

Table 86

| Item | Unit | Ex. 241 | Ex. 242 | Ex. 243 | Ex. 244 | Ex. 245 | Ex. 246 | Ex. 247 | Comp. Ex. 107 |
|---|---|---|---|---|---|---|---|---|---|
| HFO-1132(E) | Mass% | 10.0 | 15.0 | 20.0 | 25.0 | 30.0 | 35.0 | 40.0 | 45.0 |
| HFO-1123 | Mass% | 45.7 | 40.7 | 35.7 | 30.7 | 25.7 | 20.7 | 15.7 | 10.7 |
| R1234yf | Mass% | 15.0 | 15.0 | 15.0 | 15.0 | 15.0 | 15.0 | 15.0 | 15.0 |
| R32 | Mass% | 29.3 | 29.3 | 29.3 | 29.3 | 29.3 | 29.3 | 29.3 | 29.3 |
| GWP | - | 199 | 199 | 199 | 199 | 199 | 199 | 199 | 199 |
| COP ratio | % (relative to R410A) | 96.7 | 96.8 | 97.0 | 97.2 | 97.4 | 97.7 | 97.9 | 98.2 |
| Refrigerating capacity ratio | % (relative to R410A) | 106.6 | 106.3 | 106.0 | 105.5 | 105.1 | 104.5 | 104.0 | 103.4 |

Table 87

| Item | Unit | Ex. 248 | Ex. 249 | Ex. 250 | Ex. 251 | Ex. 252 | Ex. 253 | Ex. 254 | Comp. Ex. 108 |
|---|---|---|---|---|---|---|---|---|---|
| HFO-1132(E) | Mass% | 10.0 | 15.0 | 20.0 | 25.0 | 30.0 | 35.0 | 40.0 | 45.0 |
| HFO-1123 | Mass% | 40.7 | 35.7 | 30.7 | 25.7 | 20.7 | 15.7 | 10.7 | 5.7 |
| R1234yf | Mass% | 20.0 | 20.0 | 20.0 | 20.0 | 20.0 | 20.0 | 20.0 | 20.0 |
| R32 | Mass% | 29.3 | 29.3 | 29.3 | 29.3 | 29.3 | 29.3 | 29.3 | 29.3 |
| GWP | - | 199 | 199 | 199 | 199 | 199 | 199 | 199 | 199 |
| COP ratio | % (relative to R410A) | 97.1 | 97.3 | 97.5 | 97.7 | 97.9 | 98.1 | 98.4 | 98.7 |
| Refrigerating capacity ratio | % (relative to R410A) | 103.7 | 103.4 | 103.0 | 102.6 | 102.2 | 101.6 | 101.1 | 100.5 |

Table 88

| Item | Unit | Ex. 255 | Ex. 256 | Ex. 257 | Ex. 258 | Ex. 259 | Ex. 260 | Ex. 261 | Ex. 262 |
|---|---|---|---|---|---|---|---|---|---|
| HFO-1132(E) | Mass% | 10.0 | 15.0 | 20.0 | 25.0 | 30.0 | 35.0 | 40.0 | 10.0 |
| HFO-1123 | Mass% | 35.7 | 30.7 | 25.7 | 20.7 | 15.7 | 10.7 | 5.7 | 30.7 |
| R1234yf | Mass% | 25.0 | 25.0 | 25.0 | 25.0 | 25.0 | 25.0 | 25.0 | 30.0 |
| R32 | Mass% | 29.3 | 29.3 | 29.3 | 29.3 | 29.3 | 29.3 | 29.3 | 29.3 |
| GWP | - | 199 | 199 | 199 | 199 | 199 | 199 | 199 | 199 |

(continued)

| Item | Unit | Ex. 255 | Ex. 256 | Ex. 257 | Ex. 258 | Ex. 259 | Ex. 260 | Ex. 261 | Ex. 262 |
|---|---|---|---|---|---|---|---|---|---|
| COP ratio | % (relative to R410A) | 97.6 | 97.7 | 97.9 | 98.1 | 98.4 | 98.6 | 98.9 | 98.1 |
| Refrigerating capacity ratio | % (relative to R410A) | 100.7 | 100.4 | 100.1 | 99.7 | 99.2 | 98.7 | 98.2 | 97.7 |

Table 89

| Item | Unit | Ex. 263 | Ex. 264 | Ex. 265 | Ex. 266 | Ex. 267 | Ex. 268 | Ex. 269 | Ex. 270 |
|---|---|---|---|---|---|---|---|---|---|
| HFO-1132(E) | Mass% | 15.0 | 20.0 | 25.0 | 30.0 | 35.0 | 10.0 | 15.0 | 20.0 |
| HFO-1123 | Mass% | 25.7 | 20.7 | 15.7 | 10.7 | 5.7 | 25.7 | 20.7 | 15.7 |
| R1234yf | Mass% | 30.0 | 30.0 | 30.0 | 30.0 | 30.0 | 35.0 | 35.0 | 35.0 |
| R32 | Mass% | 29.3 | 29.3 | 29.3 | 29.3 | 29.3 | 29.3 | 29.3 | 29.3 |
| GWP | - | 199 | 199 | 199 | 199 | 199 | 200 | 200 | 200 |
| COP ratio | % (relative to R410A) | 98.2 | 98.4 | 98.6 | 98.9 | 99.1 | 98.6 | 98.7 | 98.9 |
| Refrigerating capacity ratio | % (relative to R410A) | 97.4 | 97.1 | 96.7 | 96.2 | 95.7 | 94.7 | 94.4 | 94.0 |

Table 90

| Item | Unit | Ex. 271 | Ex. 272 | Ex. 273 | Ex. 274 | Ex. 275 | Ex. 276 | Ex. 277 | Ex. 278 |
|---|---|---|---|---|---|---|---|---|---|
| HFO-1132(E) | Mass% | 25.0 | 30.0 | 10.0 | 15.0 | 20.0 | 25.0 | 10.0 | 15.0 |
| HFO-1123 | Mass% | 10.7 | 5.7 | 20.7 | 15.7 | 10.7 | 5.7 | 15.7 | 10.7 |
| R1234yf | Mass% | 35.0 | 35.0 | 40.0 | 40.0 | 40.0 | 40.0 | 45.0 | 45.0 |
| R32 | Mass% | 29.3 | 29.3 | 29.3 | 29.3 | 29.3 | 29.3 | 29.3 | 29.3 |
| GWP | - | 200 | 200 | 200 | 200 | 200 | 200 | 200 | 200 |
| COP ratio | % (relative to R410A) | 99.2 | 99.4 | 99.1 | 99.3 | 99.5 | 99.7 | 99.7 | 99.8 |
| Refrigerating capacity ratio | % (relative to R410A) | 93.6 | 93.2 | 91.5 | 91.3 | 90.9 | 90.6 | 88.4 | 88.1 |

Table 91

| Item | Unit | Ex. 279 | Ex. 280 | Comp. Ex. 109 | Comp. Ex. 110 |
|---|---|---|---|---|---|
| HFO-1132 (E) | Mass% | 20.0 | 10.0 | 15.0 | 10.0 |
| HFO-1123 | Mass% | 5.7 | 10.7 | 5.7 | 5.7 |
| R1234yf | Mass% | 45.0 | 50.0 | 50.0 | 55.0 |
| R32 | Mass% | 29.3 | 29.3 | 29.3 | 29.3 |
| GWP | - | 200 | 200 | 200 | 200 |

(continued)

| Item | Unit | Ex. 279 | Ex. 280 | Comp. Ex. 109 | Comp. Ex. 110 |
|---|---|---|---|---|---|
| COP ratio | % (relative to R41 OA) | 100.0 | 100.3 | 100.4 | 100.9 |
| Refrigerating capacity ratio | % (relative to R41 OA) | 87.8 | 85.2 | 85.0 | 82.0 |

Table 92

| Item | Unit | Ex. 281 | Ex. 282 | Ex. 283 | Ex. 284 | Ex. 285 | Comp Ex 111 | Ex. 286 | Ex. 287 |
|---|---|---|---|---|---|---|---|---|---|
| HFO-1132(E) | Mass% | 10.0 | 15.0 | 20.0 | 25.0 | 30.0 | 35.0 | 10.0 | 15.0 |
| HFO-1123 | Mass% | 40.9 | 35.9 | 30.9 | 25.9 | 20.9 | 15.9 | 35.9 | 30.9 |
| R1234yf | Mass% | 5.0 | 5.0 | 5.0 | 5.0 | 5.0 | 5.0 | 10.0 | 10.0 |
| R32 | Mass% | 44.1 | 44.1 | 44.1 | 44.1 | 44.1 | 44.1 | 44.1 | 44.1 |
| GWP | - | 298 | 298 | 298 | 298 | 298 | 298 | 299 | 299 |
| COP ratio | % (relative to R410A) | 97.8 | 97.9 | 97.9 | 98.1 | 98.2 | 98.4 | 98.2 | 98.2 |
| Refrigerating capacity ratio | % (relative to R410A) | 112.5 | 112.3 | 111.9 | 111.6 | 111.2 | 110.7 | 109.8 | 109.5 |

Table 93

| Item | Unit | Ex. 288 | Ex. 289 | Ex. 290 | Comp. Ex. 112 | Ex. 291 | Ex. 292 | Ex. 293 | Ex. 294 |
|---|---|---|---|---|---|---|---|---|---|
| HFO-1132(E) | Mass% | 20.0 | 25.0 | 30.0 | 35.0 | 10.0 | 15.0 | 20.0 | 25.0 |
| HFO-1123 | Mass% | 25.9 | 20.9 | 15.9 | 10.9 | 30.9 | 25.9 | 20.9 | 15.9 |
| R1234yf | Mass% | 10.0 | 10.0 | 10.0 | 10.0 | 15.0 | 15.0 | 15.0 | 15.0 |
| R32 | Mass% | 44.1 | 44.1 | 44.1 | 44.1 | 44.1 | 44.1 | 44.1 | 44.1 |
| GWP | - | 299 | 299 | 299 | 299 | 299 | 299 | 299 | 299 |
| COP ratio | % (relative to R410A) | 98.3 | 98.5 | 98.6 | 98.8 | 98.6 | 98.6 | 98.7 | 98.9 |
| Refrigerating capacity ratio | % (relative to R410A) | 109.2 | 108.8 | 108.4 | 108.0 | 107.0 | 106.7 | 106.4 | 106.0 |

Table 94

| Item | Unit | Ex. 295 | Comp. Ex. 113 | Ex. 296 | Ex. 297 | Ex. 298 | Ex. 299 | Ex. 300 | Ex. 301 |
|---|---|---|---|---|---|---|---|---|---|
| HFO-1132(E) | Mass% | 30.0 | 35.0 | 10.0 | 15.0 | 20.0 | 25.0 | 30.0 | 10.0 |
| HFO-1123 | Mass% | 10.9 | 5.9 | 25.9 | 20.9 | 15.9 | 10.9 | 5.9 | 20.9 |
| R1234yf | Mass% | 15.0 | 15.0 | 20.0 | 20.0 | 20.0 | 20.0 | 20.0 | 25.0 |
| R32 | Mass% | 44.1 | 44.1 | 44.1 | 44.1 | 44.1 | 44.1 | 44.1 | 44.1 |
| GWP | - | 299 | 299 | 299 | 299 | 299 | 299 | 299 | 299 |
| COP ratio | % (relative to R410A) | 99.0 | 99.2 | 99.0 | 99.0 | 99.2 | 99.3 | 99.4 | 99.4 |

(continued)

| Item | Unit | Ex. 295 | Comp. Ex. 113 | Ex. 296 | Ex. 297 | Ex. 298 | Ex. 299 | Ex. 300 | Ex. 301 |
|---|---|---|---|---|---|---|---|---|---|
| Refrigerating capacity ratio | % (relative to R410A) | 105.6 | 105.2 | 104.1 | 103.9 | 103.6 | 103.2 | 102.8 | 101.2 |

Table 95

| Item | Unit | Ex. 302 | Ex. 303 | Ex. 304 | Ex. 305 | Ex. 306 | Ex. 307 | Ex. 308 | Ex. 309 |
|---|---|---|---|---|---|---|---|---|---|
| HFO-1132(E) | Mass% | 15.0 | 20.0 | 25.0 | 10.0 | 15.0 | 20.0 | 10.0 | 15.0 |
| HFO-1123 | Mass% | 15.9 | 10.9 | 5.9 | 15.9 | 10.9 | 5.9 | 10.9 | 5.9 |
| R1234yf | Mass% | 25.0 | 25.0 | 25.0 | 30.0 | 30.0 | 30.0 | 35.0 | 35.0 |
| R32 | Mass% | 44.1 | 44.1 | 44.1 | 44.1 | 44.1 | 44.1 | 44.1 | 44.1 |
| GWP | - | 299 | 299 | 299 | 299 | 299 | 299 | 299 | 299 |
| COP ratio | % (relative to R410A) | 99.5 | 99.6 | 99.7 | 99.8 | 99.9 | 100.0 | 100.3 | 100.4 |
| Refrigerating capacity ratio | % (relative to R410A) | 101.0 | 100.7 | 100.3 | 98.3 | 98.0 | 97.8 | 95.3 | 95.1 |

Table 96

| Item | Unit | Ex. 400 |
|---|---|---|
| HFO-1132 (E) | Mass% | 10.0 |
| HFO-1123 | Mass% | 5.9 |
| R1234yf | Mass% | 40.0 |
| R32 | Mass% | 44.1 |
| GWP | | 299 |
| COP ratio | % (relative to R41 OA) | 100.7 |
| Refrigerating capacity ratio | % (relative to R410A) | 92.3 |

The above results indicate that the refrigerating capacity ratio relative to R410A is 85% or more in the following cases:
When the mass% of HFO-1132(E), HFO-1123, R1234yf, and R32 based on their sum is respectively represented by x, y, z, and a, in a ternary composition diagram in which the sum of HFO-1132(E), HFO-1123, and R1234yf is (100-a) mass%, a straight line connecting a point (0.0, 100.0-a, 0.0) and a point (0.0, 0.0, 100.0-a) is the base, and the point (0.0, 100.0-a, 0.0) is on the left side, if $0<a \leq 11.1$, coordinates (x,y,z) in the ternary composition diagram are on, or on the left side of, a straight line AB that connects point A ($0.0134a^2-1.9681a+68.6$, 0.0, $-0.0134a^2+0.9681a+31.4$) and point B (0.0, $0.0144a^2-1.6377a+58.7$, $-0.0144a^2+0.6377a+41.3$);

if $11.1<a \leq 18.2$, coordinates (x,y,z) in the ternary composition diagram are on, or on the left side of, a straight line AB that connects point A ($0.0112a^2-1.9337a+68.484$, 0.0, $-0.0112a^2+0.9337a+31.516$) and point B (0.0, $0.0075a^2-1.5156a+58.199$, $-0.0075a^2+0.5156a+41.801$);
if $18.2<a \leq 26.7$, coordinates (x,y,z) in the ternary composition diagram are on, or on the left side of, a straight line AB that connects point A ($0.0107a^2-1.9142a+68.305$, 0.0, $-0.0107a^2+0.9142a+31.695$) and point B(0.0, $0.009a^2-1.6045a+59.318$, $-0.009a^2+0.6045a+40.682$);
if $26.7<a \leq 36.7$, coordinates (x,y,z) in the ternary composition diagram are on, or on the left side of, a straight line AB that connects point A ($0.0103a^2-1.9225a+68.793$, 0.0, $-0.0103a^2+0.9225a+31.207$) and point B (0.0, $0.0046a^2-$

1.41a+57.286, -0.0046a$^2$+0.41a+42.714); and

if 36.7<a≤46.7, coordinates (x,y,z) in the ternary composition diagram are on, or on the left side of, a straight line AB that connects point A (0.0085a$^2$-1.8102a+67.1, 0.0, -0.0085a$^2$+0.8102a+32.9) and point B (0.0, 0.0012a$^2$-1.1659a+52.95, -0.0012a$^2$+0.1659a+47.05).

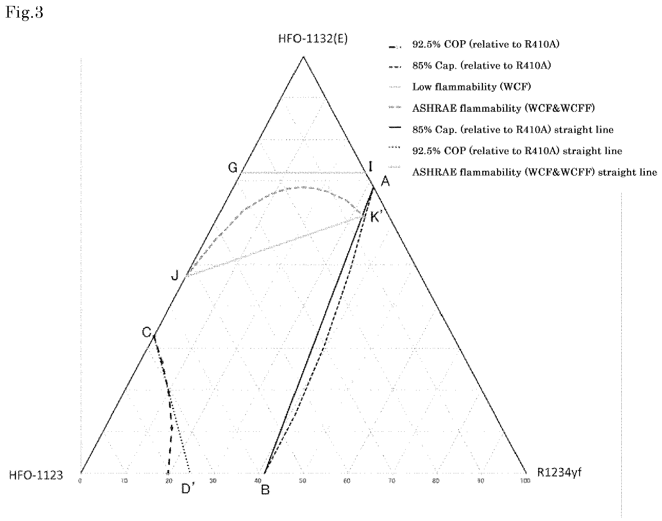

Actual points having a refrigerating capacity ratio of 85% or more form a curved line that connects point A and point B in Fig 3, and that extends toward the 1234yf side. Accordingly, when coordinates are on, or on the left side of, the straight line AB, the refrigerating capacity ratio relative to R410A is 85% or more.

Similarly, it was also found that in the ternary composition diagram, if 0<a≤11.1, when coordinates (x,y,z) are on, or on the left side of, a straight line D'C that connects point D' (0.0, 0.0224a$^2$+0.968a+75.4, -0.0224a$^2$-1.968a+24.6) and point C (-0.2304a$^2$-0.4062a+32.9, 0.2304a$^2$-0.5938a+67.1, 0.0); or if 11.1<a≤46.7, when coordinates are in the entire region, the COP ratio relative to that of R410A is 92.5% or more.

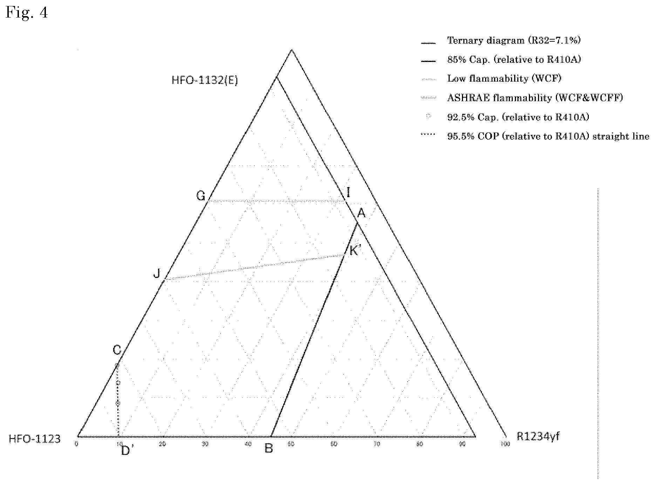

In Fig. 3, the COP ratio of 92.5% or more forms a curved line CD. In Fig. 3, an approximate line formed by connecting three points: point C (32.9, 67.1, 0.0) and points (26.6, 68.4, 5) (19.5, 70.5, 10) where the COP ratio is 92.5% when the concentration of R1234yf is 5 mass% and 10 mass was obtained, and a straight line that connects point C and point D' (0, 75.4, 24.6), which is the intersection of the approximate line and a point where the concentration of HFO-1132(E) is 0.0 mass% was defined as a line segment D'C. In Fig. 4, point D'(0, 83.4, 9.5) was similarly obtained from an approximate curve formed by connecting point C (18.4, 74.5, 0) and points (13.9, 76.5, 2.5) (8.7, 79.2, 5) where the COP ratio is 92.5%, and a straight line that connects point C and point D' was defined as the straight line D'C.

The composition of each mixture was defined as WCF. A leak simulation was performed using NIST Standard Reference Database REFLEAK Version 4.0 under the conditions of Equipment, Storage, Shipping, Leak, and Recharge according to the ASHRAE Standard 34-2013. The most flammable fraction was defined as WCFF.

For the flammability, the burning velocity was measured according to the ANSI/ASHRAE Standard 34-2013. Both WCF and WCFF having a burning velocity of 10 cm/s or less were determined to be classified as "Class 2L (lower flammability)."

A burning velocity test was performed using the apparatus shown in Fig. 1 in the following manner. First, the mixed refrigerants used had a purity of 99.5% or more, and were degassed by repeating a cycle of freezing, pumping, and thawing until no traces of air were observed on the vacuum gauge. The burning velocity was measured by the closed method. The initial temperature was ambient temperature. Ignition was performed by generating an electric spark between the electrodes in the center of a sample cell. The duration of the discharge was 1.0 to 9.9 ms, and the ignition energy was typically about 0.1 to 1.0 J. The spread of the flame was visualized using schlieren photographs. A cylindrical container (inner diameter: 155 mm, length: 198 mm) equipped with two light transmission acrylic windows was used as the sample cell, and a xenon lamp was used as the light source. Schlieren images of the flame were recorded by a high-speed digital video camera at a frame rate of 600 fps and stored on a PC.

The results are shown in Tables 97 to 104.

Table 97

| Item | | | Comp. Ex. 6 | Comp. Ex. 13 | Comp. Ex. 19 | Comp. Ex. 24 | Comp. Ex. 29 | Comp. Ex. 34 |
|---|---|---|---|---|---|---|---|---|
| WC F | HFO-1132(E) | Mass % | 72.0 | 60.9 | 55.8 | 52.1 | 48.6 | 45.4 |
| | HFO-1123 | Mass % | 28.0 | 32.0 | 33.1 | 33.4 | 33.2 | 32.7 |
| | R1234yf | Mass % | 0.0 | 0.0 | 0.0 | 0 | 0 | 0 |
| | R32 | Mass % | 0.0 | 7.1 | 11.1 | 14.5 | 18.2 | 21.9 |
| Burning velocity (WCF) | | cm/s | 10 | 10 | 10 | 10 | 10 | 10 |

Table 98

| Item | | | Comp. Ex. 39 | Comp. Ex. 45 | Comp. Ex. 51 | Comp. Ex. 57 | Comp. Ex. 62 |
|---|---|---|---|---|---|---|---|
| WCF | HFO-1132 (E) | Mass% | 41.8 | 40 | 35.7 | 32 | 30.4 |
| | HFO-1123 | Mass% | 31.5 | 30.7 | 23.6 | 23.9 | 21.8 |
| | R1234yf | Mass% | 0 | 0 | 0 | 0 | 0 |
| | R32 | Mass% | 26.7 | 29.3 | 36.7 | 44.1 | 47.8 |
| Burning velocity (WCF) | | cm/s | 10 | 10 | 10 | 10 | 10 |

Table 99

| Item | | | Comp. Ex. 7 | Comp. Ex. 14 | Comp. Ex. 20 | Comp. Ex. 25 | Comp. Ex. 30 | Comp. Ex. 35 |
|---|---|---|---|---|---|---|---|---|
| WC F | HFO-1132(E) | Mass % | 72.0 | 60.9 | 55.8 | 52.1 | 48.6 | 45.4 |
| | HFO-1123 | Mass % | 0.0 | 0.0 | 0.0 | 0 | 0 | 0 |
| | R1234yf | Mass % | 28.0 | 32.0 | 33.1 | 33.4 | 33.2 | 32.7 |
| | R32 | Mass % | 0.0 | 7.1 | 11.1 | 14.5 | 18.2 | 21.9 |
| Burning velocity (WCF) | | cm/s | 10 | 10 | 10 | 10 | 10 | 10 |

Table 100

| Item | | | Comp. Ex. 40 | Comp. Ex. 46 | Comp. Ex. 52 | Comp. Ex. 58 | Comp. Ex. 63 |
|---|---|---|---|---|---|---|---|
| WCF | HFO-1132 (E) | Mass% | 41.8 | 40 | 35.7 | 32 | 30.4 |
| | HFO-1123 | Mass% | 0 | 0 | 0 | 0 | 0 |
| | R1234yf | Mass% | 31.5 | 30.7 | 23.6 | 23.9 | 21.8 |
| | R32 | Mass% | 26.7 | 29.3 | 36.7 | 44.1 | 47.8 |
| Burning velocity (WCF) | | cm/s | 10 | 10 | 10 | 10 | 10 |

Table 101

| Item | | | Comp. Ex. 8 | Comp. Ex. 15 | Comp. Ex. 21 | Comp. Ex. 26 | Comp. Ex. 31 | Comp. Ex. 36 |
|---|---|---|---|---|---|---|---|---|
| WCF | HFO-1132 (E) | Mass% | 47.1 | 40.5 | 37.0 | 34.3 | 32.0 | 30.3 |
| | HFO-1123 | Mass% | 52.9 | 52.4 | 51.9 | 51.2 | 49.8 | 47.8 |
| | R1234yf | Mass% | 0.0 | 0.0 | 0.0 | 0.0 | 0.0 | 0.0 |
| | R32 | Mass% | 0.0 | 7.1 | 11.1 | 14.5 | 18.2 | 21.9 |

(continued)

| Item | | | Comp. Ex. 8 | Comp. Ex. 15 | Comp. Ex. 21 | Comp. Ex. 26 | Comp. Ex. 31 | Comp. Ex. 36 |
|---|---|---|---|---|---|---|---|---|
| Leak condition that results in WCFF | | | Storage/ Ship ping -40°C, 92% release, liquid phase side | Storage/ Ship ping -40°C, 92% release, liquid phase side | Storage/ Ship ping -40°C, 92% release, liquid phase side | Storage/ Ship ping -40°C, 92% release, liquid phase side | Storage/ Ship ping -40°C, 92% release, liquid phase side | Storage/ Ship ping -40°C, 92% release, liquid phase side |
| WCF F | HFO-1132 (E) | Mass% | 72.0 | 62.4 | 56.2 | 50.6 | 45.1 | 40.0 |
| | HFO-1123 | Mass% | 28.0 | 31.6 | 33.0 | 33.4 | 32.5 | 30.5 |
| | R1234yf | Mass% | 0.0 | 0.0 | 0.0 | 20.4 | 0.0 | 0.0 |
| | R32 | Mass% | 0.0 | 50.9 | 10.8 | 16.0 | 22.4 | 29.5 |
| Burning velocity (WCF) | | cm/s | 8 or less | 8 or less | 8 or less | 8 or less | 8 or less | 8 or less |
| Burning velocity (WCFF) | | cm/s | 10 | 10 | 10 | 10 | 10 | 10 |

Table 102

| Item | | | Comp. Ex. 41 | Comp. Ex. 47 | Comp. Ex. 53 | Comp. Ex. 59 | Comp. Ex. 64 |
|---|---|---|---|---|---|---|---|
| WCF | HFO-1132(E) | Mass % | 29.1 | 28.8 | 29.3 | 29.4 | 28.9 |
| | HFO-1123 | Mass % | 44.2 | 41.9 | 34.0 | 26.5 | 23.3 |
| | R1234yf | Mass % | 0.0 | 0.0 | 0.0 | 0.0 | 0.0 |
| | R32 | Mass % | 26.7 | 29.3 | 36.7 | 44.1 | 47.8 |
| Leak condition that results in WCFF | | | Storage/ Shippi ng -40°C, 92% release, liquid phase side | Storage/ Shippi ng -40°C, 92% release, liquid phase side | Storage/ Shippi ng -40°C, 92% release, liquid phase side | Storage/ Shippi ng -40°C, 90% release, gas phase side | Storage/ Shippi ng -40°C, 86% release, gas phase side |
| WCF F | HFO-1132(E) | Mass % | 34.6 | 32.2 | 27.7 | 28.3 | 27.5 |
| | HFO-1123 | Mass % | 26.5 | 23.9 | 17.5 | 18.2 | 16.7 |
| | R1234yf | Mass % | 0.0 | 0.0 | 0.0 | 0.0 | 0.0 |
| | R32 | Mass % | 38.9 | 43.9 | 54.8 | 53.5 | 55.8 |
| Burning velocity (WCF) | | cm/s | 8 or less | 8 or less | 8.3 | 9.3 | 9.6 |

(continued)

| Item | | Comp. Ex. 41 | Comp. Ex. 47 | Comp. Ex. 53 | Comp. Ex. 59 | Comp. Ex. 64 |
|---|---|---|---|---|---|---|
| Burning velocity (WCFF) | cm/s | 10 | 10 | 10 | 10 | 10 |

Table 103

| Item | | | Comp. Ex. 9 | Comp. Ex. 16 | Comp. Ex. 22 | Comp. Ex. 27 | Comp. Ex. 32 | Comp. Ex. 37 |
|---|---|---|---|---|---|---|---|---|
| WCF | HFO-1132(E) | Mass % | 61.7 | 47.0 | 41.0 | 36.5 | 32.5 | 28.8 |
| | HFO-1123 | Mass % | 5.9 | 7.2 | 6.5 | 5.6 | 4.0 | 2.4 |
| | R1234yf | Mass % | 32.4 | 38.7 | 41.4 | 43.4 | 45.3 | 46.9 |
| | R32 | Mass % | 0.0 | 7.1 | 11.1 | 14.5 | 18.2 | 21.9 |
| Leak condition that results in WCFF | | | Storage/ Shipping -40°C, 0% release, gas phase side | Storage/ Shipping -40°C, 0% release, gas phase side | Storage/ Shipping -40°C, 0% release, gas phase side | Storage/ Shipping -40°C, 92% release, liquid phase side | Storage/ Shipping -40°C, 0% release, gas phase side | Storage/ Shipping -40°C, 0% release, gas phase side |
| WCFF | HFO-1132(E) | Mass % | 72.0 | 56.2 | 50.4 | 46.0 | 42.4 | 39.1 |
| | HFO-1123 | Mass % | 10.5 | 12.6 | 11.4 | 10.1 | 7.4 | 4.4 |
| | R1234yf | Mass % | 17.5 | 20.4 | 21.8 | 22.9 | 24.3 | 25.7 |
| | R32 | Mass % | 0.0 | 10.8 | 16.3 | 21.0 | 25.9 | 30.8 |
| Burning velocity (WCF) | | cm/s | 8 or less | 8 or less | 8 or less | 8 or less | 8 or less | 8 or less |
| Burning velocity (WCFF) | | cm/s | 10 | 10 | 10 | 10 | 10 | 10 |

Table 104

| Item | | | Comp. Ex. 42 | Comp. Ex. 48 | Comp. Ex. 54 | Comp. Ex. 60 | Comp. Ex. 65 |
|---|---|---|---|---|---|---|---|
| WCF | HFO-1132(E) | Mass % | 24.8 | 24.3 | 22.5 | 21.1 | 20.4 |
| | HFO-1123 | Mass % | 0.0 | 0.0 | 0.0 | 0.0 | 0.0 |
| | R1234yf | Mass % | 48.5 | 46.4 | 40.8 | 34.8 | 31.8 |
| | R32 | Mass % | 26.7 | 29.3 | 36.7 | 44.1 | 47.8 |

(continued)

| Item | | | Comp. Ex. 42 | Comp. Ex. 48 | Comp. Ex. 54 | Comp. Ex. 60 | Comp. Ex. 65 |
|---|---|---|---|---|---|---|---|
| Leak condition that results in WCFF | | | Storage/ Shippi ng -40°C, 0% release, gas phase side | Storage/ Shippi ng -40°C, 0% release, gas phase side | Storage/ Shippi ng -40°C, 0% release, gas phase side | Storage/ Shippi ng -40°C, 0% release, gas phase side | Storage/ Shippi ng -40°C, 0% release, gas phase side |
| WCF F | HFO-1132(E) | Mass % | 35.3 | 34.3 | 31.3 | 29.1 | 28.1 |
| | HFO-1123 | Mass % | 0.0 | 0.0 | 0.0 | 0.0 | 0.0 |
| | R1234yf | Mass % | 27.4 | 26.2 | 23.1 | 19.8 | 18.2 |
| | R32 | Mass % | 37.3 | 39.6 | 45.6 | 51.1 | 53.7 |
| Burning velocity (WCF) | | cm/s | 8 or less | 8 or less | 8 or less | 8 or less | 8 or less |
| Burning velocity (WCFF) | | cm/s | 10 | 10 | 10 | 10 | 10 |

The results in Tables 97 to 100 indicate that the refrigerant has a WCF lower flammability in the following cases: When the mass% of HFO-1132(E), HFO-1123, R1234yf, and R32 based on their sum in the mixed refrigerant of HFO-1132(E), HFO-1123, R1234yf, and R32 is respectively represented by $x$, $y$, $z$, and $a$, coordinates $(x,y,z)$ in a ternary composition diagram in which the sum of HFO-1132(E), HFO-1123, and R1234yf is $(100-a)$ mass% and a straight line connecting a point $(0.0, 100.0-a, 0.0)$ and a point $(0.0, 0.0, 100.0-a)$ is the base, if $0<a\leq11.1$, coordinates $(x,y,z)$ in the ternary composition diagram are on or below a straight line GI that connects point G $(0.026a^2-1.7478a+72.0, -0.026a^2+0.7478a+28.0, 0.0)$ and point I $(0.026a^2-1.7478a+72.0, 0.0, -0.026a^2+0.7478a+28.0)$;
if $11.1<a\leq18.2$, coordinates $(x,y,z)$ in the ternary composition diagram are on or below a straight line GI that connects point G $(0.02a^2-1.6013a+71.105, -0.02a^2+0.6013a+28.895, 0.0)$ and point I $(0.02a^2-1.6013a+71.105, 0.0, -0.02a^2+0.6013a+28.895)$; if $18.2<a\leq26.7$, coordinates $(x,y,z)$ in the ternary composition diagram are on or below a straight line GI that connects point G $(0.0135a^2-1.4068a+69.727, -0.0135a^2+0.4068a+30.273, 0.0)$ and point I $(0.0135a^2-1.4068a+69.727, 0.0, -0.0135a^2+0.4068a+30.273)$; if $26.7<a\leq36.7$, coordinates $(x,y,z)$ in the ternary composition diagram are on or below a straight line GI that connects point G $(0.0111a^2-1.3152a+68.986, -0.0111a^2+0.3152a+31.014, 0.0)$ and point I $(0.0111a^2-1.3152a+68.986, 0.0, -0.0111a^2+0.3152a+31.014)$; and if $36.7<a\leq46.7$, coordinates $(x,y,z)$ in the ternary composition diagram are on or below a straight line GI that connects point G $(0.0061a^2-0.9918a+63.902, -0.0061a^2-0.0082a+36.098,0.0)$ and point I $(0.0061a^2-0.9918a+63.902, 0.0, -0.0061a^2-0.0082a+36.098)$.
Three points corresponding to point G (Table 105) and point I (Table 106) were individually obtained in each of the following five ranges by calculation, and their approximate expressions were obtained.

Table 105

| Item | 11.1≥R32＞0 | | | 18.2≥R32≥11.1 | | | 26.7≥R32≥18.2 | | |
|---|---|---|---|---|---|---|---|---|---|
| R32 | 0 | 7.1 | 11.1 | 11.1 | 14.5 | 18.2 | 18.2 | 21.9 | 26.7 |
| HFO-1132(E) | 72.0 | 60.9 | 55.8 | 55.8 | 52.1 | 48.6 | 48.6 | 45.4 | 41.8 |
| HFO-1123 | 28.0 | 32.0 | 33.1 | 33.1 | 33.4 | 33.2 | 33.2 | 32.7 | 31.5 |
| R1234yf | 0 | 0 | 0 | 0 | 0 | 0 | 0 | 0 | 0 |
| R32 | a | | | a | | | a | | |
| HFO-1132(E) Approximate expression | $0.026a^2-1.7478a+72.0$ | | | $0.02a^2-1.6013a+71.105$ | | | $0.0135a^2-1.4068a+69.727$ | | |
| HFO-1123 Approximate expression | $-0.026a^2+0..7478a+28.0$ | | | $-0.02a^2+0..6013a+28.895$ | | | $-0.0135a^2+0.4068a+30.273$ | | |
| R1234yf Approximate expression | 0 | | | 0 | | | 0 | | |

| Item | 36.7≥R32≥26.7 | | | 46.7≥R32≥36.7 | | |
|---|---|---|---|---|---|---|
| R32 | 26.7 | 29.3 | 36.7 | 36.7 | 44.1 | 47.8 |
| HFO-1132(E) | 41.8 | 40.0 | 35.7 | 35.7 | 32.0 | 30.4 |
| HFO-1123 | 31.5 | 30.7 | 27.6 | 27.6 | 23.9 | 21.8 |
| R1234yf | 0 | 0 | 0 | 0 | 0 | 0 |
| R32 | a | | | a | | |
| HFO-1132(E) Approximate expression | $0.0111a2-1.3152a+68.986$ | | | $0.0061a^2-0.9918a+63.902$ | | |
| HFO-1123 Approximate expression | $-0.0111a2+0.3152a+31.014$ | | | $-0.0061a^2-0.0082a+36.098$ | | |
| R1234yf Approximate expression | 0 | | | 0 | | |

Table 106

| Item | 11.1≥R32＞0 | | | 18.2≥R32≥11.1 | | | 26.7≥R32≥18.2 | | |
|---|---|---|---|---|---|---|---|---|---|
| R32 | 0 | 7.1 | 11.1 | 11.1 | 14.5 | 18.2 | 18.2 | 21.9 | 26.7 |
| HFO-1132(E) | 72.0 | 60.9 | 55.8 | 55.8 | 52.1 | 48.6 | 48.6 | 45.4 | 41.8 |
| HFO-1123 | 0 | 0 | 0 | 0 | 0 | 0 | 0 | 0 | 0 |
| R1234yf | 28.0 | 32.0 | 33.1 | 33.1 | 33.4 | 33.2 | 33.2 | 32.7 | 31.5 |
| R32 | a | | | a | | | a | | |
| HFO-1132(E) Approximate expression | $0.026a^2-1.7478a+72.0$ | | | $0.02a^2-1.6013a+71.105$ | | | $0.0135a^2-1.4068a+69.727$ | | |
| HFO-1123 Approximate expression | 0 | | | 0 | | | 0 | | |
| R1234yf Approximate expression | $-0.026a^2+0.7478a+28.0$ | | | $-0.02a^2+0.6013a+28.895$ | | | $-0.0135a^2+0.4068a+30.273$ | | |

| Item | 36.7≥R32≥26.7 | | | 46.7≥R32≥36.7 | | |
|---|---|---|---|---|---|---|
| R32 | 26.7 | 29.3 | 36.7 | 36.7 | 44.1 | 47.8 |
| HFO-1132(E) | 41.8 | 40.0 | 35.7 | 35.7 | 32.0 | 30.4 |
| HFO-1123 | 0 | 0 | 0 | 0 | 0 | 0 |
| R1234yf | 31.5 | 30.7 | 23.6 | 23.6 | 23.5 | 21.8 |
| R32 | x | | | x | | |
| HFO-1132(E) Approximate expression | $0.0111a^2-1.3152a+68.986$ | | | $0.0061a^2-0.9918a+63.902$ | | |
| HFO-1123 Approximate expression | 0 | | | 0 | | |
| R1234yf Approximate expression | $-0.0111a^2+0.3152a+31.014$ | | | $-0.0061a^2-0.0082a+36.098$ | | |

The results in Tables 101 to 104 indicate that the refrigerant is determined to have a WCFF lower flammability, and the flammability classification according to the ASHRAE Standard is "2L (flammability)" in the following cases: When the mass% of HFO-1132(E), HFO-1123, R1234yf, and R32 based on their sum in the mixed refrigerant of HFO-1132(E), HFO-1123, R1234yf, and R32 is respectively represented by x, y, z, and a, in a ternary composition diagram in which the sum of HFO-1132(E), HFO-1123, and R1234yf is (100-a) mass% and a straight line connecting a point (0.0, 100.0-a, 0.0) and a point (0.0, 0.0, 100.0-a) is the base, if 0<a≤11.1, coordinates (x,y,z) in the ternary composition diagram are on or below a straight line JK' that connects point J ($0.0049a^2-0.9645a+47.1$, $-0.0049a^2-0.0355a+52.9$, 0.0) and point K'($0.0514a^2-2.4353a+61.7$, $-0.0323a^2+0.4122a+5.9$, $-0.0191a^2+1.0231a+32.4$); if 11.1<a≤18.2, coordinates are on a straight line JK' that connects point J ($0.0243a^2-1.4161a+49.725$, $-0.0243a^2+0.4161a+50.275$, 0.0) and point K'($0.0341a^2-2.1977a+61.187$, $-0.0236a^2+0.34a+5.636$, $-0.0105a^2+0.8577a+33.177$); if 18.2<a≤26.7, coordinates are on or below a straight line JK' that connects point J ($0.0246a^2-1.4476a+50.184$, $-0.0246a^2+0.4476a+49.816$, 0.0) and point K' ($0.0196a^2-1.7863a+58.515$, $-0.0079a^2-0.1136a+8.702$, $-0.0117a^2+0.8999a+32.783$); if 26.7<a≤36.7, coordinates are on or below a straight line JK' that connects point J ($0.0183a^2-1.1399a+46.493$, $-0.0183a^2+0.1399a+53.507$, 0.0) and point K' ($-0.0051a^2+0.0929a+25.95$, 0.0, $0.0051a^2-1.0929a+74.05$); and if 36.7<a≤46.7, coordinates are on or below a straight line JK' that connects point J ($-0.0134a^2+1.0956a+7.13$, $0.0134a^2-2.0956a+92.87$, 0.0) and point K'(-1.892a+29.443, 0.0, 0.892a+70.557).

Actual points having a WCFF lower flammability form a curved line that connects point J and point K' (on the straight line AB) in Fig. 3 and extends toward the HFO-1132(E) side. Accordingly, when coordinates are on or below the straight line JK', WCFF lower flammability is achieved.

Three points corresponding to point J (Table 107) and point K' (Table 108) were individually obtained in each of the following five ranges by calculation, and their approximate expressions were obtained.

Table 107

| Item | 11.1≥R32>0 | | | 18.2≥R32≥11.1 | | | 26.7≥R32≥18.2 | | |
|---|---|---|---|---|---|---|---|---|---|
| R32 | 0 | 7.1 | 11.1 | 11.1 | 14.5 | 18.2 | 18.2 | 21.9 | 26.7 |
| HFO-1132(E) | 47.1 | 40.5 | 37 | 37.0 | 34.3 | 32.0 | 32.0 | 30.3 | 29.1 |
| HFO-1123 | 52.9 | 52.4 | 51.9 | 51.9 | 51.2 | 49.8 | 49.8 | 47.8 | 44.2 |
| R1234yf | 0 | 0 | 0 | 0 | 0 | 0 | 0 | 0 | 0 |
| R32 | a | | | a | | | a | | |
| HFO-1132(E) Approximate expression | $0.0049a^2-0.9645a+47.1$ | | | $0.0243a^2-1.4161a+49.725$ | | | $0.0246a^2-1.4476a+50.184$ | | |
| HFO-1123 Approximate expression | $-0.0049a^2-0.0355a+52.9$ | | | $-0.0243a^2+0.4161a+50.275$ | | | $-0.0246a^2+0.4476a+49.816$ | | |
| R1234yf Approximate expression | 0 | | | 0 | | | 0 | | |

| Item | 36.7≥R32≥26.7 | | | 47.8≥R32≥36.7 | | |
|---|---|---|---|---|---|---|
| R32 | 26.7 | 29.3 | 36.7 | 36.7 | 44.1 | 47.8 |
| HFO-1132(E) | 29.1 | 28.8 | 29.3 | 29.3 | 29.4 | 28.9 |
| HFO-1123 | 44.2 | 41.9 | 34.0 | 34.0 | 26.5 | 23.3 |
| R1234yf | 0 | 0 | 0 | 0 | 0 | 0 |
| R32 | a | | | a | | |
| HFO-1132(E) Approximate expression | $0.0183a^2-1.1399a+46.493$ | | | $-0.0134a^2+1.0956a+7.13$ | | |
| HFO-1123 Approximate expression | $-0.0183a^2+0.1399a+53.507$ | | | $0.0134a^2-2.0956a+92.87$ | | |
| R1234yf Approximate expression | 0 | | | 0 | | |

Table 108

| Item | 11.1≥R32＞0 | | | 18.2≥R32≥11.1 | | | 26.7≥R32≥18.2 | | |
|---|---|---|---|---|---|---|---|---|---|
| R32 | 0 | 7.1 | 11.1 | 11.1 | 14.5 | 18.2 | 18.2 | 21.9 | 26.7 |
| HFO-1132(E) | 61.7 | 47.0 | 41.0 | 41.0 | 36.5 | 32.5 | 32.5 | 28.8 | 24.8 |
| HFO-1123 | 5.9 | 7.2 | 6.5 | 6.5 | 5.6 | 4.0 | 4.0 | 2.4 | 0 |
| R1234yf | 32.4 | 38.7 | 41.4 | 41.4 | 43.4 | 45.3 | 45.3 | 46.9 | 48.5 |
| R32 | x | | | x | | | x | | |
| HFO-1132(E) Approximate expression | $0.0514a^2-2.4353a+61.7$ | | | $0.0341a^2-2.1977a+61.187$ | | | $0.0196a^2-1.7863a+58.515$ | | |
| HFO-1123 Approximate expression | $-0.0323a^2+0.4122a+5.9$ | | | $-0.0236a^2+0.34a+5.636$ | | | $-0.0079a^2-0.1136a+8.702$ | | |
| R1234yf Approximate expression | $-0.0191a^2+1.0231a+32.4$ | | | $-0.0105a^2+0.8577a+33.177$ | | | $-0.0117a^2+0.8999a+32.783$ | | |

| Item | 36.7≥R32≥26.7 | | | 46.7≥R32≥36.7 | | |
|---|---|---|---|---|---|---|
| R32 | 26.7 | 29.3 | 36.7 | 36.7 | 44.1 | 47.8 |
| HFO-1132(E) | 24.8 | 24.3 | 22.5 | 22.5 | 21.1 | 20.4 |
| HFO-1123 | 0 | 0 | 0 | 0 | 0 | 0 |
| R1234yf | 48.5 | 46.4 | 40.8 | 40.8 | 34.8 | 31.8 |
| R32 | x | | | x | | |
| HFO-1132(E) Approximate expression | $-0.0051a^2+0.0929a+25.95$ | | | $-1.892a+29.443$ | | |
| HFO-1123 Approximate expression | 0 | | | 0 | | |
| R1234yf Approximate expression | $0.0051a^2-1.0929a+74.05$ | | | $0.892a+70.557$ | | |

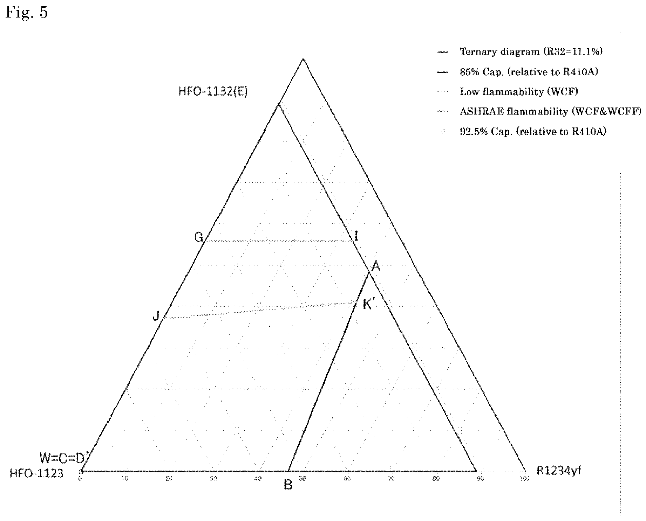

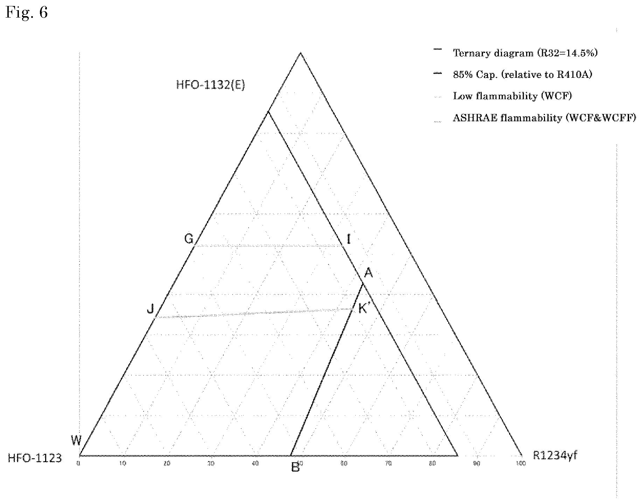

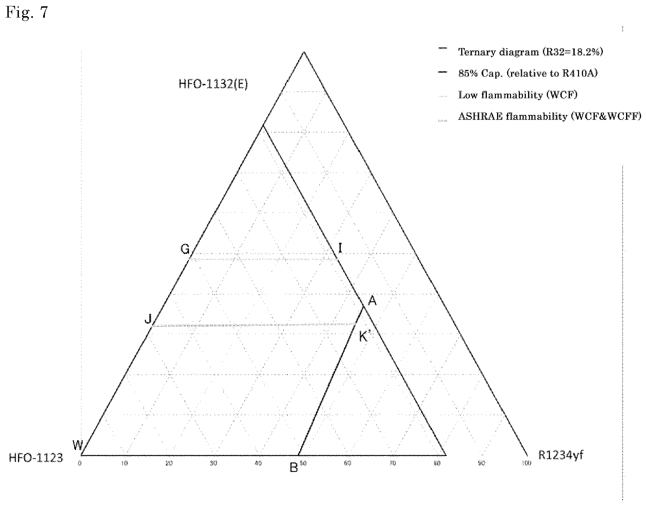

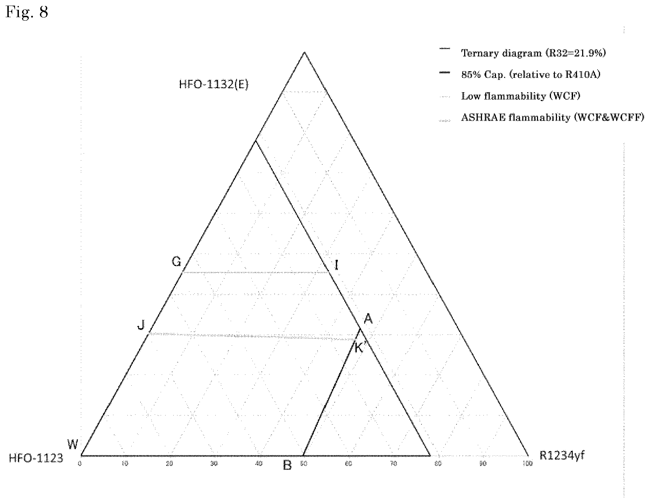

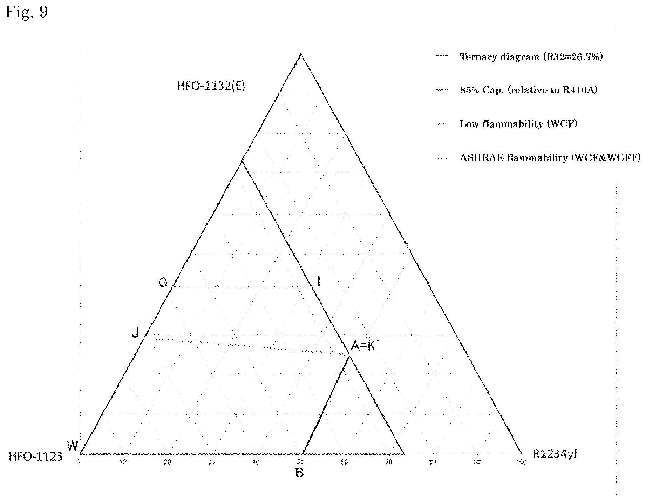

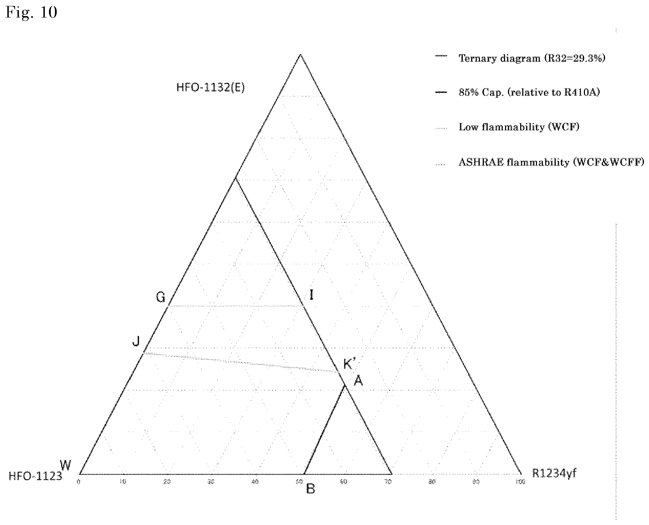

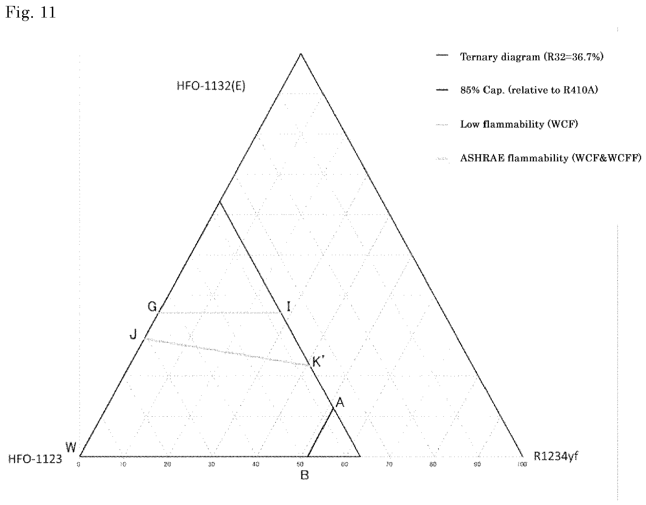

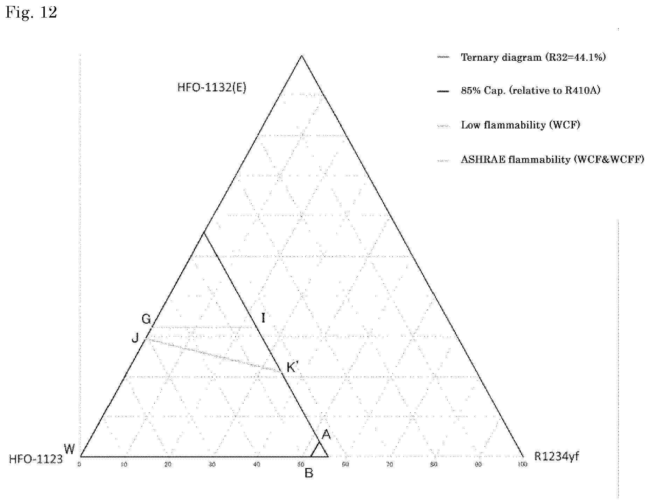

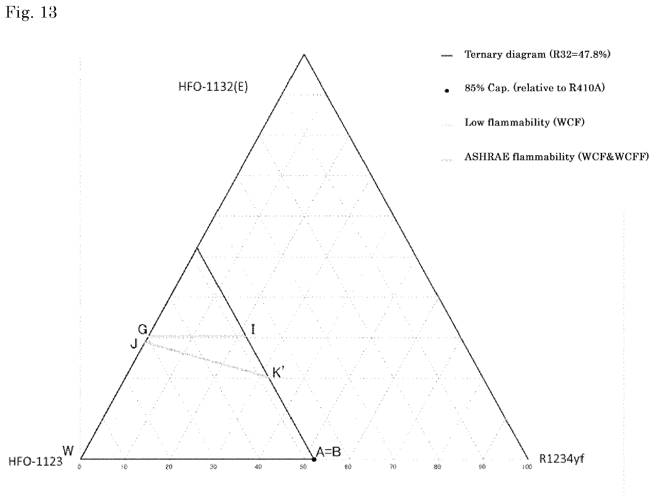

Figs. 3 to 13 show compositions whose R32 content a (mass%) is 0 mass%, 7.1 mass%, 11.1 mass%, 14.5 mass%, 18.2 mass%, 21.9 mass%, 26.7 mass%, 29.3 mass%, 36.7 mass%, 44.1 mass%, and 47.8 mass%, respectively.

Points A, B, C, and D' were obtained in the following manner according to approximate calculation.

Point A is a point where the content of HFO-1123 is 0 mass%, and a refrigerating capacity ratio of 85% relative to that of R410A is achieved. Three points corresponding to point A were obtained in each of the following five ranges by calculation, and their approximate expressions were obtained (Table 109).

Table 109

| Item | 11.1≥R32＞0 | | | 18.2≥R32≥11.1 | | | 26.7≥R32≥18.2 | | |
|---|---|---|---|---|---|---|---|---|---|
| R32 | 0 | 7.1 | 11.1 | 11.1 | 14.5 | 18.2 | 18.2 | 21.9 | 26.7 |
| HFO-1132(E) | 68.6 | 55.3 | 48.4 | 48.4 | 42.8 | 37 | 37 | 31.5 | 24.8 |
| HFO-1123 | 0 | 0 | 0 | 0 | 0 | 0 | 0 | 0 | 0 |
| R1234yf | 31.4 | 37.6 | 40.5 | 40.5 | 42.7 | 44.8 | 44.8 | 46.6 | 48.5 |
| R32 | a | | | a | | | a | | |
| HFO-1132(E) Approximate expression | $0.0134a^2-1.9681a+68.6$ | | | $0.0112a^2-1.9337a+68.484$ | | | $0.0107a^2-1.9142a+68.305$ | | |
| HFO-1123 Approximate expression | 0 | | | 0 | | | 0 | | |
| R1234yf Approximate expression | $-0.0134a^2+0.9681a+31.4$ | | | $-0.0112a^2+0.M869337a+31.516$ | | | $-0.0107a^2+0.9142a+31.695$ | | |

| Item | 36.7≥R32≥26.7 | | | 46.7≥R32≥36.7 | | |
|---|---|---|---|---|---|---|
| R32 | 26.7 | 29.3 | 36.7 | 36.7 | 44.1 | 47.8 |
| HFO-1132(E) | 24.8 | 21.3 | 12.1 | 12.1 | 3.8 | 0 |
| HFO-1123 | 0 | 0 | 0 | 0 | 0 | 0 |
| R1234yf | 48.5 | 49.4 | 51.2 | 51.2 | 52.1 | 52.2 |
| R32 | a | | | a | | |
| HFO-1132(E) Approximate expression | $0.0103a^2-1.9225a+68.793$ | | | $0.0085a^2-1.8102a+67.1$ | | |
| HFO-1123 Approximate expression | 0 | | | 0 | | |
| R1234yf Approximate expression | $-0.0103a^2+0.9225a+31..207$ | | | $-0.0085a^2+0.8102a+32.9$ | | |

Point B is a point where the content of HFO-1132(E) is 0 mass%, and a refrigerating capacity ratio of 85% relative to that of R410A is achieved.

Three points corresponding to point B were obtained in each of the following five ranges by calculation, and their approximate expressions were obtained (Table 110).

Table 110

| Item | 11.1≥R32＞0 | | | 18.2≥R32≥11.1 | | | 26.7≥R32≥18.2 | | |
|---|---|---|---|---|---|---|---|---|---|
| R32 | 0 | 7.1 | 11.1 | 11.1 | 14.5 | 18.2 | 18.2 | 21.9 | 26.7 |
| HFO-1132(E) | 0 | 0 | 0 | 0 | 0 | 0 | 0 | 0 | 0 |
| HFO-1123 | 58.7 | 47.8 | 42.3 | 42.3 | 37.8 | 33.1 | 33.1 | 28.5 | 22.9 |
| R1234yf | 41.3 | 45.1 | 46.6 | 46.6 | 47.7 | 48.7 | 48.7 | 49.6 | 50.4 |
| R32 | a | | | a | | | a | | |
| HFO-1132(E) Approximate expression | 0 | | | 0 | | | 0 | | |
| HFO-1123 Approximate expression | $0.0144a^2-1.6377a+58.7$ | | | $0.0075a^2-1.5156a+58.199$ | | | $0.009a^2-1.6045a+59.318$ | | |
| R1234yf Approximate expression | $-0.0144a^2+0.6377a+41.3$ | | | $-0.0075a^2+0.5156a+41.801$ | | | $-0.009a^2+0.6045a+40.682$ | | |

| Item | 36.7≥R32≥26.7 | | | 46.7≥R32≥36.7 | | |
|---|---|---|---|---|---|---|
| R32 | 26.7 | 29.3 | 36.7 | 36.7 | 44.1 | 47.8 |
| HFO-1132(E) | 0 | 0 | 0 | 0 | 0 | 0 |
| HFO-1123 | 22.9 | 19.9 | 11.7 | 11.8 | 3.9 | 0 |
| R1234yf | 50.4 | 50.8 | 51.6 | 51.5 | 52.0 | 52.2 |
| R32 | a | | | a | | |
| HFO-1132(E) Approximate expression | 0 | | | 0 | | |
| HFO-1123 Approximate expression | $0.0046a^2-1.41a+57.286$ | | | $0.0012a^2-1.1659a+52.95$ | | |
| R1234yf Approximate expression | $-0.0046a^2+0.41a+42.714$ | | | $-0.0012a^2+0.1659a+47.05$ | | |

Point D' is a point where the content of HFO-1132(E) is 0 mass%, and a COP ratio of 95.5% relative to that of R410A is achieved.

Three points corresponding to point D' were obtained in each of the following by calculation, and their approximate expressions were obtained (Table 111).

Table 111

| Item | 11.1≥R32 > 0 | | |
|---|---|---|---|
| R32 | 0 | 7.1 | 11.1 |
| HFO-1132(E) | 0 | 0 | 0 |
| HFO-1123 | 75.4 | 83.4 | 88.9 |
| R1234yf | 24.6 | 9.5 | 0 |
| R32 | a | | |

(continued)

| Item | 11.1≥R32 > 0 |
| --- | --- |
| HFO-1132(E) Approximate expressi on | 0 |
| HFO-1123 Approximate expressi on | $0.0224a^2+0.968a+75.4$ |
| R1234yf Approximate expressi on | $-0.0224a^2-1.968a+24.6$ |

Point C is a point where the content of R1234yf is 0 mass%, and a COP ratio of 95.5% relative to that of R410A is achieved.

Three points corresponding to point C were obtained in each of the following by calculation, and their approximate expressions were obtained (Table 112).

Table 112

| Item | 11.1≥R32>0 | | |
| --- | --- | --- | --- |
| R32 | 0 | 7.1 | 11.1 |
| HFO-1132(E) | 32.9 | 18.4 | 0 |
| HFO-1123 | 67.1 | 74.5 | 88.9 |
| R1234yf | 0 | 0 | 0 |
| R32 | a | | |
| HFO-1132(E) Approximate expressi on | $-0.2304a^2-0.4062a + 32.9$ | | |
| HFO-1123 Approximate expressi on | $0.2304a^2-0.5938a + 67.1$ | | |
| R1234yf Approximate expressi on | 0 | | |

(5-4) Refrigerant D

The refrigerant D according to the present disclosure is a mixed refrigerant comprising trans-1,2-difluoroethylene (HFO-1132(E)), difluoromethane (R32), and 2,3,3,3-tetrafluoro-1-propene (R1234yf).

The refrigerant D according to the present disclosure has various properties that are desirable as an R410A-alternative refrigerant; i.e., a refrigerating capacity equivalent to that of R410A, a sufficiently low GWP, and a lower flammability (Class 2L) according to the ASHRAE standard.

The refrigerant D according to the present disclosure is preferably a refrigerant wherein

when the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by line segments IJ, JN, NE, and EI that connect the following 4 points:

point I (72.0, 0.0, 28.0),
point J (48.5, 18.3, 33.2),
point N (27.7, 18.2, 54.1), and
point E (58.3, 0.0, 41.7),

or on these line segments (excluding the points on the line segment EI);
the line segment IJ is represented by coordinates $(0.0236y^2-1.7616y+72.0, y, -0.0236y^2+0.7616y+28.0)$;
the line segment NE is represented by coordinates $(0.012y^2-1.9003y+58.3, y, -0.012y^2+0.9003y+41.7)$; and
the line segments JN and EI are straight lines. When the requirements above are satisfied, the refrigerant according to the present disclosure has a refrigerating capacity ratio of 80% or more relative to R410A, a GWP of 125 or less, and a WCF lower flammability.

The refrigerant D according to the present disclosure is preferably a refrigerant wherein

when the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by line segments MM', M'N, NV, VG, and GM that connect the following 5 points:

    point M (52.6, 0.0, 47.4),
    point M' (39.2, 5.0, 55.8),
    point N (27.7, 18.2, 54.1),
    point V (11.0, 18.1, 70.9), and
    point G (39.6, 0.0, 60.4),

or on these line segments (excluding the points on the line segment GM);
the line segment MM' is represented by coordinates $(x, 0.132x^2-3.34x+52.6, -0.132X^2+2.34x+47.4)$;
the line segment M'N is represented by coordinates $(x, 0.0313x^2-1.4551x+43.824, -0.0313x^2+0.4551x+56.176)$;
the line segment VG is represented by coordinates $(0.0123y^2-1.8033y+39.6, y, -0.0123y^2+0.8033y+60.4)$; and
the line segments NV and GM are straight lines. When the requirements above are satisfied, the refrigerant according to the present disclosure has a refrigerating capacity ratio of 70% or more relative to R410A, a GWP of 125 or less, and an ASHRAE lower flammability.

The refrigerant D according to the present disclosure is preferably a refrigerant wherein

when the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by line segments ON, NU, and UO that connect the following 3 points:

    point O (22.6, 36.8, 40.6),
    point N (27.7, 18.2, 54.1), and
    point U (3.9, 36.7, 59.4),

or on these line segments;
the line segment ON is represented by coordinates $(0.0072y^2-0.6701y+37.512, y, -0.0072y^2-0.3299y+62.488)$;
the line segment NU is represented by coordinates $(0.0083y^2-1.7403y+56.635, y, -0.0083y^2+0.7403y+43.365)$; and
the line segment UO is a straight line. When the requirements above are satisfied, the refrigerant according to the present disclosure has a refrigerating capacity ratio of 80% or more relative to R410A, a GWP of 250 or less, and an ASHRAE lower flammability.

The refrigerant D according to the present disclosure is preferably a refrigerant wherein

when the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by line segments QR, RT, TL, LK, and KQ that connect the following 5 points:

    point Q (44.6, 23.0, 32.4),
    point R (25.5, 36.8, 37.7),
    point T (8.6, 51.6, 39.8),
    point L (28.9, 51.7, 19.4), and
    point K (35.6, 36.8, 27.6),

or on these line segments;
the line segment QR is represented by coordinates $(0.0099y^2-1.975y+84.765, y, -0.0099y^2+0.975y+15.235)$;
the line segment RT is represented by coordinates $(0.082y^2-1.8683y+83.126, y, -0.082y^2+0.8683y+16.874)$;
the line segment LK is represented by coordinates $(0.0049y^2-0.8842y+61.488, y, -0.0049y^2-0.1158y+38.512)$;
the line segment KQ is represented by coordinates $(0.0095y^2-1.2222y+67.676, y, -0.0095y^2+0.2222y+32.324)$; and
the line segment TL is a straight line. When the requirements above are satisfied, the refrigerant according to the present disclosure has a refrigerating capacity ratio of 92.5% or more relative to R410A, a GWP of 350 or less, and a WCF lower flammability.

The refrigerant D according to the present disclosure is preferably a refrigerant wherein

when the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by line segments PS, ST, and TP that connect the following 3 points:

point P (20.5, 51.7, 27.8),
point S (21.9, 39.7, 38.4), and
point T (8.6, 51.6, 39.8),

or on these line segments;
the line segment PS is represented by coordinates $(0.0064y^2-0.7103y+40.1, y, -0.0064y^2-0.2897y+59.9)$;
the line segment ST is represented by coordinates $(0.082y^2-1.8683y+83.126, y, -0.082y^2+0.8683y+16.874)$; and
the line segment TP is a straight line. When the requirements above are satisfied, the refrigerant according to the present disclosure has a refrigerating capacity ratio of 92.5% or more relative to R410A, a GWP of 350 or less, and an ASHRAE lower flammability.

The refrigerant D according to the present disclosure is preferably a refrigerant wherein

when the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by line segments ac, cf, fd, and da that connect the following 4 points:

point a (71.1, 0.0, 28.9),
point c (36.5, 18.2, 45.3),
point f (47.6, 18.3, 34.1), and
point d (72.0, 0.0, 28.0),

or on these line segments;
the line segment ac is represented by coordinates $(0.0181y^2-2.2288y+71.096, y, -0.0181y^2+1.2288y+28.904)$;
the line segment fd is represented by coordinates $(0.02y^2-1.7y+72, y, -0.02y^2+0.7y+28)$; and
the line segments cf and da are straight lines. When the requirements above are satisfied, the refrigerant according to the present disclosure has a refrigerating capacity ratio of 85% or more relative to R410A, a GWP of 125 or less, and a lower flammability (Class 2L) according to the ASHRAE standard.

The refrigerant D according to the present disclosure is preferably a refrigerant wherein

when the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by line segments ab, be, ed, and da that connect the following 4 points:

point a (71.1, 0.0, 28.9),
point b (42.6, 14.5, 42.9),
point e (51.4, 14.6, 34.0), and
point d (72.0, 0.0, 28.0),

or on these line segments;
the line segment ab is represented by coordinates $(0.0181y^2-2.2288y+71.096, y, -0.0181y^2+1.2288y+28.904)$;
the line segment ed is represented by coordinates $(0.02y^2-1.7y+72, y, -0.02y^2+0.7y+28)$; and
the line segments be and da are straight lines. When the requirements above are satisfied, the refrigerant according to the present disclosure has a refrigerating capacity ratio of 85% or more relative to R410A, a GWP of 100 or less, and a lower flammability (Class 2L) according to the ASHRAE standard.

The refrigerant D according to the present disclosure is preferably a refrigerant wherein

when the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by line segments gi, ij, and jg that connect the following 3 points:

point g (77.5, 6.9, 15.6),
point i (55.1, 18.3, 26.6), and
point j (77.5. 18.4, 4.1),

or on these line segments;
the line segment gi is represented by coordinates $(0.02y^2-2.4583y+93.396, y, -0.02y^2+1.4583y+6.604)$; and
the line segments ij and jg are straight lines. When the requirements above are satisfied, the refrigerant according to the present disclosure has a refrigerating capacity ratio of 95% or more relative to R410A and a GWP of 100 or less, undergoes fewer or no changes such as polymerization or decomposition, and also has excellent stability.

The refrigerant D according to the present disclosure is preferably a refrigerant wherein

when the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by line segments gh, hk, and kg that connect the following 3 points:

point g (77.5, 6.9, 15.6),
point h (61.8, 14.6, 23.6), and
point k (77.5, 14.6, 7.9),

or on these line segments;
the line segment gh is represented by coordinates $(0.02y^2-2.4583y+93.396, y, -0.02y^2+1.4583y+6.604)$; and
the line segments hk and kg are straight lines. When the requirements above are satisfied, the refrigerant according to the present disclosure has a refrigerating capacity ratio of 95% or more relative to R410A and a GWP of 100 or less, undergoes fewer or no changes such as polymerization or decomposition, and also has excellent stability.

The refrigerant D according to the present disclosure may further comprise other additional refrigerants in addition to HFO-1132(E), R32, and R1234yf, as long as the above properties and effects are not impaired. In this respect, the refrigerant according to the present disclosure preferably comprises HFO-1132(E), R32, and R1234yf in a total amount of 99.5 mass% or more, more preferably 99.75 mass% or more, and still more preferably 99.9 mass% or more based on the entire refrigerant.

Such additional refrigerants are not limited, and can be selected from a wide range of refrigerants. The mixed refrigerant may comprise a single additional refrigerant, or two or more additional refrigerants.

(Examples of Refrigerant D)

The present disclosure is described in more detail below with reference to Examples of refrigerant D. However, the refrigerant D is not limited to the Examples.

The composition of each mixed refrigerant of HFO-1132(E), R32, and R1234yf was defined as WCF. A leak simulation was performed using the NIST Standard Reference Database REFLEAK Version 4.0 under the conditions of Equipment, Storage, Shipping, Leak, and Recharge according to the ASHRAE Standard 34-2013. The most flammable fraction was defined as WCFF.

A burning velocity test was performed using the apparatus shown in Fig. 1 in the following manner. First, the mixed refrigerants used had a purity of 99.5% or more, and were degassed by repeating a cycle of freezing, pumping, and thawing until no traces of air were observed on the vacuum gauge. The burning velocity was measured by the closed method. The initial temperature was ambient temperature. Ignition was performed by generating an electric spark between the electrodes in the center of a sample cell. The duration of the discharge was 1.0 to 9.9 ms, and the ignition energy was typically about 0.1 to 1.0 J. The spread of the flame was visualized using schlieren photographs. A cylindrical container (inner diameter: 155 mm, length: 198 mm) equipped with two light transmission acrylic windows was used as the sample cell, and a xenon lamp was used as the light source. Schlieren images of the flame were recorded by a high-speed digital video camera at a frame rate of 600 fps and stored on a PC. Tables 113 to 115 show the results.

Table 113

| Item | | Unit | Comparative Example 13 | Example 11 | Example 12 | Example 13 | Example 14 | Example 15 | Example 16 |
|---|---|---|---|---|---|---|---|---|---|
| | | | I | | J | | K | | L |
| WCF | HFO-1132 (E) | Mass% | 72 | 57.2 | 48.5 | 41.2 | 35.6 | 32 | 28.9 |
| | R32 | Mass% | 0 | 10 | 18.3 | 27.6 | 36.8 | 44.2 | 51.7 |
| | R1234yf | Mass% | 28 | 32.8 | 33.2 | 31.2 | 27.6 | 23.8 | 19.4 |
| Burning Velocity (WCF) | | cm/s | 10 | 10 | 10 | 10 | 10 | 10 | 10 |

Table 114

| Item | | Unit | Comparative Example 14 M | Example 18 | Example 19 W | Example 20 | Example 21 N | Example 22 |
|---|---|---|---|---|---|---|---|---|
| WCF | HFO-1132 (E) | Mass% | 52.6 | 39.2 | 32.4 | 29.3 | 27.7 | 24.6 |
| | R32 | Mass% | 0.0 | 5.0 | 10.0 | 14.5 | 18.2 | 27.6 |
| | R1234yf | Mass% | 47.4 | 55.8 | 57.6 | 56.2 | 54.1 | 47.8 |
| Leak condition that results in WCFF | | | Storage, Shipping, -40°C, 0% release, on the gas phase side | Storage, Shipping, -40°C, 0% release, on the gas phase side | Storage, Shipping, -40°C, 0% release, on the gas phase side | Storage, Shipping, -40°C, 0% release, on the gas phase side | Storage, Shipping, -40°C, 0% release, on the gas phase side | Storage, Shipping, -40°C, 0% release, on the gas phase side |
| WCF | HFO-1132 (E) | Mass% | 72.0 | 57.8 | 48.7 | 43.6 | 40.6 | 34.9 |
| | R32 | Mass% | 0.0 | 9.5 | 17.9 | 24.2 | 28.7 | 38.1 |
| | R1234yf | Mass% | 28.0 | 32.7 | 33.4 | 32.2 | 30.7 | 27.0 |
| Burning Velocity (WCF) | | cm/s | 8 or less | 8 or less | 8 or less | 8 or less | 8 or less | 8 or less |
| Burning Velocity (WCFF) | | cm/s | 10 | 10 | 10 | 10 | 10 | 10 |

Table 115

| Item | | Unit | Example 23 O | Example 24 | Example 25 P |
|---|---|---|---|---|---|
| WCF | HFO-1132 (E) | Mass% | 22.6 | 21.2 | 20.5 |
| | HFO-1123 | Mass% | 36.8 | 44.2 | 51.7 |
| | R1234yf | Mass% | 40.6 | 34.6 | 27.8 |
| Leak condition that results in WCFF | | | Storage, Shipping, -40°C, 0% release, on the gas phase side | Storage, Shipping, -40°C, 0% release, on the gas phase side | Storage, Shipping, -40°C, 0% release, on the gas phase side |
| WCFF | HFO-1132 (E) | Mass% | 31.4 | 29.2 | 27.1 |
| | HFO-1123 | Mass% | 45.7 | 51.1 | 56.4 |
| | R1234yf | Mass% | 23.0 | 19.7 | 16.5 |
| Burning Velocity (WCF) | | cm/s | 8 or less | 8 or less | 8 or less |
| Burning Velocity (WCFF) | | cm/s | 10 | 10 | 10 |

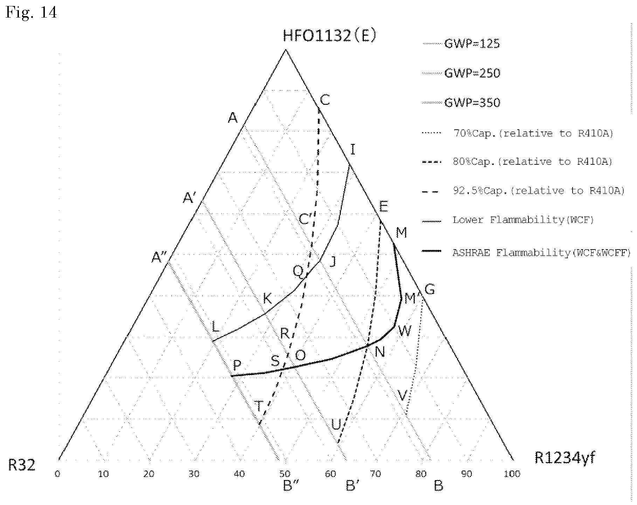

The results indicate that under the condition that the mass% of HFO-1132(E), R32, and R1234yf based on their sum is respectively represented by x, y, and z, when coordinates (x,y,z) in the ternary composition diagram shown in Fig. 14 in which the sum of HFO-1132(E), R32, and R1234yf is 100 mass% are on the line segment that connects point I, point J, point K, and point L, or below these line segments, the refrigerant has a WCF lower flammability.

The results also indicate that when coordinates (x,y,z) in the ternary composition diagram shown in Fig. 14 are on the line segments that connect point M, point M', point W, point J, point N, and point P, or below these line segments, the refrigerant has an ASHRAE lower flammability.

Mixed refrigerants were prepared by mixing HFO-1132(E), R32, and R1234yf in amounts (mass%) shown in Tables 116 to 144 based on the sum of HFO-1132(E), R32, and R1234yf. The coefficient of performance (COP) ratio and the refrigerating capacity ratio relative to R410 of the mixed refrigerants shown in Tables 116 to 144 were determined. The conditions for calculation were as described below.

     Evaporating temperature: 5°C
     Condensation temperature: 45°C
     Degree of superheating: 5 K
     Degree of subcooling: 5 K
     Compressor efficiency: 70%

Tables 116 to 144 show these values together with the GWP of each mixed refrigerant.

Table 116

| Item | Unit | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| | | | A | B | A' | B' | A" | B" |
| HFO-1132 (E) | Mass% | | 81.6 | 0.0 | 63.1 | 0.0 | 48.2 | 0.0 |
| R32 | Mass% | R410A | 18.4 | 18.1 | 36.9 | 36.7 | 51.8 | 51.5 |
| R1234yf | Mass% | | 0.0 | 81.9 | 0.0 | 63.3 | 0.0 | 48.5 |
| GWP | - | 2088 | 125 | 125 | 250 | 250 | 350 | 350 |
| COP Ratio | % (relative to R410A) | 100 | 98.7 | 103.6 | 98.7 | 102.3 | 99.2 | 102.2 |
| Refrigerating Capacity Ratio | % (relative to R410A) | 100 | 105.3 | 62.5 | 109.9 | 77.5 | 112.1 | 87.3 |

Table 117

| Item | Unit | Comparative Example 8 | Comparative Example 9 | Comparative Example 10 | Example 1 | Example 2 | Example 3 | Example 4 |
|---|---|---|---|---|---|---|---|---|
| | | C | | C' | | R | | T |
| HFO-1132(E) | Mass% | 85.5 | 66.1 | 52.1 | 37.8 | 25.5 | 16.6 | 8.6 |
| R32 | Mass% | 0.0 | 10.0 | 18.2 | 27.6 | 36.8 | 44.2 | 51.6 |
| R1234yf | Mass% | 14.5 | 23.9 | 29.7 | 34.6 | 37.7 | 39.2 | 39.8 |
| GWP | - | 1 | 69 | 125 | 188 | 250 | 300 | 350 |
| COP Ratio | %(relative to R410A) | 99.8 | 99.3 | 99.3 | 99.6 | 100.2 | 100.8 | 101.4 |
| Refrigerating Capacity Ratio | %(relative to R410A) | 92.5 | 92.5 | 92.5 | 92.5 | 92.5 | 92.5 | 92.5 |

Table 118

| Item | Unit | Comparative Example 11 | Example 5 | Example 6 | Example 7 | Example 8 | Comparative Example 12 | Example 9 | Example 10 |
|------|------|------|------|------|------|------|------|------|------|
| | | E | | N | | U | G | | V |
| HFO-1132(E) | Mass% | 58.3 | 40.5 | 27.7 | 14.9 | 3.9 | 39.6 | 22.8 | 11.0 |
| R32 | Mass% | 0.0 | 10.0 | 18.2 | 27.6 | 36.7 | 0.0 | 10.0 | 18.1 |
| R1234yf | Mass% | 41.7 | 49.5 | 54.1 | 57.5 | 59.4 | 60.4 | 67.2 | 70.9 |
| GWP | - | 2 | 70 | 125 | 189 | 250 | 3 | 70 | 125 |
| COP Ratio | % (relative to R410A) | 100.3 | 100.3 | 100.7 | 101.2 | 101.9 | 101.4 | 101.8 | 102.3 |
| Refrigerating Capacity Ratio | % (relative to R410A) | 80.0 | 80.0 | 80.0 | 80.0 | 80.0 | 70.0 | 70.0 | 70.0 |

Table 119

| Item | Unit | Comparative Example 13 | Example 11 | Example 12 | Example 13 | Example 14 | Example 15 | Example 16 | Example 17 |
|---|---|---|---|---|---|---|---|---|---|
| | | I | | J | | K | | L | Q |
| HFO-1132(E) | Mass% | 72.0 | 57.2 | 48.5 | 41.2 | 35.6 | 32.0 | 28.9 | 44.6 |
| R32 | Mass% | 0.0 | 10.0 | 18.3 | 27.6 | 36.8 | 44.2 | 51.7 | 23.0 |
| R1234yf | Mass% | 28.0 | 32.8 | 33.2 | 31.2 | 27.6 | 23.8 | 19.4 | 32.4 |
| GWP | - | 2 | 69 | 125 | 188 | 250 | 300 | 350 | 157 |
| COP Ratio | %(relative to R410A) | 99.9 | 99.5 | 99.4 | 99.5 | 99.6 | 99.8 | 100.1 | 99.4 |
| Refrigerating Capacity Ratio | %(relative to R410A) | 86.6 | 88.4 | 90.9 | 94.2 | 97.7 | 100.5 | 103.3 | 92.5 |

Table 120

| Item | Unit | Comparative Example 14 | Example 18 | Example 19 | Example 20 | Example 21 | Example 22 |
|---|---|---|---|---|---|---|---|
| | | M | | W | | N | |
| HFO-1132(E) | Mass% | 52.6 | 39.2 | 32.4 | 29.3 | 27.7 | 24.5 |
| R32 | Mass% | 0.0 | 5.0 | 10.0 | 14.5 | 18.2 | 27.6 |
| R1234yf | Mass% | 47.4 | 55.8 | 57.6 | 56.2 | 54.1 | 47.9 |
| GWP | - | 2 | 36 | 70 | 100 | 125 | 188 |
| COP Ratio | %(relative to R410A) | 100.5 | 100.9 | 100.9 | 100.8 | 100.7 | 100.4 |
| Refrigerating Capacity Ratio | %(relative to R410A) | 77.1 | 74.8 | 75.6 | 77.8 | 80.0 | 85.5 |

Table 121

| Item | Unit | Example 23 | Example 24 | Example 25 | Example 26 |
|---|---|---|---|---|---|
| | | O | | P | S |
| HFO-1132(E) | Mass% | 22.6 | 21.2 | 20.5 | 21.9 |
| R32 | Mass% | 36.8 | 44.2 | 51.7 | 39.7 |
| R1234yf | Mass% | 40.6 | 34.6 | 27.8 | 38.4 |
| GWP | - | 250 | 300 | 350 | 270 |
| COP Ratio | % (relative to R410A) | 100.4 | 100.5 | 100.6 | 100.4 |
| Refrigerating Capacity Ratio | % (relative to R410A) | 91.0 | 95.0 | 99.1 | 92.5 |

Table 122

| Item | Unit | Comparative Example 15 | Comparative Example 16 | Comparative Example 17 | Comparative Example 18 | Example 27 | Example 28 | Comparative Example 19 | Comparative Example 20 |
|---|---|---|---|---|---|---|---|---|---|
| HFO-1132(E) | Mass% | 10.0 | 20.0 | 30.0 | 40.0 | 50.0 | 60.0 | 70.0 | 80.0 |
| R32 | Mass% | 5.0 | 5.0 | 5.0 | 5.0 | 5.0 | 5.0 | 5.0 | 5.0 |
| R1234yf | Mass% | 85.0 | 75.0 | 65.0 | 55.0 | 45.0 | 35.0 | 25.0 | 15.0 |
| GWP | - | 37 | 37 | 37 | 36 | 36 | 36 | 35 | 35 |
| COP Ratio | % (relative to R410A) | 103.4 | 102.6 | 101.6 | 100.8 | 100.2 | 99.8 | 99.6 | 99.4 |
| Refrigerating Capacity Ratio | % (relative to R410A) | 56.4 | 63.3 | 69.5 | 75.2 | 80.5 | 85.4 | 90.1 | 94.4 |

Table 123

| Item | Unit | Comparative Example 21 | Comparative Example 22 | Example 29 | Comparative Example 23 | Example 30 | Comparative Example 24 | Comparative Example 25 | Comparative Example 26 |
|---|---|---|---|---|---|---|---|---|---|
| HFO-1132 (E) | Mass% | 10.0 | 20.0 | 30.0 | 40.0 | 50.0 | 60.0 | 70.0 | 80.0 |
| R32 | Mass% | 10.0 | 10.0 | 10.0 | 10.0 | 10.0 | 10.0 | 10.0 | 10.0 |
| R1234yf | Mass% | 80.0 | 70.0 | 60.0 | 50.0 | 40.0 | 30.0 | 20.0 | 10.0 |
| GWP | - | 71 | 71 | 70 | 70 | 70 | 69 | 69 | 69 |
| COP Ratio | % (relative to R410A) | 103.1 | 102.1 | 101.1 | 100.4 | 99.8 | 99.5 | 99.2 | 99.1 |
| Refrigerating Capacity Ratio | % (relative to R410A) | 61.8 | 68.3 | 74.3 | 79.7 | 84.9 | 89.7 | 94.2 | 98.4 |

Table 124

| Item | Unit | Comparative Example 27 | Example 31 | Comparative Example 28 | Example 32 | Example 33 | Comparative Example 29 | Comparative Example 30 | Comparative Example 31 |
|---|---|---|---|---|---|---|---|---|---|
| HFO-1132(E) | Mass% | 10.0 | 20.0 | 30.0 | 40.0 | 50.0 | 60.0 | 70.0 | 80.0 |
| R32 | Mass% | 15.0 | 15.0 | 15.0 | 15.0 | 15.0 | 15.0 | 15.0 | 15.0 |
| R1234yf | Mass% | 75.0 | 65.0 | 55.0 | 45.0 | 35.0 | 25.0 | 15.0 | 5.0 |
| GWP | - | 104 | 104 | 104 | 103 | 103 | 103 | 103 | 102 |
| COP Ratio | %(relative to R410A) | 102.7 | 101.6 | 100.7 | 100.0 | 99.5 | 99.2 | 99.0 | 98.9 |
| Refrigerating Capacity Ratio | %(relative to R410A) | 66.6 | 72.9 | 78.6 | 84.0 | 89.0 | 93.7 | 98.1 | 102.2 |

111

Table 125

| Item | Unit | Comparative Example 32 | Comparative Example 33 | Comparative Example 34 | Comparative Example 35 | Comparative Example 36 | Comparative Example 37 | Comparative Example 38 | Comparative Example 39 |
|---|---|---|---|---|---|---|---|---|---|
| HFO-1132(E) | Mass% | 10.0 | 20.0 | 30.0 | 40.0 | 50.0 | 60.0 | 70.0 | 10.0 |
| R32 | Mass% | 20.0 | 20.0 | 20.0 | 20.0 | 20.0 | 20.0 | 20.0 | 25.0 |
| R1234yf | Mass% | 70.0 | 60.0 | 50.0 | 40.0 | 30.0 | 20.0 | 10.0 | 65.0 |
| GWP | - | 138 | 138 | 137 | 137 | 137 | 136 | 136 | 171 |
| COP Ratio | % (relative to R410A) | 102.3 | 101.2 | 100.4 | 99.7 | 99.3 | 99.0 | 98.8 | 101.9 |
| Refrigerating Capacity Ratio | % (relative to R410A) | 71.0 | 77.1 | 82.7 | 88.0 | 92.9 | 97.5 | 101.7 | 75.0 |

Table 126

| Item | Unit | Example 34 | Comparative Example 40 | Comparative Example 41 | Comparative Example 42 | Comparative Example 43 | Comparative Example 44 | Comparative Example 45 | Example 35 |
|---|---|---|---|---|---|---|---|---|---|
| HFO-1132 (E) | Mass% | 20.0 | 30.0 | 40.0 | 50.0 | 60.0 | 70.0 | 10.0 | 20.0 |
| R32 | Mass% | 25.0 | 25.0 | 25.0 | 25.0 | 25.0 | 25.0 | 30.0 | 30.0 |
| R1234yf | Mass% | 55.0 | 45.0 | 35.0 | 25.0 | 15.0 | 5.0 | 60.0 | 50.0 |
| GWP | - | 171 | 171 | 171 | 170 | 170 | 170 | 205 | 205 |
| COP Ratio | % (relative to R410A) | 100.9 | 100.1 | 99.6 | 99.2 | 98.9 | 98.7 | 101.6 | 100.7 |
| Refrigerating Capacity Ratio | % (relative to R410A) | 81.0 | 86.6 | 91.7 | 96.5 | 101.0 | 105.2 | 78.9 | 84.8 |

Table 127

| Item | Unit | Comparative Example 46 | Comparative Example 47 | Comparative Example 48 | Comparative Example 49 | Example 36 | Example 37 | Example 38 | Comparative Example 50 |
|---|---|---|---|---|---|---|---|---|---|
| HFO-1132(E) | Mass% | 30.0 | 40.0 | 50.0 | 60.0 | 10.0 | 20.0 | 30.0 | 40.0 |
| R32 | Mass% | 30.0 | 30.0 | 30.0 | 30.0 | 35.0 | 35.0 | 35.0 | 35.0 |
| R1234yf | Mass% | 40.0 | 30.0 | 20.0 | 10.0 | 55.0 | 45.0 | 35.0 | 25.0 |
| GWP | - | 204 | 204 | 204 | 204 | 239 | 238 | 238 | 238 |
| COP Ratio | %(relative to R410A) | 100.0 | 99.5 | 99.1 | 98.8 | 101.4 | 100.6 | 99.9 | 99.4 |
| Refrigerating Capacity Ratio | %(relative to R410A) | 90.2 | 95.3 | 100.0 | 104.4 | 82.5 | 88.3 | 93.7 | 98.6 |

Table 128

| Item | Unit | Comparative Example 51 | Comparative Example 52 | Comparative Example 53 | Comparative Example 54 | Example 39 | Comparative Example 55 | Comparative Example 56 | Comparative Example 57 |
|---|---|---|---|---|---|---|---|---|---|
| HFO-1132(E) | Mass% | 50.0 | 60.0 | 10.0 | 20.0 | 30.0 | 40.0 | 50.0 | 10.0 |
| R32 | Mass% | 35.0 | 35.0 | 40.0 | 40.0 | 40.0 | 40.0 | 40.0 | 45.0 |
| R1234yf | Mass% | 15.0 | 5.0 | 50.0 | 40.0 | 30.0 | 20.0 | 10.0 | 45.0 |
| GWP | - | 237 | 237 | 272 | 272 | 272 | 271 | 271 | 306 |
| COP Ratio | % (relative to R410A) | 99.0 | 98.8 | 101.3 | 100.6 | 99.9 | 99.4 | 99.0 | 101.3 |
| Refrigerating Capacity Ratio | % (relative to R410A) | 103.2 | 107.5 | 86.0 | 91.7 | 96.9 | 101.8 | 106.3 | 89.3 |

Table 129

| Item | Unit | Example 40 | Example 41 | Comparative Example 58 | Comparative Example 59 | Comparative Example 60 | Example 42 | Comparative Example 61 | Comparative Example 62 |
|---|---|---|---|---|---|---|---|---|---|
| HFO-1132(E) | Mass% | 20.0 | 30.0 | 40.0 | 50.0 | 10.0 | 20.0 | 30.0 | 40.0 |
| R32 | Mass% | 45.0 | 45.0 | 45.0 | 45.0 | 50.0 | 50.0 | 50.0 | 50.0 |
| R1234yf | Mass% | 35.0 | 25.0 | 15.0 | 5.0 | 40.0 | 30.0 | 20.0 | 10.0 |
| GWP | - | 305 | 305 | 305 | 304 | 339 | 339 | 339 | 338 |
| COP Ratio | %(relative to R410A) | 100.6 | 100.0 | 99.5 | 99.1 | 101.3 | 100.6 | 100.0 | 99.5 |
| Refrigerating Capacity Ratio | %(relative to R410A) | 94.9 | 100.0 | 104.7 | 109.2 | 92.4 | 97.8 | 102.9 | 107.5 |

Table 130

| Item | Unit | Comparative Example 63 | Comparative Example 64 | Comparative Example 65 | Comparative Example 66 | Example 43 | Example 44 | Example 45 | Example 46 |
|---|---|---|---|---|---|---|---|---|---|
| HFO-1132(E) | Mass% | 10.0 | 20.0 | 30.0 | 40.0 | 56.0 | 59.0 | 62.0 | 65.0 |
| R32 | Mass% | 55.0 | 55.0 | 55.0 | 55.0 | 3.0 | 3.0 | 3.0 | 3.0 |
| R1234yf | Mass% | 35.0 | 25.0 | 15.0 | 5.0 | 41.0 | 38.0 | 35.0 | 32.0 |
| GWP | - | 373 | 372 | 372 | 372 | 22 | 22 | 22 | 22 |
| COP Ratio | %(relative to R410A) | 101.4 | 100.7 | 100.1 | 99.6 | 100.1 | 100.0 | 99.9 | 99.8 |
| Refrigerating Capacity Ratio | %(relative to R410A) | 95.3 | 100.6 | 105.6 | 110.2 | 81.7 | 83.2 | 84.6 | 86.0 |

Table 131

| Item | Unit | Example 47 | Example 48 | Example 49 | Example 50 | Example 51 | Example 52 | Example 53 | Example 54 |
|------|------|-----------|-----------|-----------|-----------|-----------|-----------|-----------|-----------|
| HFO-1132(E) | Mass% | 49.0 | 52.0 | 55.0 | 58.0 | 61.0 | 43.0 | 46.0 | 49.0 |
| R32 | Mass% | 6.0 | 6.0 | 6.0 | 6.0 | 6.0 | 9.0 | 9.0 | 9.0 |
| R1234yf | Mass% | 45.0 | 42.0 | 39.0 | 36.0 | 33.0 | 48.0 | 45.0 | 42.0 |
| GWP | - | 43 | 43 | 43 | 43 | 42 | 63 | 63 | 63 |
| COP Ratio | %(relative to R410A) | 100.2 | 100.0 | 99.9 | 99.8 | 99.7 | 100.3 | 100.1 | 99.9 |
| Refrigerating Capacity Ratio | %(relative to R410A) | 80.9 | 82.4 | 83.9 | 85.4 | 86.8 | 80.4 | 82.0 | 83.5 |

Table 132

| Item | Unit | Example 55 | Example 56 | Example 57 | Example 58 | Example 59 | Example 60 | Example 61 | Example 62 |
|---|---|---|---|---|---|---|---|---|---|
| HFO-1132(E) | Mass% | 52.0 | 55.0 | 58.0 | 38.0 | 41.0 | 44.0 | 47.0 | 50.0 |
| R32 | Mass% | 9.0 | 9.0 | 9.0 | 12.0 | 12.0 | 12.0 | 12.0 | 12.0 |
| R1234yf | Mass% | 39.0 | 36.0 | 33.0 | 50.0 | 47.0 | 44.0 | 41.0 | 38.0 |
| GWP | - | 63 | 63 | 63 | 83 | 83 | 83 | 83 | 83 |
| COP Ratio | %(relative to R410A) | 99.8 | 99.7 | 99.6 | 100.3 | 100.1 | 100.0 | 99.8 | 99.7 |
| Refrigerating Capacity Ratio | %(relative to R410A) | 85.0 | 86.5 | 87.9 | 80.4 | 82.0 | 83.5 | 85.1 | 86.6 |

Table 133

| Item | Unit | Example 63 | Example 64 | Example 65 | Example 66 | Example 67 | Example 68 | Example 69 | Example 70 |
|---|---|---|---|---|---|---|---|---|---|
| HFO-1132(E) | Mass% | 53.0 | 33.0 | 36.0 | 39.0 | 42.0 | 45.0 | 48.0 | 51.0 |
| R32 | Mass% | 12.0 | 15.0 | 15.0 | 15.0 | 15.0 | 15.0 | 15.0 | 15.0 |
| R1234yf | Mass% | 35.0 | 52.0 | 49.0 | 46.0 | 43.0 | 40.0 | 37.0 | 34.0 |
| GWP | - | 83 | 104 | 104 | 103 | 103 | 103 | 103 | 103 |
| COP Ratio | %(relative to R410A) | 99.6 | 100.5 | 100.3 | 100.1 | 99.9 | 99.7 | 99.6 | 99.5 |
| Refrigerating Capacity Ratio | %(relative to R410A) | 88.0 | 80.3 | 81.9 | 83.5 | 85.0 | 86.5 | 88.0 | 89.5 |

Table 134

| Item | Unit | Example 71 | Example 72 | Example 73 | Example 74 | Example 75 | Example 76 | Example 77 | Example 78 |
|---|---|---|---|---|---|---|---|---|---|
| HFO-1132(E) | Mass% | 29.0 | 32.0 | 35.0 | 38.0 | 41.0 | 44.0 | 47.0 | 36.0 |
| R32 | Mass% | 18.0 | 18.0 | 18.0 | 18.0 | 18.0 | 18.0 | 18.0 | 3.0 |
| R1234yf | Mass% | 53.0 | 50.0 | 47.0 | 44.0 | 41.0 | 38.0 | 35.0 | 61.0 |
| GWP | - | 124 | 124 | 124 | 124 | 124 | 123 | 123 | 23 |
| COP Ratio | %(relative to R410A) | 100.6 | 100.3 | 100.1 | 99.9 | 99.8 | 99.6 | 99.5 | 101.3 |
| Refrigerating Capacity Ratio | %(relative to R410A) | 80.6 | 82.2 | 83.8 | 85.4 | 86.9 | 88.4 | 89.9 | 71.0 |

Table 135

| Item | Unit | Example 79 | Example 80 | Example 81 | Example 82 | Example 83 | Example 84 | Example 85 | Example 86 |
|------|------|-----------|-----------|-----------|-----------|-----------|-----------|-----------|-----------|
| HFO-1132(E) | Mass% | 39.0 | 42.0 | 30.0 | 33.0 | 36.0 | 26.0 | 29.0 | 32.0 |
| R32 | Mass% | 3.0 | 3.0 | 6.0 | 6.0 | 6.0 | 9.0 | 9.0 | 9.0 |
| R1234yf | Mass% | 58.0 | 55.0 | 64.0 | 61.0 | 58.0 | 65.0 | 62.0 | 59.0 |
| GWP | - | 23 | 23 | 43 | 43 | 43 | 64 | 64 | 63 |
| COP Ratio | %(relative to R410A) | 101.1 | 100.9 | 101.5 | 101.3 | 101.0 | 101.6 | 101.3 | 101.1 |
| Refrigerating Capacity Ratio | %(relative to R410A) | 72.7 | 74.4 | 70.5 | 72.2 | 73.9 | 71.0 | 72.8 | 74.5 |

Table 136

| Item | Unit | Example 87 | Example 88 | Example 89 | Example 90 | Example 91 | Example 92 | Example 93 | Example 94 |
|---|---|---|---|---|---|---|---|---|---|
| HFO-1132(E) | Mass% | 21.0 | 24.0 | 27.0 | 30.0 | 16.0 | 19.0 | 22.0 | 25.0 |
| R32 | Mass% | 12.0 | 12.0 | 12.0 | 12.0 | 15.0 | 15.0 | 15.0 | 15.0 |
| R1234yf | Mass% | 67.0 | 64.0 | 61.0 | 58.0 | 69.0 | 66.0 | 63.0 | 60.0 |
| GWP | - | 84 | 84 | 84 | 84 | 104 | 104 | 104 | 104 |
| COP Ratio | %(relative to R410A) | 101.8 | 101.5 | 101.2 | 101.0 | 102.1 | 101.8 | 101.4 | 101.2 |
| Refrigerating Capacity Ratio | %(relative to R410A) | 70.8 | 72.6 | 74.3 | 76.0 | 70.4 | 72.3 | 74.0 | 75.8 |

Table 137

| Item | Unit | Example 95 | Example 96 | Example 97 | Example 98 | Example 99 | Example 100 | Example 101 | Example 102 |
|---|---|---|---|---|---|---|---|---|---|
| HFO-1132(E) | Mass% | 28.0 | 12.0 | 15.0 | 18.0 | 21.0 | 24.0 | 27.0 | 25.0 |
| R32 | Mass% | 15.0 | 18.0 | 18.0 | 18.0 | 18.0 | 18.0 | 18.0 | 21.0 |
| R1234yf | Mass% | 57.0 | 70.0 | 67.0 | 64.0 | 61.0 | 58.0 | 55.0 | 54.0 |
| GWP | - | 104 | 124 | 124 | 124 | 124 | 124 | 124 | 144 |
| COP Ratio | %(relative to R410A) | 100.9 | 102.2 | 101.9 | 101.6 | 101.3 | 101.0 | 100.7 | 100.7 |
| Refrigerating Capacity Ratio | %(relative to R410A) | 77.5 | 70.5 | 72.4 | 74.2 | 76.0 | 77.7 | 79.4 | 80.7 |

Table 138

| Item | Unit | Example 103 | Example 104 | Example 105 | Example 106 | Example 107 | Example 108 | Example 109 | Example 110 |
|---|---|---|---|---|---|---|---|---|---|
| HFO-1132(E) | Mass% | 21.0 | 24.0 | 17.0 | 20.0 | 23.0 | 13.0 | 16.0 | 19.0 |
| R32 | Mass% | 24.0 | 24.0 | 27.0 | 27.0 | 27.0 | 30.0 | 30.0 | 30.0 |
| R1234yf | Mass% | 55.0 | 52.0 | 56.0 | 53.0 | 50.0 | 57.0 | 54.0 | 51.0 |
| GWP | - | 164 | 164 | 185 | 185 | 184 | 205 | 205 | 205 |
| COP Ratio | %(relative to R410A) | 100.9 | 100.6 | 101.1 | 100.8 | 100.6 | 101.3 | 101.0 | 100.8 |
| Refrigerating Capacity Ratio | %(relative to R410A) | 80.8 | 82.5 | 80.8 | 82.5 | 84.2 | 80.7 | 82.5 | 84.2 |

Table 139

| Item | Unit | Example 111 | Example 112 | Example 113 | Example 114 | Example 115 | Example 116 | Example 117 | Example 118 |
|---|---|---|---|---|---|---|---|---|---|
| HFO-1132(E) | Mass% | 22.0 | 9.0 | 12.0 | 15.0 | 18.0 | 21.0 | 8.0 | 12.0 |
| R32 | Mass% | 30.0 | 33.0 | 33.0 | 33.0 | 33.0 | 33.0 | 36.0 | 36.0 |
| R1234yf | Mass% | 48.0 | 58.0 | 55.0 | 52.0 | 49.0 | 46.0 | 56.0 | 52.0 |
| GWP | - | 205 | 225 | 225 | 225 | 225 | 225 | 245 | 245 |
| COP Ratio | %(relative to R410A) | 100.5 | 101.6 | 101.3 | 101.0 | 100.8 | 100.5 | 101.6 | 101.2 |
| Refrigerating Capacity Ratio | %(relative to R410A) | 85.9 | 80.5 | 82.3 | 84.1 | 85.8 | 87.5 | 82.0 | 84.4 |

Table 140

| Item | Unit | Example 119 | Example 120 | Example 121 | Example 122 | Example 123 | Example 124 | Example 125 | Example 126 |
|---|---|---|---|---|---|---|---|---|---|
| HFO-1132(E) | Mass% | 15.0 | 18.0 | 21.0 | 42.0 | 39.0 | 34.0 | 37.0 | 30.0 |
| R32 | Mass% | 36.0 | 36.0 | 36.0 | 25.0 | 28.0 | 31.0 | 31.0 | 34.0 |
| R1234yf | Mass% | 49.0 | 46.0 | 43.0 | 33.0 | 33.0 | 35.0 | 32.0 | 36.0 |
| GWP | - | 245 | 245 | 245 | 170 | 191 | 211 | 211 | 231 |
| COP Ratio | %(relative to R410A) | 101.0 | 100.7 | 100.5 | 99.5 | 99.5 | 99.8 | 99.6 | 99.9 |
| Refrigerating Capacity Ratio | %(relative to R410A) | 86.2 | 87.9 | 89.6 | 92.7 | 93.4 | 93.0 | 94.5 | 93.0 |

Table 141

| Item | Unit | Example 127 | Example 128 | Example 129 | Example 130 | Example 131 | Example 132 | Example 133 | Example 134 |
|---|---|---|---|---|---|---|---|---|---|
| HFO-1132(E) | Mass% | 33.0 | 36.0 | 24.0 | 27.0 | 30.0 | 33.0 | 23.0 | 26.0 |
| R32 | Mass% | 34.0 | 34.0 | 37.0 | 37.0 | 37.0 | 37.0 | 40.0 | 40.0 |
| R1234yf | Mass% | 33.0 | 30.0 | 39.0 | 36.0 | 33.0 | 30.0 | 37.0 | 34.0 |
| GWP | - | 231 | 231 | 252 | 251 | 251 | 251 | 272 | 272 |
| COP Ratio | %(relative to R410A) | 99.8 | 99.6 | 100.3 | 100.1 | 99.9 | 99.8 | 100.4 | 100.2 |
| Refrigerating Capacity Ratio | %(relative to R410A) | 94.5 | 96.0 | 91.9 | 93.4 | 95.0 | 96.5 | 93.3 | 94.9 |

Table 142

| Item | Unit | Example 135 | Example 136 | Example 137 | Example 138 | Example 139 | Example 140 | Example 141 | Example 142 |
|---|---|---|---|---|---|---|---|---|---|
| HFO-1132(E) | Mass% | 29.0 | 32.0 | 19.0 | 22.0 | 25.0 | 28.0 | 31.0 | 18.0 |
| R32 | Mass% | 40.0 | 40.0 | 43.0 | 43.0 | 43.0 | 43.0 | 43.0 | 46.0 |
| R1234yf | Mass% | 31.0 | 28.0 | 38.0 | 35.0 | 32.0 | 29.0 | 26.0 | 36.0 |
| GWP | - | 272 | 271 | 292 | 292 | 292 | 292 | 292 | 312 |
| COP Ratio | %(relative to R410A) | 100.0 | 99.8 | 100.6 | 100.4 | 100.2 | 100.1 | 99.9 | 100.7 |
| Refrigerating Capacity Ratio | %(relative to R410A) | 96.4 | 97.9 | 93.1 | 94.7 | 96.2 | 97.8 | 99.3 | 94.4 |

Table 143

| Item | Unit | Example 143 | Example 144 | Example 145 | Example 146 | Example 147 | Example 148 | Example 149 | Example 150 |
|---|---|---|---|---|---|---|---|---|---|
| HFO-1132(E) | Mass% | 21.0 | 23.0 | 26.0 | 29.0 | 13.0 | 16.0 | 19.0 | 22.0 |
| R32 | Mass% | 46.0 | 46.0 | 46.0 | 46.0 | 49.0 | 49.0 | 49.0 | 49.0 |
| R1234yf | Mass% | 33.0 | 31.0 | 28.0 | 25.0 | 38.0 | 35.0 | 32.0 | 29.0 |
| GWP | - | 312 | 312 | 312 | 312 | 332 | 332 | 332 | 332 |
| COP Ratio | %(relative to R410A) | 100.5 | 100.4 | 100.2 | 100.0 | 101.1 | 100.9 | 100.7 | 100.5 |
| Refrigerating Capacity Ratio | %(relative to R410A) | 96.0 | 97.0 | 98.6 | 100.1 | 93.5 | 95.1 | 96.7 | 98.3 |

Table 144

| Item | Unit | Example 151 | Example 152 |
|---|---|---|---|
| HFO-1132(E) | Mass% | 25.0 | 28.0 |
| R32 | Mass% | 49.0 | 49.0 |
| R1234yf | Mass% | 26.0 | 23.0 |
| GWP | - | 332 | 332 |
| COP Ratio | %(relative to R410A) | 100.3 | 100.1 |
| Refrigerating Capacity Ratio | %(relative to R410A) | 99.8 | 101.3 |

The results also indicate that under the condition that the mass% of HFO-1132(E), R32, and R1234yf based on their sum is respectively represented by x, y, and z, when coordinates (x,y,z) in a ternary composition diagram in which the sum of HFO-1132(E), R32, and R1234yf is 100 mass% are within the range of a figure surrounded by line segments IJ, JN, NE, and EI that connect the following 4 points:

point I (72.0, 0.0, 28.0),
point J (48.5, 18.3, 33.2),
point N (27.7, 18.2, 54.1), and
point E (58.3, 0.0, 41.7),

or on these line segments (excluding the points on the line segment EI),

the line segment IJ is represented by coordinates $(0.0236y^2-1.7616y+72.0, y, -0.0236y^2+0.7616y+28.0)$,
the line segment NE is represented by coordinates $(0.012y^2-1.9003y+58.3, y, -0.012y^2+0.9003y+41.7)$, and
the line segments JN and EI are straight lines, the refrigerant D has a refrigerating capacity ratio of 80% or more relative to R410A, a GWP of 125 or less, and a WCF lower flammability.

The results also indicate that under the condition that the mass% of HFO-1132(E), R32, and R1234yf based on their sum is respectively represented by x, y, and z, when coordinates (x,y,z) in a ternary composition diagram in which the sum of HFO-1132(E), R32, and R1234yf is 100 mass% are within the range of a figure surrounded by line segments MM', M'N, NV, VG, and GM that connect the following 5 points:

point M (52.6, 0.0, 47.4),
point M' (39.2, 5.0, 55.8),
point N (27.7, 18.2, 54.1),
point V (11.0, 18.1, 70.9), and
point G (39.6, 0.0, 60.4),

or on these line segments (excluding the points on the line segment GM),

the line segment MM' is represented by coordinates $(x, 0.132x^2-3.34x+52.6, -0.132x^2+2.34x+47.4)$,
the line segment M'N is represented by coordinates $(x, 0.0313x^2-1.4551x+43.824, -0.0313x^2+0.4551x+56.176)$,
the line segment VG is represented by coordinates $(0.0123y^2-1.8033y+39.6, y, -0.0123y^2+0.8033y+60.4)$, and
the line segments NV and GM are straight lines, the refrigerant D according to the present disclosure has a refrigerating capacity ratio of 70% or more relative to R410A, a GWP of 125 or less, and an ASHRAE lower flammability.

The results also indicate that under the condition that the mass% of HFO-1132(E), R32, and R1234yf based on their sum is respectively represented by x, y, and z, when coordinates (x,y,z) in a ternary composition diagram in which the sum of HFO-1132(E), R32, and R1234yf is 100 mass% are within the range of a figure surrounded by line segments ON, NU, and UO that connect the following 3 points:

point O (22.6, 36.8, 40.6),
point N (27.7, 18.2, 54.1), and
point U (3.9, 36.7, 59.4),

or on these line segments,

the line segment ON is represented by coordinates ($0.0072y^2$-$0.6701y$+$37.512$, y, -$0.0072y^2$-$0.3299y$+$62.488$),
the line segment NU is represented by coordinates ($0.0083y^2$-$1.7403y$+$56.635$, y, -$0.0083y^2$+$0.7403y$+$43.365$), and
the line segment UO is a straight line, the refrigerant D according to the present disclosure has a refrigerating capacity ratio of 80% or more relative to R410A, a GWP of 250 or less, and an ASHRAE lower flammability.

The results also indicate that under the condition that the mass% of HFO-1132(E), R32, and R1234yf based on their sum is respectively represented by x, y, and z, when coordinates (x,y,z) in a ternary composition diagram in which the sum of HFO-1132(E), R32, and R1234yf is 100 mass% are within the range of a figure surrounded by line segments QR, RT, TL, LK, and KQ that connect the following 5 points:

point Q (44.6, 23.0, 32.4),
point R (25.5, 36.8, 37.7),
point T (8.6, 51.6, 39.8),
point L (28.9, 51.7, 19.4), and
point K (35.6, 36.8, 27.6),

or on these line segments,

the line segment QR is represented by coordinates ($0.0099y^2$-$1.975y$+$84.765$, y, -$0.0099y^2$+$0.975y$+$15.235$),
the line segment RT is represented by coordinates ($0.082y^2$-$1.8683y$+$83.126$, y, -$0.082y^2$+$0.8683y$+$16.874$),
the line segment LK is represented by coordinates ($0.0049y^2$-$0.8842y$+$61.488$, y, -$0.0049y^2$-$0.1158y$+$38.512$),
the line segment KQ is represented by coordinates ($0.0095y^2$-$1.2222y$+$67.676$, y, -$0.0095y^2$+$0.2222y$+$32.324$), and
the line segment TL is a straight line, the refrigerant D according to the present disclosure has a refrigerating capacity ratio of 92.5% or more relative to R410A, a GWP of 350 or less, and a WCF lower flammability.

The results further indicate that under the condition that the mass% of HFO-1132(E), R32, and R1234yf based on their sum is respectively represented by x, y, and z, when coordinates (x,y,z) in a ternary composition diagram in which the sum of HFO-1132(E), R32, and R1234yf is 100 mass% are within the range of a figure surrounded by line segments PS, ST, and TP that connect the following 3 points:

point P (20.5, 51.7, 27.8),
point S (21.9, 39.7, 38.4), and
point T (8.6, 51.6, 39.8),

or on these line segments,

the line segment PS is represented by coordinates ($0.0064y^2$-$0.7103y$+$40.1$, y, -$0.0064y^2$-$0.2897y$+$59.9$),
the line segment ST is represented by coordinates ($0.082y^2$-$1.8683y$+$83.126$, y, -$0.082y^2$+$0.8683y$+$16.874$), and
the line segment TP is a straight line, the refrigerant D according to the present disclosure has a refrigerating capacity ratio of 92.5% or more relative to R410A, a GWP of 350 or less, and an ASHRAE lower flammability.

(5-5) Refrigerant E

The refrigerant E according to the present disclosure is a mixed refrigerant comprising trans-1,2-difluoroethylene (HFO-1132(E)), trifluoroethylene (HFO-1123), and difluoromethane (R32).
The refrigerant E according to the present disclosure has various properties that are desirable as an R410A-alternative refrigerant, i.e., a coefficient of performance equivalent to that of R410A and a sufficiently low GWP.
The refrigerant E according to the present disclosure is preferably a refrigerant wherein

when the mass% of HFO-1132(E), HFO-1123, and R32 based on their sum is respectively represented by x, y, and z, coordinates (x,y,z) in a ternary composition diagram in which the sum of HFO-1132(E), HFO-1123, and R32 is 100 mass% are within the range of a figure surrounded by line segments IK, KB', B'H, HR, RG, and GI that connect the following 6 points:

point I (72.0, 28.0, 0.0),
point K (48.4, 33.2, 18.4),

point B' (0.0, 81.6, 18.4),
point H (0.0, 84.2, 15.8),
point R (23.1, 67.4, 9.5), and
point G (38.5, 61.5, 0.0),

or on these line segments (excluding the points on the line segments B'H and GI);
the line segment IK is represented by coordinates
$(0.025z^2-1.7429z+72.00, -0.025z^2+0.7429z+28.0, z)$,
the line segment HR is represented by coordinates
$(-0.3123z^2+4.234z+11.06, 0.3123z^2-5.234z+88.94, z)$,
the line segment RG is represented by coordinates
$(-0.0491z^2-1.1544z+38.5, 0.0491z^2+0.1544z+61.5, z)$, and
the line segments KB' and GI are straight lines. When the requirements above are satisfied, the refrigerant according to the present disclosure has WCF lower flammability, a COP ratio of 93% or more relative to that of R410A, and a GWP of 125 or less.

The refrigerant E according to the present disclosure is preferably a refrigerant wherein
when the mass% of HFO-1132(E), HFO-1123, and R32 based on their sum is respectively represented by x, y, and z, coordinates (x,y,z) in a ternary composition diagram in which the sum of HFO-1132(E), HFO-1123, and R32 is 100 mass% are within the range of a figure surrounded by line segments IJ, JR, RG, and GI that connect the following 4 points:

point I (72.0, 28.0, 0.0),
point J (57.7, 32.8, 9.5),
point R (23.1, 67.4, 9.5), and
point G (38.5, 61.5, 0.0),

or on these line segments (excluding the points on the line segment GI);

the line segment IJ is represented by coordinates
$(0.025z^2-1.7429z+72.0, -0.025z^2+0.7429z+28.0, z)$,
the line segment RG is represented by coordinates
$(-0.0491z^2-1.1544z+38.5, 0.0491z^2+0.1544z+61.5, z)$, and
the line segments JR and GI are straight lines. When the requirements above are satisfied, the refrigerant according to the present disclosure has WCF lower flammability, a COP ratio of 93% or more relative to that of R410A, and a GWP of 125 or less.

The refrigerant E according to the present disclosure is preferably a refrigerant wherein

when the mass% of HFO-1132(E), HFO-1123, and R32 based on their sum is respectively represented by x, y, and z, coordinates (x,y,z) in a ternary composition diagram in which the sum of HFO-1132(E), HFO-1123, and R32 is 100 mass% are within the range of a figure surrounded by line segments MP, PB', B'H, HR, RG, and GM that connect the following 6 points:

point M (47.1, 52.9, 0.0),
point P (31.8, 49.8, 18.4),
point B' (0.0, 81.6, 18.4),
point H (0.0, 84.2, 15.8),
point R (23.1, 67.4, 9.5), and
point G (38.5, 61.5, 0.0),

or on these line segments (excluding the points on the line segments B'H and GM);
the line segment MP is represented by coordinates
$(0.0083z^2-0.984z+47.1, -0.0083z^2-0.016z+52.9, z)$,
the line segment HR is represented by coordinates
$(-0.3123z^2+4.234z+11.06, 0.3123z^2-5.234z+88.94, z)$,
the line segment RG is represented by coordinates
$(-0.0491z^2-1.1544z+38.5, 0.0491z^2+0.1544z+61.5, z)$, and
the line segments PB' and GM are straight lines. When the requirements above are satisfied, the refrigerant according

133

to the present disclosure has ASHRAE lower flammability, a COP ratio of 93% or more relative to that of R410A, and a GWP of 125 or less.

The refrigerant E according to the present disclosure is preferably a refrigerant wherein

when the mass% of HFO-1132(E), HFO-1123, and R32 based on their sum is respectively represented by x, y, and z, coordinates (x,y,z) in a ternary composition diagram in which the sum of HFO-1132(E), HFO-1123, and R32 is 100 mass% are within the range of a figure surrounded by line segments MN, NR, RG, and GM that connect the following 4 points:

    point M (47.1, 52.9, 0.0),
    point N (38.5, 52.1, 9.5),
    point R (23.1, 67.4, 9.5), and
    point G (38.5, 61.5, 0.0),

or on these line segments (excluding the points on the line segment GM);
the line segment MN is represented by coordinates
$(0.0083z^2-0.984z+47.1, -0.0083z^2-0.016z+52.9, z)$,
the line segment RG is represented by coordinates
$(-0.0491z^2-1.1544z+38.5, 0.0491z^2+0.1544z+61.5, z)$,
the line segments NR and GM are straight lines. When the requirements above are satisfied, the refrigerant according to the present disclosure has ASHRAE lower flammability, a COP ratio of 93% or more relative to that of R410A, and a GWP of 65 or less.

The refrigerant E according to the present disclosure is preferably a refrigerant wherein

when the mass% of HFO-1132(E), HFO-1123, and R32 based on their sum is respectively represented by x, y, and z, coordinates (x,y,z) in a ternary composition diagram in which the sum of HFO-1132(E), HFO-1123, and R32 is 100 mass% are within the range of a figure surrounded by line segments PS, ST, and TP that connect the following 3 points:

    point P (31.8, 49.8, 18.4),
    point S (25.4, 56.2, 18.4), and
    point T (34.8, 51.0, 14.2),

or on these line segments;
the line segment ST is represented by coordinates
$(-0.0982z^2+0.9622z+40.931, 0.0982z^2-1.9622z+59.069, z)$,
the line segment TP is represented by coordinates
$(0.0083z^2-0.984z+47.1, -0.0083z^2-0.016z+52.9, z)$, and
the line segment PS is a straight line. When the requirements above are satisfied, the refrigerant according to the present disclosure has ASHRAE lower flammability, a COP ratio of 94.5% or more relative to that of R410A, and a GWP of 125 or less.

The refrigerant E according to the present disclosure is preferably a refrigerant wherein

when the mass% of HFO-1132(E), HFO-1123, and R32 based on their sum is respectively represented by x, y, and z, coordinates (x,y,z) in a ternary composition diagram in which the sum of HFO-1132(E), HFO-1123, and R32 is 100 mass% are within the range of a figure surrounded by line segments QB", B"D, DU, and UQ that connect the following 4 points:

    point Q (28.6, 34.4, 37.0),
    point B" (0.0, 63.0, 37.0),
    point D (0.0, 67.0, 33.0), and
    point U (28.7, 41.2, 30.1),

or on these line segments (excluding the points on the line segment B"D);
the line segment DU is represented by coordinates

$(-3.4962z^2+210.71z-3146.1, 3.4962z^2-211.71z+3246.1, z)$,
the line segment UQ is represented by coordinates
$(0.0135z^2-0.9181z+44.133, -0.0135z^2-0.0819z+55.867, z)$, and
the line segments QB" and B"D are straight lines. When the requirements above are satisfied, the refrigerant according to the present disclosure has ASHRAE lower flammability, a COP raito of 96% or more relative to that of R410A, and a GWP of 250 or less.

The refrigerant E according to the present disclosure is preferably a refrigerant wherein

when the mass% of HFO-1132(E), HFO-1123, and R32 based on their sum is respectively represented by x, y, and z, coordinates (x,y,z) in a ternary composition diagram in which the sum of HFO-1132(E), HFO-1123, and R32 is 100 mass% are within the range of a figure surrounded by line segments Oc', c'd', d'e', e'a', and a'O that connect the following 5 points:

point O (100.0, 0.0, 0.0),
point c' (56.7, 43.3, 0.0),
point d' (52.2, 38.3, 9.5),
point e' (41.8, 39.8, 18.4), and
point a' (81.6, 0.0, 18.4),

or on the line segments c'd', d'e', and e'a' (excluding the points c' and a');
the line segment c'd' is represented by coordinates
$(-0.0297z^2-0.1915z+56.7, 0.0297z^2+1.1915z+43.3, z)$,
the line segment d'e' is represented by coordinates
$(-0.0535z^2+0.3229z+53.957, 0.0535z^2+0.6771z+46.043, z)$, and
the line segments Oc', e'a', and a'O are straight lines. When the requirements above are satisfied, the refrigerant according to the present disclosure has a COP raito of 92.5% or more relative to that of R410A, and a GWP of 125 or less.

The refrigerant E according to the present disclosure is preferably a refrigerant wherein

when the mass% of HFO-1132(E), HFO-1123, and R32 based on their sum is respectively represented by x, y, and z, coordinates (x,y,z) in a ternary composition diagram in which the sum of HFO-1132(E), HFO-1123, and R32 is 100 mass% are within the range of a figure surrounded by line segments Oc, cd, de, ea', and a'O that connect the following 5 points:

point O (100.0, 0.0, 0.0),
point c (77.7, 22.3, 0.0),
point d (76.3, 14.2, 9.5),
point e (72.2, 9.4, 18.4), and
point a' (81.6, 0.0, 18.4),

or on the line segments cd, de, and ea' (excluding the points c and a');
the line segment cde is represented by coordinates
$(-0.017z^2+0.0148z+77.684, 0.017z^2+0.9852z+22.316, z)$, and
the line segments Oc, ea', and a'O are straight lines. When the requirements above are satisfied, the refrigerant according to the present disclosure has a COP raito of 95% or more relative to that of R410A, and a GWP of 125 or less.

The refrigerant E according to the present disclosure is preferably a refrigerant wherein

when the mass% of HFO-1132(E), HFO-1123, and R32 based on their sum is respectively represented by x, y, and z, coordinates (x,y,z) in a ternary composition diagram in which the sum of HFO-1132(E), HFO-1123, and R32 is 100 mass% are within the range of a figure surrounded by line segments Oc', c'd', d'a, and aO that connect the following 5 points:

point O (100.0, 0.0, 0.0),
point c' (56.7, 43.3, 0.0),
point d' (52.2, 38.3, 9.5), and

point a (90.5, 0.0, 9.5),

or on the line segments c'd' and d'a (excluding the points c' and a);
the line segment c'd' is represented by coordinates
$(-0.0297z^2-0.1915z+56.7, 0.0297z^2+1.1915z+43.3, z)$, and
the line segments Oc', d'a, and aO are straight lines. When the requirements above are satisfied, the refrigerant according to the present disclosure has a COP ratio of 93.5% or more relative to that of R410A, and a GWP of 65 or less.

The refrigerant E according to the present disclosure is preferably a refrigerant wherein

when the mass% of HFO-1132(E), HFO-1123, and R32 based on their sum is respectively represented by x, y, and z, coordinates (x,y,z) in a ternary composition diagram in which the sum of HFO-1132(E), HFO-1123, and R32 is 100 mass% are within the range of a figure surrounded by line segments Oc, cd, da, and aO that connect the following 4 points:

point O (100.0, 0.0, 0.0),
point c (77.7, 22.3, 0.0),
point d (76.3, 14.2, 9.5), and
point a (90.5, 0.0, 9.5),

or on the line segments cd and da (excluding the points c and a);
the line segment cd is represented by coordinates
$(-0.017z^2+0.0148z+77.684, 0.017z^2+0.9852z+22.316, z)$, and
the line segments Oc, da, and aO are straight lines. When the requirements above are satisfied, the refrigerant according to the present disclosure has a COP ratio of 95% or more relative to that of R410A, and a GWP of 65 or less.

The refrigerant E according to the present disclosure may further comprise other additional refrigerants in addition to HFO-1132(E), HFO-1123, and R32, as long as the above properties and effects are not impaired. In this respect, the refrigerant according to the present disclosure preferably comprises HFO-1132(E), HFO-1123, and R32 in a total amount of 99.5 mass% or more, more preferably 99.75 mass% or more, and even more preferably 99.9 mass% or more, based on the entire refrigerant.

Such additional refrigerants are not limited, and can be selected from a wide range of refrigerants. The mixed refrigerant may comprise a single additional refrigerant, or two or more additional refrigerants.

(Examples of Refrigerant E)

The present disclosure is described in more detail below with reference to Examples of refrigerant E. However, the refrigerant E is not limited to the Examples.

Mixed refrigerants were prepared by mixing HFO-1132(E), HFO-1123, and R32 at mass% based on their sum shown in Tables 145 and 146.

The composition of each mixture was defined as WCF. A leak simulation was performed using National Institute of Science and Technology (NIST) Standard Reference Data Base Refleak Version 4.0 under the conditions for equipment, storage, shipping, leak, and recharge according to the ASHRAE Standard 34-2013. The most flammable fraction was defined as WCFF.

For each mixed refrigerant, the burning velocity was measured according to the ANSI/ASHRAE Standard 34-2013. When the burning velocities of the WCF composition and the WCFF composition are 10 cm/s or less, the flammability of such a refrigerant is classified as Class 2L (lower flammability) in the ASHRAE flammability classification.

A burning velocity test was performed using the apparatus shown in Fig. 1 in the following manner. First, the mixed refrigerants used had a purity of 99.5% or more, and were degassed by repeating a cycle of freezing, pumping, and thawing until no traces of air were observed on the vacuum gauge. The burning velocity was measured by the closed method. The initial temperature was ambient temperature. Ignition was performed by generating an electric spark between the electrodes in the center of a sample cell. The duration of the discharge was 1.0 to 9.9 ms, and the ignition energy was typically about 0.1 to 1.0 J. The spread of the flame was visualized using schlieren photographs. A cylindrical container (inner diameter: 155 mm, length: 198 mm) equipped with two light transmission acrylic windows was used as the sample cell, and a xenon lamp was used as the light source. Schlieren images of the flame were recorded by a high-speed digital video camera at a frame rate of 600 fps and stored on a PC.

Tables 145 and 146 show the results.

Table 145

| Item | | Unit | I | J | K | L |
|---|---|---|---|---|---|---|
| WCF | HFO-1132(E) | mass% | 72.0 | 57.7 | 48.4 | 35.5 |
| | HFO-1123 | mass% | 28.0 | 32.8 | 33.2 | 27.5 |
| | R32 | mass% | 0.0 | 9.5 | 18.4 | 37.0 |
| Burning velocity (WCF) | | cm/s | 10 | 10 | 10 | 10 |

Table 146

| Item | | Unit | M | N | T | P | U | Q |
|---|---|---|---|---|---|---|---|---|
| WCF | HFO-1132 (E) | mass% | 47.1 | 38.5 | 34.8 | 31.8 | 28.7 | 28.6 |
| | HFO-1123 | mass% | 52.9 | 52.1 | 51.0 | 49.8 | 41.2 | 34.4 |
| | R32 | mass% | 0.0 | 9.5 | 14.2 | 18.4 | 30.1 | 37.0 |
| Leak condition that results in WCFF | | | Storage, Shipping, -40°C, 92%, release, on the liquid phase side | Storage, Shipping, -40°C, 92%, release, on the liquid phase side | Storage, Shipping, -40°C, 92%, release, on the liquid phase side | Storage, Shipping, -40°C, 92%, release, on the liquid phase side | Storage, Shipping, -40°C, 92%, release, on the liquid phase side | Storage, Shipping, -40°C, 92%, release, on the liquid phase side |
| WCFF | HFO-1132 (E) | mass% | 72.0 | 58.9 | 51.5 | 44.6 | 31.4 | 27.1 |
| | HFO-1123 | mass% | 28.0 | 32.4 | 33.1 | 32.6 | 23.2 | 18.3 |
| | R32 | mass% | 0.0 | 8.7 | 15.4 | 22.8 | 45.4 | 54.6 |
| Burning velocity (WCF) | | cm/s | 8 or less | 8 or less | 8 or less | 8 or less | 8 or less | 8 or less |
| Burning velocity (WCFF) | | cm/s | 10 | 10 | 10 | 10 | 10 | 10 |

The results in Table 1 indicate that in a ternary composition diagram of a mixed refrigerant of HFO-1132(E), HFO-1123, and R32 in which their sum is 100 mass%, a line segment connecting a point (0.0, 100.0, 0.0) and a point (0.0, 0.0, 100.0) is the base, the point (0.0, 100.0, 0.0) is on the left side, and the point (0.0, 0.0, 100.0) is on the right side, when coordinates (x,y,z) are on or below line segments IK and KL that connect the following 3 points:

　　point I (72.0, 28.0, 0.0),
　　point K (48.4, 33.2, 18.4), and
　　point L (35.5, 27.5, 37.0);

the line segment IK is represented by coordinates
$(0.025z^2-1.7429z+72.00, -0.025z^2+0.7429z+28.00, z)$, and
the line segment KL is represented by coordinates
$(0.0098z^2-1.238z+67.852, -0.0098z^2+0.238z+32.148, z)$,
it can be determined that the refrigerant has WCF lower flammability.
For the points on the line segment IK, an approximate curve $(x=0.025z^2-1.7429z+72.00)$ was obtained from

137

three points, i.e., I (72.0, 28.0, 0.0), J (57.7, 32.8, 9.5), and K (48.4, 33.2, 18.4) by using the least-square method to determine coordinates
$(x=0.025z^2-1.7429z+72.00, y=100-z-x=-0.00922z^2+0.2114z+32.443, z)$.

Likewise, for the points on the line segment KL, an approximate curve was determined from three points, i.e., K (48.4, 33.2, 18.4), Example 10 (41.1, 31.2, 27.7), and L (35.5, 27.5, 37.0) by using the least-square method to determine coordinates.

The results in Table 146 indicate that in a ternary composition diagram of a mixed refrigerant of HFO-1132(E), HFO-1123, and R32 in which their sum is 100 mass%, a line segment connecting a point (0.0, 100.0, 0.0) and a point (0.0, 0.0, 100.0) is the base, the point (0.0, 100.0, 0.0) is on the left side, and the point (0.0, 0.0, 100.0) is on the right side, when coordinates (x,y,z) are on or below line segments MP and PQ that connect the following 3 points:

    point M (47.1, 52.9, 0.0),
    point P (31.8, 49.8, 18.4), and
    point Q (28.6, 34.4, 37.0),

it can be determined that the refrigerant has ASHRAE lower flammability.

In the above, the line segment MP is represented by coordinates $(0.0083z^2-0.984z+47.1, -0.0083z^2-0.016z+52.9, z)$, and the line segment PQ is represented by coordinates
$(0.0135z^2-0.9181z+44.133, -0.0135z^2-0.0819z+55.867, z)$.

For the points on the line segment MP, an approximate curve was obtained from three points, i.e., points M, N, and P, by using the least-square method to determine coordinates. For the points on the line segment PQ, an approximate curve was obtained from three points, i.e., points P, U, and Q, by using the least-square method to determine coordinates.

The GWP of compositions each comprising a mixture of R410A (R32 = 50%/R125 = 50%) was evaluated based on the values stated in the Intergovernmental Panel on Climate Change (IPCC), fourth report. The GWP of HFO-1132(E), which was not stated therein, was assumed to be 1 from HFO-1132a (GWP = 1 or less) and HFO-1123 (GWP = 0.3, described in WO2015/141678). The refrigerating capacity of compositions each comprising R410A and a mixture of HFO-1132(E) and HFO-1123 was determined by performing theoretical refrigeration cycle calculations for the mixed refrigerants using the National Institute of Science and Technology (NIST) and Reference Fluid Thermodynamic and Transport Properties Database (Refprop 9.0) under the following conditions.

The COP ratio and the refrigerating capacity (which may be referred to as "cooling capacity" or "capacity") ratio relative to those of R410 of the mixed refrigerants were determined. The conditions for calculation were as described below.

    Evaporating temperature: 5°C
    Condensation temperature: 45°C
    Degree of superheating: 5K
    Degree of subcooling: 5K
    Compressor efficiency: 70%

Tables 147 to 166 show these values together with the GWP of each mixed refrigerant.

Table 147

| Item | Unit | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| | | | A | B | A' | B' | A" | B" |
| HFO-1132(E) | mass% | R410A | 90.5 | 0.0 | 81.6 | 0.0 | 63.0 | 0.0 |
| HFO-1123 | mass% | | 0.0 | 90.5 | 0.0 | 81.6 | 0.0 | 63.0 |
| R32 | mass% | | 9.5 | 9.5 | 18.4 | 18.4 | 37.0 | 37.0 |
| GWP | - | 2088 | 65 | 65 | 125 | 125 | 250 | 250 |
| COP ratio | % (relative to R410A) | 100 | 99.1 | 92.0 | 98.7 | 93.4 | 98.7 | 96.1 |
| Refrigerating capacity ratio | % (relative to R410A) | 100 | 102.2 | 111.6 | 105.3 | 113.7 | 110.0 | 115.4 |

Table 148

| Item | Unit | Comparative Example 8 | Comparative Example 9 | Comparative Example 10 | Example 1 | Example 2 | Comparative Example 11 |
|---|---|---|---|---|---|---|---|
| | | O | C | | U | | D |
| HFO-1132(E) | mass% | 100.0 | 50.0 | 41.1 | 28.7 | 15.2 | 0.0 |
| HFO-1123 | mass% | 0.0 | 31.6 | 34.6 | 41.2 | 52.7 | 67.0 |
| R32 | mass% | 0.0 | 18.4 | 24.3 | 30.1 | 32.1 | 33.0 |
| GWP | - | 1 | 125 | 165 | 204 | 217 | 228 |
| COP ratio | % (relative to R410A) | 99.7 | 96.0 | 96.0 | 96.0 | 96.0 | 96.0 |
| Refrigerating capacity ratio | % (relative to R410A) | 98.3 | 109.9 | 111.7 | 113.5 | 114.8 | 115.4 |

Table 149

| Item | Unit | Comparative Example 12 | Comparative Example 13 | Example 3 | Example 4 | Comparative Example 14 |
|---|---|---|---|---|---|---|
| | | E | | T | S | F |
| HFO-1132(E) | mass% | 53.4 | 43.4 | 34.8 | 25.4 | 0.0 |
| HFO-1123 | mass% | 46.6 | 47.1 | 51.0 | 56.2 | 74.1 |
| R32 | mass% | 0.0 | 9.5 | 14.2 | 18.4 | 25.9 |
| GWP | - | 1 | 65 | 97 | 125 | 176 |
| COP ratio | % (relative to R410A) | 94.5 | 94.5 | 94.5 | 94.5 | 94.5 |
| Refrigerating capacity ratio | % (relative to R410A) | 105.6 | 109.2 | 110.8 | 112.3 | 114.8 |

Table 150

| Item | Unit | Comparative Example 15 | Example 5 | Example 6 | Example 7 | Comparative Example 16 |
|---|---|---|---|---|---|---|
| | | G | | R | | H |
| HFO-1132(E) | mass% | 38.5 | 31.5 | 23.1 | 16.9 | 0.0 |
| HFO-1123 | mass% | 61.5 | 63.5 | 67.4 | 71.1 | 84.2 |
| R32 | mass% | 0.0 | 5.0 | 9.5 | 12.0 | 15.8 |
| GWP | - | 1 | 35 | 65 | 82 | 107 |
| COP ratio | % (relative to R410A) | 93.0 | 93.0 | 93.0 | 93.0 | 93.0 |
| Refrigerating capacity ratio | % (relative to R410A) | 107.0 | 109.1 | 110.9 | 111.9 | 113.2 |

Table 151

| Item | Unit | Comparative Example 17 | Example 8 | Example 9 | Comparative Example 18 | Comparative Example 19 |
|---|---|---|---|---|---|---|
| | | I | J | K | | L |
| HFO-1132(E) | mass% | 72.0 | 57.7 | 48.4 | 41.1 | 35.5 |
| HFO-1123 | mass% | 28.0 | 32.8 | 33.2 | 31.2 | 27.5 |
| R32 | mass% | 0.0 | 9.5 | 18.4 | 27.7 | 37.0 |
| GWP | - | 1 | 65 | 125 | 188 | 250 |
| COP ratio | % (relative to R410A) | 96.6 | 95.8 | 95.9 | 96.4 | 97.1 |

(continued)

| Item | Unit | Comparative Example 17 | Example 8 | Example 9 | Comparative Example 18 | Comparative Example 19 |
|---|---|---|---|---|---|---|
| | | I | J | K | | L |
| Refrigerating capacity ratio | % (relative to R410A) | 103.1 | 107.4 | 110.1 | 112.1 | 113.2 |

Table 152

| Item | Unit | Comparative Example 20 | Example 10 | Example 11 | Example 12 |
|---|---|---|---|---|---|
| | | M | N | P | Q |
| HFO-1132(E) | mass% | 47.1 | 38.5 | 31.8 | 28.6 |
| HFO-1123 | mass% | 52.9 | 52.1 | 49.8 | 34.4 |
| R32 | mass% | 0.0 | 9.5 | 18.4 | 37.0 |
| GWP | - | 1 | 65 | 125 | 250 |
| COP ratio | % (relative to R410A) | 93.9 | 94.1 | 94.7 | 96.9 |
| Refrigerating capacity ratio | % (relative to R410A) | 106.2 | 109.7 | 112.0 | 114.1 |

Table 153

| Item | Unit | Comparative Example 22 | Comparative Example 23 | Comparative Example 24 | Example 14 | Example 15 | Example 16 | Comparative Example 25 | Comparative Example 26 |
|---|---|---|---|---|---|---|---|---|---|
| HFO-1132(E) | mass% | 10.0 | 20.0 | 30.0 | 40.0 | 50.0 | 60.0 | 70.0 | 80.0 |
| HFO-1123 | mass% | 85.0 | 75.0 | 65.0 | 55.0 | 45.0 | 35.0 | 25.0 | 15.0 |
| R32 | mass% | 5.0 | 5.0 | 5.0 | 5.0 | 5.0 | 5.0 | 5.0 | 5.0 |
| GWP | - | 35 | 35 | 35 | 35 | 35 | 35 | 35 | 35 |
| COP ratio | % (relative to R410A) | 91.7 | 92.2 | 92.9 | 93.7 | 94.6 | 95.6 | 96.7 | 97.7 |
| Refrigerating capacity ratio | % (relative to R410A) | 110.1 | 109.8 | 109.2 | 108.4 | 107.4 | 106.1 | 104.7 | 103.1 |

Table 154

| Item | Unit | Comparative Example 27 | Comparative Example 28 | Comparative Example 29 | Example 17 | Example 18 | Example 19 | Comparative Example 30 | Comparative Example 31 |
|---|---|---|---|---|---|---|---|---|---|
| HFO-1132(E) | mass% | 90.0 | 10.0 | 20.0 | 30.0 | 40.0 | 50.0 | 60.0 | 70.0 |
| HFO-1123 | mass% | 5.0 | 80.0 | 70.0 | 60.0 | 50.0 | 40.0 | 30.0 | 20.0 |
| R32 | mass% | 5.0 | 10.0 | 10.0 | 10.0 | 10.0 | 10.0 | 10.0 | 10.0 |
| GWP | - | 35 | 68 | 68 | 68 | 68 | 68 | 68 | 68 |
| COP ratio | % (relative to R410A) | 98.8 | 92.4 | 92.9 | 93.5 | 94.3 | 95.1 | 96.1 | 97.0 |
| Refrigerating capacity ratio | % (relative to R410A) | 101.4 | 111.7 | 111.3 | 110.6 | 109.6 | 108.5 | 107.2 | 105.7 |

Table 155

| Item | Unit | Comparative Example 32 | Example 20 | Example 21 | Example 22 | Example 23 | Example 24 | Comparative Example 33 | Comparative Example 34 |
|---|---|---|---|---|---|---|---|---|---|
| HFO-1132(E) | mass% | 80.0 | 10.0 | 20.0 | 30.0 | 40.0 | 50.0 | 60.0 | 70.0 |
| HFO-1123 | mass% | 10.0 | 75.0 | 65.0 | 55.0 | 45.0 | 35.0 | 25.0 | 15.0 |
| R32 | mass% | 10.0 | 15.0 | 15.0 | 15.0 | 15.0 | 15.0 | 15.0 | 15.0 |
| GWP | - | 68 | 102 | 102 | 102 | 102 | 102 | 102 | 102 |
| COP ratio | % (relative to R410A) | 98.0 | 93.1 | 93.6 | 94.2 | 94.9 | 95.6 | 96.5 | 97.4 |
| Refrigerating capacity ratio | % (relative to R410A) | 104.1 | 112.9 | 112.4 | 111.6 | 110.6 | 109.4 | 108.1 | 106.6 |

Table 156

| Item | Unit | Comparative Example 35 | Comparative Example 36 | Comparative Example 37 | Comparative Example 38 | Comparative Example 39 | Comparative Example 40 | Comparative Example 41 | Comparative Example 42 |
|---|---|---|---|---|---|---|---|---|---|
| HFO-1132(E) | mass% | 80.0 | 10.0 | 20.0 | 30.0 | 40.0 | 50.0 | 60.0 | 70.0 |
| HFO-1123 | mass% | 5.0 | 70.0 | 60.0 | 50.0 | 40.0 | 30.0 | 20.0 | 10.0 |
| R32 | mass% | 15.0 | 20.0 | 20.0 | 20.0 | 20.0 | 20.0 | 20.0 | 20.0 |
| GWP | - | 102 | 136 | 136 | 136 | 136 | 136 | 136 | 136 |
| COP ratio | % (relative to R410A) | 98.3 | 93.9 | 94.3 | 94.8 | 95.4 | 96.2 | 97.0 | 97.8 |
| Refrigerating capacity ratio | % (relative to R410A) | 105.0 | 113.8 | 113.2 | 112.4 | 111.4 | 110.2 | 108.8 | 107.3 |

Table 157

| Item | Unit | Comparative Example 43 | Comparative Example 44 | Comparative Example 45 | Comparative Example 46 | Comparative Example 47 | Comparative Example 48 | Comparative Example 49 | Comparative Example 50 |
|---|---|---|---|---|---|---|---|---|---|
| HFO-1132(E) | mass% | 10.0 | 20.0 | 30.0 | 40.0 | 50.0 | 60.0 | 70.0 | 10.0 |
| HFO-1123 | mass% | 65.0 | 55.0 | 45.0 | 35.0 | 25.0 | 15.0 | 5.0 | 60.0 |
| R32 | mass% | 25.0 | 25.0 | 25.0 | 25.0 | 25.0 | 25.0 | 25.0 | 30.0 |
| GWP | - | 170 | 170 | 170 | 170 | 170 | 170 | 170 | 203 |
| COP ratio | % (relative to R410A) | 94.6 | 94.9 | 95.4 | 96.0 | 96.7 | 97.4 | 98.2 | 95.3 |
| Refrigerating capacity ratio | % (relative to R410A) | 114.4 | 113.8 | 113.0 | 111.9 | 110.7 | 109.4 | 107.9 | 114.8 |

Table 158

| Item | Unit | Comparative Example 51 | Comparative Example 52 | Comparative Example 53 | Comparative Example 54 | Comparative Example 55 | Example 25 | Example 26 | Comparative Example 56 |
|---|---|---|---|---|---|---|---|---|---|
| HFO-1132(E) | mass% | 20.0 | 30.0 | 40.0 | 50.0 | 60.0 | 10.0 | 20.0 | 30.0 |
| HFO-1123 | mass% | 50.0 | 40.0 | 30.0 | 20.0 | 10.0 | 55.0 | 45.0 | 35.0 |
| R32 | mass% | 30.0 | 30.0 | 30.0 | 30.0 | 30.0 | 35.0 | 35.0 | 35.0 |
| GWP | - | 203 | 203 | 203 | 203 | 203 | 237 | 237 | 237 |
| COP ratio | % (relative to R410A) | 95.6 | 96.0 | 96.6 | 97.2 | 97.9 | 96.0 | 96.3 | 96.6 |
| Refrigerating capacity ratio | % (relative to R410A) | 114.2 | 113.4 | 112.4 | 111.2 | 109.8 | 115.1 | 114.5 | 113.6 |

Table 159

| Item | Unit | Comparative Example 57 | Comparative Example 58 | Comparative Example 59 | Comparative Example 60 | Comparative Example 61 | Comparative Example 62 | Comparative Example 63 | Comparative Example 64 |
|---|---|---|---|---|---|---|---|---|---|
| HFO-1132(E) | mass% | 40.0 | 50.0 | 60.0 | 10.0 | 20.0 | 30.0 | 40.0 | 50.0 |
| HFO-1123 | mass% | 25.0 | 15.0 | 5.0 | 50.0 | 40.0 | 30.0 | 20.0 | 10.0 |
| R32 | mass% | 35.0 | 35.0 | 35.0 | 40.0 | 40.0 | 40.0 | 40.0 | 40.0 |
| GWP | - | 237 | 237 | 237 | 271 | 271 | 271 | 271 | 271 |
| COP ratio | % (relative to R410A) | 97.1 | 97.7 | 98.3 | 96.6 | 96.9 | 97.2 | 97.7 | 98.2 |
| Refrigerating capacity ratio | % (relative to R410A) | 112.6 | 111.5 | 110.2 | 115.1 | 114.6 | 113.8 | 112.8 | 111.7 |

Table 160

| Item | Unit | Example 27 | Example 28 | Example 29 | Example 30 | Example 31 | Example 32 | Example 33 | Example 34 |
|---|---|---|---|---|---|---|---|---|---|
| HFO-1132(E) | mass% | 38.0 | 40.0 | 42.0 | 44.0 | 35.0 | 37.0 | 39.0 | 41.0 |
| HFO-1123 | mass% | 60.0 | 58.0 | 56.0 | 54.0 | 61.0 | 59.0 | 57.0 | 55.0 |
| R32 | mass% | 2.0 | 2.0 | 2.0 | 2.0 | 4.0 | 4.0 | 4.0 | 4.0 |
| GWP | - | 14 | 14 | 14 | 14 | 28 | 28 | 28 | 28 |
| COP ratio | % (relative to R410A) | 93.2 | 93.4 | 93.6 | 93.7 | 93.2 | 93.3 | 93.5 | 93.7 |
| Refrigerating capacity ratio | % (relative to R410A) | 107.7 | 107.5 | 107.3 | 107.2 | 108.6 | 108.4 | 108.2 | 108.0 |

Table 161

| Item | Unit | Example 35 | Example 36 | Example 37 | Example 38 | Example 39 | Example 40 | Example 41 | Example 42 |
|---|---|---|---|---|---|---|---|---|---|
| HFO-1132(E) | mass% | 43.0 | 31.0 | 33.0 | 35.0 | 37.0 | 39.0 | 41.0 | 27.0 |
| HFO-1123 | mass% | 53.0 | 63.0 | 61.0 | 59.0 | 57.0 | 55.0 | 53.0 | 65.0 |
| R32 | mass% | 4.0 | 6.0 | 6.0 | 6.0 | 6.0 | 6.0 | 6.0 | 8.0 |
| GWP | - | 28 | 41 | 41 | 41 | 41 | 41 | 41 | 55 |
| COP ratio | % (relative to R410A) | 93.9 | 93.1 | 93.2 | 93.4 | 93.6 | 93.7 | 93.9 | 93.0 |
| Refrigerating capacity ratio | % (relative to R410A) | 107.8 | 109.5 | 109.3 | 109.1 | 109.0 | 108.8 | 108.6 | 110.3 |

Table 162

| Item | Unit | Example 43 | Example 44 | Example 45 | Example 46 | Example 47 | Example 48 | Example 49 | Example 50 |
|---|---|---|---|---|---|---|---|---|---|
| HFO-1132(E) | mass% | 29.0 | 31.0 | 33.0 | 35.0 | 37.0 | 39.0 | 32.0 | 32.0 |
| HFO-1123 | mass% | 63.0 | 61.0 | 59.0 | 57.0 | 55.0 | 53.0 | 51.0 | 50.0 |
| R32 | mass% | 8.0 | 8.0 | 8.0 | 8.0 | 8.0 | 8.0 | 17.0 | 18.0 |
| GWP | - | 55 | 55 | 55 | 55 | 55 | 55 | 116 | 122 |
| COP ratio | % (relative to R410A) | 93.2 | 93.3 | 93.5 | 93.6 | 93.8 | 94.0 | 94.5 | 94.7 |
| Refrigerating capacity ratio | % (relative to R410A) | 110.1 | 110.0 | 109.8 | 109.6 | 109.5 | 109.3 | 111.8 | 111.9 |

Table 163

| Item | Unit | Example 51 | Example 52 | Example 53 | Example 54 | Example 55 | Example 56 | Example 57 | Example 58 |
|---|---|---|---|---|---|---|---|---|---|
| HFO-1132(E) | mass% | 30.0 | 27.0 | 21.0 | 23.0 | 25.0 | 27.0 | 11.0 | 13.0 |
| HFO-1123 | mass% | 52.0 | 42.0 | 46.0 | 44.0 | 42.0 | 40.0 | 54.0 | 52.0 |
| R32 | mass% | 18.0 | 31.0 | 33.0 | 33.0 | 33.0 | 33.0 | 35.0 | 35.0 |
| GWP | - | 122 | 210 | 223 | 223 | 223 | 223 | 237 | 237 |
| COP ratio | % (relative to R410A) | 94.5 | 96.0 | 96.0 | 96.1 | 96.2 | 96.3 | 96.0 | 96.0 |
| Refrigerating capacity ratio | % (relative to R410A) | 112.1 | 113.7 | 114.3 | 114.2 | 114.0 | 113.8 | 115.0 | 114.9 |

Table 164

| Item | Unit | Example 59 | Example 60 | Example 61 | Example 62 | Example 63 | Example 64 | Example 65 | Example 66 |
|---|---|---|---|---|---|---|---|---|---|
| HFO-1132(E) | mass% | 15.0 | 17.0 | 19.0 | 21.0 | 23.0 | 25.0 | 27.0 | 11.0 |
| HFO-1123 | mass% | 50.0 | 48.0 | 46.0 | 44.0 | 42.0 | 40.0 | 38.0 | 52.0 |
| R32 | mass% | 35.0 | 35.0 | 35.0 | 35.0 | 35.0 | 35.0 | 35.0 | 37.0 |
| GWP | - | 237 | 237 | 237 | 237 | 237 | 237 | 237 | 250 |
| COP ratio | % (relative to R410A) | 96.1 | 96.2 | 96.2 | 96.3 | 96.4 | 96.4 | 96.5 | 96.2 |
| Refrigerating capacity ratio | % (relative to R410A) | 114.8 | 114.7 | 114.5 | 114.4 | 114.2 | 114.1 | 113.9 | 115.1 |

Table 165

| Item | Unit | Example 67 | Example 68 | Example 69 | Example 70 | Example 71 | Example 72 | Example 73 | Example 74 |
|------|------|-----------|-----------|-----------|-----------|-----------|-----------|-----------|-----------|
| HFO-1132(E) | mass% | 13.0 | 15.0 | 17.0 | 15.0 | 17.0 | 19.0 | 21.0 | 23.0 |
| HFO-1123 | mass% | 50.0 | 48.0 | 46.0 | 50.0 | 48.0 | 46.0 | 44.0 | 42.0 |
| R32 | mass% | 37.0 | 37.0 | 37.0 | 0.0 | 0.0 | 0.0 | 0.0 | 0.0 |
| GWP | - | 250 | 250 | 250 | 237 | 237 | 237 | 237 | 237 |
| COP ratio | % (relative to R410A) | 96.3 | 96.4 | 96.4 | 96.1 | 96.2 | 96.2 | 96.3 | 96.4 |
| Refrigerating capacity ratio | % (relative to R410A) | 115.0 | 114.9 | 114.7 | 114.8 | 114.7 | 114.5 | 114.4 | 114.2 |

Table 166

| Item | Unit | Example 75 | Example 76 | Example 77 | Example 78 | Example 79 | Example 80 | Example 81 | Example 82 |
|---|---|---|---|---|---|---|---|---|---|
| HFO-1132(E) | mass% | 25.0 | 27.0 | 11.0 | 19.0 | 21.0 | 23.0 | 25.0 | 27.0 |
| HFO-1123 | mass% | 40.0 | 38.0 | 52.0 | 44.0 | 42.0 | 40.0 | 38.0 | 36.0 |
| R32 | mass% | 0.0 | 0.0 | 0.0 | 37.0 | 37.0 | 37.0 | 37.0 | 37.0 |
| GWP | - | 237 | 237 | 250 | 250 | 250 | 250 | 250 | 250 |
| COP ratio | % (relative to R410A) | 96.4 | 96.5 | 96.2 | 96.5 | 96.5 | 96.6 | 96.7 | 96.8 |
| Refrigerating capacity ratio | % (relative to R410A) | 114.1 | 113.9 | 115.1 | 114.6 | 114.5 | 114.3 | 114.1 | 114.0 |

The above results indicate that under the condition that the mass% of HFO-1132(E), HFO-1123, and R32 based on their sum is respectively represented by x, y, and z, when coordinates (x,y,z) in a ternary composition diagram in which the sum of HFO-1132(E), HFO-1123, and R32 is 100 mass%, a line segment connecting a point (0.0, 100.0, 0.0) and a point (0.0, 0.0, 100.0) is the base, and the point (0.0, 100.0, 0.0) is on the left side are within the range of a figure surrounded by line segments that connect the following 4 points:

    point O (100.0, 0.0, 0.0),
    point A" (63.0, 0.0, 37.0),
    point B" (0.0, 63.0, 37.0), and
    point (0.0, 100.0, 0.0),

or on these line segments,
the refrigerant has a GWP of 250 or less.

The results also indicate that when coordinates (x,y,z) are within the range of a figure surrounded by line segments that connect the following 4 points:

    point O (100.0, 0.0, 0.0),
    point A' (81.6, 0.0, 18.4),
    point B' (0.0, 81.6, 18.4), and
    point (0.0, 100.0, 0.0),

or on these line segments,
the refrigerant has a GWP of 125 or less.

The results also indicate that when coordinates (x,y,z) are within the range of a figure surrounded by line segments that connect the following 4 points:

    point O (100.0, 0.0, 0.0),
    point A (90.5, 0.0, 9.5),
    point B (0.0, 90.5, 9.5), and
    point (0.0, 100.0, 0.0),

or on these line segments,
the refrigerant has a GWP of 65 or less.

The results also indicate that when coordinates (x,y,z) are on the left side of line segments that connect the following 3 points:

    point C (50.0, 31.6, 18.4),
    point U (28.7, 41.2, 30.1), and
    point D(52.2, 38.3, 9.5),

or on these line segments,
the refrigerant has a COP ratio of 96% or more relative to that of R410A.

In the above, the line segment CU is represented by coordinates $(-0.0538z^2+0.7888z+53.701, 0.0538z^2-1.7888z+46.299, z)$, and the line segment UD is represented by coordinates $(-3.4962z^2+210.71z-3146.1, 3.4962z^2-211.71z+3246.1, z)$.

The points on the line segment CU are determined from three points, i.e., point C, Comparative Example 10, and point U, by using the least-square method.

The points on the line segment UD are determined from three points, i.e., point U, Example 2, and point D, by using the least-square method.

The results also indicate that when coordinates (x,y,z) are on the left side of line segments that connect the following 3 points:

    point E (55.2, 44.8, 0.0),
    point T (34.8, 51.0, 14.2), and
    point F (0.0, 76.7, 23.3),

or on these line segments,
the refrigerant has a COP ratio of 94.5% or more relative to that of R410A.

In the above, the line segment ET is represented by coordinates ($-0.0547z^2-0.5327z+53.4$, $0.0547z^2-0.4673z+46.6$, z), and the line segment TF is represented by coordinates
($-0.0982z^2+0.9622z+40.931$, $0.0982z^2-1.9622z+59.069$, z).

The points on the line segment ET are determined from three points, i.e., point E, Example 2, and point T, by using the least-square method.

The points on the line segment TF are determined from three points, i.e., points T, S, and F, by using the least-square method.

The results also indicate that when coordinates (x,y,z) are on the left side of line segments that connect the following 3 points:

point G (0.0, 76.7, 23.3),
point R (21.0, 69.5, 9.5), and
point H (0.0, 85.9, 14.1),

or on these line segments,
the refrigerant has a COP ratio of 93% or more relative to that of R410A.

In the above, the line segment GR is represented by coordinates ($-0.0491z^2-1.1544z+38.5$, $0.0491z^2+0.1544z+61.5$, z), and the line segment RH is represented by coordinates
($-0.3123z^2+4.234z+11.06$, $0.3123z^2-5.234z+88.94$, z).

The points on the line segment GR are determined from three points, i.e., point G, Example 5, and point R, by using the least-square method.

The points on the line segment RH are determined from three points, i.e., point R, Example 7, and point H, by using the least-square method.

In contrast, as shown in, for example, Comparative Examples 8, 9, 13, 15, 17, and 18, when R32 is not contained, the concentrations of HFO-1132(E) and HFO-1123, which have a double bond, become relatively high; this undesirably leads to deterioration, such as decomposition, or polymerization in the refrigerant compound.

(6) Configuration of Air Conditioner 1

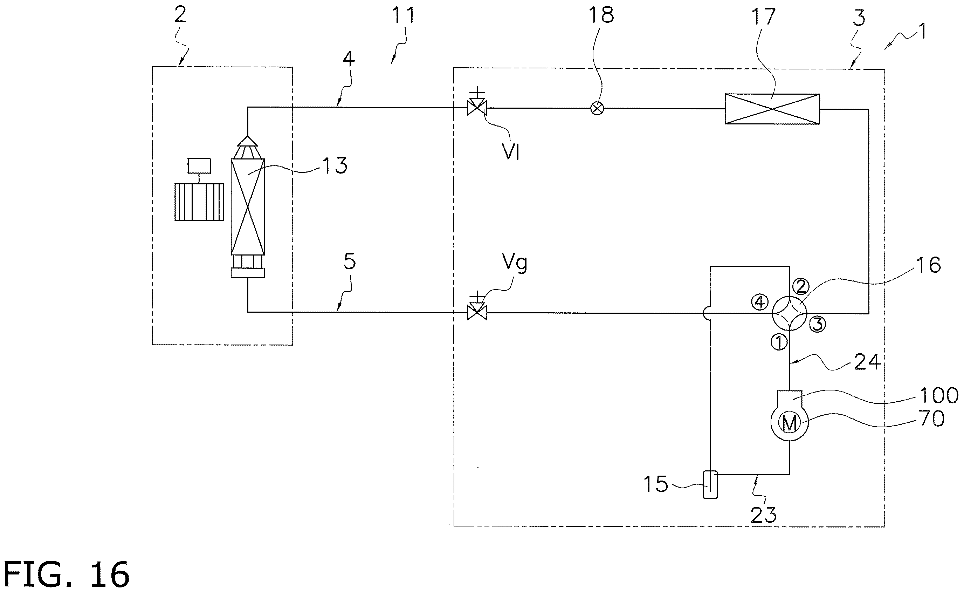

Fig. 16 is a refrigeration circuit diagram of an air conditioner 1 in which a compressor 100 according to an embodiment of the present invention is utilized. The air conditioner 1 is a refrigeration cycle apparatus provided with the compressor 100. As examples of the air conditioner 1 in which the compressor 100 is employed, an "air conditioner dedicated to cooling-operation", an "air conditioner dedicated to heating-operation", an "air conditioner switchable between cooling operation and heating operation by using a four-way switching valve", and the like are presented. Here, description will be provided using the "air conditioner switchable between cooling operation and heating operation by using a four-way switching valve".

Referring to Fig. 16, the air conditioner 1 is provided with an indoor unit 2 and an outdoor unit 3. The indoor unit 2 and the outdoor unit 3 are connected to each other by a liquid-refrigerant connection pipe 4 and a gas-refrigerant connection pipe 5. As illustrated in Fig. 16, the air conditioner 1 is of a pair-type having the indoor unit 2 and the outdoor unit 3 one each. The air conditioner 1 is, however, not limited thereto and may be of a multi-type having a plurality of the indoor units 2.

In the air conditioner 1, devices, such as an accumulator 15, the compressor 100, a four-way switching valve 16, an outdoor heat exchanger 17, an expansion valve 18, and an indoor heat exchanger 13, are connected together by pipes, thereby constituting a refrigerant circuit 11.

In the present embodiment, a refrigerant for performing a vapor compression refrigeration cycle is packed in the refrigerant circuit 11. The refrigerant is a mixed refrigerant containing 1,2-difluoroethylene, and, as the refrigerant, any one of the aforementioned refrigerants A to E is usable. A refrigerating machine oil is also packed together with the mixed refrigerant in the refrigerant circuit 11.

(6-1) Indoor Unit 2

The indoor heat exchanger 13 to be loaded in the indoor unit 2 is a cross-fin type fin-and-tube heat exchanger constituted by a heat transfer tube and a large number of heat transfer fins. The indoor heat exchanger 13 is connected at the liquid side thereof to the liquid-refrigerant connection pipe 4 and connected at the gas side thereof to the gas-refrigerant connection pipe 5, and the indoor heat exchanger 13 functions as a refrigerant evaporator during cooling operation.

(6-2) Outdoor unit 3

The outdoor unit 3 is loaded with the accumulator 15, the compressor 100, the outdoor heat exchanger 17, and the expansion valve 18.

(6-2-1) Outdoor Heat Exchanger 17

The outdoor heat exchanger 17 is a cross-fin type fin-and-tube heat exchanger constituted by a heat transfer tube and a large number of heat transfer fins. The outdoor heat exchanger 17 is connected at one end thereof to the side of a discharge pipe 24 in which a refrigerant discharged from the compressor 100 flows and connected at the other end thereof to the side of the liquid-refrigerant connection pipe 4. The outdoor heat exchanger 17 functions as a condenser for a gas refrigerant supplied from the compressor 100 through the discharge pipe 24.

(6-2-2) Expansion Valve 18

The expansion valve 18 is disposed in a pipe that connects the outdoor heat exchanger 17 and the liquid-refrigerant connection pipe 4 to each other. The expansion valve 18 is an opening-degree adjustable electric valve for adjusting the pressure and the flow rate of a refrigerant that flows in the pipe.

(6-2-3) Accumulator 15

The accumulator 15 is disposed in a pipe that connects the gas-refrigerant connection pipe 5 and a suction pipe 23 of the compressor 100 to each other. The accumulator 15 separates, into a gas phase and a liquid phase, a refrigerant that flows from the indoor heat exchanger 13 toward the suction pipe 23 through the gas-refrigerant connection pipe 5 to prevent a liquid refrigerant from being supplied into the compressor 100. The compressor 100 is supplied with a gas-phase refrigerant accumulated in an upper space of the accumulator 15.

(6-2-4) Compressor 100

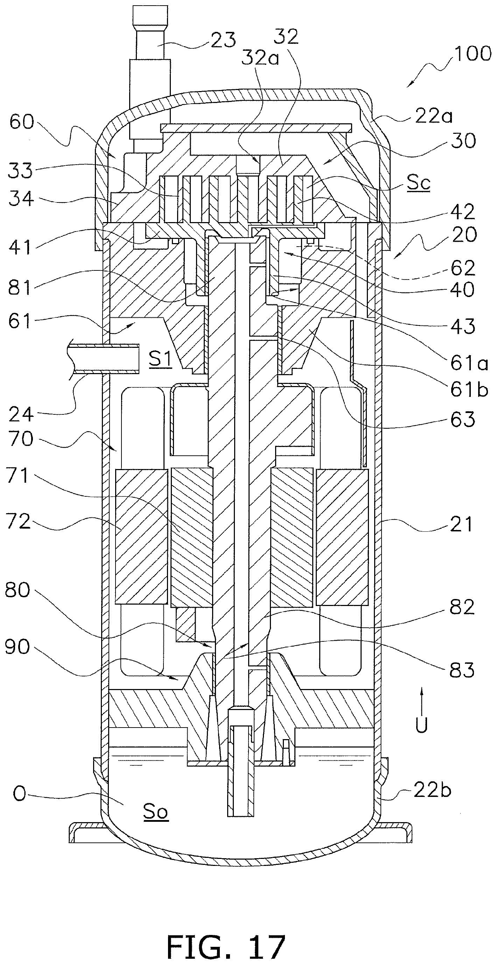

Fig. 17 is a longitudinal sectional view of the compressor 100 according to an embodiment of the present invention. The compressor 100 in Fig. 17 is a scroll compressor. The compressor 100 compresses a refrigerant sucked through the suction pipe 23 in a compression chamber Sc and discharges the compressed refrigerant through the discharge pipe 24. Regarding the compressor 100, details will be described in the section of "(7) Configuration of Compressor 100".

(6-2-5) Four-way Switching Valve 16

The four-way switching valve 16 has first to fourth ports. The four-way switching valve 16 is connected at the first port thereof to the discharge side of the compressor 100, connected at the second port thereof to the suction side of the compressor 100, connected at the third port thereof to the gas-side end portion of the outdoor heat exchanger 17, and connected at the fourth port thereof to a gas-side shutoff valve Vg.
The four-way switching valve 16 is switchable between a first state (the state indicated by the solid lines in Fig. 1) and a second state (the state indicated by the dashed lines in Fig. 1). In the four-way switching valve 16 in the first state, the first port and the third port are in communication with each other, and the second port and the fourth port are in communication with each other. In the four-way switching valve 16 in the second state, the first port and the fourth port are in communication with each other, and the second port and the third port are in communication with each other.

(7) Configuration of Compressor 100

As illustrated in Fig. 17, the compressor 100 is provided with a casing 20, a motor 70, a crank shaft 80, a lower bearing 90, and a compression mechanism 60 including a fixed scroll 30.
Hereinafter, expressions such as "up", "down", and the like are sometimes used to describe positional relations and the like of constituent members. Here, the direction of the arrow U in Fig. 17 is referred to as up, and the direction opposite the direction of the arrow U is referred to as down. In addition, expressions such as "perpendicular", "horizontal", "longitudinal", "lateral", and the like are sometimes used, and the up-down direction corresponds to the perpendicular direction and the longitudinal direction.

(7-1) Casing 20

The compressor 100 has the casing 20 that has a longitudinally elongated cylindrical shape. The casing 20 has a substantially cylindrical cylinder member 21 that opens upward and downward, and an upper cover 22a and a lower cover 22b that are disposed at the upper end and the lower end of the cylinder member 21, respectively. The upper cover 22a and the lower cover 22b are fixed to the cylinder member 21 by welding to maintain airtightness.

The casing 20 accommodates constituent devices of the compressor 100, including the compression mechanism 60, the motor 70, the crank shaft 80, and the lower bearing 90. An oil reservoir space So is formed in a lower portion of the casing 20. The oil reservoir space So stores a refrigerating machine oil O for lubricating the compression mechanism 60 and the like. The refrigerating machine oil O is the refrigerating machine oil described in the section of "(4-1) Refrigerating Machine Oil".

At an upper portion of the casing 20, the suction pipe 23 through which a gas refrigerant is sucked and through which the gas refrigerant is supplied to the compression mechanism 60 is disposed so as to pass through the upper cover 22a. The lower end of the suction pipe 23 is connected to the fixed scroll 30 of the compression mechanism 60. The suction pipe 23 is in communication with the compression chamber Sc of the compression mechanism 60. In the suction pipe 23, a low-pressure refrigerant of the refrigeration cycle before compression by the compressor 100 flows.

An intermediate portion of the cylinder member 21 of the casing 20 is provided with the discharge pipe 24 through which a refrigerant to be discharged to the outside of the casing 20 passes. Specifically, the discharge pipe 24 is disposed such that an end portion of the discharge pipe 24 in the inner portion of the casing 20 projects in a high-pressure space S1 formed below a housing 61 of the compression mechanism 60. In the discharge pipe 24, a high-pressure refrigerant of the refrigeration cycle after compression by the compression mechanism 60 flows.

(7-2) Compression Mechanism 60

As illustrated in Fig. 17, the compression mechanism 60 has, mainly, the housing 61, the fixed scroll 30 disposed above the housing 61, and a movable scroll 40 that forms the compression chamber Sc by being combined with the fixed scroll 30.

(7-2-1) Fixed Scroll 30

As illustrated in Fig. 17, the fixed scroll 30 includes a flat fixed-side end plate 32, a spiral fixed-side lap 33 projecting from the front surface (lower surface in Fig. 17) of the fixed-side end plate 32, and an outer edge portion 34 surrounding the fixed-side lap 33.

At a center portion of the fixed-side end plate 32, a noncircular discharge port 32a in communication with the compression chamber Sc of the compression mechanism 60 is formed so as to pass through the fixed-side end plate 32 in the thickness direction. The refrigerant compressed in the compression chamber Sc is discharged through the discharge port 32a and flows into the high-pressure space S1 by passing through a refrigerant passage (not illustrated) formed in the fixed scroll 30 and the housing 61.

(7-2-2) Movable Scroll 40

As illustrated in Fig. 17, the movable scroll 40 has a flat movable-side end plate 41, a spiral movable-side lap 42 projecting from the front surface (upper surface in Fig. 17) of the movable-side end plate 41, and a cylindrical boss portion 43 projecting from the back surface (lower surface in Fig. 17) of the movable-side end plate 41.

The fixed-side lap 33 of the fixed scroll 30 and the movable-side lap 42 of the movable scroll 40 are combined together with the lower surface of the fixed-side end plate 32 and the upper surface of the movable-side end plate 41 facing each other. The compression chamber Sc is formed between the fixed-side lap 33 and the movable-side lap 42 that are adjacent to each other. The volume of the compression chamber Sc is periodically changed by the movable scroll 40 revolving with respect to the fixed scroll 30, as described later, thereby causing the compression mechanism 60 to suck, compress, and discharge the refrigerant.

The boss portion 43 is a cylindrical portion closed at the upper end thereof. The movable scroll 40 and the crank shaft 80 are coupled to each other by an eccentric portion 81 of the crank shaft 80 inserted into a hollow portion of the boss portion 43. The boss portion 43 is disposed in an eccentric portion space 62 formed between the movable scroll 40 and the housing 61. The eccentric portion space 62 is in communication with the high-pressure space S1 via an oil supply path 83 and the like of the crank shaft 80, and a high pressure acts on the eccentric portion space 62. Due to this pressure, the lower surface of the movable-side end plate 41 inside the eccentric portion space 62 is pressed upward toward the fixed scroll 30. Due to this force, the movable scroll 40 becomes in close contact with the fixed scroll 30.

The movable scroll 40 is supported by the housing 61 via an oldham coupling (not illustrated). The oldham coupling is a member that prevents the rotation of the movable scroll 40 and causes the movable scroll 40 to revolve. Due to the use of the oldham coupling, when the crank shaft 80 rotates, the movable scroll 40 coupled to the crank shaft 80 in the boss portion 43 revolves with respect to the fixed scroll 30 without rotating, and the refrigerant in the compression chamber Sc is compressed.

(7-2-3) Housing 61

The housing 61 is press-fitted into the cylinder member 21 and fixed at the entirety of the outer circumferential surface thereof in the circumferential direction to the cylinder member 21. The housing 61 and the fixed scroll 30 are fixed to each other by a bolt and the like (not illustrated) such that the upper end surface of the housing 61 and the lower surface of the outer edge portion 34 of the fixed scroll 30 are in close contact with each other.

The housing 61 has a concave portion 61a disposed to be recessed in a center portion of the upper surface thereof and a bearing portion 61b disposed below the concave portion 61a.

The concave portion 61a surrounds the side surface of the eccentric portion space 62 in which the boss portion 43 of the movable scroll 40 is disposed.

On the bearing portion 61b, the bearing 63 that supports a main shaft 82 of the crank shaft 80 is disposed. The bearing 63 rotatably supports the main shaft 82 inserted into the bearing 63.

(7-3) Motor 70

The motor 70 has an annular stator 72 fixed to the inner wall surface of the cylinder member 21 and a rotor 71 rotatably accommodated inside the stator 72 with a slight gap (air gap) therebetween.

The rotor 71 is coupled to the movable scroll 40 via the crank shaft 80 disposed to extend in the up-down direction along the axis of the cylinder member 21. In response to the rotor 71 rotating, the movable scroll 40 revolves with respect to the fixed scroll 30.

Details of the motor 70 will be described in the section of "(9) Configuration of Motor 70".

(7-4) Crank Shaft 80

The crank shaft 80 transmits the driving force of the motor 70 to the movable scroll 40. The crank shaft 80 is disposed to extend in the up-down direction along the axis of the cylinder member 21 and couples the rotor 71 of the motor 70 and the movable scroll 40 of the compression mechanism 60 to each other.

The crank shaft 80 has the main shaft 82 having a center axis coincident with the axis of the cylinder member 21, and the eccentric portion 81 eccentric with respect to the axis of the cylinder member 21. The eccentric portion 81 is inserted into the boss portion 43 of the movable scroll 40.

The main shaft 82 is rotatably supported by the bearing 63 on the bearing portion 61b of the housing 61 and the lower bearing 90. The main shaft 82 is coupled between the bearing portion 61b and the lower bearing 90 to the rotor 71 of the motor 70.

In the inner portion of the crank shaft 80, the oil supply path 83 for supplying the refrigerating machine oil O to the compression mechanism 60 and the like is formed. The lower end of the main shaft 82 is positioned in the oil reservoir space So formed in a lower portion of the casing 20. The refrigerating machine oil O in the oil reservoir space So is supplied to the compression mechanism 60 and the like through the oil supply path 83.

(7-5) Lower Bearing 90

The lower bearing 90 is disposed below the motor 70. The lower bearing 90 is fixed to the cylinder member 21. The lower bearing 90 constitutes the bearing on the lower end side of the crank shaft 80 and rotatably supports the main shaft 82 of the crank shaft 80.

(8) Operation of Compressor 100

Operation of the compressor 100 will be described. When the motor 70 is started, the rotor 71 rotates with respect to the stator 72, and the crank shaft 80 fixed to the rotor 71 rotates. When the crank shaft 80 rotates, the movable scroll 40 coupled to the crank shaft 80 revolves with respect to the fixed scroll 30. Then, the low-pressure gas refrigerant of the refrigeration cycle is sucked into the compression chamber Sc from the peripheral edge side of the compression chamber Sc through the suction pipe 23. As a result of the movable scroll 40 revolving, the suction pipe 23 and the compression chamber Sc become not in communication with each other, and, in response to the decrease in the capacity of the compression chamber Sc, the pressure in the compression chamber Sc starts to increase.

The refrigerant in the compression chamber Sc is compressed in response to the decrease in the capacity of the compression chamber Sc and eventually becomes a high-pressure gas refrigerant. The high-pressure gas refrigerant is discharged through the discharge port 32a positioned close to the center of the fixed-side end plate 32. After that, the high-pressure gas refrigerant passes through the refrigerant passage (not illustrated) formed in the fixed scroll 30 and the housing 61 and flows into the high-pressure space S1. The high-pressure gas refrigerant of the refrigeration cycle that has flowed into the high-pressure space S1 and that has been compressed by the compression mechanism 60 is discharged through the discharge pipe 24.

(9) Configuration of Motor 70

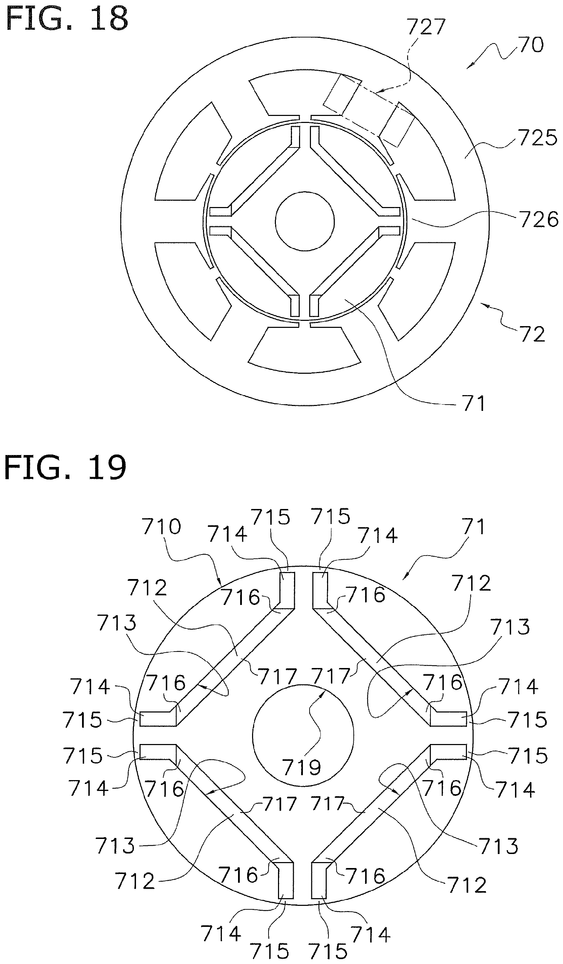

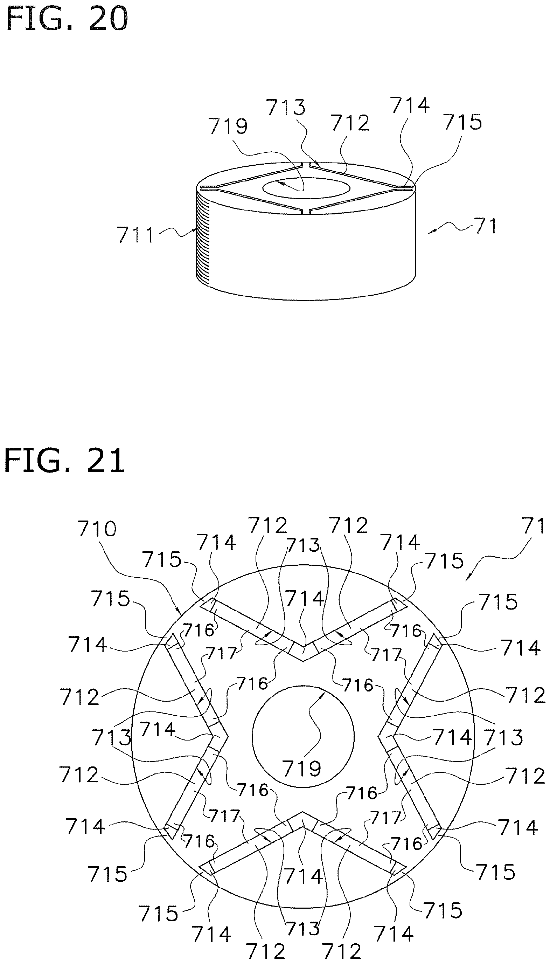

Fig. 18 is a sectional view of the motor 70 sectioned along a plane perpendicular to the axis. Fig. 19 is a sectional view of the rotor 71 sectioned along a plane perpendicular to the axis. Fig. 20 is a perspective view of the rotor 71.
Note that illustration of the shaft coupled to the rotor 71 to transmit the rotational force to the outside is omitted in Fig. 18 to Fig. 20. The motor 70 in Fig. 18 to Fig. 20 is a permanent-magnet synchronous motor. The motor 70 has the rotor 71 and the stator 72.

(9-1) Stator 72

The stator 72 is provided with a barrel portion 725 and a plurality of tooth portions 726. The barrel portion 725 has a substantially cylindrical shape having an inner circumferential diameter larger than the outer circumferential diameter of the rotor 71. The barrel portion 725 is formed by machining each of thin electromagnetic steel plates having a thickness of 0.05 mm or more and 0.5 mm or less integrally with the tooth portions 726 into a predetermined shape and laminating a predetermined number of the electromagnetic steel plates.
The plurality of tooth portions 726 project on the inner circumferential part of the barrel portion 725 in a form of being positioned at substantially equal intervals in the circumferential direction thereof. Each of the tooth portions 726 extends from the inner circumferential part of the barrel portion 725 toward the center in the radial direction of a circle centered on the axis and faces the rotor 71 with a predetermined gap.
The tooth portions 726 are magnetically coupled on the outer circumferential side via the barrel portion 725. A coil 727 is wound, as a coil, around each of the tooth portions 726 (only one of the coils 727 is illustrated in Fig. 18). Three-phase alternating current for generating a rotating magnetic field that rotates the rotor 71 is made to flow through the coils 727. The winding type of the coils 727 is not limited and may be wound with respect to the plurality of the tooth portions 726 in a concentrated form or in a distributed form.
The rotor 71 and the stator 72 are incorporated in the casing 20 and used as a rotary electric machine.

(9-2) Rotor 71

The rotor 71 has a substantially cylindrical external shape and has a center axis along which the main shaft 82 of the crank shaft 80 is coupled and fixed. The rotor 71 has a rotor core 710 and a plurality of permanent magnets 712. The rotor 71 is a magnet-embedded rotor in which the permanent magnets 712 are embedded in the rotor core 710.

(9-2-1) Rotor Core 710

The rotor core 710 is made of a magnetic material and has a substantially cylindrical shape. The rotor core 710 is formed by machining each of thin electromagnetic steel plates 711 having a thickness of 0.05 mm or more and 0.5 mm or less into a predetermined shape and laminating a predetermined number of the electromagnetic steel plates 711. The electromagnetic steel plates are desirably a plurality of high-tensile electromagnetic steel plates each having a tensile strength of 400 MPa or more to improve the durability of the rotor during high-speed rotation.
A shaft insertion hole 719 for fixing the main shaft 82 (refer to Fig. 17) of the crank shaft 80 is formed along the center axis of the rotor core 710. In the rotor core 710, a plurality of magnet accommodation holes 713 are formed in the circumferential direction about the axis.

(9-2-1-1) Magnet Accommodation Hole 713

The magnet accommodation holes 713 are spaces each having a rectangular parallelepiped shape that is flat in a direction substantially orthogonal to the radial direction of the circle centered on the axis. The magnet accommodation holes 713 may be through holes or may be bottomed holes as long as having a shape that enables the permanent magnets 712 to be embedded therein.
As illustrated in Fig. 19, the magnet accommodation holes 713 are disposed such that two of any mutually adjacent magnet accommodation holes 713 form a substantially V-shape.

(9-2-1-2) Non-magnetic Space 714

A non-magnetic space 714 extends toward the outer circumferential side of the rotor core 710 by bending from each end portion of the magnet accommodation holes 713. The non-magnetic space 714 has a function of causing, when a demagnetization field is generated, a magnetic flux due to the demagnetization field to avoid the permanent magnets 712 and easily pass through the non-magnetic space 714. Thus, prevention of demagnetization is also addressed by the non-magnetic space 714.

(9-2-1-3) Bridge 715

A bridge 715 is positioned radially outside the non-magnetic space 714 and couples magnetic poles to each other. The thickness of the bridge 715 is set to be 3 mm or more to improve durability during high-speed rotation.

The rotor 71 illustrated in Fig. 18 to Fig. 20 is an example, and the rotor is not limited thereto.

Fig. 21 is a sectional view of another rotor 71 sectioned along a plane perpendicular to the axis. The rotor 71 in Fig. 21 differs from the rotor in Fig. 19 in terms of that pairs of mutually adjacent two magnet accommodation holes 713 are each disposed to form a V-shape in Fig. 21 while, in Fig. 19, mutually adjacent any two of the magnet accommodation holes are disposed to form a substantially V-shape.

Thus, in the rotor 71 of Fig. 21, the rotor core 710 is provided with eight magnet accommodation holes 713 each having a width narrower than that of the magnet accommodation holes illustrated in Fig. 19, pairs of mutually adjacent magnet accommodation holes 713 each form a V-shape, and four V-shapes are formed in total. The bottom side of the V-shape formed by a pair of the magnet accommodation holes 713 forms one V-shaped non-magnetic space 714 as a result of two non-magnetic spaces connected to each other.

The non-magnetic space 714 on the outer side is formed on an end portion opposite to the bottom side of the magnet accommodation hole 713 and extends toward the outer circumferential side of the rotor core 710.

The breadth of the magnet accommodation holes 713 is small compared with those of the magnet accommodation holes illustrated in Fig. 19. Consequently, the breadth of the permanent magnets 712 is also small compared with those of the permanent magnets illustrated in Fig. 19.

Actions of the permanent magnets 712, the magnet accommodation holes 713, the non-magnetic spaces 714, and the bridges 715 illustrated in Fig. 21 are identical to the actions of those in illustrated in Fig. 19.

(9-2-2) Permanent Magnet 712

The permanent magnets 712 are neodymium rare-earth magnets containing Nd-Fe-B (neodymium-iron-boron). The coercive force of Nd-Fe-B-based magnets deteriorates by being affected by temperature. Thus, when a motor using Nd-Fe-B-based magnets is used in a compressor, the coercive force thereof decreases in high-temperature atmosphere (100°C or higher) inside the compressor.

Therefore, the permanent magnets 712 are desirably formed by diffusing a heavy-rare-earth element (for example, dysprosium) along grain boundaries. In grain boundary diffusion in which a heavy-rare-earth element is diffused along grain boundaries, a sintered material is formed by sintering a predetermined composition, a heavy-rare-earth product is applied onto the sintered material, and then, the sintered material is subjected to heat treatment at a temperature lower than a sintering temperature, thereby manufacturing the permanent magnets 712.

According to the grain boundary diffusion, it is possible to reduce the addition amount of the heavy-rare-earth element and increase the coercive force. The permanent magnets 712 of the present embodiment each contain 1 mass% or less of dysprosium and thereby improve the holding force.

In the present embodiment, to improve demagnetization resistance of the permanent magnets 712, the average crystal grain size of each permanent magnet 712 is 10 $\mu$m or less and desirably 5 $\mu$m or less.

The permanent magnets 712 each have a quadrangular plate shape having two major faces and a uniform thickness. The permanent magnets 712 are embedded one each in each magnet accommodation hole 713. As illustrated in Fig. 19 and Fig. 21, among the permanent magnets 712 embedded in respective magnet accommodation holes 713, two of any mutually adjacent permanent magnets 712 form a substantially V-shape.

The outward faces of the permanent magnets 712 are pole faces that cause the rotor core 710 to generate magnetic poles. The inward faces of the permanent magnets 712 are opposite pole faces opposite thereto. When the permanent magnets 712 are considered as parts that cause the stator 72 to generate magnetic poles, both end portions of the permanent magnets 712 in the circumferential direction are pole ends, and a center portion thereof in the circumferential direction is the magnetic pole center.

In the aforementioned orientation of the permanent magnets 712, both end portions of the permanent magnets 712 are in the vicinity of the end portions of the magnetic poles, and a portion close to the air gap is referred to as "proximity part 716". The proximity part 716 is a part positioned at the bottom portion of the V-shape. In the permanent magnet 712, an intermediate portion is closer than the proximity part 716 to a magnetic-pole-center portion, and a part that is distant from the air gap is referred to as "distant part 717".

In the motor 70 of a concentrated winding-type in which the coils 727 are wound around respective tooth portions 726, magnetic fluxes generated by the coils 727 flow to the tooth portions 726 adjacent thereto at a shortest distance. Accordingly, a demagnetization field acts more strongly on the proximity parts 716 of the permanent magnets 712 in the vicinity of the surface of the rotor core 710. Therefore, in the present embodiment, the holding force of the proximity part 716 (part positioned at the bottom portion of the V-shape) is set to be higher than that of the other parts by $\{1/(4\pi)\} \times 10^3$[A/m] or more, thereby suppressing demagnetization.

Thus, the demagnetization suppressing effect is large when the present embodiment is applied to the concentrated winding-type motor 70.

The thickness dimension of the permanent magnets 712 and the dimension of the magnet accommodation holes 713 in the thickness direction of the permanent magnets 712 are substantially identical to each other. Both major faces of the permanent magnets 712 are substantially in contact with the inner faces of the magnet accommodation holes 713. As a result, it is possible to reduce magnetic resistance between the permanent magnets 712 and the rotor core 710.

The "state in which both major faces of the permanent magnets 712 are substantially in contact with the inner faces of the magnet accommodation holes 713" includes a "state in which a minute gap of a size required to insert the permanent magnets 712 into the magnet accommodation holes 713 is generated between the permanent magnets 712 and the magnet accommodation holes 713".

(10) Features

(10-1)

The compressor 100 is suitable for a variable capacity compressor in which the number of rotations of a motor can be changed because the motor 70 has the rotor 71 including the permanent magnets 712. In this case, in the air conditioner 1 that uses a mixed refrigerant containing at least 1,2-difluoroethylene, the number of rotations can be changed in accordance with an air conditioning load, which enables high efficiency of the compressor 100.

(10-2)

The rotor 71 is a magnet-embedded rotor. In the magnet-embedded rotor, the permanent magnets 712 are embedded in the rotor 71.

(10-3)

The rotor 71 is formed by laminating a plurality of the electromagnetic steel plates 711 in the plate thickness direction. The thickness of each of the electromagnetic steel plates 711 is 0.05 mm or more and 0.5 mm or less.

Generally, the thinner the plate thickness is made, the more the eddy-current loss can be reduced. The plate thickness is, however, desirably 0.05 to 0.5 mm considering that a plate thickness of less than 0.05 mm makes processing of the electromagnetic steel plates difficult and that it takes time for siliconizing from the steel plate surface and diffusing for optimizing Si distribution when the plate thickness is more than 0.5 mm.

(10-4)

The permanent magnets 712 are Nd-Fe-B-based magnets. As a result, the motor 70 capable of increasing a magnetic energy product is realized, which enables high efficiency of the compressor 100.

(10-5)

The permanent magnets 712 are formed by diffusing a heavy-rare-earth element along grain boundaries. As a result, the demagnetization resistance of the permanent magnets 712 is improved, and the holding force of the permanent magnets can be increased with a small amount of the heavy-rare-earth element, which enables high efficiency of the compressor 100.

(10-6)

The permanent magnets 712 each contain 1 mass% or less of dysprosium. As a result, the holding force of the permanent magnets 712 is improved, which enables high efficiency of the compressor 100.

(10-7)

The average crystal grain size of the permanent magnets 712 is 10 $\mu$m or less. As a result, the demagnetization resistance of the permanent magnets 712 is increased, which enables high efficiency of the compressor 100.

(10-8)

The permanent magnets 712 are flat, and a plurality of the permanent magnets 712 are embedded in the rotor 71 to form a V-shape. The holding force of the part positioned at the bottom portion of the V-shape is set to be higher than those of the other part by $\{1/(4\pi)\} \times 10^3$[A/m] or more. As a result, demagnetization of the permanent magnets 712 is suppressed, which enables high efficiency of the compressor 100.

(10-9)

The rotor 71 is formed by laminating a plurality of high-tensile electromagnetic steel plates in the plate thickness direction, the plurality of high-tensile electromagnetic steel plates each having a tensile strength of 400 MPa or more. As a result, durability of the rotor 71 during high-speed rotation is improved, which enables high efficiency of the compressor 100.

(10-10)

The thickness of the bridge 715 of the rotor 71 is 3 mm or more. As a result, durability of the rotor during high-speed rotation is improved, which enables high efficiency of the compressor.

(11) Modifications

(11-1)

The rotor 71 may be formed by laminating a plurality of plate-shaped amorphous metals in the plate thickness direction. In this case, a high-efficient motor having a less iron loss is realized, which enables high efficiency of the compressor.

(11-2)

The rotor 71 may be formed by laminating a plurality of electromagnetic steel plates each containing 5 mass% or more of silicon in the plate thickness direction. In this case, the electromagnetic steel plates in which hysteresis is reduced by containing a suitable amount of silicon realizes a high-efficient motor having a less iron loss, which enables high efficiency of the compressor.

(11-3)

In the aforementioned embodiment, the rotor 71 has been described as a magnet-embedded rotor but is not limited thereto. For example, the rotor may be a surface-magnet rotor in which permanent magnets are affixed to the surface of the rotor.

(12) Configuration of Compressor 300 according to Second Embodiment

In the first embodiment, a scroll compressor has been described as the compressor 100. The compressor is, however, not limited to the scroll compressor.

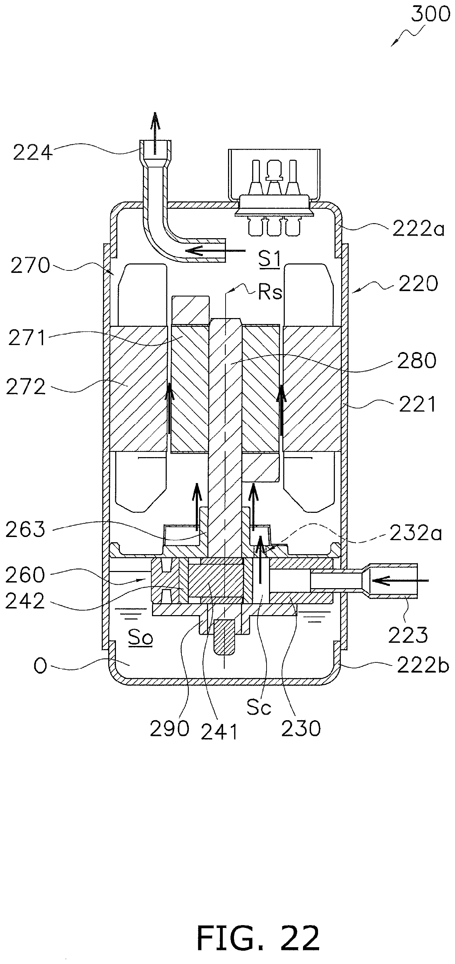

Fig. 22 is a longitudinal sectional view of a compressor 300 according to a second embodiment of the present disclosure. The compressor 300 in Fig. 22 is a rotary compressor. The compressor 300 constitutes a portion of a refrigerant circuit in which any one of the aforementioned refrigerants A to E circulates. The compressor 300 compresses a refrigerant and discharges a high-pressure gas refrigerant. The arrows in Fig. 22 indicate the flow of the refrigerant.

(12-1) Casing 220

The compressor 300 has a longitudinally elongated cylindrical casing 220. The casing 220 has a substantially cylindrical cylinder member 221 that opens upward and downward, and an upper cover 222a and a lower cover 222b disposed at the upper end and the lower end of the cylinder member 221, respectively. The upper cover 222a and the lower cover 222b are fixed to the cylinder member 221 by welding to maintain airtightness.

The casing 220 accommodates constituent devices of the compressor 300, including a compression mechanism 260, a motor 270, a crank shaft 280, an upper bearing 263, and a lower bearing 290. The oil reservoir space So is formed in a lower portion of the casing 220.

In a lower portion of the casing 220, a suction pipe 223 through which a gas refrigerant is sucked and through which the gas refrigerant is supplied to the compression mechanism 260 is disposed to extend through a lower portion of the cylinder member 221. An end of the suction pipe 223 is connected to a cylinder 230 of the compression mechanism 260. The suction pipe 223 is in communication with the compression chamber Sc of the compression mechanism 260. In the suction pipe 223, a low-pressure refrigerant of the refrigeration cycle before compression by the compressor 300 flows.

The upper cover 222a of the casing 220 is provided with a discharge pipe 224 through which a refrigerant to be discharged to the outside of the casing 220 passes. Specifically, an end portion of the discharge pipe 224 in the inner portion of the casing 220 is disposed in the high-pressure space S1 formed above the motor 270. In the discharge pipe 224, a high-pressure refrigerant of the refrigeration cycle after compression by the compression mechanism 260 flows.

(12-2) Motor 270

The motor 270 has a stator 272 and a rotor 271. Except for being used in the compressor 300, which is a rotary compressor, the motor 270 is basically equivalent to the motor 70 of the first embodiment and exerts performance and actions/effects that are equivalent to those of the motor 70 of the first embodiment. Therefore, description of the motor 270 is omitted here.

(12-3) Crank Shaft 280, Upper Bearing 263, and Lower Bearing 290

The crank shaft 280 is fixed to the rotor 271. Further, the crank shaft 280 is supported by the upper bearing 263 and the lower bearing 290 to be rotatable about a rotation axis Rs. The crank shaft 280 has an eccentric portion 241.

(12-4) Compression Mechanism 260

The compression mechanism 260 has the single cylinder 230 and a single piston 242 disposed in the cylinder 230. The cylinder 230 has a predetermined capacity and is fixed to the casing 220.

The piston 242 is disposed on the eccentric portion 241 of the crank shaft 280. The cylinder 230 and the piston 242 define the compression chamber Sc. Rotation of the rotor 271 revolves the piston 242 via the eccentric portion 241. In response to the revolution, the capacity of the compression chamber Sc changes, thereby compressing a gaseous refrigerant.

Here, "the capacity of the cylinder" means so-called theoretical capacity and, in other words, corresponds to the volume of a gaseous refrigerant sucked into the cylinder 230 through the suction pipe 223 during one rotation of the piston 242.

(12-5) Oil Reservoir Space So

The oil reservoir space So is disposed in a lower portion of the casing 220. The oil reservoir space So stores the refrigerating machine oil O for lubricating the compression mechanism 260. The refrigerating machine oil O is the refrigerating machine oil described in the section of "(4-1) Refrigerating Machine Oil".

(13) Operation of Compressor 300

Operation of the compressor 300 will be described. When the motor 270 is started, the rotor 271 rotates with respect to the stator 272, and the crank shaft 280 fixed to the rotor 271 rotates. When the crank shaft 280 rotates, the piston 242 coupled to the crank shaft 280 revolves with respect to the cylinder 230. Then, a low-pressure gas refrigerant of the refrigeration cycle is sucked into the compression chamber Sc through the suction pipe 223. As a result of the piston 242 revolving, the suction pipe 223 and the compression chamber Sc become not in communication with each other, and in response to the capacity of the compression chamber Sc decreasing, the pressure in the compression chamber Sc starts to increase.

The refrigerant in the compression chamber Sc is compressed in response to the capacity of the compression chamber Sc decreasing and eventually becomes a high-pressure gas refrigerant. The high-pressure gas refrigerant is discharged through a discharge port 232a. Then, the high-pressure gas refrigerant is discharged through the discharge pipe 224 disposed in the upper side of the casing 220 by passing through a gap between the stator 272 and the rotor 271 and other parts.

(14) Features of Second Embodiment

(14-1)

The compressor 300 employs the motor 270 equivalent to the motor 70 of the first embodiment and thus is suitable for a variable capacity compressor in which the number of rotations of the motor can be changed. In this case, it is possible in the air conditioner 1 that uses a mixed refrigerant containing at least 1,2-difluoroethyleneto to change the number of rotations of the motor in accordance with an air conditioning load, which enables high efficiency of the compressor 300.

(14-2)

By employing the motor 270 equivalent to the motor 70 of the first embodiment, the compressor 300 has the "features in (10-2) to (10-10)" of the "features (10)" of the first embodiment.

(14-3)

When using the compressor 300, which is a rotary compressor, as the compressor of the air conditioner 1, it is possible to reduce the packed amount of refrigerant compared with when using a scroll compressor. Thus, the compressor 300 is suitable for an air conditioner that uses a flammable refrigerant.

(15) Modification of Second Embodiment

Due to the compressor 300 employing the motor 270 equivalent to the motor 70 of the first embodiment, the modification is applicable to all described in "(11) Modifications" of the first embodiment.

(16) Other Embodiment

Regarding the form of the compressor, a screw compressor or a turbo compressor may be employed provided that a motor equivalent to the motor 70 is used.

Although embodiments of the present disclosure have been described above, it should be understood that various changes in the form and the details are possible without deviating from the spirit and the scope of the present disclosure described in the claims.

REFERENCE SIGNS LIST

71      rotor
100     compressor
271     rotor
300     compressor
711     electromagnetic steel plate
712     permanent magnet
713     magnet accommodation hole (accommodation hole)
714     non-magnetic space
715     bridge

**CITATION LIST**

**PATENT LITERATURE**

PTL 1: Japanese Unexamined Patent Application Publication No. 2013-124848

**Claims**

1. A compressor (100, 300) comprising:

   a compression unit (60, 260) that compresses a mixed refrigerant containing at least 1,2-difluoroethylene; and
   a motor (70, 270) that has a rotor (71, 271) including a permanent magnet (712) and that drives the compression unit.

2. The compressor (100, 300) according to claim 1, wherein
   the rotor (71, 271) is a magnet-embedded rotor in which the permanent magnet (712) is embedded in the rotor (71, 271).

3. The compressor (100, 300) according to claim 1 or claim 2, wherein

   the rotor (71, 271) is formed by laminating a plurality of electromagnetic steel plates (711) in a plate thickness direction, and
   a thickness of each of the electromagnetic steel plates (711) is 0.05 mm or more and 0.5 mm or less.

4. The compressor (100, 300) according to claim 1 or claim 2, wherein
   the rotor (71, 271) is formed by laminating a plurality of plate-shaped amorphous metals in a plate thickness direction.

5. The compressor (100, 300) according to claim 1 or claim 2, wherein
   the rotor (71, 271) is formed by laminating a plurality of electromagnetic steel plates each containing 5 mass% or more of silicon in a plate thickness direction.

6. The compressor (100, 300) according to any one of claims 1 to 5, wherein
   the permanent magnet (712) is a Nd-Fe-B-based magnet.

7. The compressor (100, 300) according to any one of claims 1 to 6, wherein
   the permanent magnet (712) is formed by diffusing a heavy-rare-earth element along grain boundaries.

8. The compressor (100, 300) according to claim 6, wherein
   the permanent magnet (712) contains 1 mass% or less of dysprosium.

9. The compressor (100, 300) according to any one of claims 1 to 8, wherein
   an average crystal grain size of the permanent magnet (712) is 10 $\mu$m or less.

10. The compressor (100, 300) according to claim 1 or claim 2, wherein

    the permanent magnet (712) has a flat shape,
    a plurality of the permanent magnets are embedded in the rotor (71, 271) to form a V-shape, and
    a holding force of a part positioned at a bottom portion of the V-shape is set to be higher than a holding force of other parts by $\{1/(4\pi)\} \times 10^3$[A/m].

11. The compressor (100, 300) according to claim 1 or claim 2, wherein the rotor (71, 271) is formed by laminating a plurality of high-tensile electromagnetic steel plates (711) in a plate thickness direction, the plurality of high-tensile electromagnetic steel plates (711) each having a tensile strength of 400 MPa or more.

12. The compressor (100, 300) according to claim 11, wherein

    the permanent magnet (712) forms a flat plate having a predetermined thickness,

the rotor (71, 271) includes

an accommodation hole (713) in which a plurality of the permanent magnets (712) are embedded,
a non-magnetic space (714) extending from each of end portions of the permanent magnets (712) accommodated in the accommodation hole (713) to a vicinity of a surface of the rotor (71, 271), and
a bridge (715) that is positioned on an outer side of the non-magnetic space and that couples magnetic poles to each other, and

a thickness of the bridge (715) is 3 mm or more.

13. The compressor (100, 300) according to claim 1, wherein
the rotor (71) is a surface-magnet rotor in which the permanent magnet (712) is affixed to a surface of the rotor (71, 271).

14. The compressor according to any one of claims 1 to 13,

wherein
the refrigerant comprises trans-1,2-difluoroethylene (HFO-1132(E)), trifluoroethylene (HFO-1123), and 2,3,3,3-tetrafluoro-1-propene (R1234yf).

15. The compressor according to claim 14,

wherein
when the mass% of HFO-1132(E), HFO-1123, and R1234yf based on their sum in the refrigerant is respectively represented by x, y, and z, coordinates (x,y,z) in a ternary composition diagram in which the sum of HFO-1132(E), HFO-1123, and R1234yf is 100 mass% are within the range of a figure surrounded by line segments AA', A'B, BD, DC', C'C, CO, and OA that connect the following 7 points:

point A (68.6, 0.0, 31.4),
point A' (30.6, 30.0, 39.4),
point B (0.0, 58.7, 41.3),
point D (0.0, 80.4, 19.6),
point C' (19.5, 70.5, 10.0),
point C (32.9, 67.1, 0.0), and
point O (100.0, 0.0, 0.0),

or on the above line segments (excluding the points on the line segments BD, CO, and OA);
the line segment AA' is represented by coordinates $(x, 0.0016x^2-0.9473x+57.497, -0.0016x^2-0.0527x+42.503)$,
the line segment A'B is represented by coordinates $(x, 0.0029x^2-1.0268x+58.7, -0.0029x^2+0.0268x+41.3)$,
the line segment DC' is represented by coordinates $(x, 0.0082x^2-0.6671x+80.4, -0.0082x^2-0.3329x+19.6)$,
the line segment C'C is represented by coordinates $(x, 0.0067x^2-0.6034x+79.729, -0.0067x^2-0.3966x+20.271)$, and
the line segments BD, CO, and OA are straight lines.

16. The compressor according to claim 14,

wherein
when the mass% of HFO-1132(E), HFO-1123, and R1234yf based on their sum in the refrigerant is respectively represented by x, y, and z, coordinates (x,y,z) in a ternary composition diagram in which the sum of HFO-1132(E), HFO-1123, and R1234yf is 100 mass% are within the range of a figure surrounded by line segments GI, IA, AA', A'B, BD, DC', C'C, and CG that connect the following 8 points:

point G (72.0, 28.0, 0.0),
point I (72.0, 0.0, 28.0),
point A (68.6, 0.0, 31.4),
point A' (30.6, 30.0, 39.4),
point B (0.0, 58.7, 41.3),
point D (0.0, 80.4, 19.6),

point C' (19.5, 70.5, 10.0), and
point C (32.9, 67.1, 0.0),

or on the above line segments (excluding the points on the line segments IA, BD, and CG);
the line segment AA' is represented by coordinates (x, $0.0016x^2$-0.9473x+57.497, $-0.0016x^2$-0.0527x+42.503),
the line segment A'B is represented by coordinates (x, $0.0029x^2$-1.0268x+58.7, $-0.0029x^2$+0.0268x+41.3),
the line segment DC' is represented by coordinates (x, $0.0082x^2$-0.6671x+80.4, $-0.0082x^2$-0.3329x+19.6),
the line segment C'C is represented by coordinates (x, $0.0067x^2$-0.6034x+79.729, $-0.0067x^2$-0.3966x+20.271), and
the line segments GI, IA, BD, and CG are straight lines.

17. The compressor according to claim 14,

wherein
when the mass% of HFO-1132(E), HFO-1123, and R1234yf based on their sum in the refrigerant is respectively represented by x, y, and z, coordinates (x,y,z) in a ternary composition diagram in which the sum of HFO-1132(E), HFO-1123, and R1234yf is 100 mass% are within the range of a figure surrounded by line segments JP, PN, NK, KA', A'B, BD, DC', C'C, and CJ that connect the following 9 points:

point J (47.1, 52.9, 0.0),
point P (55.8, 42.0, 2.2),
point N (68.6, 16.3, 15.1),
point K (61.3, 5.4, 33.3),
point A' (30.6, 30.0, 39.4),
point B (0.0, 58.7, 41.3),
point D (0.0, 80.4, 19.6),
point C' (19.5, 70.5, 10.0), and
point C (32.9, 67.1, 0.0),

or on the above line segments (excluding the points on the line segments BD and CJ);
the line segment PN is represented by coordinates (x, $-0.1135x^2$+12.112x-280.43, $0.1135x^2$-13.112x+380.43),
the line segment NK is represented by coordinates (x, $0.2421x^2$-29.955x+931.91, $-0.2421x^2$+28.955x-831.91),
the line segment KA' is represented by coordinates (x, $0.0016x^2$-0.9473x+57.497, $-0.0016x^2$-0.0527x+42.503),
the line segment A'B is represented by coordinates (x, $0.0029x^2$-1.0268x+58.7, $-0.0029x^2$+0.0268x+41.3),
the line segment DC' is represented by coordinates (x, $0.0082x^2$-0.6671x+80.4, $-0.0082x^2$-0.3329x+19.6),
the line segment C'C is represented by coordinates (x, $0.0067x^2$-0.6034x+79.729, $-0.0067x^2$-0.3966x+20.271), and
the line segments JP, BD, and CG are straight lines.

18. The compressor according to claim 14,

wherein
when the mass% of HFO-1132(E), HFO-1123, and R1234yf based on their sum in the refrigerant is respectively represented by x, y, and z, coordinates (x,y,z) in a ternary composition diagram in which the sum of HFO-1132(E), HFO-1123, and R1234yf is 100 mass% are within the range of a figure surrounded by line segments JP, PL, LM, MA', A'B, BD, DC', C'C, and CJ that connect the following 9 points:

point J (47.1, 52.9, 0.0),
point P (55.8, 42.0, 2.2),
point L (63.1, 31.9, 5.0),
point M (60.3, 6.2, 33.5),
point A' (30.6, 30.0, 39.4),
point B (0.0, 58.7, 41.3),
point D (0.0, 80.4, 19.6),
point C' (19.5, 70.5, 10.0), and
point C (32.9, 67.1, 0.0),

or on the above line segments (excluding the points on the line segments BD and CJ);

the line segment PL is represented by coordinates (x, $-0.1135x^2+12.112x-280.43$, $0.1135x^2-13.112x+380.43$)
the line segment MA' is represented by coordinates (x, $0.0016x^2-0.9473x+57.497$, $-0.0016x^2-0.0527x+42.503$),
the line segment A'B is represented by coordinates (x, $0.0029x^2-1.0268x+58.7$, $-0.0029x^2+0.0268x+41.3$),
the line segment DC' is represented by coordinates (x, $0.0082x^2-0.6671x+80.4$, $-0.0082x^2-0.3329x+19.6$),
the line segment C'C is represented by coordinates (x, $0.0067x^2-0.6034x+79.729$, $-0.0067x^2-0.3966x+20.271$), and
the line segments JP, LM, BD, and CG are straight lines.

**19.** The compressor according to claim 14,

wherein
when the mass% of HFO-1132(E), HFO-1123, and R1234yf based on their sum in the refrigerant is respectively represented by x, y, and z, coordinates (x,y,z) in a ternary composition diagram in which the sum of HFO-1132(E), HFO-1123, and R1234yf is 100 mass% are within the range of a figure surrounded by line segments PL, LM, MA', A'B, BF, FT, and TP that connect the following 7 points:

point P (55.8, 42.0, 2.2),
point L (63.1, 31.9, 5.0),
point M (60.3, 6.2, 33.5),
point A' (30.6, 30.0, 39.4),
point B (0.0, 58.7, 41.3),
point F (0.0, 61.8, 38.2), and
point T (35.8, 44.9, 19.3),

or on the above line segments (excluding the points on the line segment BF);
the line segment PL is represented by coordinates (x, $-0.1135x^2+12.112x-280.43$, $0.1135x^2-13.112x+380.43$),
the line segment MA' is represented by coordinates (x, $0.0016x^2-0.9473x+57.497$, $-0.0016x^2-0.0527x+42.503$),
the line segment A'B is represented by coordinates (x, $0.0029x^2-1.0268x+58.7$, $-0.0029x^2+0.0268x+41.3$),
the line segment FT is represented by coordinates (x, $0.0078x^2-0.7501x+61.8$, $-0.0078x^2-0.2499x+38.2$),
the line segment TP is represented by coordinates (x, $0.0067x^2-0.7607x+63.525$, $-0.0067x^2-0.2393x+36.475$), and
the line segments LM and BF are straight lines.

**20.** The compressor according to claim 14,

wherein
when the mass% of HFO-1132(E), HFO-1123, and R1234yf based on their sum in the refrigerant is respectively represented by x, y, and z, coordinates (x,y,z) in a ternary composition diagram in which the sum of HFO-1132(E), HFO-1123, and R1234yf is 100 mass% are within the range of a figure surrounded by line segments PL, LQ, QR, and RP that connect the following 4 points:

point P (55.8, 42.0, 2.2),
point L (63.1, 31.9, 5.0),
point Q (62.8, 29.6, 7.6), and
point R (49.8, 42.3, 7.9),

or on the above line segments;
the line segment PL is represented by coordinates (x, $-0.1135x^2+12.112x-280.43$, $0.1135x^2-13.112x+380.43$),
the line segment RP is represented by coordinates (x, $0.0067x^2-0.7607x+63.525$, $-0.0067x^2-0.2393x+36.475$), and
the line segments LQ and QR are straight lines.

**21.** The compressor according to claim 14,

wherein
when the mass% of HFO-1132(E), HFO-1123, and R1234yf based on their sum in the refrigerant is respectively represented by x, y, and z, coordinates (x,y,z) in a ternary composition diagram in which the sum of HFO-1132(E), HFO-1123, and R1234yf is 100 mass% are within the range of a figure surrounded by line segments SM, MA', A'B, BF, FT, and TS that connect the following 6 points:

point S (62.6, 28.3, 9.1),
point M (60.3, 6.2, 33.5),
point A' (30.6, 30.0, 39.4),
point B (0.0, 58.7, 41.3),
point F (0.0, 61.8, 38.2), and
point T (35.8, 44.9, 19.3),

or on the above line segments,
the line segment MA' is represented by coordinates (x, $0.0016x^2$-0.9473x+57.497, $-0.0016x^2$-0.0527x+42.503),
the line segment A'B is represented by coordinates (x, $0.0029x^2$-1.0268x+58.7, $-0.0029x^2$+0.0268x+41.3),
the line segment FT is represented by coordinates (x, $0.0078x^2$-0.7501x+61.8, $-0.0078x^2$-0.2499x+38.2),
the line segment TS is represented by coordinates (x, $0.0017x^2$-0.7869x+70.888, $-0.0017x^2$-0.2131x+29.112), and
the line segments SM and BF are straight lines.

**22.** The compressor according to any one of claims 1 to 13,

wherein
the refrigerant comprises trans-1,2-difluoroethylene (HFO-1132(E)) and trifluoroethylene (HFO-1123) in a total
amount of 99.5 mass% or more based on the entire refrigerant, and
the refrigerant comprises 62.0 mass% to 72.0 mass% of HFO-1132(E) based on the entire refrigerant.

**23.** The compressor according to any one of claims 1 to 13,

wherein
the refrigerant comprises HFO-1132(E) and HFO-1123 in a total amount of 99.5 mass% or more based on the
entire refrigerant, and
the refrigerant comprises 45.1 mass% to 47.1 mass% of HFO-1132(E) based on the entire refrigerant.

**24.** The compressor according to any one of claims 1 to 13,

wherein
the refrigerant comprises trans-1,2-difluoroethylene (HFO-1132(E)), trifluoroethylene (HFO-1123), 2,3,3,3-
tetrafluoro-1-propene (R1234yf), and difluoromethane (R32),
wherein
when the mass% of HFO-1132(E), HFO-1123, R1234yf, and R32 based on their sum in the refrigerant is
respectively represented by x, y, z, and a,
if $0 < a \leq 11.1$, coordinates (x,y,z) in a ternary composition diagram in which the sum of HFO-1132(E), HFO-1123,
and R1234yf is (100-a) mass% are within the range of a figure surrounded by straight lines GI, IA, AB, BD',
D'C, and CG that connect the following 6 points:

point G ($0.026a^2$-1.7478a+72.0, $-0.026a^2$+0.7478a+28.0, 0.0),
point I ($0.026a^2$-1.7478a+72.0, 0.0, $-0.026a^2$+0.7478a+28.0),
point A($0.0134a^2$-1.9681a+68.6, 0.0, $-0.0134a^2$+0.9681a+31.4),
point B (0.0, $0.0144a^2$-1.6377a+58.7, $-0.0144a^2$+0.6377a+41.3),
point D' (0.0, $0.0224a^2$+0.968a+75.4, $-0.0224a^2$-1.968a+24.6), and
point C ($-0.2304a^2$-0.4062a+32.9, $0.2304a^2$-0.5938a+67.1, 0.0),

or on the straight lines GI, AB, and D'C (excluding point G, point I, point A, point B, point D', and point C);
if $11.1 < a \leq 18.2$, coordinates (x,y,z) in the ternary composition diagram are within the range of a figure surrounded
by straight lines GI, IA, AB, BW, and WG that connect the following 5 points:

point G ($0.02a^2$-1.6013a+71.105, $-0.02a^2$+0.6013a+28.895, 0.0),
point I ($0.02a^2$-1.6013a+71.105, 0.0, $-0.02a^2$+0.6013a+28.895),
point A($0.0112a^2$-1.9337a+68.484, 0.0, $-0.0112a^2$+0.9337a+31.516),
point B (0.0, $0.0075a^2$-1.5156a+58.199, $-0.0075a^2$+0.5156a+41.801), and

point W (0.0, 100.0-a, 0.0),

or on the straight lines GI and AB (excluding point G, point I, point A, point B, and point W);
if $18.2<a\leq26.7$, coordinates (x,y,z) in the ternary composition diagram are within the range of a figure surrounded by straight lines GI, IA, AB, BW, and WG that connect the following 5 points:

point G ($0.0135a^2-1.4068a+69.727$, $-0.0135a^2+0.4068a+30.273$, 0.0),
point I ($0.0135a^2-1.4068a+69.727$, 0.0, $-0.0135a^2+0.4068a+30.273$),
point A($0.0107a^2-1.9142a+68.305$, 0.0, $-0.0107a^2+0.9142a+31.695$),
point B (0.0, $0.009a^2-1.6045a+59.318$, $-0.009a^2+0.6045a+40.682$), and
point W (0.0, 100.0-a, 0.0),

or on the straight lines GI and AB (excluding point G, point I, point A, point B, and point W);
if $26.7<a\leq36.7$, coordinates (x,y,z) in the ternary composition diagram are within the range of a figure surrounded by straight lines GI, IA, AB, BW, and WG that connect the following 5 points:

point G ($0.0111a^2-1.3152a+68.986$, $-0.0111a^2+0.3152a+31.014$, 0.0),
point I ($0.0111a^2-1.3152a+68.986$, 0.0, $-0.0111a^2+0.3152a+31.014$),
point A($0.0103a^2-1.9225a+68.793$, 0.0, $-0.0103a^2+0.9225a+31.207$),
point B (0.0, $0.0046a^2-1.41a+57.286$, $-0.0046a^2+0.41a+42.714$), and
point W (0.0, 100.0-a, 0.0),

or on the straight lines GI and AB (excluding point G, point I, point A, point B, and point W); and
if $36.7<a\leq46.7$, coordinates (x,y,z) in the ternary composition diagram are within the range of a figure surrounded by straight lines GI, IA, AB, BW, and WG that connect the following 5 points:

point G ($0.0061a^2-0.9918a+63.902$, $-0.0061a^2-0.0082a+36.098$, 0.0),
point I ($0.0061a^2-0.9918a+63.902$, 0.0, $-0.0061a^2-0.0082a+36.098$),
point A ($0.0085a^2-1.8102a+67.1$, 0.0, $-0.0085a^2+0.8102a+32.9$),
point B (0.0, $0.0012a^2-1.1659a+52.95$, $-0.0012a^2+0.1659a+47.05$), and
point W (0.0, 100.0-a, 0.0),

or on the straight lines GI and AB (excluding point G, point I, point A, point B, and point W).

**25.** The compressor according to any one of claims 1 to 13,

wherein
the refrigerant comprises trans-1,2-difluoroethylene (HFO-1132(E)), trifluoroethylene (HFO-1123), 2,3,3,3-tetrafluoro-1-propene (R1234yf), and difluoromethane (R32),
wherein
when the mass% of HFO-1132(E), HFO-1123, R1234yf, and R32 based on their sum in the refrigerant is respectively represented by x, y, z, and a,
if $0<a\leq11.1$, coordinates (x,y,z) in a ternary composition diagram in which the sum of HFO-1132(E), HFO-1123, and R1234yf is (100-a) mass% are within the range of a figure surrounded by straight lines JK', K'B, BD', D'C, and CJ that connect the following 5 points:

point J ($0.0049a^2-0.9645a+47.1$, $-0.0049a^2-0.0355a+52.9$, 0.0),
point K' ($0.0514a^2-2.4353a+61.7$, $-0.0323a^2+0.4122a+5.9$, $-0.0191a^2+1.0231a+32.4$),
point B (0.0, $0.0144a^2-1.6377a+58.7$, $-0.0144a^2+0.6377a+41.3$),
point D' (0.0, $0.0224a^2+0.968a+75.4$, $-0.0224a^2-1.968a+24.6$), and
point C ($-0.2304a^2-0.4062a+32.9$, $0.2304a^2-0.5938a+67.1$, 0.0),

or on the straight lines JK', K'B, and D'C (excluding point J, point B, point D', and point C);
if $11.1<a\leq18.2$, coordinates (x,y,z) in the ternary composition diagram are within the range of a figure surrounded by straight lines JK', K'B, BW, and WJ that connect the following 4 points:

point J ($0.0243a^2-1.4161a+49.725$, $-0.0243a^2+0.4161a+50.275$, 0.0),
point K' ($0.0341a^2-2.1977a+61.187$, $-0.0236a^2+0.34a+5.636$, $-0.0105a^2+0.8577a+33.177$),

point B (0.0, 0.0075a$^2$-1.5156a+58.199, -0.0075a$^2$+0.5156a+41.801), and
point W (0.0, 100.0-a, 0.0),

or on the straight lines JK' and K'B (excluding point J, point B, and point W);
if 18.2<a≤26.7, coordinates (x,y,z) in the ternary composition diagram are within the range of a figure surrounded by straight lines JK', K'B, BW, and WJ that connect the following 4 points:

point J (0.0246a$^2$-1.4476a+50.184, -0.0246a$^2$+0.4476a+49.816, 0.0),
point K' (0.0196a$^2$-1.7863a+58.515, -0.0079a$^2$-0.1136a+8.702, -0.0117a$^2$+0.8999a+32.783),
point B (0.0, 0.009a$^2$-1.6045a+59.318, -0.009a$^2$+0.6045a+40.682), and
point W (0.0, 100.0-a, 0.0),

or on the straight lines JK' and K'B (excluding point J, point B, and point W);
if 26.7<a≤36.7, coordinates (x,y,z) in the ternary composition diagram are within the range of a figure surrounded by straight lines JK', K'A, AB, BW, and WJ that connect the following 5 points:

point J (0.0183a$^2$-1.1399a+46.493, -0.0183a$^2$+0.1399a+53.507, 0.0),
point K' (-0.0051a$^2$+0.0929a+25.95, 0.0, 0.0051a$^2$-1.0929a+74.05),
point A(0.0103a$^2$-1.9225a+68.793, 0.0, -0.0103a$^2$+0.9225a+31.207),
point B (0.0, 0.0046a$^2$-1.41a+57.286, -0.0046a$^2$+0.41a+42.714), and
point W (0.0, 100.0-a, 0.0),

or on the straight lines JK', K'A, and AB (excluding point J, point B, and point W); and
if 36.7<a≤46.7, coordinates (x,y,z) in the ternary composition diagram are within the range of a figure surrounded by straight lines JK', K'A, AB, BW, and WJ that connect the following 5 points:

point J(-0.0134a$^2$+1.0956a+7.13, 0.0134a$^2$-2.0956a+92.87, 0.0),
point K' (-1.892a+29.443, 0.0, 0.892a+70.557),
point A (0.0085a$^2$-1.8102a+67.1, 0.0, -0.0085a$^2$+0.8102a+32.9),
point B (0.0, 0.0012a$^2$-1.1659a+52.95, -0.0012a$^2$+0.1659a+47.05), and
point W (0.0, 100.0-a, 0.0),

or on the straight lines JK', K'A, and AB (excluding point J, point B, and point W).

**26.** The compressor according to any one of claims 1 to 13,

wherein
the refrigerant comprises trans-1,2-difluoroethylene (HFO-1132(E)), difluoromethane(R32), and 2,3,3,3-tetrafluoro-1-propene (R1234yf),
wherein
when the mass% of HFO-1132(E), R32, and R1234yf based on their sum in the refrigerant is respectively represented by x, y, and z, coordinates (x,y,z) in a ternary composition diagram in which the sum of HFO-1132(E), R32, and R1234yf is 100 mass% are within the range of a figure surrounded by line segments IJ, JN, NE, and EI that connect the following 4 points:

point I (72.0, 0.0, 28.0),
point J (48.5, 18.3, 33.2),
point N (27.7, 18.2, 54.1), and
point E (58.3, 0.0, 41.7),

or on these line segments (excluding the points on the line segment EI;
the line segment IJ is represented by coordinates (0.0236y$^2$-1.7616y+72.0, y, -0.0236y$^2$+0.7616y+28.0);
the line segment NE is represented by coordinates (0.012y$^2$-1.9003y+58.3, y, -0.012y$^2$+0.9003y+41.7); and
the line segments JN and EI are straight lines.

**27.** The compressor according to any one of claims 1 to 13,

wherein

the refrigerant comprises HFO-1132(E), R32, and R1234yf,

wherein

when the mass% of HFO-1132(E), R32, and R1234yf based on their sum in the refrigerant is respectively represented by x, y, and z, coordinates (x,y,z) in a ternary composition diagram in which the sum of HFO-1132(E), R32, and R1234yf is 100 mass% are within the range of a figure surrounded by line segments MM', M'N, NV, VG, and GM that connect the following 5 points:

point M (52.6, 0.0, 47.4),
point M' (39.2, 5.0, 55.8),
point N (27.7, 18.2, 54.1),
point V (11.0, 18.1, 70.9), and
point G (39.6, 0.0, 60.4),

or on these line segments (excluding the points on the line segment GM);
the line segment MM' is represented by coordinates (x, $0.132x^2-3.34x+52.6$, $-0.132x^2+2.34x+47.4$);
the line segment M'N is represented by coordinates ($0.0313y^2-1A551y+43.824$, y, $-0.0313y^2+0.4551y+56.176$);
the line segment VG is represented by coordinates ($0.0123y^2-1.8033y+39.6$, y, $-0.0123y^2+0.8033y+60.4$); and
the line segments NV and GM are straight lines.

**28.** The compressor according to any one of claims 1 to 13,

wherein
the refrigerant comprises HFO-1132(E), R32, and R1234yf,
wherein
when the mass% of HFO-1132(E), R32, and R1234yf based on their sum in the refrigerant is respectively represented by x, y and z, coordinates (x,y,z) in a ternary composition diagram in which the sum of HFO-1132(E), R32, and R1234yf is 100 mass% are within the range of a figure surrounded by line segments ON, NU, and UO that connect the following 3 points:

point O (22.6, 36.8, 40.6),
point N (27.7, 18.2, 54.1), and
point U (3.9, 36.7, 59.4),

or on these line segments;
the line segment ON is represented by coordinates ($0.0072y^2-0.6701y+37.512$, y, $-0.0072y^2-0.3299y+62.488$);
the line segment NU is represented by coordinates ($0.0083y^2-1.7403y+56.635$, y, $-0.0083y^2+0.7403y+43.365$); and
the line segment UO is a straight line.

**29.** The compressor according to any one of claims 1 to 13,

wherein
the refrigerant comprises HFO-1132(E), R32, and R1234yf,
wherein
when the mass% of HFO-1132(E), R32, and R1234yf based on their sum in the refrigerant is respectively represented by x, y, and z, coordinates (x,y,z) in a ternary composition diagram in which the sum of HFO-1132(E), R32, and R1234yf is 100 mass% are within the range of a figure surrounded by line segments QR, RT, TL, LK, and KQ that connect the following 5 points:

point Q (44.6, 23.0, 32.4),
point R (25.5, 36.8, 37.7),
point T (8.6, 51.6, 39.8),
point L (28.9, 51.7, 19.4), and
point K (35.6, 36.8, 27.6),

or on these line segments;
the line segment QR is represented by coordinates ($0.0099y^2-1.975y+84.765$, y, $-0.0099y^2+0.975y+15.235$);
the line segment RT is represented by coordinates ($0.082y^2-1.8683y+83.126$, y, $-0.082y^2+0.8683y+16.874$);

the line segment LK is represented by coordinates ($0.0049y^2$-0.8842y+61.488, y, $-0.0049y^2$-0.1158y+38.512);
the line segment KQ is represented by coordinates ($0.0095y^2$-1.2222y+67.676, y, $-0.0095y^2$+0.2222y+32.324); and
the line segment TL is a straight line.

**30.** The compressor according to any one of claims 1 to 13,

wherein
the refrigerant comprises HFO-1132(E), R32, and R1234yf,
wherein
when the mass% of HFO-1132(E), R32, and R1234yf based on their sum in the refrigerant is respectively represented by x, y, and z, coordinates (x,y,z) in a ternary composition diagram in which the sum of HFO-1132(E), R32, and R1234yf is 100 mass% are within the range of a figure surrounded by line segments PS, ST, and TP that connect the following 3 points:

point P (20.5, 51.7, 27.8),
point S (21.9, 39.7, 38.4), and
point T (8.6, 51.6, 39.8),

or on these line segments;
the line segment PS is represented by coordinates ($0.0064y^2$-0.7103y+40.1, y, $-0.0064y^2$-0.2897y+59.9);
the line segment ST is represented by coordinates ($0.082y^2$-1.8683y+83.126, y, $-0.082y^2$+0.8683y+16.874); and
the line segment TP is a straight line.

**31.** The compressor according to any one of claims 1 to 13,

wherein
the refrigerant comprises trans-1,2-difluoroethylene (HFO-1132(E)), trifluoroethylene (HFO-1123), and difluoromethane (R32),
wherein
when the mass% of HFO-1132(E), HFO-1123, and R32 based on their sum in the refrigerant is respectively represented by x, y, and z, coordinates (x,y,z) in a ternary composition diagram in which the sum of HFO-1132(E), HFO-1123, and R32 is 100 mass% are within the range of a figure surrounded by line segments IK, KB', B'H, HR, RG, and GI that connect the following 6 points:

point I (72.0, 28.0, 0.0),
point K (48.4, 33.2, 18.4),
point B'(0.0, 81.6, 18.4),
point H (0.0, 84.2, 15.8),
point R (23.1, 67.4, 9.5), and
point G (38.5, 61.5, 0.0),

or on these line segments (excluding the points on the line segments B'H and GI);
the line segment IK is represented by coordinates
($0.025z^2$-1.7429z+72.00, $-0.025z^2$+0.7429z+28.0, z),
the line segment HR is represented by coordinates
($-0.3123z^2$+4.234z+11.06, $0.3123z^2$-5.234z+88.94, z),
the line segment RG is represented by coordinates
($-0.0491z^2$-1.1544z+38.5, $0.0491z^2$+0.1544z+61.5, z), and
the line segments KB' and GI are straight lines.

**32.** The compressor according to any one of claims 1 to 13,

wherein
the refrigerant comprises HFO-1132(E), HFO-1123, and R32,
wherein
when the mass% of HFO-1132(E), HFO-1123, and R32 based on their sum in the refrigerant is respectively represented by x, y, and z, coordinates (x,y,z) in a ternary composition diagram in which the sum of HFO-1132(E), HFO-1123, and R32 is 100 mass% are within the range of a figure surrounded by line segments IJ, JR, RG, and GI that connect the following 4 points:

point I (72.0, 28.0, 0.0),
point J (57.7, 32.8, 9.5),
point R (23.1, 67.4, 9.5), and
point G (38.5, 61.5, 0.0),

or on these line segments (excluding the points on the line segment GI);
the line segment IJ is represented by coordinates
$(0.025z^2-1.7429z+72.0, -0.025z^2+0.7429z+28.0, z)$,
the line segment RG is represented by coordinates
$(-0.0491z^2-1.1544z+38.5, 0.0491z^2+0.1544z+61.5, z)$, and
the line segments JR and GI are straight lines.

33. The compressor according to any one of claims 1 to 13,

wherein
the refrigerant comprises HFO-1132(E), HFO-1123, and R32,
wherein
when the mass% of HFO-1132(E), HFO-1123, and R32 based on their sum in the refrigerant is respectively represented by x, y, and z, coordinates (x,y,z) in a ternary composition diagram in which the sum of HFO-1132(E), HFO-1123, and R32 is 100 mass% are within the range of a figure surrounded by line segments MP, PB', B'H, HR, RG, and GM that connect the following 6 points:

point M (47.1, 52.9, 0.0),
point P (31.8, 49.8, 18.4),
point B'(0.0, 81.6, 18.4),
point H (0.0, 84.2, 15.8),
point R (23.1, 67.4, 9.5), and
point G (38.5, 61.5, 0.0),

or on these line segments (excluding the points on the line segments B'H and GM);
the line segment MP is represented by coordinates
$(0.0083z^2-0.984z+47.1, -0.0083z^2-0.016z+52.9, z)$,
the line segment HR is represented by coordinates
$(-0.3123z^2+4.234z+11.06, 0.3123z^2-5.234z+88.94, z)$,
the line segment RG is represented by coordinates
$(-0.0491z^2-1.1544z+38.5, 0.0491z^2+0.1544z+61.5, z)$, and
the line segments PB' and GM are straight lines.

34. The compressor according to any one of claims 1 to 13,

wherein
the refrigerant comprises HFO-1132(E), HFO-1123, and R32,
wherein
when the mass% of HFO-1132(E), HFO-1123, and R32 based on their sum in the refrigerant is respectively represented by x, y, and z, coordinates (x,y,z) in a ternary composition diagram in which the sum of HFO-1132(E), HFO-1123, and R32 is 100 mass% are within the range of a figure surrounded by line segments MN, NR, RG, and GM that connect the following 4 points:

point M (47.1, 52.9, 0.0),
point N (38.5, 52.1, 9.5),
point R (23.1, 67.4, 9.5), and
point G (38.5, 61.5, 0.0),

or on these line segments (excluding the points on the line segment GM);
the line segment MN is represented by coordinates

$(0.0083z^2-0.984z+47.1, -0.0083z^2-0.016z+52.9, z)$,
the line segment RG is represented by coordinates
$(-0.0491z^2-1.1544z+38.5, 0.0491z^2+0.1544z+61.5, z)$, and
the line segments JR and GI are straight lines.

35. The compressor according to any one of claims 1 to 13,

wherein
the refrigerant comprises HFO-1132(E), HFO-1123, and R32,
wherein
when the mass% of HFO-1132(E), HFO-1123, and R32 based on their sum in the refrigerant is respectively represented by x, y, and z, coordinates (x,y,z) in a ternary composition diagram in which the sum of HFO-1132(E), HFO-1123, and R32 is 100 mass% are within the range of a figure surrounded by line segments PS, ST, and TP that connect the following 3 points:

point P (31.8, 49.8, 18.4),
point S (25.4, 56.2, 18.4), and
point T (34.8, 51.0, 14.2),

or on these line segments;
the line segment ST is represented by coordinates
$(-0.0982z^2+0.9622z+40.931, 0.0982z^2-1.9622z+59.069, z)$,
the line segment TP is represented by coordinates
$(0.0083z^2-0.984z+47.1, -0.0083z^2-0.016z+52.9, z)$, and
the line segment PS is a straight line.

36. The compressor according to any one of claims 1 to 13,

wherein
the refrigerant comprises HFO-1132(E), HFO-1123, and R32,
wherein
when the mass% of HFO-1132(E), HFO-1123, and R32 based on their sum in the refrigerant is respectively represented by x, y, and z, coordinates (x,y,z) in a ternary composition diagram in which the sum of HFO-1132(E), HFO-1123, and R32 is 100 mass% are within the range of a figure surrounded by line segments QB", B"D, DU, and UQ that connect the following 4 points:

point Q (28.6, 34.4, 37.0),
point B" (0.0, 63.0, 37.0),
point D (0.0, 67.0, 33.0), and
point U (28.7, 41.2, 30.1),

or on these line segments (excluding the points on the line segment B"D);
the line segment DU is represented by coordinates
$(-3.4962z^2+210.71z-3146.1, 3.4962z^2-211.71z+3246.1, z)$,
the line segment UQ is represented by coordinates
$(0.0135z^2-0.9181z+44.133, -0.0135z^2-0.0819z+55.867, z)$, and
the line segments QB" and B"D are straight lines.

37. A refrigeration cycle apparatus comprising the compressor according to any one of claims 1 to 36.

Fig. 1

Fig. 2

Fig.3

Fig. 4

| | Ternary diagram (R32=7.1%) |
| | 85% Cap. (relative to R410A) |
| | Low flammability (WCF) |
| | ASHRAE flammability (WCF&WCFF) |
| | 92.5% Cap. (relative to R410A) |
| | 95.5% COP (relative to R410A) straight line |

Fig. 5

Ternary diagram (R32=11.1%)
85% Cap. (relative to R410A)
Low flammability (WCF)
ASHRAE flammability (WCF&WCFF)
92.5% Cap. (relative to R410A)

Fig. 6

Fig. 7

Fig. 8

Fig. 9

Fig. 10

Fig. 11

Fig. 12

Fig. 13

Fig. 14

Fig.15

HFO-1132(E)

| | GWP=65 |
| | GWP=125 |
| | GWP=250 |
| | 93% COP (relative to R410A) |
| | 94.5% COP (relative to R410A) |
| | 96% COP (relative to R404A) |
| | Lower flammability (WCF) |
| | ASHRAE lower flammability (WCF and WCFF) |

HFO-1123

R32

FIG. 16

FIG. 17

## FIG. 18

## FIG. 19

# FIG. 20

# FIG. 21

FIG. 22

## INTERNATIONAL SEARCH REPORT

| | International application No. |
|---|---|
| | PCT/JP2018/046630 |

### A. CLASSIFICATION OF SUBJECT MATTER

Int.Cl. F25B1/00(2006.01)i, C09K5/04(2006.01)i, H02K1/22(2006.01)i, H02K1/27(2006.01)i

According to International Patent Classification (IPC) or to both national classification and IPC

### B. FIELDS SEARCHED

Minimum documentation searched (classification system followed by classification symbols)
Int.Cl. F25B1/00, C09K5/04, H02K1/22, H02K1/27

Documentation searched other than minimum documentation to the extent that such documents are included in the fields searched

| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | WO 2015/136981 A1 (MITSUBISHI ELECTRIC CORP.) 17 September 2015, paragraphs [0018]–[0058], fig. 1–4 & CN 106103992 A | 1–3, 13, 37<br>4–12, 14–36 |
| Y | JP 2015-82875 A (HITACHI INDUSTRIAL EQUIPMENT SYSTEMS CO., LTD.) 27 April 2015, paragraph [0049] & CN 104578493 A | 4, 6–9, 14–36 |
| Y | JP 2017-192190 A (HITACHI-JOHNSON CONTROLS AIR CONDITIONING INC.) 19 October 2017, paragraph [0083] (Family: none) | 4, 6–9, 14–36 |

☒ Further documents are listed in the continuation of Box C.　☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 February 2019 (22.02.2019) | 05 March 2019 (05.03.2019) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**

International application No.

PCT/JP2018/046630

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 10-309050 A (MATSUSHITA ELECTRIC INDUSTRIAL CO., LTD.) 17 November 1998, paragraph [0016] (Family: none) | 5-9, 14-36 |
| Y | JP 2008-245384 A (HITACHI, LTD.) 09 October 2008, paragraphs [0039]-[0040] (Family: none) | 5-9, 14-36 |
| Y | JP 2013-126281 A (DAIKIN INDUSTRIES, LTD.) 24 June 2013, paragraph [0110] (Family: none) | 6-9, 14-36 |
| Y | JP 2016-174461 A (DAIKIN INDUSTRIES, LTD.) 29 September 2016, paragraph [0004] (Family: none) | 6-9, 14-36 |
| Y | JP 2010-103346 A (DAIDO STEEL CO., LTD.) 06 May 2010, paragraph [0027] (Family: none) | 9, 14-36 |
| Y | JP 2015-23721 A (DAIKIN INDUSTRIES, LTD.) 02 February 2015, paragraphs [0004]-[0007], fig. 6-7 (Family: none) | 9, 14-36 |
| Y | JP 2010-119190 A (TOYOTA MOTOR CORP.) 27 May 2010, paragraphs [0023]-[0029], fig. 1-2 (Family: none) | 10, 14-36 |
| Y | JP 2011-135638 A (TOSHIBA INDUSTRIAL PRODUCTS MANUFACTURING CORPORATION) 07 July 2011, paragraphs [0039]-[0043], fig. 10-11 (Family: none) | 10, 14-36 |
| Y | WO 2017/038489 A1 (MITSUBISHI ELECTRIC CORP.) 09 March 2017, paragraph [0080], fig. 1-19 & US 2018/0138763 A1, paragraph [0106], fig. 1-19 & CN 107925285 A | 11-12, 14-36 |
| Y | WO 2016/104418 A1 (MITSUBISHI ELECTRIC CORP.) 30 June 2016, paragraph [0067], fig. 1-15 & US 2017/0338707 A1, paragraph [0088], fig. 1-15 & CN 107112830 A | 11-12, 14-36 |
| Y | WO 2015/141678 A1 (ASAHI GLASS CO., LTD.) 24 September 2015, claims, paragraphs [0003], [0006]-[0010], [0015], [0036], [0081], examples, etc., fig. 1 & US 2017/0002245 A1, paragraphs [0004], [0007]-[0011], [0017]-[0018], [0044], examples, etc., fig. 1 & EP 3121242 A1 & CN 106133110 A | 14-25, 31-36 |

Form PCT/ISA/210 (continuation of second sheet) (January 2015)

**INTERNATIONAL SEARCH REPORT**

| International application No. |
| --- |
| PCT/JP2018/046630 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | WO 2015/186670 A1 (ASAHI GLASS CO., LTD.) 10 December 2015, claims, paragraphs [0004], [0010], [0035], [0040], [0145], [0179], examples, etc. & US 2017/0058174 A1, claims, paragraphs [0005], [0011], [0037], [0042], [0164], [0198], examples, etc. & EP 3153561 A1 & CN 106414653 A | 26-30 |
| Y | WO 2015/186557 A1 (ASAHI GLASS CO., LTD.) 10 December 2015, claims, examples, etc. & US 2017/0058173 A1, claims, examples, etc. & EP 3153559 A1 & CN 106414654 A | 26-30 |
| Y | WO 2015/115252 A1 (ASAHI GLASS CO., LTD.) 06 August 2015, claims, examples, etc. & US 2016/0333243 A1, claims, examples, etc. & EP 3101082 A1 & CN 106029821 A | 26-30 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013124848 A

- WO 2015141678 A